# EUROPÄISCHE PATENTANMELDUNG

(11) **EP 4 600 126 A2**
(43) Veröffentlichungstag der Anmeldung: **13.08.2025**
(21) Anmeldenummer: 25184701.8
(22) Anmeldetag: 25.11.2019
(51) Int. Cl.: B62D 65/18

(54) **FÖRDERVORRICHTUNG, BEARBEITUNGSANLAGE, VERFAHREN ZUM FÖRDERN UND/ODER BEARBEITEN VON GEGENSTÄNDEN**

(30) Priorität: 11.01.2019 DE 102019200310; 11.01.2019 DE 202019100145 U; 11.01.2019 DE 102019200307; 11.01.2019 DE 102019200308; 11.01.2019 DE 102019200311; 09.05.2019 DE 102019206729
(62) Teilanmeldung aus: 19809783.4
(71) Anmelder: Dürr Systems AG, Stuttgart (DE)
(72) Erfinder: Lauer, Michael, 74321 Bietigheim-Bissingen (DE); Bartsch, Dirk, 74321 Bietigheim-Bissingen (DE); Rempp, Peter, 75031 Eppingen (DE); Frasch, Benny, 71282 Hemmingen (DE); Weidle, Martin, 70839 Gerlingen (DE); Bayha, Johannes, 71364 Winnenden (DE); Bell, Stefano, 70806 Kornwestheim (DE)
(74) Vertreter: DTS Patent- und Rechtsanwälte PartmbB

(57) **Zusammenfassung**

Die vorliegende Erfindung betrifft ein Fahrzeug, welches insbesondere zum Transport von Gegenständen, insbesondere Werkstücken, Verwendung findet. Hierbei sind vorzugsweise eine oder mehrere Ladeanschlussstellen zum Aufladen eines Energiespeichers vorgesehen.

## Beschreibung

Die vorliegende Erfindung betrifft ein Fahrzeug, welches insbesondere als Bestandteil einer Fördervorrichtung in einer Bearbeitungsanlage zum Einsatz kommen kann. Ferner betrifft die vorliegende Erfindung Verfahren zum Fördern und/oder Bearbeiten von Gegenständen.

In Bearbeitungsanlagen, beispielsweise Lackieranlagen, können insbesondere Rollenförderer, Kettenförderer oder Hängeförderer zum Transport von zu lackierenden Werkstücken verwendet werden.

Der vorliegenden Erfindung liegt die Aufgabe zugrunde, ein Fahrzeug und/oder eine Fördervorrichtung bereitzustellen, mittels welchem bzw. mittels welcher zu transportierende Gegenstände einfach und flexibel transportiert werden können.

Diese Aufgabe wird erfindungsgemäß durch die Merkmale von Anspruch 1 gelöst.

Ein Fahrzeug eignet sich vorzugsweise zum Fördern von Gegenständen, insbesondere Fahrzeugkarosserien.

Vorzugsweise umfasst das Fahrzeug Folgendes:
einen Grundkörper;
ein Fahrwerk, mittels welchem der Grundkörper auf einem befahrbaren Untergrund aufliegt und/oder bewegbar ist;
eine Antriebsvorrichtung zum Antreiben des Fahrzeugs;
eine Aufnahmevorrichtung, welche ein Aufnahmeelement, zwei Aufnahmeelemente, oder mehr als zwei Aufnahmeelemente zum Aufnehmen mindestens eines Gegenstands umfasst.

Der befahrbare Untergrund ist insbesondere ein Boden, beispielsweise ein fester Boden, insbesondere ein Hallenboden.

Der befahrbare Untergrund ist insbesondere aus Beton oder Asphalt oder Metall gebildet oder umfasst Beton, Asphalt und/oder Metall.

Das Fahrzeug ist insbesondere selbstfahrend und/oder autonom ausgebildet.

Vorzugsweise ist das Fahrzeug flurgebunden.

Das Fahrzeug ist vorzugsweise automatisch steuerbar und/oder berührungslos geführt oder führbar.

Es kann vorgesehen sein, dass die Aufnahmevorrichtung exakt zwei Aufnahmeelemente umfasst.

Mittels der zwei Aufnahmeelemente ist vorzugsweise exakt ein Gegenstand, insbesondere exakt eine Fahrzeugkarosserie, aufnehmbar.

Mehrere Aufnahmeelemente, insbesondere sämtliche Aufnahmeelemente, erstrecken sich vorzugsweise in einer gemeinsamen Ebene, welche insbesondere vertikal und/oder parallel zu einer Längsmittelachse des Fahrzeugs verläuft.

Mehrere Aufnahmeelemente, insbesondere sämtliche Aufnahmeelemente, erstrecken sich vorzugsweise in einer vertikalen Längsmittelebene des Fahrzeugs.

Insbesondere liegen Mittelachsen oder Längsachsen der einzelnen Aufnahmeelemente in einer gemeinsamen Ebene, insbesondere in einer vertikalen Längsmittelebene.

Längsachsen oder Mittelachsen mehrerer Aufnahmeelemente, insbesondere sämtlicher Aufnahmeelemente, sind vorzugsweise parallel zueinander ausgerichtet und/oder parallel zur Schwerkraftrichtung ausgerichtet, zumindest in einem Zustand des Fahrzeugs, in welchem dieses auf einem im Wesentlichen horizontalen befahrbaren Untergrund angeordnet ist.

Vorteilhaft kann es sein, wenn die Längsmittelachse des Fahrzeugs eine Hauptfahrtrichtung des Fahrzeugs oder zwei Hauptfahrtrichtungen des Fahrzeugs vorgibt.

Ein oder mehrere Aufnahmeelemente, insbesondere sämtliche Aufnahmeelemente, sind vorzugsweise die einzigen von dem Grundkörper des Fahrzeugs nach oben hervorstehenden Elemente.

Vorzugsweise ragen ein oder mehrere Aufnahmeelemente, insbesondere sämtliche Aufnahmeelemente, als einzige Bauteile des Fahrzeugs über mehr als ungefähr 5% oder über mehr als ungefähr 10% einer Höhe des Grundkörpers über den Grundkörper hinaus.

Es kann vorgesehen sein, dass das eine Aufnahmeelement, die zwei Aufnahmeelemente oder die mehr als zwei Aufnahmeelemente bewegbar an dem Grundkörper angeordnet sind.

Insbesondere sind das eine Aufnahmeelement, die zwei Aufnahmeelemente oder die mehr als zwei Aufnahmeelemente parallel zu der Schwerkraftrichtung bewegbar an dem Grundkörper angeordnet.

Die Schwerkraftrichtung ist in dieser Beschreibung allgemein eine Höhenrichtung, welche im Wesentlichen senkrecht zu einem befahrbaren Untergrund ausgerichtet ist, auf welchem das Fahrzeug verfahrbar ist.

Alternativ oder ergänzend hierzu kann vorgesehen sein, dass ein Aufnahmeelement, zwei Aufnahmeelemente oder mehr als zwei Aufnahmeelemente unbeweglich mit dem Grundkörper verbunden sind.

Es kann zudem vorgesehen sein, dass sämtliche Aufnahmeelemente bewegbar an dem Grundkörper angeordnet sind. Alternativ hierzu kann vorgesehen sein, dass sämtliche Aufnahmeelemente unbewegbar an dem Grundkörper angeordnet sind.

Das Fahrzeug umfasst vorzugsweise eine Hubantriebsvorrichtung, mittels welcher das eine Aufnahmeelement, die zwei Aufnahmeelemente oder die mehr als zwei Aufnahmeelemente relativ zu dem Grundkörper anhebbar und/oder absenkbar sind.

Insbesondere sind das eine Aufnahmeelement, die zwei Aufnahmeelemente oder die mehr als zwei Aufnahmeelemente mittels der Hubantriebsvorrichtung aus dem Grundkörper ausfahrbar und/oder in diesen einfahrbar.

Unter einem Ausfahren und einem Einfahren ist dabei nicht zwingend ein vollständiges Herausführen oder ein vollständiges Versenken zu verstehen. Vielmehr können auch eine Verlängerung eines aus dem Grundkörper herausragenden Abschnitts eines Aufnahmeelements bzw. eine Verkürzung desselben vorgesehen sein.

Günstig kann es sein, wenn das Fahrzeug eine Abstreifvorrichtung umfasst, mittels welcher an einem oder mehreren Aufnahmeelementen anhaftende Verunreinigungen beim Einfahren oder Absenken eines oder mehrerer Aufnahmeelemente von demselben bzw. denselben abstreifbar sind. Eine unerwünschte Verunreinigung eines Innenraums des Grundkörpers kann hierdurch vorzugsweise vermieden oder zumindest reduziert werden.

Günstig kann es sein, wenn mehrere Aufnahmeelemente, insbesondere sämtliche Aufnahmeelemente, miteinander gekoppelt und/oder ausschließlich gemeinsam relativ zu dem Grundkörper bewegbar sind.

Insbesondere kann vorgesehen sein, dass mehrere Aufnahmeelemente, insbesondere sämtliche Aufnahmeelemente ausschließlich gleichzeitig anhebbar und/oder ausschließlich gleichzeitig absenkbar sind.

Vorteilhaft kann es sein, wenn eine Hubantriebsvorrichtung des Fahrzeugs ein Hubantriebselement umfasst, wobei das Hubantriebselement vorzugsweise einen Hubantriebsmotor und zwei oder mehr als zwei Aufnahmeelemente miteinander verbindet, so dass die zwei oder die mehr als zwei Aufnahmeelemente gemeinsam mittels des Hubantriebsmotors bewegbar sind.

Ein Hubantriebselement ist insbesondere ein Hubantriebsriemen oder eine Hubantriebskette.

Mittels des Hubantriebselements sind vorzugsweise die zwei oder die mehr als zwei Aufnahmeelemente gemeinsam relativ zum Grundkörper anhebbar und/oder absenkbar.

Günstig kann es sein, wenn das Hubantriebselement sich durch eine Antriebsachse der Antriebsvorrichtung zum Antreiben des Fahrzeugs hindurch erstreckt.

Alternativ oder ergänzend hierzu kann vorgesehen sein, dass das Hubantriebselement sich unter einer Antriebsachse der Antriebsvorrichtung zum Antreiben des Fahrzeugs hindurch erstreckt.

Zwei oder mehr als zwei Aufnahmeelemente sind vorzugsweise auf einander gegenüberliegenden Seiten einer Antriebsachse der Antriebsvorrichtung angeordnet.

Bei einer Ausführungsform eines Aufnahmeelements kann beispielsweise eine Schmiervorrichtung, insbesondere ein integrierte Schmiervorrichtung, vorgesehen sein.

Die Schmiervorrichtung ist vorzugsweise in das Aufnahmeelement, insbesondere in einen Schaftabschnitt und/oder einen Aufnahmeabschnitt des Aufnahmeelements, integriert, beispielsweise vollständig innerhalb des Schaftabschnitts und/oder des Aufnahmeabschnitts angeordnet.

Die Schmiervorrichtung umfasst vorzugsweise ein Reservoir zur Aufnahme von Schmiermittel und ein Dosierelement zur steuerbaren und/oder regelbaren Zuführung des Schmiermittels aus dem Reservoir zu einem zu schmierenden Gegenstand.

Der zu schmierende Gegenstand ist insbesondere ein Teil einer Hubantriebsvorrichtung zum Anheben und/oder Absenken des Aufnahmeelements relativ zu einem Basiskörper, an oder in welchem das Aufnahmeelement angeordnet, insbesondere verschiebbar gelagert, ist.

Beispielsweise kann vorgesehen sein, dass das Aufnahmeelement mittels eines Spindelelements verschiebbar an dem Basiskörper angeordnet ist, insbesondere aus dem Basiskörper herausfahrbar und/oder in den Basiskörper hineinfahrbar ist.

Die Schmiervorrichtung ist vorzugsweise derart ausgebildet, dass der zu schmierende Gegenstand, insbesondere das Spindelelement, mit Schmiermittel beaufschlagbar ist, insbesondere um eine zuverlässige Schmierung desselben und somit einen zuverlässigen Hubbetrieb des Aufnahmeelements zu gewährleisten.

Das Dosierelement ist hierzu insbesondere bedarfsgesteuert und/oder zeitgesteuert, beispielsweise mittels eines Zeitelements. Beispielsweise kann vorgesehen sein, dass das Dosierelement automatisch nach einer vorgegebenen Anzahl an Hubzyklen des Aufnahmeelements aktiviert wird, um eine regelmäßige Zudosierung des Schmiermittels zu dem zu schmierenden Gegenstand, insbesondere dem Spindelelement, zu gewährleisten.

Das Dosierelement kann insbesondere ein an einer Unterseite des Reservoirs angeordnetes und/oder auf den zu schmierenden Gegenstand gerichtetes Ventil sein, welches nach Bedarf geöffnet und geschlossen werden kann.

Die Schmiervorrichtung, insbesondere das Reservoir und/oder das Dosierelement, ist vorzugsweise durch den Aufnahmeabschnitt hindurch und/oder durch Entfernen des Aufnahmeabschnitts beispielsweise von oben zugänglich, insbesondere für einen Austausch und/oder ein Auffüllen mit weiterem Schmiermittel.

Günstig kann es sein, wenn die Antriebsvorrichtung eine Antriebsachse aufweist, welche zwei Antriebselemente, insbesondere Antriebsräder, der Antriebsvorrichtung miteinander verbindet. Die Antriebsachse ist vorzugsweise im Wesentlichen quer, insbesondere zumindest näherungsweise senkrecht, zu einer Längsmittelachse und/oder Hauptfahrtrichtung des Fahrzeugs ausgerichtet.

Insbesondere kann vorgesehen sein, dass das Fahrzeug genau eine Antriebsachse aufweist.

Vorteilhaft kann es sein, wenn die Antriebsvorrichtung eine Antriebsachse aufweist, welche zwei Antriebselemente, insbesondere Antriebsräder, der Antriebsvorrichtung miteinander verbindet, wobei die Antriebsachse bezüglich einer Längsmittelachse und/oder Hauptfahrtrichtung des Fahrzeugs zumindest näherungsweise mittig an dem Grundkörper des Fahrzeugs angeordnet ist.

Unter der Formulierung "zumindest näherungsweise mittig" ist insbesondere zu verstehen, dass eine oder mehrere Drehachsen, um welche ein oder mehrere Antriebselemente, beispielsweise Antriebsräder, der Antriebsachse drehbar sind, um einen Betrag von höchstens ungefähr 20% einer Gesamtlängserstreckung des Fahrzeugs von einer horizontalen Quermittelachse des Fahrzeugs entfernt angeordnet sind.

Die Antriebselemente, insbesondere die Antriebsräder, sind vorzugsweise in einem Abstand voneinander angeordnet, dessen Betrag größer ist als ungefähr 50%, insbesondere größer als ungefähr 70%, einer maximalen Breite des Fahrzeugs und/oder des Grundkörpers.

Günstig kann es sein, wenn in vier Eckbereichen des Fahrzeugs jeweils eine oder mehrere Stützrollen angeordnet sind.

Die Stützrollen sind insbesondere nicht angetriebene Stützrollen.

Vorzugsweise sind die Stützrollen um 360° bezüglich einer im Wesentlichen vertikalen Drehachse frei drehbare Stützrollen.

Es kann vorgesehen sein, dass die Antriebsvorrichtung eine Antriebsachse aufweist, welche zwei Antriebselemente, insbesondere Antriebsräder, der Antriebsvorrichtung miteinander verbindet, wobei die Antriebselemente gemeinsam mittels der Antriebsachse an dem Grundkörper gelagert sind.

Die Antriebsachse umfasst insbesondere ein Achsenelement, welches die Antriebsräder starr miteinander verbindet.

Die Antriebsachse ist somit insbesondere eine Starrachse. Vorzugsweise ist keine Einzelradaufhängung vorgesehen.

Es kann jedoch bei einer alternativen Ausgestaltung auch eine Einzelradaufhängung vorgesehen sein. Hierbei ist dann vorzugsweise eine Kopplungsvorrichtung zur mechanischen Kopplung der Antriebselemente, insbesondere der Antriebsräder, vorgesehen, insbesondere um ein gleichmäßiges Anpressen der Antriebselemente, insbesondere Antriebsräder, an dem befahrbaren Untergrund zu gewährleisten.

Mehrere Antriebselemente, insbesondere Antriebsräder, der Antriebsvorrichtung sind vorzugsweise unabhängig voneinander antreibbar.

Insbesondere kann hierfür vorgesehen sein, dass das Fahrzeug mehrere Antriebsmotoren umfasst.

Beispielsweise sind jedem Antriebselement, insbesondere Antriebsrad, jeweils ein Antriebsmotor zugeordnet.

Ein Antriebsmotor ist insbesondere ein Elektromotor.

Günstig kann es sein, wenn die Antriebsvorrichtung eine Antriebsachse und/oder ein oder mehrere Antriebselemente umfasst, welche mittels einer Betätigungsvorrichtung auf einen Boden absenkbar und/oder anpressbar und/oder von dem Boden abhebbar sind.

Die Antriebsachse und/oder ein oder mehrere Antriebselemente sind vorzugsweise in den Grundkörper des Fahrzeugs integriert und/oder von dem Grundkörper fünfseitig umgeben.

Die Betätigungsvorrichtung ist vorzugsweise an einer Außenseite des Fahrzeugs zur Betätigung derselben zugänglich.

Insbesondere sind somit vorzugsweise unzugängliche und/oder geschützte Antriebskomponenten der Antriebsvorrichtung vorgesehen, wobei zugleich beispielsweise durch Abheben eines oder mehrerer Antriebselemente mittels der Betätigungsvorrichtung von einer Außenseite des Fahrzeugs die Antriebsvorrichtung deaktivierbar ist, insbesondere um das Fahrzeug im Falle eines Ausfalls der Antriebsvorrichtung manuell verschieben zu können.

Ferner ist mittels der Betätigungsvorrichtung vorzugsweise ein Anpressdruck eines oder mehrerer Antriebselemente, insbesondere Antriebsräder, auf dem befahrbaren Untergrund einstellbar.

Günstig kann es sein, wenn ein um eine parallel zu einer Längsmittelachse des Fahrzeugs verlaufende Achse drehbar gelagertes Achsenelement vorgesehen ist, welches insbesondere zwei Antriebselemente, insbesondere Antriebsräder, fest miteinander verbindet. Die Antriebselemente, insbesondere Antriebsräder, weisen vorzugsweise zueinander fixierte, insbesondere identische, Drehachsen auf.

Das Achsenelement ist insbesondere mittels eines Lagerelements drehbar oder schwenkbar an dem Grundkörper des Fahrzeugs gelagert. Insbesondere ist eine höhenvariable und/oder federbelastete Lagerung des Lagerelements an dem Grundkörper vorgesehen. Mittels der Betätigungsvorrichtung ist vorzugsweise eine Höhe des Achsenelements und/oder Lagerelements relativ zu dem Grundkörper einstellbar.

Das Lagerelement ist vorzugsweise im Wesentlichen U-förmig ausgebildet.

Vorzugsweise umfasst das Lagerelement ein Mittelteil, an dessen Enden jeweils ein Schenkel angeordnet ist. Mittels eines Schenkels ist das Lagerelement vorzugsweise drehbar oder schwenkbar an dem Grundkörper gelagert.

Ein weiterer Schenkel des Lagerelements ist vorzugsweise mit einer Feder in Eingriff oder federbelastet. Insbesondere ist das Lagerelement federnd relativ zu dem Grundkörper bewegbar.

Der Mittelteil des Lagerelements ist vorzugsweise ein Lagerbereich, an welchem das Achsenelement drehbar oder schwenkbar gelagert ist.

Das U-förmige Lagerelement umgibt insbesondere einen Zwischenraum, durch welchen sich ein Hubantriebselement der Hubantriebsvorrichtung erstreckt.

Günstig kann es sein, wenn der Zwischenraum derjenige Raumbereich ist, welcher auf einander gegenüberliegenden Seiten von den Schenkeln des Lagerelements beschränkt ist.

Es kann vorgesehen sein, dass das eine Aufnahmeelement, die zwei Aufnahmeelemente oder die mehr als zwei Aufnahmeelemente jeweils einen Aufnahmeabschnitt aufweisen, welcher sich zu einem bezüglich einer Schwerkraftrichtung oberen Ende hin verjüngt.

Insbesondere kann vorgesehen sein, dass ein oder mehrere Aufnahmeabschnitte, insbesondere sämtliche Aufnahmeabschnitte, im Wesentlichen konusförmig, konusabschnittsförmig, kegelstumpfförmig oder kegelstumpfabschnittsförmig ausgebildet sind.

Ein zumindest abschnittsweise komplementär hierzu ausgebildeter Angriffsbereich eines Gegenstands und/oder einer Adaptervorrichtung zur Aufnahme eines oder mehrerer Gegenstände, kann hierdurch eine besonders stabile Festlegung eines Gegenstands an dem Fahrzeug ermöglichen. Insbesondere kann durch die sich verjüngende Ausgestaltung des Aufnahmeabschnitts ein seitliches Verkippen des Gegenstands verhindert werden. Auch mit nur einem oder nur zwei Aufnahmeelementen, welche insbesondere jeweils lediglich pinförmig, stiftförmig oder dornartig ausgebildet sind, kann hierdurch vorzugsweise eine stabile Aufnahme eines Gegenstands an dem Fahrzeug ermöglicht werden.

Bei einer Ausgestaltung der Erfindung kann vorgesehen sein, dass das eine Aufnahmeelement, die zwei Aufnahmeelemente oder die mehr als zwei Aufnahmeelemente in unterschiedlichen Positionen relativ zu dem Grundkörper anordenbar sind. Das eine Aufnahmeelement, die zwei Aufnahmeelemente oder die mehr als zwei Aufnahmeelemente ragen dabei vorzugsweise in einer bezüglich einer Schwerkraftrichtung untersten Position über eine Oberseite des Grundkörpers hervor und/oder aus dem Grundkörper heraus.

Es kann vorgesehen sein, dass das eine Aufnahmeelement, die zwei Aufnahmeelemente oder die mehr als zwei Aufnahmeelemente eine parallel zu einer Schwerkraftrichtung genommene Höhe aufweisen, welche größer ist als eine parallel zur Schwerkraftrichtung genommene Höhe des Grundkörpers des Fahrzeugs.

Ein oder mehrere Aufnahmeelemente sind insbesondere einstückig oder zweistückig ausgebildet.

Beispielsweise sind ein oder mehrere Aufnahmeelemente jeweils als Metallstäbe ausgebildet.

Das eine oder die mehreren Aufnahmeelemente umfassen jeweils vorzugsweise einen im Wesentlichen zylindrischen, vorzugsweise kreiszylindrischen, Schaftabschnitt, an dessen Ende jeweils ein Aufnahmeabschnitt angeordnet ist.

Die Erstreckung eines oder mehrerer Aufnahmeelemente in einer oder beiden senkrecht zur Schwerkraftrichtung verlaufenden Richtungen beträgt vorzugsweise höchstens ungefähr 10%, vorzugsweise höchstens ungefähr 5%, einer Längserstreckung bzw. Quererstreckung des Grundkörpers des Fahrzeugs.

Der Grundkörper ist dabei vorzugsweise derjenige Teil des Fahrzeugs, welcher eine tragende Struktur des Fahrzeugs, insbesondere einen Metallrahmen, bildet oder umfasst.

Der Grundkörper erstreckt sich vorzugsweise über mindestens ungefähr 80%, vorzugsweise mindestens ungefähr 90% einer Gesamtlänge oder Gesamtbreite des Fahrzeugs.

Günstig kann es sein, wenn das Fahrzeug einen oder mehrere Aufnahmesensoren umfasst, mittels welcher ein an mindestens einem Aufnahmeelement angeordneter Gegenstand erfassbar und/oder auf dessen korrekte Festlegung hin überwachbar ist.

Alternativ oder ergänzend hierzu kann vorgesehen sein, dass das Fahrzeug einen oder mehrere Aufnahmesensoren umfasst, mittels welcher eine Ausrichtung und/oder Positionierung eines beabstandet von dem mindestens einem Aufnahmeelement angeordneten Gegenstands erfassbar sind.

Insbesondere ist mittels mindestens eines Aufnahmesensors eine Ausrichtung und/oder Positionierung des Gegenstands vor einem Anheben oder Ausfahren des mindestens einen Aufnahmeelements erfassbar.

Der mittels des mindestens einen Aufnahmesensors zu erfassende oder zu überwachende Gegenstand ist dabei insbesondere ein zu befördernder Gegenstand, insbesondere eine Fahrzeugkarosserie, oder auch eine Kombination eines zu befördernden Gegenstands mit einer Adaptervorrichtung zur Aufnahme des Gegenstands.

Vorteilhaft kann es sein, wenn mindestens ein Aufnahmesensor an dem Grundkörper angeordnet ist.

Insbesondere kann vorgesehen sein, dass zwei Aufnahmesensoren oder mehr als zwei Aufnahmesensoren in einem ein oder mehrere Aufnahmeelemente umgebenden Bereich des Grundkörpers an demselben angeordnet sind.

Mittels dieses einen oder dieser mehreren Aufnahmesensoren kann insbesondere eine Annäherung und/oder Positionierung und/oder ein Vorhandensein eines Gegenstands an dem Aufnahmeelement und/oder im Bereich des Aufnahmeelements erfasst und/oder überwacht werden.

Alternativ oder ergänzend hierzu kann vorgesehen sein, dass mindestens ein Aufnahmesensor an dem Aufnahmeelement angeordnet ist.

Insbesondere können mehrere Aufnahmesensoren an mehreren Aufnahmeelementen angeordnet sein.

Insbesondere können als Kontaktsensoren ausgebildete Aufnahmesensoren vorgesehen sein.

An dem Grundkörper angeordnete Aufnahmesensoren sind vorzugsweise berührungslos arbeitende Aufnahmesensoren.

Mindestens ein Aufnahmesensor wechselwirkt vorzugsweise mit einer Detektionshilfe an einem aufzunehmenden oder aufgenommenen Gegenstand.

Insbesondere kann eine Öffnung, beispielsweise ein Loch, in einer Adaptervorrichtung zur Aufnahme eines Gegenstands vorgesehen sein. Mittels eines Aufnahmesensors kann dann insbesondere diese Öffnung erfasst werden.

Günstig kann es sein, wenn an einer Oberseite des Grundkörpers eine Abdeckung zum Abdecken eines Innenraums des Grundkörpers angeordnet ist.

Die Abdeckung ist vorzugsweise auf den Grundkörper aufgelegt.

Vorzugsweise ist die Abdeckung zumindest näherungsweise vollständig umlaufend bündig mit einem Auflagebereich des Grundkörpers angeordnet und/oder ausgebildet.

Beispielsweise kann vorgesehen sein, dass die Abdeckung zumindest näherungsweise vollständig umlaufend bündig mit einem Auflagebereich des Grundkörpers abschließt.

Eine obere Oberfläche des Fahrzeugs ist somit vorzugsweise im Wesentlichen vollständig eben, insbesondere unter Nichtberücksichtigung eines oder mehrerer herausragender Aufnahmeelemente.

Die Abdeckung ist somit vorzugsweise nicht ergreifbar, ohne Werkzeuge zu verwenden.

Die Abdeckung ist vorzugsweise ausschließlich aufgelegt und somit vorzugsweise ausschließlich mittels der Schwerkraft und/oder seitlich klemmend an dem Grundkörper gehalten.

Die Abdeckung bedeckt vorzugsweise mindestens ungefähr 40%, beispielsweise mindestens ungefähr 60%, insbesondere mindestens ungefähr 80%, einer Oberseite des Fahrzeugs, insbesondere des Grundkörpers.

Die Abdeckung ist vorzugsweise einstückig oder mehrteilig ausgebildet. Insbesondere sind mehrere Abdeckelemente entsprechend der vorstehend beschriebenen Abdeckung vorgesehen.

Beispielsweise mittels einer Saugnapfvorrichtung kann die Abdeckung von dem Grundkörper angehoben werden.

Günstig kann es sein, wenn an einer Oberseite des Grundkörpers eine Abdeckung zum Abdecken eines Innenraums des Grundkörpers angeordnet ist, wobei die Abdeckung vorzugsweise zumindest teilweise transparent ausgebildet ist.

Unter dem Begriff "transparent" ist insbesondere zu verstehen, dass eine Person durch die Abdeckung hindurchschauen kann und somit zumindest einzelne im Innenraum des Grundkörpers befindliche Fahrzeugkomponenten sichtbar sind. Hierdurch kann sich eine höhere Hemmschwelle für ein Begehen des Fahrzeugs ergeben, wodurch sich eine reduzierte Belastung und/oder ein reduzierter Verschleiß des Fahrzeugs oder dessen Komponenten ergeben kann.

Die Abdeckung kann beispielsweise getönt transparent sein.

Der Grundkörper umfasst vorzugsweise eine oder mehrere Seitenflächen, welche beispielsweise abgeschrägt ausgebildet sind.

Eine oder mehrere Seitenflächen verlaufen vorzugsweise schräg, insbesondere unter einem Winkel zwischen ungefähr 30° und 70°, zur Horizontalen und/oder Vertikalen.

Ein oder mehrere Notausschalter sind vorzugsweise an der einen oder den mehreren Seitenflächen angeordnet. Hierdurch sind die Notausschalter besonders einfach zugänglich, wodurch eine Sicherheit im Betrieb des Fahrzeugs erhöht werden kann.

Unter dem Begriff "Notaus" ist insbesondere ein Nothalt, beispielsweise ein Anhalten beweglicher und/oder sich bewegender Komponenten, Bauteile und/oder Fahrzeuge, etc., zu verstehen. Optional kann bei einem Notaus ferner eine Unterbrechung einer Stromversorgung vorgesehen sein.

Alternativ oder ergänzend hierzu kann vorgesehen sein, dass ein oder mehrere (weitere) Notausschalter an einem (weiteren) Fahrzeug oder an einer oder mehreren anderen Komponenten einer Fördervorrichtung und/oder einer Behandlungsanlage und/oder einer Logistikanlage angeordnet sind.

Eine Behandlungsanlage ist insbesondere eine Bearbeitungsanlage.

Vorzugsweise ist einem oder mehreren der Notausschalter, insbesondere jedem Notausschalter, eine Kommunikationsvorrichtung, insbesondere jeweils eine Kommunikationsvorrichtung, zugeordnet. Beispielsweise umfassen einer oder mehrere oder sämtliche der Notausschalter jeweils eine Kommunikationsvorrichtung, wobei mittels der Kommunikationsvorrichtung insbesondere ein Notaussignal an ein oder mehrere oder sämtliche Fahrzeuge übermittelbar ist, um das eine oder die mehreren oder sämtliche Fahrzeuge in einen Notausbetrieb zu versetzen.

In dem Notausbetrieb wird das Fahrzeug vorzugsweise sofort gestoppt und/oder aus einem Gefahrenbereich herausbewegt. Eine Bremswirkung wird vorzugsweise angepasst an einen Beladungszustand des Fahrzeugs, insbesondere um eine Beschädigung eines an dem Fahrzeug angeordneten Gegenstands, insbesondere eines Werkstücks, und/oder ein Ablösen desselben von dem Werkstück zu vermeiden.

Günstig kann es sein, wenn mittels einer Kommunikationsvorrichtung, insbesondere einer Kommunikationsvorrichtung eines Notausschalters und/oder eines Fahrzeugs, im Falle der Betätigung eines Notausschalters ein Notaussignal an ein oder mehrere, insbesondere sämtliche, Fahrzeuge übermittelt wird, insbesondere direkt und/oder indirekt über eine übergeordnete Steuerungsanlage zur Steuerung und/oder Überwachung mehrerer Fahrzeuge.

Ein oder mehrere, insbesondere sämtliche, Fahrzeuge umfassen vorzugsweise jeweils eine Steuervorrichtung, mittels welcher ein Notaussignal verarbeitbar ist, insbesondere bevor das Fahrzeug in einen Notausbetrieb versetzt wird.

Vorzugsweise kann vorgesehen sein, dass mittels einer Steuervorrichtung überprüfbar ist, ob das jeweilige Fahrzeug zwingend in den Notausbetrieb versetzt werden muss oder nicht. Beispielsweise kann bei dieser Überprüfung Folgendes berücksichtigt werden:
Die Position des Fahrzeugs relativ zu einem oder mehreren anderen Fahrzeugen;
   und/oder
ein Abstand des Fahrzeugs von einem oder mehreren anderen Fahrzeugen; und/oder die Position des Fahrzeugs relativ zu dem Notausschalter, an welchem das Notaussignal ausgelöst wurde; und/oder
ein Abstand des Fahrzeugs von dem Notausschalter, an welchem das Notaussignal ausgelöst wurde; und/oder
die momentane Geschwindigkeit des Fahrzeugs zum Zeitpunkt der Übermittlung und/oder Auslösung des Notaussignals; und/oder
dessen vorgegebener und/oder berechneter Bewegungsweg, insbesondere relativ zu einem oder mehreren anderen Fahrzeugen und/oder relativ zu dem Notausschalter, an welchem das Notaussignal ausgelöst wurde.

Beispielsweise kann durch die Überprüfung ermittelt werden, ob für das jeweilige Fahrzeug und/oder für einen daran angeordneten Gegenstand, insbesondere ein Werkstück, eine Gefahr besteht und/oder ob von dem Fahrzeug und/oder einem daran angeordneten Gegenstand für ein oder mehrere Objekte und/oder Personen eine Gefahr ausgeht, wobei bei bejahendem Ergebnis das Fahrzeug in den Notausbetrieb versetzt wird und/oder wobei bei verneinendem Ergebnis das Fahrzeug in einem zuvor bestehenden Betrieb weiterbetrieben wird.

Insbesondere kann vorgesehen sein, dass durch die Überprüfung ermittelt wird, ob das ein Notsignal empfangende Fahrzeug einen ausreichend großen Abstand von anderen Fahrzeugen und/oder anderen Objekten und/oder Personen und/oder dem Notausschalter, an welchem das Notaussignal ausgelöst wurde, einhält und aufgrund des vorgegeben und/oder erwarteten Bewegungswegs einhalten wird. Bei bejahendem Ergebnis wird das Fahrzeug insbesondere in einem zuvor bestehenden Betrieb weiterbetrieben. Bei verneinendem Ergebnis wird das Fahrzeug insbesondere in den Notausbetrieb versetzt.

Das Fahrzeug weist vorzugsweise eine Kommunikationsvorrichtung auf, mittels welcher das Fahrzeug direkt oder indirekt, insbesondere über eine übergeordnete Steuerungsanlage, mit einem oder mehreren weiteren Fahrzeugen kommuniziert oder kommunizieren kann, beispielsweise zur Übermittlung eines Notaussignals und/oder eines Positionssignals und/oder eines Zustandssignals und/oder eines Auftragssignals.

Beispielsweise kann vorgesehen sein, dass ein oder mehrere Fahrzeuge, welche beispielsweise in einer Umgebung desjenigen Fahrzeugs angeordnet sind, dessen Notausschalter betätigt wird oder wurde, das Notaussignal empfangen und daraufhin anhalten, insbesondere in einen Notausbetrieb versetzt werden.

Die Umgebung ist dabei beispielsweise ein Raumbereich um eine Sendevorrichtung einer Kommunikationsvorrichtung zum Versenden des Notaussignals, wobei eine Ausdehnung des Raumbereichs sich insbesondere aus einer Signalstärke und/oder Reichweite der Sendevorrichtung ergibt. Beispielsweise kann eine als Kurzreichweitensender ausgebildete Sendevorrichtung vorgesehen sein, mittels welcher beispielsweise ein Notaussignal über eine Entfernung von höchstens ungefähr 20 m, insbesondere höchstens ungefähr 10 m, hinweg aussendbar ist. Lediglich die in diesem Raumbereich angeordneten Fahrzeuge empfangen dann das Notaussignal und werden in der Folge in den Notausbetrieb versetzt. Die außerhalb dieses Raumbereichs angeordneten Fahrzeuge verbleiben dann in den zuvor bestehenden Betriebsmodi.

Als Kurzreichweitensender kann beispielsweise ein Bluetooth Low Energy Sender (BLE Sender) vorgesehen sein.

Bei einer weiteren Ausführungsform kann vorgesehen sein, dass ein oder mehrere (weitere) Notausschalter an einem Fahrzeug oder an einer oder mehreren anderen Komponenten einer Fördervorrichtung und/oder einer Behandlungsanlage und/oder einer Logistikanlage angeordnet sind. Vorzugsweise ist einem oder mehreren der Notausschalter eine Kommunikationsvorrichtung zugeordnet, beispielsweise umfassen einer oder mehrere der Notausschalter jeweils eine Kommunikationsvorrichtung, wobei mittels der Kommunikationsvorrichtung insbesondere ein Notaussignal an ein oder mehrere Fahrzeuge übermittelbar ist, um das eine oder die mehreren Fahrzeuge in einen Notausbetrieb zu versetzen.

Günstig kann es sein, wenn mittels eines oder mehrerer Notausschalter unterschiedliche Arten von Notausbetriebsszenarien auslösbar sind, wobei sich diese unterschiedlichen Arten von Notausbetriebsszenarien beispielsweise
a) durch eine Ausdehnung oder Größe oder Dimensionierung der Umgebung, in welcher die Fahrzeuge in den Notausbetrieb versetzt werden, und/oder
b) durch die Kriterien zur Überprüfung durch die Steuervorrichtung des jeweiligen Fahrzeugs und/oder
c) durch die gezielte Ansteuerung unterschiedlicher Gruppen von Fahrzeugen voneinander unterscheiden.

Vorteilhaft kann es sein, wenn die Fahrzeuge abhängig von ihrer jeweiligen Position unterschiedlichen Bereichen oder Zonen zugeordnet werden, wobei vorzugsweise jedem Bereich oder jeder Zone ein separates Notausbetriebsszenario zugeordnet ist. Durch die Betätigung eines Notausschalters in einem bestimmten Bereich oder in einer bestimmten Zone oder für einen bestimmten Bereich oder für eine bestimmte Zone können dann vorzugsweise mindestens diejenigen oder genau diejenigen oder nur diejenigen Fahrzeuge in den Notausbetrieb versetzt werden, welche diesem Bereich oder dieser Zone zugeordnet sind. Sämtliche anderen Fahrzeuge außerhalb dieses Bereichs oder dieser Zone verblieben dann vorzugsweise in einem zuvor bestehenden Betriebsmodus.

Für die Zuordnung der Fahrzeuge zu den unterschiedlichen Bereichen oder Zonen können insbesondere Sensorelemente zur Erfassung der Fahrzeuge und/oder Sensorelemente an den Fahrzeugen zur Erfassung der Umgebung genutzt werden. Insbesondere können Positionssensoren der Fahrzeuge oder externe Lichtschranken, Scanner oder sonstige Detektoren genutzt werden.

Die Bereiche oder Zonen sind insbesondere Behandlungsbereiche, beispielsweise Behandlungsstationen, und/oder Fahrstrecken, insbesondere Fahrstrecken außerhalb der Behandlungsbereiche, und/oder Lagerbereiche.

Eine Positionserkennung und/oder Positionsüberwachung eines oder mehrerer Fahrzeuge, insbesondere sämtlicher Fahrzeuge, erfolgt vorzugsweise über sämtliche denkbaren Bewegungswege und/oder Aufenthaltsbereiche der Fahrzeuge hinweg. Insbesondere ist eine ununterbrochene und/oder räumlich und/oder zeitlich kontinuierliche Positionserkennung und/oder Positionsüberwachung vorgesehen. Hierunter ist insbesondere eine Wiederholrate bei der Positionserkennung und/oder Positionsüberwachung von mindestens 1 pro Sekunde, insbesondere mindestens 10 pro Sekunde, zu verstehen.

Günstig kann es sein, wenn die Position des einen oder der mehreren oder sämtlicher Fahrzeuge durchgängig entlang mindestens eines Behandlungsbereichs, insbesondere mindestens einer Behandlungsstation, erkannt und/oder überwacht wird.

Bei einer Ausgestaltung der Erfindung kann vorgesehen sein, dass ein Fahrzeug, welches in einen Notausbetrieb versetzt wird, ein Signal an ein oder mehrere in der Umgebung des Fahrzeugs befindliche weitere Fahrzeuge abgibt, wobei das eine oder die mehreren Fahrzeuge mittels des Signals insbesondere in einen Aufmerksamkeitszustand versetzt werden, um beispielsweise eine Kollision mit dem beispielsweise plötzlich abbremsenden Fahrzeug, welches in den Notausbetrieb versetzt wurde, zu vermeiden. Das eine oder die mehreren Fahrzeuge werden hierzu insbesondere auf eine im Vergleich zu zuvor reduzierte Geschwindigkeit abgebremst. Alternativ oder ergänzend hierzu kann vorgesehen sein, dass das eine oder die mehreren Fahrzeuge im Aufmerksamkeitszustand einen von dem ursprünglich vorgesehenen Bewegungsweg abweichenden Bewegungsweg verfolgen, insbesondere um eine denkbare Gefahr, welche zur Betätigung des Notausschalters geführt hat, zu umfahren.

Zur Positionserkennung und/oder Positionsüberwachung eines oder mehrerer Fahrzeuge, insbesondere sämtlicher Fahrzeuge, kann beispielsweise eine in einen Boden, auf welchem das jeweilige Fahrzeug verfahrbar ist, integrierte oder darauf oder darin angeordnete Positionierhilfe vorgesehen sein.

Eine Positionierhilfe ist oder umfasst vorzugsweise mindestens ein ortsfestes Element, welches mittels einer an dem Fahrzeug angeordneten Detektionsvorrichtung, beispielsweise mittels eines Sensors und/oder einer Kamera, erfassbar ist und mittels welchem beispielsweise unter Nutzung einer Kenntnis der exakten Position der Positionierhilfe ein Rückschluss auf die Position des Fahrzeugs möglich ist.

Eine Positionierhilfe kann beispielsweise eine Induktionseinrichtung und/oder ein Codeband, insbesondere ein QR-Codeband, sein.

Vorzugsweise erstreckt sich die Positionierhilfe längs eines Bewegungswegs eines oder mehrerer Fahrzeuge und weist längs dieses Bewegungswegs lokal eindeutig zuordenbare Positioniermerkmale auf, so dass eine Position des Fahrzeugs insbesondere an jedem Punkt längs des Bewegungswegs eindeutig ermittelbar ist. Insbesondere erfolgt die Ermittlung mittels der Steuervorrichtung des jeweiligen Fahrzeugs und/oder mittels einer übergeordneten Steuerungsanlage, wobei eine Kommunikation zwischen dem jeweiligen Fahrzeug und der übergeordneten Steuerungsanlage vorzugsweise über ein sicheres Protokoll erfolgt.

Bei einer Ausgestaltung kann vorgesehen sein, dass das Fahrzeug mehrere Positionssensoren umfasst, welche insbesondere an unterschiedlichen Stellen längs einer Längsmittelachse des Fahrzeugs und/oder längs einer parallel zu einer Längsmittelachse des Fahrzeugs verlaufenden Richtung angeordnet sind.

Ein oder mehrere Positionssensoren dienen insbesondere der Erfassung einer oder mehrere Positionierhilfen, insbesondere fest an einem Boden angeordneter und/oder in den Boden integrierter Positionierhilfen, beispielsweise eines oder mehrerer Codebänder, insbesondere QR-Codebänder.

Günstig kann es sein, wenn mittels mehrerer Positionssensoren an voneinander verschiedenen Stellen längs eines Bewegungswegs des Fahrzeugs gleichzeitig eine Positionsermittlung durchgeführt wird.

Günstig kann es sein, wenn mittels der Steuervorrichtung des Fahrzeugs aus mehreren, insbesondere realen, Positionssensoren ein oder mehrere virtuelle Positionssensoren errechnet werden. Insbesondere kann ein bezüglich einer Längsrichtung des Fahrzeugs und/oder bezüglich einer Querrichtung des Fahrzeugs exakt mittig in dem Fahrzeug angeordneter virtueller Positionssensor errechnet werden, dessen vorzugsweise ebenfalls berechneten Sensorwerte aufgrund der zentralen Anordnung insbesondere eine optimale Positionsbestimmung und/oder Ausrichtungsbestimmung des Fahrzeugs ermöglichen.

Eine übergeordnete Steuerungsanlage koordiniert vorzugsweise mehrere Fahrzeuge, insbesondere sämtliche Fahrzeuge. Insbesondere sind mittels der übergeordneten Steuerungsanlage Informationen über die Positionen der Fahrzeuge dahingehend nutzbar, dass sicherheitsrelevante Positions- und/oder Geschwindigkeitsabweichungen, welche insbesondere zu einer Gefahrensituation führen können, kompensiert werden, beispielsweise durch Anpassen der Bewegungswege und/oder Betriebsparameter eines oder mehrere Fahrzeuge und/oder durch Versetzen eines oder mehrerer Fahrzeuge in den Notausbetrieb.

Vorteilhaft kann es sein, wenn eine Oberseite des Fahrzeugs gegenüber einer Unterseite des Fahrzeugs zurückversetzt angeordnet ist. Insbesondere können hierdurch abgeschrägte Seitenflächen einfach realisiert werden. Zudem kann sich hierdurch ein optimierter Erfassungsbereich zur Erfassung einer Umgebung mittels noch zu beschreibender Sensoren, insbesondere Sensorelemente einer Sensorvorrichtung, ergeben.

Vorteilhaft kann es sein, wenn der Grundkörper im Wesentlichen quaderförmig ausgebildet ist, wobei zwei oder vier Eckbereiche des Grundkörpers jeweils mit einer nach außen hervorragenden Sensorvorrichtung des Fahrzeugs versehen sind.

Eine oder mehrere Sensorvorrichtungen weisen vorzugsweise jeweils ein oder mehrere Sensorelemente zur Erfassung einer Umgebung des Fahrzeugs auf. Das eine oder die mehreren Sensorelemente weisen vorzugsweise jeweils für sich genommen oder gemeinsam in einer im Wesentlichen horizontalen Ebene einen Erfassungsbereich von mindestens ungefähr 250°, insbesondere ungefähr 270°, auf.

Die eine oder die mehreren Sensorvorrichtungen sind vorzugsweise mit einer Steuervorrichtung des Fahrzeugs gekoppelt, wobei die Steuervorrichtung vorzugsweise so ausgebildet und eingerichtet ist, dass das Fahrzeug abhängig von Sensorwerten, welche mittels der einen oder der mehreren Sensorvorrichtungen erfasst und/oder bestimmt werden, in zwei, drei oder mehr als drei unterschiedlichen Betriebsmodi betreibbar ist.

Beispielsweise kann vorgesehen sein, dass einer der Betriebsmodi ein Normalbetrieb ist, in welchem keine unerwarteten und/oder unbekannten und/oder störenden Objekte in einem Fahrweg oder einem sonstigen vorgegebenen Umgebungsbereich des Fahrzeugs angeordnet sind.

Alternativ oder ergänzend hierzu kann vorgesehen sein, dass einer der Betriebsmodi ein Warnbetrieb ist, in welchem ein oder mehrere unerwartete und/oder unbekannte und/oder störende Objekte in einem vordefinierten Warnabschnitt eines Fahrwegs oder eines sonstigen vorgegebenen Umgebungsbereichs des Fahrzeugs angeordnet sind.

Ferner kann alternativ oder ergänzend hierzu vorgesehen sein, dass einer der Betriebsmodi ein Stoppbetrieb ist, in welchem ein oder mehrere unerwartete und/oder unbekannte und/oder störende Objekte in einem vordefinierten Stoppabschnitt eines Fahrwegs und/oder eines sonstigen vorgegebenen Umgebungsbereichs des Fahrzeugs angeordnet sind.

Ein Warnabschnitt und/oder ein Stoppabschnitt und/oder die unterschiedlichen Umgebungsbereiche zur Auslösung eines Warnbetriebs und/oder Stoppbetriebs ergeben sich vorzugsweise durch vorgegebene Minimal- und/oder Maximalabstände der unerwarteten und/oder unbekannten und/oder störenden Objekte von dem Fahrzeug, wobei diese Minimal- und/oder Maximalabstände vorzugsweise abhängig von einer aktuellen Beladung des Fahrzeugs und/oder einer aktuellen Fahrtrichtung und/oder einer aktuellen Fahrtgeschwindigkeit vorzugsweise mittels der Steuervorrichtung variierbar sind.

Ferner kann vorgesehen sein, dass das Fahrzeug eine oder mehrere Sensorvorrichtungen umfasst, mittels welcher eine räumliche Umgebung des Fahrzeugs samt einer räumlichen Umgebung und/oder eines Raumbereichs eines mittels des Fahrzeugs transportierten Gegenstands erfassbar und/oder überwachbar ist.

Bei sämtlichen Ausführungsformen von Fahrzeugen sind vorzugsweise jeweils eine oder mehrere Sensorvorrichtungen des Fahrzeugs vorgesehen, mittels welcher ein jeweiliger Umgebungsbereich des Fahrzeugs erfassbar ist.

Mittels der einen oder der mehreren Sensorvorrichtungen ist insbesondere eine dreidimensionale Umgebung, d.h. ein dreidimensionaler Umgebungsbereich, erfassbar, wobei die Erfassung selbst vorzugsweise zweidimensional oder ebenfalls dreidimensional erfolgt, d.h. dass innerhalb des erfassten Umgebungsbereichs erfasste Objekte vorzugsweise hinsichtlich ihrer Ausmaße und Positionierung relativ zu dem Fahrzeug erfasst werden. Insbesondere werden die Ausmaße und die Positionierung der erfassten Objekte mittels der Steuervorrichtung des Fahrzeugs aus Sensordaten der einen oder der mehreren Sensorvorrichtungen errechnet.

Der Umgebungsbereich setzt sich vorzugsweise aus mehreren Zonen zusammen oder umfasst mehrere Zonen. Die Zonen können einander überlappend ausgebildet sein oder vollständig voneinander verschiedene Raumbereiche abdecken.

Mittels der einen oder der mehreren Sensorvorrichtungen sind vorzugsweise voneinander verschiedene Zonen des Umgebungsbereichs erfassbar.

Eine Zoneneinteilung ergibt sich beispielsweise durch die Auswahl von Grenzlinien in unterschiedlichen Abstände von dem Fahrzeug. Der Umgebungsbereich kann beispielsweise in horizontaler Richtung beispielsweise in drei Zonen eingeteilt werden.

Eine innerste Zone mit geringstem Abstand zum Fahrzeug, insbesondere eine unmittelbar an das Fahrzeug angrenzende Zone, ist beispielsweise eine Schutzzone.

Diese Schutzzone ist vorzugsweise ein Bereich, in welchem insbesondere für einen störungsfreien Betrieb kein Objekt außer dem Fahrzeug selbst (und gegebenenfalls dem Gegenstand) angeordnet sein darf. Vorzugsweise wird im Falle der Detektion eines Objekts in dieser Schutzzone umgehend und/oder automatisch das Fahrzeug in einen Stoppbetrieb versetzt.

Die Schutzzone ist insbesondere im horizontalen Schnitt ringförmig ausgebildet.

Eine sich an die Schutzzone anschließende weitere Zone ist beispielsweise eine Warnzone. Die Warnzone umgibt die Schutzzone vorzugsweise ringförmig, insbesondere bezogen auf einen horizontalen Schnitt durch das Fahrzeug, die Schutzzone und die Warnzone.

Die Warnzone ist insbesondere ein Bereich, in welchem kein Objekt außer dem Fahrzeug selbst angeordnet sein sollte, wobei eine Erfassung eines Objekts noch nicht zwingend zur Auslösung des Stoppbetriebs führt. Vielmehr wird das Fahrzeug im Falle der Detektion eines Objekts in dieser Warnzone vorzugsweise umgehend und/oder automatisch in den Warnbetrieb versetzt.

Außerhalb der Warnzone liegt insbesondere eine Freizone, welche bei Bedarf von der einen oder den mehreren Sensorvorrichtungen erfassbar ist, jedoch nicht auf die Präsenz von Objekten, etc. überwacht wird.

Die Objekte, welche als von der mindestens einen Sensorvorrichtung erfasste Objekte bezeichnet werden, sind insbesondere solche Objekte, welche in einem erwarteten Normalbetrieb des Fahrzeugs und/oder einer Behandlungsanlage nicht an der erfassten Position sein sollten. Allerdings werden von der einen oder den mehreren Sensorvorrichtungen auch solche Objekte erfasst, welche Bestandteile der Fördervorrichtung und/oder der Behandlungsanlage sind und deren Präsenz erforderlich ist.

Mittels der Steuervorrichtung des Fahrzeugs und/oder mittels einer übergeordneten Steuerungsanlage wird vorzugsweise überprüft, insbesondere berechnet, ob ein erfasstes Objekt ein unerwartetes und/oder unbekanntes und/oder störendes Objekt ist oder ob es sich um ein Objekt handelt, dessen Präsenz akzeptabel ist.

Vorzugsweise wird diese Überprüfung durchgeführt, bevor das Fahrzeug in den Warnbetrieb oder den Stoppbetrieb versetzt wird.

Abhängig von einem aktuellen Zustand des Fahrzeugs, insbesondere abhängig davon, ob das Fahrzeug mit einem Gegenstand beladen oder aber unbeladen ist, und/oder abhängig davon, mit welcher momentanen Geschwindigkeit und in welche Richtung das Fahrzeug sich bewegt, werden vorzugsweise die Grenzlinien zwischen den Zonen variiert.

Beispielsweise werden bei relativ hoher Geschwindigkeit des Fahrzeugs vorzugsweise die Grenzlinien im Bereich vor dem Fahrzeug (bezüglich der Fahrtrichtung) von dem Fahrzeug weg verschoben, so dass sich vor dem Fahrzeug eine Vergrößerung der Zonen, insbesondere der Warnzone und/oder der Schutzzone, ergibt.

Im Falle einer Kurvenfahrt kann beispielsweise eine Krümmung und/oder eine zumindest partielle, seitliche Verschiebung der Zonen derart vorgesehen sein, dass diese insbesondere im Bereich vor dem Fahrzeug einen möglichst großen Raumbereich längs der tatsächlichen Fahrtstrecke (Bewegungsweg) abdecken.

Der Bereich hinter dem Fahrzeug (bezüglich der Fahrtrichtung) muss üblicherweise weniger sorgfältig überwacht werden, so dass die hinter dem Fahrzeug befindlichen Teile der Zonen, insbesondere der Warnzone und/oder der Schutzzone, verkleinert werden können.

Mittels der Steuervorrichtung des Fahrzeugs und/oder mittels einer übergeordneten Steuerungsanlage werden die Grenzlinienverläufe und/oder die Ausmaße und/oder die Form der Zonen, insbesondere der Warnzone und/oder der Schutzzone, vorzugsweise regelmäßig, beispielsweise mehrmals pro Minute oder Sekunde, an den jeweils aktuellen Zustand angepasst.

Alternativ oder ergänzend hierzu kann eine Anpassung insbesondere stets dann vorgenommen werden, wenn das Fahrzeug eine Zustandsänderung erfährt, beispielsweise eine Richtungsänderung, eine Beladung, eine Entladung, eine Beschleunigung, etc.

Als Zustandsmerkmal, welches insbesondere Einfluss auf die Grenzlinienverläufe der Zonen hat, kann ferner vorzugsweise die momentane Position des Fahrzeugs innerhalb der Fördervorrichtung und/oder Behandlungsanlage herangezogen werden.

Insbesondere können die Zonen hinsichtlich ihrer Ausmaße und/oder Formen abhängig von der momentanen Position des Fahrzeugs innerhalb der Fördervorrichtung und/oder Behandlungsanlage variiert werden.

Beispielsweise dann, wenn das Fahrzeug sich einer Station nähert und erwartbar ist, dass Teile der Station in die Warnzone und/oder in die Schutzzone gelangen werden (beziehungsweise sich die Warnzone und/oder die Schutzzone bis in die Teile der Station hineinerstrecken wird/werden), kann eine Verkleinerung der Zonen, insbesondere der Warnzone und/oder der Schutzzone, derart vorgesehen sein, dass die Teile der Station außerhalb der Warnzone und/oder der Schutzzone liegen.

Insbesondere kann für eine in der Station erwartete Geradeausfahrt eine seitliche Umgebungserfassung reduziert oder vollständig deaktiviert werden.

Alternativ oder ergänzend hierzu kann vorgesehen sein, dass bei einer Annäherung eines Fahrzeugs an eine Station ein Stationsmodus aktiviert wird, bei welchem eine maximale Geschwindigkeit des Fahrzeugs reduziert ist, um das sich aus einer Reduktion der Umgebungsüberwachung ergebende, erhöhte Gefahrenpotential zu kompensieren. Eine Annäherung an eine Station kann beispielsweise durch Scannen einer Positionierhilfe und/oder durch Positions- und/oder Abstandssensoren ermittelt werden.

Insbesondere zur Bestimmung der Grenzlinienverläufe und/oder der Ausmaße und/oder der Form der Zonen kann Folgendes herangezogen werden:
- Geschwindigkeit und Fahrtrichtung des Fahrzeugs, insbesondere ermittelt unter Verwendung eines Laserscanners und/oder Inkrementalencoders, vorzugsweise softwareunterstützt;
- Hall-Sensorsignale von einem oder mehreren Antriebsmotoren der Antriebsvorrichtung. Vorzugsweise werden hieraus einheitliche Signale errechnet, insbesondere eine Fahrtgeschwindigkeit und eine Drehgeschwindigkeit. Falls eine optional durchgeführte Plausibilitätsprüfung unstimmige Werte ergibt, wird vorzugsweise ein Nothalt ausgelöst (insbesondere ein Notausbetrieb initiiert). Wenn die Plausibilitätsprüfung stimmige Werte ergibt, werden aus diesen Werten vorzugsweise die Grenzlinienverläufe und/oder die Ausmaße und/oder die Form der Zonen bestimmt.

Vorteilhaft kann es ferner sein, wenn alternativ oder ergänzend zu einer Zoneneinteilung in horizontaler Richtung eine Zoneneinteilung in vertikaler Richtung vorgesehen ist.

Insbesondere kann vorgesehen sein, dass in vertikaler Richtung eine Zone definiert wird, innerhalb derer das Fahrzeug angeordnet ist. Diese Zone ist insbesondere eine Fahrzeugzone.

Die Fahrzeugzone erstreckt sich in vertikaler Richtung insbesondere ausgehend von dem Boden, auf welchem das Fahrzeug verfahrbar ist, bis zu einer Oberseite des Grundkörpers des Fahrzeugs oder einem oberen Ende eines oder mehrerer Aufnahmeelemente.

Durch Erfassung des Raumbereichs des Umgebungsbereichs, welcher die Fahrzeugzone bildet oder umfasst, kann somit insbesondere ermittelt werden, ob sich das Fahrzeug weiteren Fahrzeugen nähert und/oder ob das Fahrzeug für sich genommen Gefahr läuft, mit einem Objekt zu kollidieren.

Eine weitere Zone in vertikaler Richtung ergibt sich aus der Dimensionierung des an dem Fahrzeug angeordneten Gegenstands. Diese den Gegenstand abdeckende Zone erstreckt sich in vertikaler Richtung insbesondere von einer Unterseite des Gegenstands (gegebenenfalls einschließlich eines Adapters oder Skids oder ähnlichem) und/oder bis zu einer Oberseite des Gegenstands, vorzugsweise von einem tiefsten Punkt des Gegenstands (gegebenenfalls einschließlich eines Adapters oder Skids oder ähnlichem) und/oder bis zu einem höchsten Punkt des Gegenstands. Diese Zone wird vorliegend als Gegenstandszone bezeichnet.

Es kann vorgesehen sein, dass die Gegenstandszone unmittelbar an die Fahrzeugzone angrenzt.

Alternativ hierzu kann vorgesehen sein, dass zwischen der Gegenstandszone und der Fahrzeugzone eine Zwischenzone angeordnet ist, welche sich insbesondere von der Oberseite des Grundkörpers des Fahrzeugs und/oder bis zu einer Unterseite des Gegenstands (gegebenenfalls einschließlich eines Adapters oder Skids oder ähnlichem) erstreckt, vorzugsweise bis zu einem tiefsten Punkt des Gegenstands (gegebenenfalls einschließlich eines Adapters oder Skids oder ähnlichem).

Ferner kann vorgesehen sein, dass die Zwischenzone sich in vertikaler Richtung zumindest näherungsweise so weit erstreckt, wie das eine oder die mehreren Aufnahmeelemente aus dem Grundkörper des Fahrzeugs herausragen.

Günstig kann es sein, wenn die in vertikaler Richtung eingeteilten Zonen mit den in horizontaler Richtung eingeteilten Zonen überlagert werden, insbesondere um für die Kombination aus Fahrzeug und Gegenstand eine optimale Umgebungserfassung und Gefahrenvermeidung zu ermöglichen.

Vorzugsweise ist der Fahrzeugzone eine Warnzone und/oder eine Schutzzone zugeordnet, so dass insbesondere überwachbar ist, ob das Fahrzeug weiteren Fahrzeugen oder sonstigen Objekten zu nahekommt.

Ferner kann vorgesehen sein, dass der Gegenstandszone eine Warnzone und/oder eine Schutzzone zugeordnet ist, so dass insbesondere überwachbar ist, ob das Fahrzeug weiteren Fahrzeugen oder sonstigen Objekten zu nahekommt.

Zudem kann vorgesehen sein, dass der Zwischenzone eine Warnzone und/oder eine Schutzzone zugeordnet ist, so dass insbesondere überwachbar ist, ob das Fahrzeug im Bereich des einen oder der mehreren Aufnahmeelemente einem Objekt zu nahekommt.

Die räumliche Ausdehnung, insbesondere in horizontaler Richtung, und/oder die Form der der Fahrzeugzone zugeordneten Warnzone und/oder der der Fahrzeugzone zugeordneten Schutzzone hängen insbesondere davon ab, ob das Fahrzeug beladen ist und/oder wo sich das Fahrzeug in der Fördervorrichtung und/oder Behandlungsanlage befindet.

Die räumliche Ausdehnung, insbesondere in horizontaler Richtung, und/oder die Form der der Gegenstandszone zugeordneten Warnzone und/oder der der Gegenstandszone zugeordneten Schutzzone hängen insbesondere davon ab, ob ein Gegenstand an dem Fahrzeug angeordnet ist, welche Ausmaße dieser Gegenstand selbst hat und/oder wo sich das Fahrzeug samt des daran angeordneten Gegenstands in der Fördervorrichtung und/oder Behandlungsanlage befindet. Insbesondere kann bei nicht beladenem Fahrzeug, d.h. bei nicht vorhandenem Gegenstand, vorgesehen sein, dass eine Umgebungsüberwachung im Bereich der Gegenstandszone vollständig deaktiviert wird.

Die räumliche Ausdehnung, insbesondere in horizontaler Richtung, und/oder die Form der der Zwischenzone zugeordneten Warnzone und/oder der der Zwischenzone zugeordneten Schutzzone hängen insbesondere davon ab, ob ein Gegenstand an dem Fahrzeug angeordnet ist, wie weit das eine oder die mehreren Aufnahmeelemente aus dem Grundkörper herausragen und/oder wo sich das Fahrzeug samt des gegebenenfalls daran angeordneten Gegenstands in der Fördervorrichtung und/oder Behandlungsanlage befindet. Insbesondere kann vorgesehen sein, dass eine Umgebungsüberwachung im Bereich der Zwischenzone deaktiviert wird, wenn das Fahrzeug in eine Station einfährt und/oder eine Station durchfährt und dabei das eine oder die mehreren Aufnahmeelemente in einen Trennboden hineinragen oder durch einen Trennboden hindurchragen.

Bei einer Ausgestaltung kann vorgesehen sein, dass jedes Fahrzeug selbstständig und unabhängig von den anderen Fahrzeugen beispielsweise basierend auf der Umgebungsüberwachung seine sich aus einem Auftrag ergebende Route oder seinen sich aus dem Auftrag ergebenden Bewegungsweg überprüft und/oder überwacht, insbesondere um Kollisionen zu vermeiden.

Ergänzend hierzu kann ferner vorgesehen sein, dass die Fahrzeuge sich gegenseitig (direkt oder indirekt über die übergeordnete Steuerungsanlage) über den jeweiligen Fahrzeugzustand und/oder die jeweiligen Ausdehnungen und/oder Formen der Zonen, insbesondere der Warnzonen, Schutzzonen, Fahrzeugzonen, Gegenstandszonen und/oder Zwischenzonen, informieren. Hierdurch können insbesondere planmäßige Überlappungen in den Zonen, welche sich beispielsweise bei einer engen gegenläufigen Vorbeifahrt zweier Fahrzeuge ergeben können, bewusst toleriert werden, ohne einen unnötigen Warnbetrieb auszulösen.

Günstig kann es sein, wenn einem oder mehreren oder sämtlichen Gegenständen, insbesondere Fahrzeugkarosserien, auch dann eine Gegenstandszone und/oder eine Warnzone und/oder eine Schutzzone zugeordnet ist, wenn der jeweilige Gegenstand nicht an einem Fahrzeug angeordnet ist. Insbesondere kann auch in Lagerstellen und/oder Parkpositionen eine solche Zoneneinteilung vorgesehen sein.

Eine solche Zonenzuordnung ermöglicht insbesondere eine übergeordnete Koordination sämtlicher Gegenstände unabhängig von der jeweiligen Anordnung an einem Fahrzeug, wodurch vorzugsweise auch potentielle Kollisionsrisiken von fahrenden Gegenständen (an einem Fahrzeug angeordneten Gegenständen) mit parkenden Gegenständen (nicht an einem Fahrzeug angeordneten Gegenständen) minimiert werden können.

Günstig kann es sein, wenn eine Breite einer Öffnung in einer Station, durch welche das Fahrzeug beispielsweise in einen Tunnel unterhalb eines Trennbodens der Station einfährt, mindestens einer maximalen Breite des Fahrzeugs entspricht, vorzugsweise mindestens ungefähr 105 % einer Breite des Fahrzeugs beträgt.

Abhängig davon, ob das Fahrzeug mit einem Gegenstand beladen oder unbeladen ist, kann dann vorzugsweise mittels der Steuervorrichtung eine den Normalbetrieb und/oder den Warnbetrieb und/oder den Stoppbetrieb auslösende Umgebungsüberwachung angepasst werden. Hierdurch kann insbesondere vermieden werden, dass ein Warnbetrieb oder Stoppbetrieb aufgrund eines oberhalb des Fahrzeugs befindlichen Objekts ausgelöst wird, obwohl kein Gegenstand auf dem Fahrzeug angeordnet ist und somit das Objekt auch kein Hindernis für das Fahrzeug darstellt.

Insbesondere Brücken und/oder Rückführbereiche mit reduzierter Fahrhöhe können hierdurch im Normalbetrieb unterfahren und/oder durchfahren werden, wobei zugleich eine Überwachung dahingehend erfolgt, dass tatsächlich kein zu fördernder Gegenstand an dem Fahrzeug angeordnet ist, welcher oder welches ansonsten beschädigt werden würde.

Im Warnbetrieb ist vorzugsweise eine Fahrgeschwindigkeit des Fahrzeugs reduziert, insbesondere im Vergleich zum Normalbetrieb. Ferner ist im Warnbetrieb vorzugsweise mittels einer Warnvorrichtung des Fahrzeugs ein akustisches Warnsignal und/oder ein optisches Warnsignal abgebbar.

Der Normalbetrieb des Fahrzeugs ist insbesondere derjenige Betriebsmodus des Fahrzeugs, in welchem dieses in einem optimalen und/oder störfallfreien Betrieb einer das eine oder mehrere Fahrzeuge umfassenden Anlage, insbesondere einer Fördervorrichtung und/oder einer Behandlungsanlage, betrieben wird.

Eine übergeordnete Steuerungsanlage ist vorzugsweise so ausgebildet und eingerichtet, dass einzelne oder mehrere oder sämtliche der in dieser Beschreibung und den beigefügten Ansprüchen enthaltenen und damit im Zusammenhang stehenden Merkmale und/oder Funktionen durchführbar sind und/oder dass einzelne oder mehrere oder sämtliche der in dieser Beschreibung und den beigefügten Ansprüchen enthaltenen und damit im Zusammenhang stehenden Ergebnisse erhältlich sind.

Ferner sind vorzugsweise einzelne oder mehrere oder sämtliche Fahrzeuge so ausgebildet und eingerichtet, dass einzelne oder mehrere oder sämtliche der in dieser Beschreibung und den beigefügten Ansprüchen enthaltenen und damit im Zusammenhang stehenden Merkmale und/oder Funktionen durchführbar sind und/oder dass einzelne oder mehrere oder sämtliche der in dieser Beschreibung und den beigefügten Ansprüchen enthaltenen und damit im Zusammenhang stehenden Ergebnisse erhältlich sind.

Mittels der übergeordneten Steuerungsanlage und/oder mittels einer Steuervorrichtung eines Fahrzeugs kann vorzugsweise ein Auftrag erstellt werden, welcher von dem Fahrzeug zu erledigen ist. Ein Auftrag kann beispielsweise ein Förderauftrag zum Transportieren eines Gegenstands und/oder ein Ladeauftrag zum Aufladen eines Energiespeichers des Fahrzeugs und/oder ein Relokalisierungsauftrag zum Verfahren des Fahrzeugs an eine andere vorgegebene Position sein. Ferner kann ein Auftrag ein Wartungsauftrag sein, bei welchem das Fahrzeug zu einem Wartungsbereich fährt und dort eine Wartung an dem Fahrzeug durchgeführt wird.

Eine Auftragserstellung kann beispielsweise automatisch erfolgen, insbesondere mittels einer übergeordneten Steuerungsanlage. Die übergeordnete Steuerungsanlage erstellt die Aufträge insbesondere derart, dass mittels eines oder mehrere Fahrzeuge eine Förderung der Gegenstände derart erfolgt, dass eine möglichst optimale Anlagenauslastung, insbesondere Behandlungsanlagenauslastung, erhältlich ist.

Das eine oder die mehreren Fahrzeuge fahren bei der Ausführung von automatisch erstellten Aufträge vorzugsweise autonom, wobei ein jedes Fahrzeug vorzugsweise einen hinsichtlich einer Fahrtzeit optimierten Bewegungsweg abfährt.

Ferner kann vorgesehen sein, dass für ein oder mehrere Fahrzeuge manuell Aufträge erstellbar sind. Die Aufträge sind insbesondere durch einen Bediener oder Werker manuell in der übergeordneten Steuerungsanlage erstellbar.

Für einen manuell erstellten Auftrag ist insbesondere ein nur teilautonomes Fahren des jeweiligen Fahrzeugs vorgesehen. Insbesondere kann vorgesehen sein, dass für einen manuell erstellten Auftrag nur bereits zuvor erstellte Bewegungswege, insbesondere manuell erstellte Routen, auswählbar sind und dass das jeweilige Fahrzeug bei der Ausführung eines manuell erstellten Auftrags lediglich längs dieser Bewegungswege verfahrbar ist.

Ein oder mehrere Fahrzeuge sind vorzugsweise in einem Einrichtbetrieb betreibbar, in welchem das jeweilige Fahrzeug keinen Auftrag durchführt, sondern vielmehr zur späteren Durchführung von Aufträgen vorbereitet, insbesondere eingelernt, wird. Beispielsweise sind im Einrichtbetrieb unterschiedliche Routen manuell erstellbar, welche später zur Durchführung von manuell erstellten Aufträgen als Bewegungswege auswählbar sind.

In dem Einrichtbetrieb, insbesondere bei der manuellen Erstellung von Routen, kann es vorkommen, dass das Fahrzeug in eine Situation kommt, welche in einem Normalbetrieb des Fahrzeugs eine Störung darstellen würde. Beispielsweise kann es sein, dass für eine manuell erstellte Route im Vergleich zu einem Bewegungsweg des Fahrzeugs bei vollautonomer Fahrt bewusst abweichende Grenzwerte, beispielsweise geringere Sicherheitsabstände, gewählt werden.

Insbesondere bei der Erstellung der manuellen Route und/oder bei der Ausführung von manuell erstellten Aufträgen (oder auch bei sämtlichen anderen Betriebsmodi) kann das Fahrzeug entweder eigensicher fahren, so dass es zuverlässig selbst auf mögliche Gefahrensituationen reagieren und diese vorzugsweise vermeiden kann, oder das Fahrzeug fährt nicht eigensicher, so dass es mögliche Gefahrensituation nicht selbstständig umgehen oder vermeiden kann. Der zuletzt genannte Fall ergibt sich insbesondere dann, wenn eine Sensorvorrichtung zur Überwachung einer Umgebung des Fahrzeugs defekt oder deaktiviert ist und/oder wenn eine oder mehrere sonstige Sicherheitsvorrichtungen oder Sicherheitsfunktionen des Fahrzeugs deaktiviert sind, beispielsweise durch absichtliches Überbrücken derselben. Ferner kann sich eine nicht eigensichere Fahrt bei ausschließlicher Orientierung des Fahrzeugs an einer oder mehreren Positionierhilfen, beispielsweise an einem oder mehreren QR-Codes und/oder an einem oder mehreren Codebändern, ergeben.

Bei eigensicherer Fahrt des Fahrzeugs ist vorzugsweise eine höhere Standardgeschwindigkeit und/oder eine höhere Maximalgeschwindigkeit des Fahrzeugs vorgesehen als bei nicht eigensicherer Fahrt des Fahrzeugs.

Beispielsweise beträgt die Standardgeschwindigkeit und/oder Maximalgeschwindigkeit des Fahrzeugs bei eigensicherer Fahrt mindestens ungefähr das 3-Fache, insbesondere mindestens ungefähr das 5-Fache, beispielsweise mindestens ungefähr das 10-Fache, der Standardgeschwindigkeit und/oder Maximalgeschwindigkeit des Fahrzeugs bei nicht eigensicherer Fahrt.

Insbesondere im Einrichtbetrieb kann eine Standardgeschwindigkeit und/oder Maximalgeschwindigkeit des Fahrzeugs bei eigensicherer Fahrt zwischen ungefähr 10 m/min und ungefähr 20 m/min, vorzugsweise zwischen ungefähr 12 m/min und ungefähr 18 m/min, beispielsweise ungefähr 15 m/min, betragen.

Insbesondere im Einrichtbetrieb kann eine Standardgeschwindigkeit und/oder Maximalgeschwindigkeit des Fahrzeugs bei nicht eigensicherer Fahrt zwischen ungefähr 0,5 m/min und ungefähr 5 m/min, vorzugsweise zwischen ungefähr 1 m/min und ungefähr 3 m/min, beispielsweise ungefähr 2 m/min, betragen.

Die Standardgeschwindigkeit des Fahrzeugs ist insbesondere diejenige durchschnittliche Geschwindigkeit, mit welcher das Fahrzeug sich auf gerader Strecke fortbewegt.

Im Stoppbetrieb des Fahrzeugs ist dieses vorzugsweise bis zum Stillstand abbremsbar oder abgebremst. Alternativ oder ergänzend hierzu ist vorgesehen, dass im Stoppbetrieb mittels einer Warnvorrichtung des Fahrzeugs ein akustisches Notsignal und/oder ein optisches Notsignal abgebbar ist. Ferner kann alternativ oder ergänzend hierzu vorgesehen sein, dass im Stoppbetrieb mittels der Steuervorrichtung ein Notsignal an eine übergeordnete Steuerungsanlage zur Steuerung und/oder Überwachung mehrerer Fahrzeuge übertragbar ist.

Ein Warnsignal und/oder ein Notsignal umfasst vorzugsweise eine Aufforderung zur Räumung des Fahrwegs und/oder der Umgebung des Fahrzeugs.

Das Warnsignal und/oder das Notsignal kann beispielsweise eine menschliche oder maschinelle gesprochene Mitteilung sein.

Vorteilhaft kann es sein, wenn das Fahrzeug multidirektional, insbesondere bidirektional, verfahrbar ist.

Mittels eines oder mehrerer Anzeigenelemente ist vorzugsweise an jedem Endbereich des Fahrzeugs abhängig von einer aktuellen Fahrtrichtung anzeigbar, ob der jeweilige Endbereich aktuell ein Frontbereich oder ein Heckbereich des Fahrzeugs ist.

Ein oder mehrere Anzeigenelemente sind insbesondere an allen Eckbereichen des Fahrzeugs angeordnet und/oder ausgebildet.

Das eine oder die mehreren Anzeigenelemente bilden vorzugsweise zugleich Blinkerelemente, welche bei einer Kurvenfahrt und/oder einem Abbiegen von einer Hauptförderstrecke die jeweils angestrebte Fahrtrichtung des Fahrzeugs anzeigen.

Bei einer Ausgestaltung der Erfindung kann vorgesehen sein, dass das Fahrzeug eine oder mehrere Ladeanschlussstellen zum Aufladen eines Energiespeichers des Fahrzeugs umfasst.

Eine Ladeanschlussstelle ist beispielsweise an einer Unterseite des Grundkörpers angeordnet. Vorzugsweise ist das Fahrzeug zum Aufladen des Energiespeichers über einer hierzu korrespondierenden Ladeanschlussstelle eines Ladebereichs positionierbar.

Alternativ oder ergänzend hierzu kann vorgesehen sein, dass eine Ladeanschlussstelle an einer Oberseite des Grundkörpers angeordnet ist. Vorzugsweise ist das Fahrzeug zum Aufladen des Energiespeichers dann unter einer hierzu korrespondierenden Ladeanschlussstelle eines Ladebereichs positionierbar.

Ein Ladebereich ist insbesondere ein Teil einer Ladevorrichtung, an welcher eine berührungslose, beispielsweise induktive, und/oder mechanisch gekoppelte Energieübertragung erfolgt.

An einem Ladebereich ist zu einem gegebenen Zeitpunkt insbesondere genau ein Fahrzeug aufladbar.

Ein Ladebereich umfasst vorzugsweise eine energiequellenseitige Ladeanschlussstelle. Eine speicherseitige Ladeanschlussstelle ist vorzugsweise an dem Fahrzeug angeordnet und/oder ausgebildet.

Über die Ladeanschlussstelle des Ladebereichs wird vorzugsweise Energie aus dem Stromnetz bereitgestellt.

Mittels der Ladeanschlussstelle des Fahrzeugs wird vorzugsweise Energie von der Ladeanschlussstelle des Ladebereichs abgegriffen und dem Energiespeicher des Fahrzeugs zugeführt.

Günstig kann es sein, wenn die Ladeanschlussstelle berührend mit einer hierzu korrespondierenden Ladeanschlussstelle eines Ladebereichs koppelbar ist.

Eine berührende Ladeanschlussstelle ist oder umfasst beispielsweise einen Schleifkontakt.

Alternativ oder ergänzend hierzu kann vorgesehen sein, dass eine Ladeanschlussstelle berührungslos mit einer hierzu korrespondierenden Ladeanschlussstelle eines Ladebereichs koppelbar ist.

Insbesondere kann hierbei eine induktive Energieübertragung vorgesehen sein.

Vorteilhaft kann es sein, wenn das Fahrzeug eine an einer Seitenwandung des Grundkörpers angeordnete Ladeanschlussstelle umfasst, welche insbesondere eine zusätzliche Ladeanschlussstelle ist, welche zusätzlich zu einer beispielsweise an einer Unterseite des Grundkörpers angeordneten Ladeanschlussstelle vorgesehen ist.

Die Ladeanschlussstelle an einer Seitenwandung des Grundkörpers ist insbesondere eine weitere Ladeanschlussstelle, welche insbesondere mittels einer Steckverbindung mit einer hierzu korrespondierenden Ladeanschlussstelle eines Ladebereichs koppelbar ist.

Die an einer Unterseite des Grundkörpers angeordnete Ladeanschlussstelle kann bei einer Ausgestaltung des Fahrzeugs eine Hauptladeanschlussstelle sein, über welche im Normalbetrieb des Fahrzeugs ein Großteil der für den Betrieb erforderlichen Energie aufnehmbar ist.

Die weitere Ladeanschlussstelle ist insbesondere eine Reserveladeanschlussstelle und/oder Notladeanschlussstelle. Über diese weitere Ladeanschlussstelle ist dem Energiespeicher des Fahrzeugs insbesondere dann Energie zuführbar, wenn das Fahrzeug aus irgendwelchen Gründen nicht mehr zu einem Ladebereich für die Hauptladeanschlussstelle bringbar ist.

Günstig kann es sein, wenn mindestens eine Ladeanschlussstelle an mindestens einem Aufnahmeelement angeordnet und/oder ausgebildet ist.

Es kann vorgesehen sein, dass das Aufnahmeelement einen oder mehrere Kontaktbereiche und/oder ein oder mehrere Kontaktelemente und/oder eine Steuerkontaktierung umfasst.

Der eine oder die mehreren Kontaktbereiche und/oder das eine oder die mehreren Kontaktelemente sind vorzugsweise unzugänglich, wenn das mindestens eine Aufnahmeelement in einer eingefahrenen Stellung angeordnet ist. Die Kontaktbereiche und/oder Kontaktelemente sind dann insbesondere im Sinne eines optimierten Personenschutzes unzugänglich, insbesondere dann, wenn keine Gegenstände mittels des Fahrzeugs gefördert werden und somit keine Gegenstände den einen oder die mehreren Aufnahmeelemente abdecken.

Ein oder mehrere Kontaktbereiche und/oder ein oder mehrere Kontaktelemente und/oder eine Steuerkontaktierung sind insbesondere an einem Schaftbereich und/oder an einem Aufnahmezylinder mindestens eines Aufnahmeelements angeordnet und/oder ausgebildet.

Vorzugsweise sind zwei Kontaktbereiche und/oder Kontaktelemente auf bezüglich einer vertikalen Längsmittelachse des Fahrzeugs einander gegenüberliegende Seiten des mindestens einen Aufnahmeelements, insbesondere des Schaftbereichs und/oder Aufnahmezylinders des mindestens einen Aufnahmeelements, angeordnet und/oder ausgebildet.

Alternativ oder ergänzend hierzu können insbesondere in unterschiedlichen Höhen an dem Schaftbereich und/oder Aufnahmezylinder des mindestens einen Aufnahmeelements angeordnete Kontaktbereiche und/oder Kontaktelemente vorgesehen sein.

Insbesondere mittels eines oder mehrerer Schleifkontakte sind der eine oder die mehreren Kontaktbereiche und/oder Kontaktelemente vorzugsweise einfach an dem Aufnahmeelement kontaktierbar, um Energie zu dem Energiespeicher des Fahrzeugs zuführen zu können.

Vorteilhaft kann es sein, wenn das Fahrzeug einen Energiespeicher zur Speicherung und Bereitstellung von elektrischer Energie zum Antreiben des Fahrzeugs umfasst, wobei der Energiespeicher eine oder mehrere Energiespeichereinheiten umfasst, welche als Kondensator, insbesondere Superkondensator oder Ultrakondensator, ausgebildet sind.

Ferner kann es vorgesehen sein, dass das Fahrzeug einen Energiespeicher umfasst, mittels welchem elektrische Energie zum Antreiben einer Hubantriebsvorrichtung des Fahrzeugs speicherbar und bereitstellbar ist.

Mittels desselben Energiespeichers, insbesondere mittels derselben Energiespeichereinheit oder mittels derselben Energiespeichereinheiten des Energiespeichers, ist vorzugsweise Energie sowohl zum Antreiben der Hubantriebsvorrichtung als auch zum Antreiben des Fahrzeugs speicherbar und bereitstellbar.

Das Antreiben des Fahrzeugs ist insbesondere ein Fortbewegen des Fahrzeugs.

Das Fahrzeug umfasst vorzugsweise einen Energiespeicher, welcher insbesondere mehrere Energiespeichereinheiten umfasst.

Günstig kann es sein, wenn der Energiespeicher eine oder mehrere Antriebsenergiespeichereinheiten zum Speichern von Energie zum Antreiben des Fahrzeugs als Ganzes und/oder zum Antreiben einer Hubantriebsvorrichtung umfasst.

Eine oder mehrere oder sämtliche Antriebsenergiespeichereinheiten können beispielsweise als Superkondensatoren ausgebildet sein.

Alternativ oder ergänzend hierzu kann vorgesehen sein, dass der Energiespeicher eine oder mehrere Pufferenergiespeichereinheiten umfasst, mittels welcher Energie beispielsweise zum Betrieb der Steuervorrichtung und/oder einer oder mehrere Sensorvorrichtungen und/oder einer oder mehrere Kommunikationsvorrichtungen bereitstellbar ist.

Eine oder mehrere oder sämtliche Pufferenergiespeichereinheiten können beispielsweise als Lithium-Ionen-Akkumulatoren ausgebildet sein.

Optional kann vorgesehen sein, dass eine oder mehrere oder sämtliche Pufferenergiespeichereinheiten mit einer Antriebsvorrichtung und/oder einer Hubantriebsvorrichtung des Fahrzeugs gekoppelt oder koppelbar sind, insbesondere zur Bereitstellung von Energie zum Betrieb der Antriebsvorrichtung und/oder der Hubantriebsvorrichtung, falls die Antriebsenergiespeichereinheiten hierfür nicht mehr ausreichend Energie bereitstellen können.

Es kann vorgesehen sein, dass die eine oder die mehreren Antriebsenergiespeichereinheiten einerseits und die eine oder die mehreren Pufferenergiespeichereinheiten andererseits voneinander verschiedene Normbetriebsspannungen und/oder Ladespannungen aufweisen.

Beispielsweise kann vorgesehen sein, dass die eine oder die mehreren Antriebsenergiespeichereinheiten mit einer Spannung, insbesondere Gleichspannung, von zumindest näherungsweise 48 V betreibbar sind.

Ferner kann vorgesehen sein, dass die eine oder die mehreren Pufferenergiespeichereinheiten mit einer Spannung, insbesondere Gleichspannung, von zumindest näherungsweise 24 V betreibbar sind.

Zum Laden des Energiespeichers an einem Ladebereich umfasst der Ladebereich vorzugsweise eine oder mehrere Ladeanschlussstellen, welche jeweils mehrere Kontaktbereiche und/oder Kontaktelemente zur Bereitstellung von Spannungen mit unterschiedlich hohen Spannungswerten aufweisen.

Insbesondere sind an einer oder mehreren Ladeanschlussstellen jeweils zwei oder mehr als zwei Paare von Kontaktbereichen und/oder Kontaktelementen vorgesehen, welche zur Bereitstellung von unterschiedlichen Ladespannungen dienen.

Ein Kontaktbereich kann insbesondere als ein Flächenkontakt und/oder als Kontaktelement, insbesondere als vorstehendes Kontaktelement und/oder als Schleifkontakt, ausgebildet sein.

Fahrzeugseitige Kontaktbereiche einer oder mehrerer Ladeanschlussstellen des Fahrzeugs sind vorzugsweise zumindest hinsichtlich ihrer räumlichen Ausbildung und/oder Anordnung zumindest abschnittsweise komplementär zu den Kontaktbereichen der einen oder der mehreren energiequellenseitigen Ladeanschlussstellen ausgebildet und/oder angeordnet.

Die Kontaktbereiche sind insbesondere derart ausgebildet und/oder angeordnet, dass eine Querkontaktierung zwischen Kontaktbereichen von nicht zueinander gehörenden Paaren von Kontaktbereichen ausgeschlossen ist.

Günstig kann es sein, wenn eine oder mehrere oder sämtliche Ladeanschlussstellen jeweils mindestens ein außenliegendes Paar von Kontaktbereichen aufweisen, welches insbesondere zum Laden der mindestens einen Antriebsenergiespeichereinheit dient.

Ferner kann vorgesehen sein, dass eine oder mehrere oder sämtliche Ladeanschlussstellen jeweils mindestens ein innenliegendes Paar von Kontaktbereichen aufweisen, welches insbesondere zum Laden der mindestens einen Pufferenergiespeichereinheit dient.

Das mindestens eine innenliegende Paar von Kontaktbereichen ist insbesondere zwischen den beiden Kontaktbereichen des mindestens einen außenliegenden Paars von Kontaktbereichen angeordnet.

Alternativ hierzu kann auch eine umgekehrte Nutzung der Kontaktbereiche vorgesehen sein, so dass das mindestens eine innenliegende Paar von Kontaktbereichen beispielsweise zum Laden der mindestens einen Antriebsenergiespeichereinheit dient, während das mindestens eine außenliegende Paar von Kontaktbereichen beispielsweise zum Laden der mindestens einen Pufferenergiespeichereinheit dient.

Ferner kann vorgesehen sein, dass eine oder mehrere oder sämtliche Ladeanschlussstellen jeweils einen oder mehrere Positionskontakte aufweisen, mittels welchen eine Positionserkennung und/oder Positionsüberwachung der Fahrzeuge durchführbar ist.

Beispielsweise können ein oder mehrere Paare von Positionskontakten vorgesehen sein, welche insbesondere innenliegend zwischen Kontaktbereichen der jeweiligen Ladeanschlussstelle und/oder außenliegend angeordnet sind, so dass die Kontaktbereiche der jeweiligen Ladeanschlussstelle zwischen den Positionskontakten angeordnet sind.

Vorteilhaft kann es sein, wenn mittels eines oder mehrerer Positionssensoren und/oder Positionskontakte ermittelt wird, ob ein Fahrzeug eine zum Laden des Energiespeichers erforderliche Position relativ zu einer Ladeanschlussstelle eingenommen hat und dass bejahendenfalls eine oder mehrere Ladespannungen an der Ladeanschlussstelle zum Laden des Energiespeichers freigegeben werden.

Günstig kann es sein, wenn ein oder mehrere Kontaktbereiche und/oder Kontaktelemente zum Laden des Energiespeichers, insbesondere einer oder mehrerer Antriebsenergiespeichereinheiten und/oder einer oder mehrerer Pufferenergiespeichereinheiten, zugleich als ein oder mehrere Positionskontakte dienen.

Es kann vorgesehen sein, dass ein oder mehrere Kontaktbereiche und/oder Kontaktelemente und/oder ein oder mehrere Positionskontakte des Fahrzeugs jeweils eine Sicherheitseinrichtung, beispielsweise ein Relais und/oder ein Schütz, aufweisen, mittels welchem eine temporäre Spannungsabschaltung durchführbar ist, beispielsweise zur Vermeidung von Kurzschlüssen am Energiespeicher bei der Nutzung der Kontaktbereiche und/oder Positionskontakte zur Positionserkennung und/oder Positionsüberwachung.

Alternativ oder ergänzend hierzu kann vorgesehen sein, dass ein oder mehrere Kontaktbereiche und/oder Kontaktelemente und/oder ein oder mehrere Positionskontakte einer oder mehrere oder sämtlicher energiequellenseitiger Ladeanschlussstellen jeweils eine Sicherheitseinrichtung, beispielsweise ein Relais und/oder ein Schütz, aufweisen, mittels welchem eine temporäre Spannungsabschaltung durchführbar ist, beispielsweise zur Vermeidung von Kurzschlüssen an der Energiequelle bei der Nutzung der Kontaktbereiche und/oder Positionskontakte zur Positionserkennung und/oder Positionsüberwachung.

Zur Umschaltung zwischen einem Positionserkennungsmodus und einem Lademodus, insbesondere zur entsprechenden Ansteuerung der Sicherheitseinrichtung, ist vorzugsweise ein Handshake zwischen dem Fahrzeug und der Ladeanschlussstelle und/oder der übergeordneten Steuerungsanlage vorgesehen.

Insbesondere kann energiequellenseitig durch eine Spannungsmessung an den Kontaktbereichen und/oder Kontaktelementen ermittelt werden, ob ein Fahrzeug an der jeweiligen Ladeanschlussstelle korrekt positioniert ist. Beispielsweise kann auf ein korrekt positioniertes Fahrzeug geschlossen werden, wenn die gemessene Spannung größer als 0,2 V, insbesondere größer als 0,5 V, beträgt.

Nach Abschluss des Ladevorgangs wird die Ladeanschlussstelle vorzugsweise erneut in einen Positionserkennungsmodus versetzt, insbesondere durch Aktivieren der Sicherheitseinrichtung.

Das Fahrzeug umfasst vorzugsweise eine Steuervorrichtung, welche insbesondere so ausgebildet und eingerichtet ist, dass das Fahrzeug wahlweise in einem Sicherheitsmodus oder in einem Expressmodus betreibbar ist.

Vorzugsweise ist das Fahrzeug a) nur im Sicherheitsmodus oder b) nur im Expressmodus oder c) sowohl im Sicherheitsmodus als auch im Expressmodus wahlweise im Normalbetrieb und/oder im Warnbetrieb und/oder im Stoppbetrieb betreibbar.

Das Fahrzeug ist vorzugsweise in den Sicherheitsmodus versetzt oder versetzbar, wenn Personen in der Umgebung des Fahrzeugs detektiert werden und/oder ein Bereich befahren wird, welcher für Personen zugänglich ist.

Ein Detektieren von Personen ist insbesondere ein Detektieren von Objekten, welche Personen sein könnten. Dabei muss nicht zwingend erkannt werden, ob es wirklich eine Person ist, vielmehr muss gewährleistet werden, dass für den Fall, dass es eine Person ist, diese Person vor Schaden geschützt wird.

Ferner ist das Fahrzeug vorzugsweise in den Expressmodus versetzt oder versetzbar, wenn in der Umgebung des Fahrzeugs keine Personen detektiert werden und/oder ein Bereich befahren wird, welcher für Personen unzugänglich ist.

Insbesondere ist das Fahrzeug in dem Sicherheitsmodus so betreibbar, dass die Vorgaben und/oder Empfehlungen aus der VDI-Richtlinie 2510 eingehalten werden.

Vorzugsweise ist vorgesehen, dass im Sicherheitsmodus eine oder mehrere Sensorvorrichtungen des Fahrzeugs eine Umgebung des Fahrzeugs überwachen.

Abhängig von den Ergebnissen der Sensorüberwachung ist im Sicherheitsmodus vorzugsweise mittels der Steuervorrichtung auswählbar, ob das Fahrzeug im Normalbetrieb, in einem Warnbetrieb und/oder in einem Stoppbetrieb betrieben wird.

Eine Höchstgeschwindigkeit im Sicherheitsmodus ist vorzugsweise angepasst an bestehende Normen, Richtlinien und/oder Empfehlungen für selbstfahrende Fahrzeuge in Räumen und/oder Bereichen, in welchen sich Personen aufhalten oder aufhalten können.

Im Expressmodus ist vorzugsweise keine Höchstgeschwindigkeit vorgeschrieben. Vielmehr wird im Expressmodus das Fahrzeug mittels der Steuervorrichtung vorzugsweise lediglich so gesteuert, dass ein Sachschaden vermieden wird. Insbesondere kann in einem unbeladenen Zustand des Fahrzeugs eine sehr hohe Geschwindigkeit weit über der Höchstgeschwindigkeit im Sicherheitsmodus vorgesehen sein. Beispielsweise beträgt die Geschwindigkeit des Fahrzeugs im Expressmodus mindestens ungefähr 150%, insbesondere mindestens ungefähr 200%, beispielsweise mindestens ungefähr 300%, der Höchstgeschwindigkeit des Fahrzeugs im Sicherheitsmodus.

Vorteilhaft kann es sein, wenn das Fahrzeug mittels einer am Fahrzeug befindlichen Vorrichtung, insbesondere eines GPS-Empfängers und/oder eines Real-Time-Location-Systems, und/oder mittels einer nicht am Fahrzeug befindlichen Vorrichtung, insbesondere einer Sensorvorrichtung, beispielsweise unter Verwendung von externen Sicherheitskontakten, etc., in den Sicherheitsmodus oder in den Expressmodus versetzbar ist.

Eine nicht am Fahrzeug befindliche Vorrichtung ist insbesondere eine Überwachungsvorrichtung, mittels welcher überwacht wird oder überwachbar ist, ob Personen Zugang zu einem Expressbereich, in welchem das Fahrzeug im Expressmodus betrieben wird, haben oder haben könnten. Beispielsweise kann eine überwachte Zugangstür als Zugang zu dem Expressbereich im Falle der Öffnung derselben dazu führen, dass das Fahrzeug im Expressbereich umgehend aus dem Expressmodus in den Sicherheitsmodus versetzt wird.

Ferner kann vorgesehen sein, dass eine Steuervorrichtung des Fahrzeugs mittels eigener Sensoren und/oder durch Abfrage externer Sensoren einen Zustand eines Expressbereichs überprüft, bevor das Fahrzeug in den Expressmodus versetzt wird. Beispielsweise kann ein Umschalten aus dem Sicherheitsmodus in den Expressmodus im Expressbereich verhindert werden, wenn eine interne oder externe Sensorvorrichtung eine im Expressbereich befindliche Person detektiert.

Anstelle einer Personendetektion können auch andere Parameter oder Umstände zur sicheren Auswahl des Expressmodus herangezogen werden.

Ein Expressbereich kann beispielsweise in einer oder mehreren Ebenen einer Bearbeitungsanlage ausgebildet und/oder vorgesehen sein.

Vorteilhaft kann es sein, wenn ein Expressbereich sich zumindest näherungsweise vollständig, insbesondere zu mindestens ungefähr 90 %, beispielsweise zu mindestens ungefähr 95 %, einer Nutzfläche einer oder mehrerer Ebenen einer Bearbeitungsanlage über diese eine oder diese mehreren Ebene erstreckt.

Alternativ oder ergänzend hierzu kann vorgesehen sein, dass ein Sicherheitsbereich beispielsweise in einer oder mehreren Ebenen einer Bearbeitungsanlage ausgebildet und/oder vorgesehen ist.

Vorteilhaft kann es sein, wenn ein Sicherheitsbereich sich zumindest näherungsweise vollständig, insbesondere zu mindestens ungefähr 90 %, beispielsweise zu mindestens ungefähr 95 %, einer Nutzfläche einer oder mehrerer Ebenen einer Bearbeitungsanlage über diese eine oder diese mehreren Ebene erstreckt.

Ferner kann vorgesehen sein, dass eine oder mehrere Ebenen einer Bearbeitungsanlage jeweils einen oder mehrere Sicherheitsbereich sowie einen oder mehrere Expressbereich aufweisen.

Eine Ebene, welche zu mindestens ungefähr 50 %, insbesondere mindestens ungefähr 80 %, beispielsweise zu mindestens ungefähr 95 %, als Expressbereich ausgebildet ist, ist vorzugsweise eine Ebene mit mehrheitlich oder ausschließlich automatischen Arbeitsplätzen, d.h. mit mehrheitlich oder ausschließlich solchen Stationen und/oder Bearbeitungsbereichen, in welchen die Gegenstände mittels Robotern oder sonstige Maschinen bearbeitet werden.

Eine Ebene, welche zu mindestens ungefähr 50 %, insbesondere mindestens ungefähr 80 %, beispielsweise zu mindestens ungefähr 95 %, als Sicherheitsbereich ausgebildet ist, ist vorzugsweise eine Ebene mit mehrheitlich oder ausschließlich manuellen Arbeitsplätzen, d.h. mit mehrheitlich oder ausschließlich solchen Stationen und/oder Bearbeitungsbereichen, in welchen die Gegenstände von Personen bearbeitet werden.

Das eine oder die mehreren Aufnahmeelemente des Fahrzeugs können beispielsweise unmittelbar an einem zu fördernden Gegenstand festgelegt werden.

Es kann jedoch auch vorgesehen sein, dass ein zu fördernder Gegenstand mittels einer Adaptervorrichtung an dem einen oder den mehreren Aufnahmeelementen des Fahrzeugs festgelegt oder festlegbar ist.

Die vorliegende Erfindung betrifft daher auch eine Adaptervorrichtung zur Aufnahme eines Gegenstands, insbesondere eines Werkstücks, beispielsweise einer Fahrzeugkarosserie.

Die Adaptervorrichtung umfasst vorzugsweise Folgendes:
ein Zentralelement;
ein oder mehrere Adapterelemente, welche an dem Zentralelement festgelegt und zur Aufnahme des Gegenstands geometrisch an den Gegenstand angepasst sind.

Ein oder mehrere Angriffsbereiche, insbesondere Einführöffnungen, an welchen ein oder mehrere Aufnahmeelemente zur Aufnahme der Adaptervorrichtung angreifen, sind vorzugsweise an dem Zentralelement und/oder an dem einen oder den mehreren Adapterelementen angeordnet und/oder ausgebildet.

Das Zentralelement verbindet vorzugsweise mehrere Adapterelemente miteinander.

Insbesondere sind an einem oder mehreren Adapterelementen jeweils ein oder mehrere Aufnahmepins zur Aufnahme eines oder mehrerer Gegenstände, beispielsweise einer Fahrzeugkarosserie, vorgesehen.

Der eine oder die mehreren Angriffsbereiche, insbesondere Einführöffnungen, sind vorzugsweise im Wesentlichen komplementär zu einem oder mehreren Aufnahmeabschnitten angeordnet und/oder ausgebildet.

Insbesondere sind ein oder mehrere Angriffsbereiche, beispielsweise Einführöffnungen, im Wesentlichen konusförmig, konusabschnittsförmig, kegelstumpfförmig oder kegelstumpfabschnittsförmig ausgebildet.

Günstig kann es sein, wenn ein oder mehrere Angriffsbereiche, insbesondere Einführöffnungen, an einer Unterseite der Adaptervorrichtung angeordnet und/oder ausgebildet sind und sich entgegen der Schwerkraftrichtung verjüngen.

Die erfindungsgemäße Adaptervorrichtung eignet sich insbesondere zur Verwendung in Kombination mit einem erfindungsgemäßen Fahrzeug.

Die vorliegende Erfindung betrifft daher auch eine Kombination aus mindestens einem Fahrzeug und mindestens einer Adaptervorrichtung.

Insbesondere können mehrere Adapterelemente unterschiedlicher Geometrie und/oder Größe zur Aufnahme von Gegenständen unterschiedlicher Geometrie und/oder Größe vorgesehen sein.

Insbesondere kann die Kombination ein Baukastensystem zur Herstellung von Adaptervorrichtungen für unterschiedliche Arten von Gegenständen umfassen, wobei insbesondere ein oder mehrere identisch ausgebildete Zentralelemente und wahlweise daran anordenbare, insbesondere anschraubbare, Adapterelemente unterschiedlicher Geometrie und/oder Größe vorgesehen sind.

Das erfindungsgemäße Fahrzeug und/oder die erfindungsgemäße Adaptervorrichtung und/oder die erfindungsgemäße Kombination eignen sich insbesondere zur Verwendung in einer Fördervorrichtung zum Fördern von Gegenständen.

Die vorliegende Erfindung betrifft daher auch eine Fördervorrichtung zum Fördern von Gegenständen, insbesondere Werkstücken, beispielsweise Fahrzeugkarosserien.

Die Fördervorrichtung umfasst dabei insbesondere ein oder mehrere Fahrzeuge, beispielsweise erfindungsgemäße Fahrzeuge.

Die Fördervorrichtung umfasst ferner vorzugsweise eine oder mehrere Stationen, zu welchen die Gegenstände mittels eines oder mehrerer Fahrzeuge hin transportierbar sind und/oder an welchen die Gegenstände abgebbar und/oder aufnehmbar sind.

Insbesondere sind die Gegenstände an einer oder mehreren Stationen von den Fahrzeugen an eine Stationsfördervorrichtung und/oder an eine Stationsaufnahme übergebbar oder von derselben übernehmbar.

In mindestens einer der Stationen sind vorzugsweise zwei oder mehr als zwei Positionen für zwei oder mehr als zwei Gegenstände vorgesehen.

Ein Gegenstand ist vorzugsweise mittels eines Fahrzeugs in einer ersten Position an die Station abgebbar. In einer zweiten Position ist ein Gegenstand vorzugsweise mittels eines Fahrzeugs aufnehmbar und anschließend aus der Station abtransportierbar.

Die erste Position ist insbesondere eine Abgabeposition.

Die zweite Position ist insbesondere eine Aufnahmeposition.

Günstig kann es sein, wenn die Gegenstände während der Förderung von der ersten Position zu der zweiten Position oder in einer dazwischen angeordneten Zwischenposition bearbeitbar sind.

Günstig kann es sein, wenn mindestens ein Fahrzeug so ausgebildet und eingerichtet ist, dass ein Gegenstand in einer ersten Position an einer Station abgebbar ist und dass dann ein zuvor an dieser ersten Position abgegebener Gegenstand, welcher zwischenzeitlich zu einer zweiten Position dieser Station gefördert wurde, an der zweiten Position aufnehmbar ist. Mittels des mindestens einen Fahrzeugs ist somit insbesondere ein Takt der Fördervorrichtung überspringbar.

Die Fahrzeuge sind vorzugsweise weiterverwendbar, während ein oder mehrere Gegenstände temporär in einer Station verbleiben, insbesondere bearbeitet werden.

Der mittels des mindestens einen Fahrzeugs an der ersten Position abgegebene Gegenstand wird dann mittels eines weiteren Fahrzeugs, welches zwischenzeitlich einen weiteren Gegenstand an der ersten Position abgegeben hat, an der zweiten Position aufgenommen, insbesondere nach einer Bearbeitung des Gegenstands in einer Zwischenposition.

Die Fahrzeuge der Fördervorrichtung sind somit vorzugsweise auf den Transportvorgang hin optimiert. Insbesondere werden vorzugsweise Wartezeiten während einer Behandlung von Gegenständen vermieden.

Günstig kann es sein, wenn eine oder mehrere Stationen einen Trennboden umfassen, unter welchem das mindestens eine Fahrzeug bewegbar ist, insbesondere während ein oder mehrere Gegenstände oberhalb des Trennbodens bewegbar sind und/oder um ein oder mehrere Gegenstände oberhalb des Trennbodens zu bewegen.

Die Gegenstände sind dabei vorzugsweise vollständig über dem Trennboden angeordnet.

Das mindestens eine Fahrzeug, insbesondere der Grundkörper und das Fahrwerk, ist vorzugsweise unter dem Trennboden angeordnet, wobei allenfalls ein oder mehrere Aufnahmeelemente durch den Trennboden hindurchragen und/oder in den Trennboden hineinragen. Insbesondere ein Grundkörper des mindestens einen Fahrzeugs ist vorzugsweise vollständig unterhalb des Trennbodens angeordnet.

Der Trennboden erstreckt sich vorzugsweise von einer Abgabeposition bis hin zu einer Aufnahmeposition.

Zumindest erstreckt sich der Trennboden vorzugsweise im Bereich einer Zwischenposition, insbesondere über einen gesamten Behandlungsbereich hinweg, wenn die Station beispielsweise eine Behandlungsstation ist.

Der Trennboden ist vorzugsweise für Personen begehbar und/oder für Maschinen befahrbar.

Der Trennboden kann beispielsweise im Wesentlichen eben oder als Tunnel ausgebildet sein.

Insbesondere kann der Trennboden einen doppelten Boden bilden, welcher im Wesentlichen parallel zu einem befahrbaren Untergrund, insbesondere einem Hallenboden, auf welchem die Fördervorrichtung montiert ist, angeordnet ist.

Der Trennboden ist vorzugsweise im Wesentlichen fluiddicht, insbesondere tropfdicht.

Günstig kann es sein, wenn der Trennboden und/oder eine Stationsfördervorrichtung anhebbar und/oder absenkbar sind, insbesondere partiell. Hierdurch können insbesondere Gegenstände von einem oder mehreren Fahrzeugen und/oder einer sonstigen Förderanlage aufgenommen und/oder an ein oder mehrere Fahrzeuge und/oder eine sonstige Förderanlage übergeben werden.

Günstig kann es sein, wenn der Trennboden im Wesentlichen parallel zu einem befahrbaren Untergrund, auf welchem die Fördervorrichtung montiert ist, ausgerichtet ist. Ein Abstand einer vorzugsweise begehbaren Oberfläche des Trennbodens von einer vorzugsweise befahrbaren Oberfläche des befahrbaren Untergrunds beträgt vorzugsweise höchstens ungefähr das Fünffache, insbesondere höchstens ungefähr das Vierfache, vorzugsweise höchstens ungefähr das Doppelte, einer Höhe des Fahrzeugs und/oder einer Höhe des Grundkörpers des Fahrzeugs.

Günstig kann es sein, wenn zumindest ein Abschnitt des Trennbodens über einem Förderweg eines Fahrzeugs vollständig geschlossen ausgebildet ist. Hierdurch sind zu fördernde Gegenstände vorzugsweise vollständig räumlich von dem mindestens einen Fahrzeug getrennt.

Das eine oder die mehreren Fahrzeuge und die Gegenstände berühren sich dann vorzugsweise nicht mehr. Insbesondere sind keine durch den Trennboden hindurchragenden Teile vorgesehen. Auf diese Weise kann ein besonderer Schutz der Fahrzeuge vor Verunreinigung, Überhitzung, Feuchtigkeit, etc. gewährleistet werden, wenn die Fahrzeuge unter entsprechend beaufschlagten Stationen hindurchgefahren werden.

Es kann vorgesehen sein, dass der vollständig geschlossene Abschnitt des Trennbodens sich zumindest näherungsweise über eine gesamte Längserstreckung eines Bearbeitungsbereichs zur Bearbeitung der Gegenstände erstreckt.

Eine Übergabe von dem Fahrzeug auf die Stationsfördervorrichtung und/oder eine Übernahme von der Stationsfördervorrichtung auf das mindestens eine Fahrzeug erfolgen vorzugsweise außerhalb des Bearbeitungsbereichs.

Es kann jedoch auch vorgesehen sein, dass ein oder mehrere Gegenstände mittels eines Fahrzeugs direkt in eine Bearbeitungsposition gebracht werden. Eine Stationsfördervorrichtung ist dann vorzugsweise entbehrlich. Zum Schutz des Fahrzeugs kann dann vorgesehen sein, dass das Fahrzeug den einen oder die mehreren Gegenstände in der Bearbeitungsposition ablädt und den Bearbeitungsbereich verlässt. Zu einem späteren Zeitpunkt können mittels desselben oder eines anderen Fahrzeugs der dann fertig bearbeitete Gegenstand oder die dann fertig bearbeiteten Gegenstände erneut aufgenommen und weitertransportiert werden.

Eine Bearbeitung ist in dieser Beschreibung vorzugsweise ganz allgemein die Durchführung irgendeines Schritts zur Behandlung, Herstellung und/oder Fertigstellung eines Produkts. Insbesondere ist unter einer Bearbeitung die Herstellung, Behandlung, Beschichtung, Montage, Reparatur, Kontrolle, etc. eines Produkts oder Teils hiervon zu verstehen.

Eine Längserstreckung eines Bearbeitungsbereichs ist insbesondere eine Erstreckung des Bearbeitungsbereichs längs einer Förderrichtung und/oder eines Förderwegs, beispielsweise von einem Eingang und/oder einer Abgabeposition der Station bis zu einem Ausgang und/oder einer Aufnahmeposition der Station.

Günstig kann es sein, wenn der Trennboden einen Durchtrittsbereich, beispielsweise einen Durchtrittsschlitz, aufweist, durch welchen ein oder mehrere Aufnahmeelemente des mindestens einen Fahrzeugs sich hindurcherstrecken oder in welchen ein oder mehrere Aufnahmeelemente des mindestens einen Fahrzeugs sich hineinerstrecken.

Der Durchtrittsbereich, insbesondere der Durchtrittsschlitz, erstreckt sich vorzugsweise längs eines Förderwegs der Fördervorrichtung und/oder gibt einen Förderweg der Fördervorrichtung vor.

Es kann vorgesehen sein, dass zu einer oder zu beiden Seiten des Durchtrittsbereichs, insbesondere des Durchtrittsschlitzes, ein Durchtrittsrandbereich gebildet ist, welcher insbesondere im Vergleich zum übrigen Trennboden erhöht ausgebildet ist.

Die erhöhte Ausbildung bezieht sich insbesondere auf ein Höhenniveau in einem den Durchtrittsrandbereich umgebenden Teil des Trennbodens, insbesondere einem begehbaren Bodenbereich des Trennbodens.

Eine durch den Durchtrittsbereich, insbesondere den Durchtrittschlitz, gebildete Durchtrittsöffnung in dem Trennboden ist somit vorzugsweise über einer begehbaren Bodenebene angeordnet, wodurch insbesondere vermieden werden kann, dass auf dem begehbaren Bodenbereich des Trennbodens befindliche lose Teile oder Flüssigkeiten durch den Durchtrittsbereich hindurch zu dem mindestens einen Fahrzeug gelangen.

Ein durchschnittlicher freier oder freigebbarer Abstand zwischen zwei einander bezüglich des Durchtrittsbereichs gegenüberliegenden Durchtrittsrandbereichen beträgt vorzugsweise höchstens ungefähr das Vierfache, beispielsweise höchstens ungefähr das Dreifache, insbesondere höchstens ungefähr das Doppelte, einer durchschnittlichen horizontal und senkrecht zum Förderweg genommenen Dicke mindestens eines Aufnahmeelements des mindestens einen Fahrzeugs.

Günstig kann es sein, wenn ein durchschnittlicher freier oder freigebbarer Abstand zwischen zwei einander bezüglich des Durchtrittsbereichs gegenüberliegenden Durchtrittsrandbereichen höchstens ungefähr 150%, vorzugsweise höchstens ungefähr 100%, beispielsweise höchstens ungefähr 80%, einer durchschnittlichen horizontal und senkrecht zum Förderweg genommenen Erstreckung eines Zentralelements einer Adaptervorrichtung zur Aufnahme mindestens eines Gegenstands beträgt. Hierdurch kann das Zentralelement der Abdeckvorrichtung den Durchtrittsbereich, insbesondere den Durchtrittsschlitz, zumindest teilweise oder vollständig abdecken, wodurch insbesondere eine unerwünschte Verunreinigung des Fahrzeugs vermieden oder zumindest reduziert werden kann.

Der Durchtrittsrandbereich kann in einem senkrecht zum Förderweg genommenen Querschnitt beispielsweise im Wesentlichen L-förmig ausgebildet sein.

Alternativ oder ergänzend hierzu kann vorgesehen sein, dass der Durchtrittsrandbereich sich schräg zu einer Schwerkraftrichtung und/oder schräg zu einer horizontalen Richtung erstreckt.

Vorteilhaft kann es sein, wenn die Fördervorrichtung, insbesondere der Trennboden, beispielsweise der Durchtrittsrandbereich, ein oder mehrere Schließelemente umfasst, mittels welchen der Durchtrittsbereich, insbesondere der Durchtrittsschlitz, verschließbar ist, vorzugsweise permanent oder temporär.

Insbesondere kann vorgesehen sein, dass der Durchtrittsbereich, insbesondere der Durchtrittsschlitz, mittels des einen oder der mehreren Schließelemente automatisch verschließbar ist.

Alternativ oder ergänzend hierzu kann vorgesehen sein, dass der Durchtrittsbereich, insbesondere der Durchtrittsschlitz, mittels eines oder mehrerer Schließelemente insbesondere dann verschließbar ist, wenn kein Aufnahmeelement durch den Durchtrittsbereich hindurchragt.

Ferner kann alternativ oder ergänzend hierzu vorgesehen sein, dass der Durchtrittsbereich, insbesondere Durchtrittsschlitz, mittels eines oder mehrerer Schließelemente in denjenigen Abschnitten des Durchtrittsbereichs, insbesondere des Durchtrittsschlitzes, verschließbar ist, wo gerade kein Aufnahmeelement durch den Durchtrittsbereich hindurchragt.

Ein oder mehrere Schließelemente sind insbesondere mittels des einen oder der mehreren Aufnahmeelemente betätigbar, insbesondere in eine Offenstellung und/oder eine Schließstellung bringbar.

Alternativ oder ergänzend hierzu kann vorgesehen sein, dass ein oder mehrere Schließelemente federnd und/oder unter Einwirkung der Schwerkraft automatisch von einer Offenstellung in eine Schließstellung bringbar sind.

Ein oder mehrere Schließelemente sind insbesondere als Lamellen und/oder Klappen ausgebildet.

Günstig kann es sein, wenn eine Fördervorrichtung zum Fördern von Gegenständen, insbesondere Werkstücken, beispielsweise Fahrzeugkarosserien, dient, wobei die Fördervorrichtung vorzugsweise einen Trennboden umfasst.

Der Trennboden weist vorzugsweise einen Durchtrittsbereich, insbesondere einen Durchtrittsschlitz, auf.

Vorzugsweise können sich ein oder mehrere Aufnahmeelemente zur Aufnahme mindestens eines Gegenstands durch den Durchtrittsbereich, insbesondere den Durchtrittsschlitz, hindurch erstrecken, vorzugsweise entgegen der Schwerkraftrichtung von unten nach oben.

Es kann vorgesehen sein, dass der Trennboden einen begehbaren Boden einer Station, eines Bearbeitungsbereichs und/oder eines Behandlungsraums einer Behandlungsanlage bildet.

Ein oder mehrere Fahrzeuge sind vorzugsweise unter dem Trennboden, insbesondere in einem unter dem Trennboden gebildeten Fahrraum, verfahrbar.

Der Durchtrittsbereich, insbesondere der Durchtrittsschlitz, erstreckt sich vorzugsweise längs einer Förderrichtung der Fördervorrichtung.

Vorteilhaft kann es sein, wenn der Trennboden ein oder mehrere Schließelemente umfasst, mittels welcher der Durchtrittsbereich, insbesondere der Durchtrittsschlitz, verschließbar ist.

Insbesondere kann vorgesehen sein, dass der Durchtrittsbereich, insbesondere der Durchtrittsschlitz, mittels des einen oder der mehreren Schließelemente automatisch und/oder temporär und/oder lokal und/oder global verschließbar ist.

Es kann vorgesehen sein, dass der Durchtrittsbereich, insbesondere der Durchtrittsschlitz, mittels des einen oder der mehreren Schließelemente insbesondere dann verschließbar ist, wenn kein Aufnahmeelement durch den Durchtrittsbereich hindurchragt.

Alternativ oder ergänzend hierzu kann vorgesehen sein, dass der Durchtrittsbereich, insbesondere der Durchtrittsschlitz, mittels des einen oder der mehreren Schließelemente insbesondere in denjenigen Abschnitten des Durchtrittsbereichs, insbesondere des Durchtrittsschlitzes, verschließbar ist, wo gerade kein Aufnahmeelement durch den Durchtrittsbereich hindurchragt.

Günstig kann es sein, wenn ein oder mehrere Schließelemente mittels des Aufnahmeelements betätigbar, insbesondere in eine Offenstellung und/oder eine Schließstellung bringbar, sind.

Vorzugsweise sind mittels eines Aufnahmeelements stets exakt ein Schließelement oder zwei Schließelemente aus einer Schließstellung in eine Offenstellung bringbar.

Vorzugsweise sind ein oder mehrere Schließelemente, insbesondere sämtliche Schließelemente, automatisch von einer Offenstellung in eine Schließstellung bringbar, insbesondere dann, wenn kein Aufnahmeelement an dem jeweiligen Schließelement angreift.

Ein oder mehrere Schließelemente, insbesondere sämtliche Schließelemente, sind vorzugsweise unabhängig voneinander betätigbar, insbesondere unabhängig voneinander von einer Schließstellung in eine Offenstellung bringbar.

Günstig kann es sein, wenn ein oder mehrere Schließelemente federnd und/oder unter Einwirkung der Schwerkraft automatisch von einer Offenstellung in eine Schließstellung bringbar sind. Hierdurch kann vorzugsweise gewährleistet werden, dass die Schließelemente ohne eine Einwirkung eines Aufnahmeelements stets in der Schließstellung angeordnet sind und somit der Durchtrittsbereich, insbesondere der Durchtrittsschlitz, verschlossen ist.

Ein oder mehrere Schließelemente, insbesondere sämtliche Schließelemente, können beispielsweise als Lamellen und/oder Klappen und/oder Verschlussscheiben ausgebildet sein.

Beispielsweise können runde, insbesondere kreisrunde, Verschlussscheiben als Schließelemente vorgesehen sein.

Günstig kann es sein, wenn ein oder mehrere Schließelemente insbesondere in einer horizontalen Richtung auslenkbar sind, um temporär den Durchtrittsbereich zur Hindurchführung eines oder mehrerer Aufnahmeelemente freizugeben.

Unter einer Auslenkung sind insbesondere ein lineares Verschieben und/oder Verschwenken zu verstehen.

Es kann vorgesehen sein, dass der Trennboden mehrere Schließelemente umfasst, welche in einer Schließstellung und/oder in einer Offenstellung derselben einander überlappend angeordnet sind.

Insbesondere kann vorgesehen sein, dass der Trennboden mehrere Schließelemente umfasst, welche in voneinander verschiedenen, insbesondere zueinander parallelen Ebenen, vorzugsweise horizontalen Ebenen, angeordnet und/oder bewegbar sind, insbesondere relativ zueinander und/oder relativ zu einer oder mehreren Tragplatten des Trennbodens.

Insbesondere kann vorgesehen sein, dass der Trennboden mehrere Schließelemente umfasst, welche in einer ersten Ebene angeordnet und/oder bewegbar sind, und zusätzlich mehrere Schließelemente, welche in einer zweiten Ebene angeordnet und/oder bewegbar sind. Die erste Ebene und die zweite Ebene sind vorzugsweise parallel zueinander angeordnet und/oder horizontal ausgerichtet.

Die Schließelemente, welche in voneinander verschiedenen Ebenen angeordnet und/oder bewegbar sind, sind vorzugsweise in einer senkrecht zu den Ebenen verlaufenden Richtung aufeinanderfolgend und/oder aneinander angrenzend angeordnet.

Es kann vorgesehen sein, dass ein oder mehrere Schließelemente, insbesondere sämtliche Schließelemente, unterhalb einer oder mehrerer Tragplatten des Trennbodens angeordnet sind.

Ein oder mehrere, insbesondere sämtliche, Schließelemente ragen vorzugsweise zumindest in einer Schließstellung derselben seitlich über die eine oder die mehreren Tragplatten hervor, insbesondere in einen zwischen zwei einander gegenüberliegenden Tragplatten ausgebildeten Durchtrittsbereich, insbesondere Durchtrittsschlitz.

Ein oder mehrere, insbesondere sämtliche, Schließelemente ragen vorzugsweise mit höchstens ungefähr 70 %, insbesondere höchstens ungefähr 50 %, vorzugsweise höchstens ungefähr 40 % ihrer Gesamtoberfläche, insbesondere an ihrer bezüglich der Schwerkraftrichtung obenliegenden Oberseite, in der Schließstellung seitlich über die eine oder die mehreren Tragplatten hinaus.

Zu mindestens ungefähr 30 %, vorzugsweise mindestens ungefähr 50 %, beispielsweise mindestens ungefähr 60 %, ihrer Gesamtoberfläche verbleiben das eine oder die mehreren Schließelemente, insbesondere sämtliche Schließelemente, vorzugsweise sowohl in der Schließstellung als auch in der Offenstellung direkt unter der einen oder den mehreren Tragplatten. Hierdurch kann insbesondere eine Abstützfunktion des einen oder der mehreren Schließelemente, insbesondere sämtlicher Schließelemente, an der einen oder der mehreren Tragplatten realisiert werden.

Das eine oder die mehreren Schließelemente, insbesondere sämtliche Schließelemente, sind vorzugsweise begehbar.

Günstig kann es sein, wenn ein oder mehrere, insbesondere sämtliche, Schließelemente aneinander und/oder an einer oder mehreren Tragplatten des Trennbodens abgestützt oder abstützbar sind, insbesondere in einer Schließstellung und/oder in einer Offenstellung derselben.

Es kann vorgesehen sein, dass ein oder mehrere, insbesondere sämtliche, Schließelemente in einer schräg, insbesondere senkrecht, zu einer Förderrichtung verlaufenden Richtung und/oder in einer zumindest näherungsweise horizontalen Richtung, bewegbar, insbesondere linear verschiebbar, sind.

Das eine oder die mehreren, insbesondere sämtliche, Schließelemente sind somit vorzugsweise schräg, insbesondere senkrecht, zu der Förderrichtung aus einem Bewegungsweg eines oder mehrerer Aufnahmeelemente herausbewegbar, insbesondere mittels des einen oder der mehreren Aufnahmeelemente zur Seite schiebbar.

Das eine oder die mehreren Aufnahmeelemente greifen insbesondere unmittelbar an dem einen oder den mehreren Schließelementen an, um insbesondere ein Schließelemente nach dem anderen und/oder ein Schließelementpaar nach dem anderen aus einer Schließstellung in eine Offenstellung zu bewegen und somit das eine oder die mehreren Aufnahmeelemente längs des Durchtrittsbereichs, insbesondere des Durchtrittsschlitzes, bewegen zu können.

Günstig kann es sein, wenn ein oder mehrere Schließelemente, insbesondere sämtliche Schließelemente, drehbar, beispielsweise frei drehbar und/oder um 360° drehbar an einer Schließelementaufnahme des Trennbodens angeordnet sind.

Das eine oder die mehreren, insbesondere sämtliche, Schließelemente sind beispielsweise als Verschlussscheiben ausgebildet.

Günstig kann es sein, wenn das eine oder die mehreren Schließelemente, insbesondere sämtliche Schließelemente, beim Bewegen derselben aus der Schließstellung in die Offenstellung und/oder aus der Offenstellung in die Schließstellung linear verschiebbar und vorzugsweise zugleich drehbar sind.

Bei einer Ausgestaltung der Erfindung kann vorgesehen sein, dass das eine oder die mehreren Schließelemente, insbesondere sämtliche Schließelemente gemeinsam einen Verschluss des Durchtrittsbereichs, insbesondere des Durchtrittschlitzes, bilden, welcher eine im Vergleich zu einer maximalen Quererstreckung des Durchtrittsbereichs, insbesondere des Durchtrittsschlitzes, geringe Höhe aufweist, beispielsweise höchstens ungefähr 80 %, vorzugsweise höchstens ungefähr 50 %, beispielsweise höchstens ungefähr 20 %, einer maximalen Breite des Durchtrittsbereichs, insbesondere des Durchtrittsschlitzes. Hierdurch kann vorzugsweise unterhalb einer begehbaren Oberfläche des Trennbodens ein optimierter Fahrraum geschaffen werden, so dass insbesondere in einem vollständig eingefahrenen Zustand des einen oder der mehreren Aufnahmeelemente ein Fahrzeug auch ohne Betätigung der Schließelemente unterhalb des Trennbodens verfahrbar ist.

Ein oder mehrere Schließelemente, insbesondere sämtliche Schließelemente, sind vorzugsweise mittels einer oder mehrerer Schließelementaufnahmen aufgenommen.

Insbesondere ist jedem Schließelement eine separate Schließelementaufnahme zugeordnet.

Günstig kann es sein, wenn die eine oder die mehreren, insbesondere sämtliche, Schließelementaufnahmen an einer Tragstruktur des Trennbodens angeordnet sind, insbesondere beweglich angeordnet sind.

Günstig kann es sein, wenn der Trennboden eine Rückstellvorrichtung umfasst, mittels welcher die Schließelemente und/oder die Schließelementaufnahmen samt der daran angeordneten Schließelemente insbesondere nach einem Betätigen derselben aus einer Offenstellung in die Schließstellung bringbar sind.

Die Rückstellvorrichtung umfasst insbesondere ein Rückstellelement, welches insbesondere eine oder mehrere Schließelementaufnahmen umfasst oder bildet.

Vorzugsweise ist jeder Schließelementaufnahme ein Rückstellelement zugeordnet oder es ist an jedem Rückstellelement eine separate Schließelementaufnahme angeordnet.

Jedes Rückstellelement ist vorzugsweise an einer Rückstellelementaufnahme, insbesondere einer separaten Rückstellelementaufnahme, bewegbar angeordnet.

Die Rückstellelementaufnahme ist insbesondere an einer Tragstruktur des Trennbodens fixiert.

Günstig kann es sein, wenn das Rückstellelement verschiebbar, insbesondere linear verschiebbar, an der jeweiligen Rückstellelementaufnahme angeordnet ist.

Beispielsweise kann vorgesehen sein, dass das Rückstellelement mittels einer Federvorrichtung, insbesondere einer Druckfeder, federnd an der jeweiligen Rückstellelementaufnahme angeordnet ist.

Beim Betätigen der Schließelemente werden somit die Schließelemente zusammen mit den Schließelementaufnahmen und/oder den Rückstellelementen entgegen der Wirkung beispielsweise einer Federvorrichtung relativ zur jeweiligen Rückstellelementaufnahme und somit relativ zur Tragstruktur bewegt.

Mittels der Rückstellvorrichtung, insbesondere mittels der Federvorrichtung, beispielsweise mittels der Druckfeder, wird dann nach einem Außereingriffbringen des jeweiligen Aufnahmeelements das jeweilige Schließelement zusammen mit der Schließelementaufnahme und/oder dem Rückstellelement zurück in die Schließstellung gebracht.

Zur Beschränkung einer Bewegung des Rückstellelements relativ zur Rückstellelementaufnahme kann beispielsweise ein Anschlagelement vorgesehen sein, welches insbesondere in einer Führungsöffnung verschieblich angeordnet ist und hierbei zwei Endstellungen des Rückstellelements relativ zur Rückstellelementaufnahme und somit des jeweiligen Schließelements relativ zum Durchtrittsbereich, insbesondere Durchtrittsschlitz, definiert.

Zwischen einem mittels der Schließelemente gebildeten Verschlussbereich, welcher insbesondere den Durchtrittsbereich, beispielsweise den Durchtrittsschlitz, zumindest temporär ausfüllt und/oder schließt, ist vorzugsweise ein begehbarer Bereich, insbesondere ein Teil einer begehbaren Oberfläche des Trennbodens, gebildet.

Die weitere begehbare Oberfläche des Trennbodens, welche insbesondere durch eine oder mehrere Tragplatten gebildet ist, ist in vertikaler Richtung vorzugsweise um höchstens ungefähr 200 %, vorzugsweise höchstens ungefähr 150 % einer maximalen Höhe eines Schließelements versetzt angeordnet. Durch die Verwendung von besonders flachen Schließelementen, beispielsweise mit einer maximalen Höhe von höchstens ungefähr 5 cm, beispielsweise höchstens ungefähr 2 cm, kann hierdurch eine begehbare Oberfläche des Trennbodens mit möglichst geringem Versatz und somit geringem Verletzungsrisiko für Personen geschaffen werden.

Bei einer Ausgestaltung der Erfindung kann vorgesehen sein, dass der Trennboden ein oder mehrere Zentriervorrichtungen und/oder Öffnungsvorrichtungen umfasst, welche insbesondere an einem oder mehreren Schließelementen angeordnet und/oder ausgebildet sind.

Mittels einer Zentriervorrichtung kann beispielsweise eine zusätzliche Zentrierung eines Aufnahmeelements und/oder eines das Aufnahmeelement umfassenden Fahrzeugs erfolgen.

Eine Zentriervorrichtung umfasst hierzu beispielsweise zwei im Durchtrittsbereich angeordnete Zentrierelemente, welche insbesondere mit Einlaufschrägen ausgebildet sind und somit eine mittige Zentrierung des Aufnahmeelements im Durchtrittsbereich, insbesondere im Durchtrittsschlitz, bewirken können.

Eine Öffnungsvorrichtung kann vorzugsweise ein oder mehrere Öffnungselemente umfassen.

Eine Einlaufschräge einer Öffnungsvorrichtung kann insbesondere schräg zur Horizontalen und/oder schräg zur Vertikalen ausgerichtet sein und beispielsweise eine Betätigung eines oder mehrerer Schließelemente durch eine Bewegung eines oder mehrerer Aufnahmeelemente in vertikaler Richtung ermöglichen.

Mittels einer solchen Öffnungsvorrichtung kann insbesondere ein vollständig unterhalb des Trennbodens angeordnetes Fahrzeug, dessen ein oder mehrere Aufnahmeelemente ebenfalls vollständig unterhalb sämtlicher Schließelemente angeordnet sind, von unterhalb des Trennbodens eine Betätigung eines oder mehrerer Schließelemente bewirken, um ein oder mehrere Aufnahmeelemente von unterhalb des Trennbodens durch den Durchtrittsbereich hindurchzufahren und um beispielsweise mit einem oberhalb des Trennbodens angeordneten Gegenstand in Eingriff zu bringen.

Vorteilhaft kann es sein, wenn die Fördervorrichtung eine Stationsfördervorrichtung umfasst, mittels welcher die Gegenstände unabhängig von den Fahrzeugen förderbar sind, wobei die Stationsfördervorrichtung vorzugsweise in einen Trennboden der Station integriert ist.

Die Gegenstände sind mittels der Stationsfördervorrichtung vorzugsweise unabhängig von den Fahrzeugen von einer Abgabeposition zu einer Bearbeitungsposition und/oder zu einer Aufnahmeposition und/oder zu weiteren Stationen und/oder einem Pufferbereich zur Pufferung von zu fördernden Gegenständen förderbar.

Die Stationsfördervorrichtung kann beispielsweise eine Rollenbahn, ein Schienenförderer oder ein Kettenförderer sein oder eine Rollenbahn, einen Schienenförderer und/oder einen Kettenförderer umfassen.

Insbesondere sind Rollen der Rollenbahn, welche beispielsweise vereinzelt antreibbar sind, in den Trennboden integriert.

Ferner können insbesondere eine oder mehrere Schienen eines Schienenförderers in den Trennboden integriert sein.

Günstig kann es sein, wenn die Fördervorrichtung mehrere Fahrzeuge aufweist, welche stapelbar sind.

Insbesondere umfasst die Fördervorrichtung mehrere identisch ausgebildete Fahrzeuge, welche übereinander und/oder aufeinander stapelbar sind.

Die Fördervorrichtung kann hierfür beispielsweise eine Stapelvorrichtung zur Stapelung und/oder Entstapelung mehrerer Fahrzeuge umfassen.

Ein Stapel aus Fahrzeugen kann insbesondere zum Transport und/oder zur Aufbewahrung derselben vorteilhaft sein.

Mittels der Stapelvorrichtung können insbesondere mehrere übereinander gestapelte Fahrzeuge nach dem Transport derselben vereinzelt werden.

Die Stapelvorrichtung kann beispielsweise eine Hubeinheit umfassen, mittels welcher ein oder mehrere Fahrzeuge relativ zu einem befahrbaren Untergrund anhebbar sind, insbesondere derart, dass eine Oberseite der Hubeinheit, auf welche vor dem Anheben ein Fahrzeug aufgefahren wurde, bündig mit einer Oberseite eines Fahrzeugs oder eines noch zu beschreibenden Zwischenelements ist, so dass das auf der Hubeinheit befindliche Fahrzeug auf das weitere Fahrzeug auffahren kann.

Die Hubeinheit umfasst dabei insbesondere eine Seitenwandung, welche zumindest teilweise komplementär zu einer Seitenwandung der Fahrzeuge ausgebildet ist.

Insbesondere ist die befahrbare Oberfläche der Hubeinheit zumindest einseitig an die Form einer Oberseite der Fahrzeuge und/oder an die Form von Zwischenelementen zur Stapelung der Fahrzeuge angepasst.

Ferner kann die Verwendung einer oder mehrerer Regaleinheiten vorgesehen sein, wobei mittels einer Stapelvorrichtung die Fahrzeuge vorzugsweise in die Regaleinheiten, insbesondere einzelne Regalfächer der Regaleinheiten, einbringbar sind.

Die Fahrzeuge können beispielsweise unmittelbar aufeinander gestapelt werden.

Insbesondere dann, wenn ein oder mehrere Aufnahmeelemente aus einem Grundkörper des jeweiligen Fahrzeugs herausragen, können diese jedoch einer solchen Stapelung entgegenstehen.

Günstig kann es daher sein, wenn ein oder mehrere, insbesondere befahrbare, Zwischenelemente zwischen jeweils zwei Fahrzeuge eingebracht werden oder auf einem Fahrzeug angebracht werden, bevor ein weiteres Fahrzeug auf diesem Fahrzeug angeordnet wird.

Das eine oder die mehreren Zwischenelemente schaffen insbesondere einen Abstand zwischen den Grundkörpern der aufeinander zu stapelnden Fahrzeuge, um eine Kollision mit einem oder mehreren Aufnahmeelementen zu vermeiden.

Ferner können ein oder mehrere Zwischenelemente zur Verankerung der Fahrzeuge aneinander dienen.

Günstig kann es ferner sein, wenn mittels eines Zwischenelements eine Ladeanschlussstelle bereitgestellt wird, um insbesondere auch die Energiespeicher derjenigen Fahrzeuge laden zu können, welche auf einem weiteren Fahrzeug angeordnet sind und somit nicht unmittelbar über eine Ladeanschlussstelle eines Ladebereichs fahrbar sind.

Bei einer Ausgestaltung der Erfindung ist vorgesehen, dass die Fördervorrichtung einen oder mehrere Ladebereiche zum Aufladen eines Energiespeichers des mindestens einen Fahrzeugs umfasst.

Ein oder mehrere Ladebereiche sind vorzugsweise an einer oder mehreren Stationen der Fördervorrichtung angeordnet, zu welchen die Gegenstände mittels des mindestens einen Fahrzeugs hin transportierbar sind und/oder an welchen die Gegenstände abgebbar und/oder aufnehmbar sind.

Ein oder mehrere Ladebereiche sind ferner vorzugsweise bezüglich eines Förderwegs mindestens eines Fahrzeugs zwischen zwei Stationen der Fördervorrichtung angeordnet, zu welchen die Gegenstände mittels des mindestens einen Fahrzeugs hin transportierbar sind und/oder an welchen die Gegenstände abgebbar und/oder aufnehmbar sind.

Es kann vorgesehen sein, dass ein oder mehrere Ladebereiche in oder an einem Förderweg mindestens eines Fahrzeugs angeordnet sind. Ein Förderweg ist dabei insbesondere ein Weg, längs welchem Gegenstände mittels des mindestens einen Fahrzeugs förderbar sind.

Ein Gesamtförderweg oder Gesamtfahrweg jedes Fahrzeugs umfasst vorzugsweise einen Förderweg, längs welchem ein oder mehrere Gegenstände gefördert werden und einen Rückförderweg, längs welchem das jeweilige Fahrzeug verfahren wird, um beispielsweise von einer Endstation, an welcher ein Gegenstand endgültig von der Fördervorrichtung abgegeben wird, zurück zu einer Anfangsstation gebracht zu werden, an welcher die Gegenstände erstmalig mit der Fördervorrichtung in Kontakt kommen.

Ein Rückförderweg ist insbesondere ein Weg, an welchem die Fahrzeuge unbeladen sind.

Günstig kann es sein, wenn ein oder mehrere Ladebereiche in oder an einem Wegabschnitt angeordnet sind, welcher dauerhaft oder temporär einen Abschnitt eines Förderwegs eines oder mehrerer Fahrzeuge und einen Abschnitt eines Rückförderwegs desselben oder derselben Fahrzeuge oder eines oder mehrerer anderer Fahrzeuge bildet.

Insbesondere kann vorgesehen sein, dass ein oder mehrere Ladebereiche in oder an einem Wegabschnitt angeordnet sind, welcher alternierend einen Abschnitt eines Förderwegs eines oder mehrerer Fahrzeuge und einen Abschnitt eines Rückförderwegs desselben oder derselben Fahrzeuge oder eines oder mehrerer anderer Fahrzeuge bildet.

Günstig kann es sein, wenn ein oder mehrere Ladebereiche an einem mehrdirektionalen Förderbereich angeordnet sind, an welchem und/oder durch welchen ein oder mehrere Fahrzeuge in unterschiedlichen Fahrtrichtungen hindurchfahren.

Vorteilhaft kann es sein, wenn ein oder mehrere Ladebereiche in oder an einem Kreuzungsbereich angeordnet sind, in welchem sich ein oder mehrere Förderwege und/oder ein oder mehrere Rückförderwege eines oder mehrerer Fahrzeuge kreuzen.

Durch geeignete Positionierung der Ladebereiche kann insbesondere eine Leitungslänge zwischen einer Energiequelle und dem jeweiligen Ladebereich minimiert werden.

Ein oder mehrere Ladebereiche sind vorzugsweise stationäre Ladebereiche, an welchen das mindestens eine Fahrzeug zum Laden des Energiespeichers und/oder während des Ladens des Energiespeichers stationär ist.

Hierbei kann vorgesehen sein, dass ein oder mehrere Ladebereiche so angeordnet sind, dass diese beispielsweise ohne Umgehungsmöglichkeit unmittelbar im Förderweg liegen. Ein oder mehrere Fahrzeuge sind dann insbesondere ohne Umweg in den einen oder die mehreren Ladebereiche einbringbar und darin zum Aufladen des jeweiligen Energiespeichers zum Stillstand bringbar. Nach dem Aufladevorgang wird das Fahrzeug wieder in Bewegung versetzt und folgt erneut dem Förderweg.

Alternativ oder ergänzend hierzu kann jedoch auch vorgesehen sein, dass ein oder mehrere Ladebereiche abseits eines beispielsweise optimierten oder kürzesten Förderwegs angeordnet sind. Das mindestens eine Fahrzeug verlässt dann kurzzeitig den optimierten und/oder kürzesten Förderweg, um in dem einen oder den mehreren Ladebereichen den jeweiligen Energiespeicher aufzuladen. Nach dem Aufladevorgang kehren das eine oder die mehreren Fahrzeuge dann zurück auf den beispielsweise optimierten oder kürzesten Förderweg.

Insbesondere dann, wenn zwischen mehreren längs eines gemeinsamen Förderwegs geförderten Fahrzeugen größere zeitliche und/oder räumliche Abstände sind, kann ein Anhalten unmittelbar auf dem optimierten und/oder kürzesten Förderweg zum Aufladen des jeweiligen Energiespeichers vorgesehen sein. Hierdurch kann vorzugsweise eine besonders platzsparende Ausgestaltung der Fördervorrichtung erzielt werden.

Bei in kurzen zeitlichen und/oder räumlichen Abständen aufeinanderfolgenden Fahrzeugen kann hingegen ein Entfernen eines aufzuladenden Fahrzeugs aus dem vorgegebenen, insbesondere optimierten und/oder kürzesten, Förderweg vorteilhaft sein, um nachfolgende Fahrzeug nicht zu blockieren.

Sämtliche vorstehenden Merkmale können auch bei nicht stationären Ladebereichen, d. h. bei Mobilladebereichen vorgesehen sein. In solchen Mobilladebereichen ist insbesondere eine im Vergleich zu einer Normalgeschwindigkeit reduzierte Geschwindigkeit oder auch die Normalgeschwindigkeit selbst als Fahrgeschwindigkeit des Fahrzeugs vorgesehen.

Günstig kann es sein, wenn ein oder mehrere Ladebereiche Mobilladebereiche sind, an welchen das mindestens eine Fahrzeug während des Ladens des Energiespeichers vorbeibewegbar ist und/oder durch welche das mindestens eine Fahrzeug während des Ladens des Energiespeichers hindurchbewegbar ist.

Vorteilhaft kann es sein, wenn ein Mobilladebereiche mehrere Ladeanschlussstellen umfasst, welche insbesondere über einen Raumbereich verteilt angeordnet sind, der größer ist als die Abmessungen des Fahrzeugs in horizontaler Richtung.

Insbesondere sind die Ladeanschlussstellen eines Mobilladebereichs vorzugsweise längs einer Ladestrecke aufeinanderfolgend angeordnet, so dass die Ladeanschlussstellen des Mobilladebereichs vorzugsweise von einem längs der Ladestrecke fahrenden Fahrzeug nacheinander passiert, insbesondere überfahren, werden.

Stets nur ein Teil der Ladeanschlussstellen des Mobilladebereichs wird vorzugsweise von dem Fahrzeug abgedeckt, wenn dieses längs der Ladestrecke bewegt wird oder wenn dieses auf der Ladestrecke positioniert ist.

Günstig kann es sein, wenn mittels einer Steuervorrichtung und/oder einer übergeordneten Steuerungsanlage eine Spannungsversorgung und/oder Stromversorgung an den Ladeanschlussstellen des Mobilladebereichs derart gesteuert und/oder geregelt wird, dass stets nur die von einem Fahrzeug abgedeckten Ladeanschlussstellen stromführend sind und/oder dass nur an diesen eine Spannung anliegt. Die übrigen Ladeanschlussstellen, welche nicht von diesem oder einem anderen Fahrzeug abgedeckt sind, sind dann vorzugsweise stromlos und/oder spannungslos geschaltet. Hierdurch kann eine unerwünschte Stromschlaggefahr für Personen vorzugsweise vermieden werden.

Für die Ermittlung, welche Ladeanschlussstelle oder welche Ladeanschlussstellen von einem Fahrzeug abdeckt ist oder sind, kann insbesondere eine Positionserkennung und/oder Positionsüberwachung des jeweiligen Fahrzeugs vorgesehen, wobei dann eine Abdeckung beispielsweise errechnet wird.

Alternativ oder ergänzend hierzu kann vorgesehen sein, dass eine oder mehrere Ladeanschlussstellen, insbesondere sämtliche Ladeanschlussstellen, jeweils eine oder mehrere Sensorvorrichtungen umfassen, welche insbesondere eine Präsenz eines Fahrzeugs an, insbesondere über, der jeweiligen Ladeanschlussstelle ermitteln können, wobei nur bei einem mittels der einen oder der mehreren Sensorvorrichtungen erkannten Fahrzeug ein Strom und/oder eine Spannung zum Laden eines Energiespeichers des Fahrzeugs an der jeweiligen Ladeanschlussstelle angelegt wird, insbesondere freigeschaltet wird.

Eine solche Sensorvorrichtung kann insbesondere eine Kontaktvorrichtung sein, welche mit einem Fahrzeug, insbesondere einem korrespondieren Gegenkontakt, wechselwirkt, beispielsweise um die Präsenz des Fahrzeugs zu detektieren und/oder um einen Stromkreis zum Laden des Energiespeichers direkt oder indirekt zu schließen. Die Kontaktvorrichtung ist hierfür insbesondere eine von einem Ladungskontakt der Ladeanschlussstellen verschiedene elektrische und/oder mechanische und/oder elektromagnetische Kontaktvorrichtung.

Zur Detektion des Vorhandseins eines Fahrzeugs an einem bestimmten Teil einer Ladestrecke können insbesondere eine oder mehrere Kontaktschienen, insbesondere ortsauflösende Kontaktschienen zur Bestimmung der Position des jeweiligen Fahrzeugs, vorgesehen sein.

Eine Ladeanschlussstelle kann beispielsweise unter einem Fahrzeug, seitlich am Fahrzeug und/oder über dem Fahrzeug angeordnet sein.

Vorzugsweise ist die Ladeanschlussstelle in einem Normalbetrieb des Fahrzeugs und/oder der Fördervorrichtung für Personen unzugänglich.

Vorteilhaft kann es sein, wenn die Fördervorrichtung, insbesondere ein oder mehrere Fahrzeuge, beispielsweise sämtliche Fahrzeuge, jeweils eine Freigabevorrichtung umfassen, mittels welcher eine oder mehrere Ladeanschlussstellen des jeweiligen Fahrzeugs und/oder eine oder mehrere Ladeanschlussstellen des jeweiligen Ladebereichs temporär zum Aufladen des jeweiligen Energiespeichers freigebbar, insbesondere freilegbar, sind. Beispielsweise kann vorgesehen sein, dass Kontaktbereiche freigegeben werden, insbesondere durch Herausklappen von Kontaktelementen und/oder Aufschieben von Abdeckelementen, etc.

Eine Freigabevorrichtung wird dabei insbesondere durch eine Wechselwirkung des Fahrzeugs mit dem Ladebereich betätigt.

Günstig kann es sein, wenn die Freigabevorrichtung richtungsabhängig ist, so dass insbesondere mindestens ein in mindestens einem mehrdirektionalen Förderbereich angeordneter Ladebereich für in unterschiedliche Richtungen orientierte Fahrzeuge unterschiedliche Kontaktbereiche freigeben kann. Insbesondere eine falsche Verpolung kann hierdurch vorzugsweise vermieden werden.

Ein oder mehrere Ladebereiche können beispielsweise an oder in einem Durchtrittsbereich eines Trennbodens der Fördervorrichtung angeordnet und/oder ausgebildet sein.

Beispielsweise kann vorgesehen sein, dass ein oder mehrere Schließelemente Kontaktelemente des Ladebereichs zur Kontaktierung von Kontaktbereichen an dem Fahrzeug, insbesondere einem oder mehreren Aufnahmeelementen, bilden.

Alternativ oder ergänzend hierzu kann vorgesehen sein, dass ein oder mehrere Schließelemente Betätigungselemente zur Betätigung einer Freigabevorrichtung zum Freigeben eines oder mehrerer Kontaktbereiche des Fahrzeugs sind.

Günstig kann es sein, wenn ein oder mehrere Ladebereiche an einer Unterseite eines Trennbodens einer Station der Fördervorrichtung angeordnet und/oder ausgebildet sind.

Der eine oder die mehreren Ladebereiche sind dann insbesondere von unten her kontaktierbar, wobei eine mit der Ladeanschlussstelle des Ladebereichs korrespondierende Ladeanschlussstelle des Fahrzeugs vorzugsweise an einer Oberseite des Fahrzeugs angeordnet und/oder ausgebildet ist.

Eine Ladeanschlussstelle des Fahrzeugs ragt insbesondere von unten gegen den Trennboden der Fördervorrichtung, wobei die Aufladung des Energiespeichers des Fahrzeugs insbesondere erfolgen kann, wenn das Fahrzeug stationär ist. Alternativ hierzu kann auch eine mobile Aufladung vorgesehen sein, bei welcher der Energiespeicher des Fahrzeugs geladen wird, während das Fahrzeug in die Station hinein, durch die Station hindurch und/oder aus der Station heraus gefahren wird.

Die Fördervorrichtung umfasst vorzugsweise mehrere solcher Stationen.

Es kann vorgesehen sein, dass ein oder mehrere Ladebereiche an einem Boden angeordnet sind, auf welchem das mindestens eine Fahrzeug verfahrbar ist. Der eine oder die mehreren Ladebereiche sind insbesondere direkt unter einem Trennboden einer Station der Fördervorrichtung angeordnet und/oder ausgebildet.

Günstig kann es sein, wenn ein oder mehrere Ladebereiche als Ladebucht ausgebildet sind, in welche ein oder mehrere Fahrzeuge zum Aufladen des jeweiligen Energiespeichers einbringbar sind, insbesondere unter Abweichung von einem, beispielsweise optimierten und/oder kürzesten, Förderweg und/oder einem, beispielsweise optimierten und/oder kürzesten, Rückförderweg des Fahrzeugs.

Eine oder mehrere Ladebuchten sind vorzugsweise Wartebereiche zur temporären Aufbewahrung eines oder mehrerer Fahrzeuge.

Alternativ oder ergänzend hierzu kann vorgesehen sein, dass eine oder mehrere Ladebuchten Wartungsbereiche zur Durchführung von Wartungsarbeiten an einem oder mehreren Fahrzeugen sind.

Ein Wartebereich ist insbesondere ein Bereich, in welchem das jeweilige Fahrzeug auf einen nachfolgenden Auftrag wartet oder an welchem das Fahrzeug verweilt, bis ein bereits erteilter Auftrag fällig wird.

Bei einer Ausgestaltung kann vorgesehen sein, dass ein Wartebereich für mehrere Fahrzeuge vorgesehen ist, wobei die Fahrzeuge insbesondere in einer Reihe hintereinander, insbesondere in einer Warteschlange, anordenbar sind. Die Fahrzeuge gelangen vorzugsweise gemäß dem FIFO-Prinzip (First in - First out) in den Wartebereich und aus diesem heraus.

Vorteilhaft kann es sein, wenn in dem Wartebereich ein Ladebereich, insbesondere eine energiequellenseitige Ladeanschlussstelle, lediglich an einer vordersten Warteposition des Wartebereichs angeordnet ist, insbesondere bezogen auf eine Hauptfahrtrichtung der Fahrzeuge im Wartebereich und/oder bezogen auf eine Reihe, längs welcher mehrere Fahrzeuge hintereinander anordenbar sind. Hierdurch können insbesondere stets der eine oder die mehreren Energiespeicher desjenigen Fahrzeugs geladen werden, welches als nächstes einen Auftrag erhalten wird.

Alternativ oder ergänzend hierzu kann vorgesehen sein, dass in dem Wartebereich mehrere Ladebereiche, insbesondere mehrere energiequellenseitige Ladeanschlussstellen, angeordnet sind, insbesondere an mehreren Wartepositionen des Wartebereichs.

Beispielsweise kann an einer vordersten Warteposition sowie an einer hintersten Warteposition des Wartebereichs jeweils ein Ladebereich, insbesondere jeweils eine energiequellenseitige Ladeanschlussstelle, angeordnet sein. Hierdurch können insbesondere die Energiespeicher der in den Wartebereich einfahrenden Fahrzeuge geladen werden, so dass eine längere Wartezeit der Fahrzeuge im Wartebereich möglich ist und/oder so dass eine kürzere Ladezeit an der vordersten Warteposition realisierbar ist.

Zur Ladungserhaltung in den Energiespeichern der Fahrzeuge, welche auf nicht als Ladebereich dienenden Warteplätzen warten, kann es vorgesehen sein, dass das an der vordersten Warteposition angeordnete Fahrzeug nach einer vorgegebenen Wartezeit die Warteposition verlässt und sich an einem hinteren Ende der Reihe aus wartenden Fahrzeugen einreiht. Die anderen Fahrzeuge rücken dann auf. Durch dieses regelmäßige Durchtauschen gelangen nach und nach alle wartenden Fahrzeuge zu einem Ladebereich, so dass die Energiespeicher aller wartenden Fahrzeuge regelmäßig aufladbar sind.

Günstig kann es sein, wenn ein Ladezustand eines oder mehrerer Energiespeicher des Fahrzeugs beispielsweise mittels des Fahrzeugs und/oder mittels einer übergeordneten Steuerungsanlage überprüft wird, bevor das Fahrzeug zur Ausführung eines Auftrags von einem Ladebereich wegbewegt wird.

Insbesondere kann ferner vorgesehen sein, dass das Fahrzeug erst dann mit der Ausführung des Auftrags beginnt, wenn der Ladezustand des einen oder der mehreren Energiespeicher für die vollständige Ausführung des Auftrags und vorzugsweise zusätzlich für eine sich an den Auftrag anschließende Fahrt zu einem Ladebereich ausreicht.

Optional kann zudem eine Sicherheitsreserve vorgesehen sein, beispielsweise derart, dass die Ausführung des Auftrags erst dann beginnt, wenn der Ladezustand absolut (bezogen auf die Gesamtkapazität des einen oder der mehreren Energiespeicher) oder relativ (bezogen auf den für die Ausführung des Auftrags erforderliche Energiemenge) beispielsweise mindestens 5 %, insbesondere mindestens 10 %, über dem für die vollständige Ausführung des Auftrags erforderlichen Ladezustand liegt.

Ein Wartungsbereich ist insbesondere ein Bereich, in welchem die Wartung und/oder Instandhaltung eines oder mehrerer Fahrzeuge von hierfür geschultem Personal durchgeführt wird.

Bei einer Ausgestaltung der Erfindung kann vorgesehen sein, dass ein oder mehrere Ladebereiche derart an einer Abgabeposition einer Station und/oder an einer Aufnahmeposition einer Station angeordnet sind, dass insbesondere während eines Positioniervorgangs zur Positionierung eines Fahrzeugs relativ zu der Station, insbesondere zur Übergabe oder Übernahme eines Gegenstands, ein Energiespeicher des Fahrzeugs aufladbar ist.

Die Abgabeposition und die Aufnahmeposition sind insbesondere Bereiche, an welchen ein oder mehrere Gegenstände von dem Fahrzeug auf eine Stationsfördervorrichtung übergeben bzw. von der Stationsfördervorrichtung auf das Fahrzeug übergeben werden. Da hierfür eine sehr genaue Positionierung des Fahrzeugs relativ zu der Station erforderlich ist, kann der Positionierungsvorgang im Vergleich zu einer Höchstgeschwindigkeit des Fahrzeugs nur mit reduzierter Geschwindigkeit, beispielsweise weniger als ungefähr 0,5 m/s durchgeführt werden. Das Fahrzeug legt entsprechend geringe Wegstrecken während des Positioniervorgangs zurück, so dass beispielsweise unter Verwendung von Schleifkontakten oder durch Induktion während des Positioniervorgangs der Energiespeicher des Fahrzeugs aufgeladen werden kann.

Vorteilhaft kann es sein, wenn sich die Fördervorrichtung auf mehreren Ebenen erstreckt und einen oder mehrere Ladebereiche umfasst, welche in einer Transfervorrichtung zum Transferieren eines oder mehrerer Fahrzeuge von einer Ebene zu einer weiteren Ebene angeordnet sind.

Die Transfervorrichtung ist insbesondere ein Aufzug oder eine sonstige Hebevorrichtung zum Transferieren eines oder mehrerer Fahrzeuge von einer Ebene zu einer weiteren Ebene.

Die Ebenen der Fördervorrichtung sind dabei vorzugsweise ferner Ebenen einer Behandlungsanlage, auf welchen unterschiedliche oder auch identische Behandlungsvorgänge durchgeführt werden.

Die Transfervorrichtung kann dabei insbesondere so ausgebildet sein, dass ein oder mehrere Fahrzeuge gleichzeitig oder nur einzeln nacheinander transferierbar sind. Dabei kann einerseits ein Transferieren mit einem oder mehreren Gegenständen, welche an dem einen oder den mehreren Fahrzeugen angeordnet sind, oder ohne Gegenstände vorgesehen sein.

Vorteilhaft kann es sein, wenn die Fördervorrichtung einen oder mehrere Ladeknotenpunkte umfasst, welche jeweils mehrere Ladebereiche zum gleichzeitigen Laden mehrerer Fahrzeuge umfassen.

Die Ladebereiche eines oder mehrerer Ladeknotenpunkte sind vorzugsweise so angeordnet und/oder ausgerichtet, dass mehrere Fahrzeuge in unterschiedlichen Ausrichtungen oder in identischen Ausrichtungen, d.h. parallel zueinander, an den Ladebereichen aufladbar sind.

Ein oder mehrere Ladenknotenpunkte sind vorzugsweise an Stellen angeordnet, an welchen sich mehrere Förderwege und/oder Rückförderwege kreuzen und/oder überlappen.

Vorteilhaft kann es sein, wenn die Fördervorrichtung einen oder mehrere Sicherheitsbereiche und einen oder mehrere Expressbereiche umfasst, wobei das eine oder die mehreren Fahrzeuge in dem einen oder den mehreren Sicherheitsbereichen mittels einer Steuervorrichtung vorzugsweise in den Sicherheitsmodus versetzbar sind und wobei das eine oder die mehreren Fahrzeuge in dem einen oder den mehreren Expressbereichen vorzugsweise mittels der Steuervorrichtung in den Expressmodus versetzbar sind.

Der Sicherheitsbereich ist insbesondere für Personen zugänglich.

Der Expressbereich ist insbesondere ein zumindest temporär für Personen unzugänglicher Bereich. Falls mittels einer oder mehrerer Sensorvorrichtungen ermittelt wird, dass Personen zu dem Expressbereich Zutritt erhalten oder erhalten könnten, wird dies detektiert und vorzugsweise automatisch auch im Expressbereich für alle darin befindlichen Fahrzeuge der Sicherheitsmodus aktiviert.

Der Expressbereich ist insbesondere ein räumlich von dem Sicherheitsbereich getrennter und/oder abgesperrter Bereich.

Ein oder mehrere Expressbereiche umfassen vorzugsweise einen oder mehrere Rückförderwege oder Rückförderwegabschnitte, in welchen das eine oder die mehreren Fahrzeuge unbeladen sind.

Insbesondere sind keine zu fördernde Gegenstände an dem jeweiligen Fahrzeug angeordnet, wenn dieses unbeladen ist.

Der mindestens eine Expressbereich kann somit insbesondere so flach ausgebildet sein, dass kein Gegenstand an dem einen oder den mehreren Fahrzeugen aufnehmbar ist, wenn diese im Expressbereich angeordnet sind.

Der Expressbereich ist insbesondere an eine Höhe des Fahrzeugs ohne daran angeordnete Gegenstände angepasst.

Vorteilhaft kann es sein, wenn ein oder mehrere Expressbereiche und/oder ein oder mehrere Sicherheitsbereiche mittels einer oder mehrerer Durchfahrtsöffnungen miteinander verbunden sind.

Die eine oder die mehreren Durchfahrtsöffnungen sind insbesondere Öffnungen, durch welche ein oder mehrere Fahrzeuge aus dem Expressbereich in den Sicherheitsbereich und/oder aus dem Sicherheitsbereich in den Expressbereich fahren können.

Die eine oder die mehreren Durchfahrtsöffnungen weisen vorzugsweise zumindest abschnittsweise eine Form auf, welche zumindest näherungsweise und/oder zumindest abschnittsweise komplementär zu einer Form eines oder mehrerer Fahrzeuge ausgebildet ist.

Hierdurch kann insbesondere ein unerwünschter Zutritt zu dem Expressbereich für Personen vermieden werden.

Es kann vorgesehen sein, dass eine oder mehrere Durchfahrtsöffnungen in oder an einer oder mehreren Stationen der Fördervorrichtung angeordnet sind.

Alternativ oder ergänzend hierzu kann vorgesehen sein, dass eine oder mehrere Durchfahrtsöffnungen durch eine oder mehrere Stationen der Fördervorrichtung gebildet sind.

Eine oder mehrere Stationen trennen somit vorzugsweise einen Expressbereich von einem Sicherheitsbereich.

Beispielsweise kann hierbei vorgesehen sein, dass mittels eines oder mehrerer Fahrzeuge ein zu fördernder Gegenstand zu einer Station gefördert und beispielsweise an eine Stationsfördervorrichtung übergeben wird. Das eine oder die mehreren Fahrzeuge werden dann beispielsweise durch die Station hindurch in den Expressbereich gefahren und können insbesondere beschleunigt weiterverfahren werden, insbesondere um weitere Aufgaben zu übernehmen. Der eine oder die mehreren in der Station angeordneten Gegenstände sind dann beispielsweise mittels einer Stationsfördervorrichtung und/oder mittels eines oder mehrerer anderer Fahrzeuge aus der Station entfernbar, beispielsweise weiterförderbar, insbesondere zu einer oder mehreren anderen Stationen und/oder einer Puffervorrichtung zur Zwischenspeicherung der Gegenstände.

Günstig kann es sein, wenn ein oder mehrere Expressbereiche mittels eines begehbaren und/oder befahrbaren doppelten Bodens gebildet sind.

Insbesondere kann vorgesehen sein, dass der Expressbereich ein Zwischenraum zwischen einem Hallenboden und einem Zusatzboden ist, welcher sich parallel zu dem Hallenboden erstreckt.

Ein Abstand zwischen dem Hallenboden und dem Zusatzboden beträgt vorzugsweise weniger als das Vierfache, vorzugsweise weniger als das Dreifache, beispielsweise höchstens ungefähr das Zweifache, einer Höhe des Fahrzeugs, insbesondere einer Höhe des Grundkörpers des Fahrzeugs.

Anstelle eines Hallenbodens kann auch ein anderer befahrbarer Untergrund vorhanden sein.

Der Bereich auf dem Zusatzboden oder derjenige Bereich, in welchem kein Zusatzboden vorhanden ist, ist insbesondere ein Sicherheitsbereich.

Der Zusatzboden kann beispielsweise ein Trennboden sein oder einen Trennboden umfassen.

Die Fördervorrichtung umfasst vorzugsweise mehrere Arten von Stationen, wobei von mindestens zwei Arten von Stationen vorzugsweise jeweils mehrere Stationen vorgesehen sind.

Die Fahrzeuge sind mittels der Steuervorrichtung vorzugsweise abhängig von der Belegung der Stationen einer jeweiligen Art steuerbar. Insbesondere kann vorzugsweise die Zuführung von Gegenständen zu den Stationen abhängig von der jeweiligen Belegung der Stationen einer jeweiligen Art gewählt werden.

Bei einer Ausgestaltung der Erfindung kann vorgesehen sein, dass die zu fördernden Gegenstände mittels eines oder mehrerer Fahrzeuge in einer vorgegebenen Reihenfolge zu und/oder durch jeweils eine der Stationen unterschiedlicher Art förderbar sind. Mittels einer Steuervorrichtung ist vorzugsweise eine einzelne Station einer jeweiligen Art von Stationen auswählbar, insbesondere
a) abhängig von einer aktuellen Belegung der einzelnen Stationen einer jeweiligen Art von Stationen und/oder
b) abhängig von einer Ausstattung der einzelnen Stationen einer jeweiligen Art von Stationen und/oder
c) abhängig von einer Ausgestaltung der einzelnen Stationen einer jeweiligen Art von Stationen und/oder
d) abhängig von einem aktuellen Wartungsstand oder Verunreinigungsgrad der einzelnen Stationen einer jeweiligen Art von Stationen.

Die Fördervorrichtung eignet sich insbesondere als Bestandteil einer Bearbeitungsanlage zur Bearbeitung von Gegenständen, insbesondere Werkstücken, beispielsweise Fahrzeugkarosserien.

Die vorliegende Erfindung betrifft daher auch eine Bearbeitungsanlage zur Bearbeitung von Gegenständen.

Die Bearbeitungsanlage umfasst vorzugsweise eine Fördervorrichtung, insbesondere eine erfindungsgemäße Fördervorrichtung.

Die erfindungsgemäße Bearbeitungsanlage weist vorzugsweise einzelne oder mehrere der im Zusammenhang mit der erfindungsgemäßen Fördervorrichtung und/oder dem erfindungsgemäßen Fahrzeug beschriebenen Merkmale und/oder Vorteile auf.

Günstig kann es sein, wenn eine oder mehrere Stationen der Fördervorrichtung, welche zur Förderung von Gegenständen mittels Fahrzeugen der Fördervorrichtung fördertechnisch miteinander verbunden sind, Bearbeitungsstationen der Bearbeitungsanlage sind.

Mittels eines oder mehrerer Fahrzeuge der Fördervorrichtung sind somit vorzugsweise zu bearbeitende Gegenstände nacheinander unterschiedlichen Bearbeitungsstationen der Bearbeitungsanlage zuführbar.

Günstig kann es sein, wenn die Fördervorrichtung einen Übergabebereich umfasst, an welchem ein oder mehrere Gegenstände von einem Fahrzeug an eine Stationsfördervorrichtung oder eine sonstige Aufnahmevorrichtung übergebbar sind.

Der Übergabebereich kann insbesondere eine Aufnahmeposition und/oder eine Abgabeposition bilden oder Bestandteil hiervon sein.

In einer Übergabeposition des Übergabebereichs ist das Fahrzeug vorzugsweise so positioniert, dass eine Adaptervorrichtung und/oder der Gegenstand beispielsweise durch Einfahren oder Absenken von einem oder mehreren Aufnahmeelementen des Fahrzeugs absenkbar und/oder auf einer Stationsfördervorrichtung oder einer sonstigen Aufnahmevorrichtung absetzbar ist.

Die Adaptervorrichtung und/oder der Gegenstand sind hierdurch vorzugsweise von dem Fahrzeug trennbar.

Wenn mehrere Fahrzeuge in kurzer zeitlicher Abfolge nacheinander mehrere Gegenstände übergeben sollen, so kann es vorteilhaft sein, wenn die Fahrzeuge nicht entgegen einer Einfahrrichtung durch einen Einfahrbereich hindurch von der Übergabeposition weggefahren werden, da sonst die weiteren Fahrzeuge in einem größeren Abstand von dem Übergabebereich gehalten werden müssten.

Vorzugsweise ist mindestens ein Einfahrbereich des Übergabebereichs, durch welchen eine Übergabeposition der Übergabevorrichtung für das Fahrzeug zugänglich ist, räumlich von mindestens einem Ausfahrbereich des Übergabebereichs getrennt, durch welchen das Fahrzeug von der Übergabeposition wegfahrbar ist.

Alternativ oder ergänzend hierzu kann vorgesehen sein, dass eine Einfahrrichtung, längs welcher das Fahrzeug in den Übergabereich einfahrbar ist, quer, insbesondere zumindest näherungsweise senkrecht, zu einer Ausfahrrichtung ist, längs welcher das Fahrzeug aus dem Übergabereich ausfahrbar ist.

Das Fahrzeug ist insbesondere in der Übergabeposition drehbar, vorzugsweise um seine eigene vertikale Achse, insbesondere Mittelachse, beispielsweise durch gegenläufiges Drehen zweier Antriebsräder.

Die Drehung erfolgt beispielsweise um zumindest näherungsweise 90°, so dass das Fahrzeug die Übergabeposition vorzugsweise in einer zumindest näherungsweise senkrecht zur Einfahrrichtung ausgerichteten Ausfahrrichtung verlassen kann.

Ein weiteres Fahrzeug kann dann vorzugsweise ohne nennenswerte Wartezeit unmittelbar im Anschluss durch den Einfahrbereich hindurch in die Übergabeposition gefahren werden, um letztlich einen weiteren Gegenstand zu der Station zuführen zu können.

Die vorliegende Erfindung betrifft ferner Verfahren zum Bearbeiten und/oder Fördern von Gegenständen.

Die Gegenstände werden dabei insbesondere mittels eines oder mehrerer Fahrzeuge, insbesondere erfindungsgemäßer Fahrzeuge, und/oder mittels einer Fördervorrichtung, insbesondere einer erfindungsgemäßen Fördervorrichtung, gefördert.

Alternativ oder ergänzend hierzu kann vorgesehen sein, dass die Gegenstände in und/oder mittels einer Bearbeitungsanlage, insbesondere einer erfindungsgemäßen Bearbeitungsanlage, bearbeitet werden.

Die Verfahren weisen vorzugsweise einzelne oder mehrere der im Zusammenhang mit dem Fahrzeug, der Fördervorrichtung und/oder der Bearbeitungsanlage beschriebenen Merkmale und/oder Vorteile auf.

Grundsätzlich sind selbstverständlich sämtliche Merkmale und/oder Vorteile des Fahrzeugs, der Adaptervorrichtung, der Fördervorrichtung, der Bearbeitungsanlage und/oder der Verfahren frei miteinander kombinierbar, um besondere Ausgestaltungen der Erfindung zu erhalten.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer ersten Ausführungsform eines Fahrzeugs;
- Fig. 2: einen schematischen horizontalen Schnitt durch das Fahrzeug aus Fig. 1;
- Fig. 3: eine schematische Draufsicht auf eine Unterseite des Fahrzeugs aus Fig. 1;
- Fig. 4: einen schematischen vertikalen Schnitt durch das Fahrzeug aus Fig. 1 längs der Linie 4-4 in Fig. 3;
- Fig. 5: einen schematischen vertikalen Schnitt durch das Fahrzeug aus Fig. 1 längs der Linie 5-5 in Fig. 3;
- Fig. 6: einen schematischen vertikalen Schnitt durch das Fahrzeug aus Fig. 1 längs der Linie 6-6 in Fig. 3;
- Fig. 7: eine vergrößerte Darstellung des Bereichs VII in Fig. 6;
- Fig. 7a: einen vertikalen Schnitt durch eine alternative Ausführungsform eines Aufnahmeelements des Fahrzeugs;
- Fig. 8: einen schematischen horizontalen Schnitt durch das Fahrzeug aus Fig. 1 längs der Linie 8-8 in Fig. 5;
- Fig. 9: eine schematische perspektivische Darstellung einer Adaptervorrichtung, welche an dem Fahrzeug aus Fig. 1 festlegbar ist und der Aufnahme eines Gegenstands dient;
- Fig. 10: eine weitere schematische perspektivische Darstellung der Adaptervorrichtung aus Fig. 9;
- Fig. 11: eine schematische Seitenansicht des Fahrzeugs aus Fig. 1, der Adaptervorrichtung aus Fig. 9 und eines daran angeordneten, partiell dargestellten Gegenstands;
- Fig. 12: eine schematische Seitenansicht einer Stapelvorrichtung zum Stapeln und/oder Entstapeln von Fahrzeugen;
- Fig. 13: eine der Fig. 12 entsprechende schematische Darstellung der Stapelvorrichtung, wobei eine Hubeinheit der Stapelvorrichtung in einer angehobenen Stellung angeordnet ist;
- Fig. 14: eine schematische perspektivische Darstellung von Teilen einer Fördervorrichtung, welche in einer Bearbeitungsanlage zum Einsatz kommt;
- Fig. 15: eine schematische Draufsicht auf ein vorderes Ende der Fördervorrichtung aus Fig. 14, mit Blickrichtung längs der Förderrichtung;
- Fig. 16: eine der Fig. 15 entsprechende schematische Darstellung einer alternativen Ausführungsform einer Fördervorrichtung, bei welcher ein Hängeförderer als Stationsfördervorrichtung vorgesehen ist, wobei der Hängeförderer in einer abgesenkten Stellung angeordnet ist;
- Fig. 17: eine der Fig. 16 entsprechende schematische Darstellung der Fördervorrichtung aus Fig. 16, wobei der Hängeförderer in einer angehobenen Stellung angeordnet ist;
- Fig. 18: eine der Fig. 15 entsprechende schematische Darstellung einer weiteren alternativen Ausführungsform einer Fördervorrichtung, bei welcher eine Station mit Hubtischen zum Anheben eines Gegenstands vorgesehen ist;
- Fig. 19: eine schematische Darstellung eines Trennbodens einer Station, mittels welchem ein Fahrzeug und eine Adaptervorrichtung sowie gegebenenfalls ein daran angeordneter Gegenstand voneinander getrennt sind, wobei der Trennboden einen als Durchtrittsschlitz ausgebildeten Durchtrittsbereich aufweist, welcher beidseitig von schräg verlaufenden Durchtrittsrandbereichen begrenzt ist;
- Fig. 20: eine der Fig. 19 entsprechende schematische Darstellung einer alternativen Ausführungsform des Trennbodens, bei welcher im Wesentlichen L-förmige Durchtrittsrandbereiche vorgesehen sind;
- Fig. 21: eine der Fig. 19 entsprechende schematische Darstellung einer weiteren alternativen Ausführungsform des Trennbodens, bei welcher der Durchtrittsbereich mittels Schließelementen verschließbar ist, wobei die Schließelemente beispielsweise Klappen sind;
- Fig. 22: eine der Fig. 19 entsprechende schematische Darstellung einer weiteren alternativen Ausführungsform eines Trennbodens, bei welcher der Durchtrittsbereich mittels als Lamellen ausgebildeter Schließelemente verschließbar ist;
- Fig. 23: eine der Fig. 22 entsprechende schematische Darstellung des Trennbodens, des Fahrzeugs sowie der Adaptervorrichtung aus Fig. 22, wobei ein oder mehrere Aufnahmeelemente des Fahrzeugs in einer angehobenen oder ausgefahrenen Position angeordnet sind und somit die Adaptervorrichtung von einer Stationsfördervorrichtung angehoben wurde;
- Fig. 24: eine schematische Darstellung des Layouts einer Bearbeitungsanlage, welche mehrere Bearbeitungsstationen und mehrere Ladebereiche zum Laden der Fahrzeuge aufweist;
- Fig. 25: eine der Fig. 24 entsprechende schematische Darstellung einer weiteren Ebene der Bearbeitungsanlage aus Fig. 24;
- Fig. 26: eine schematische perspektivische Darstellung einer insbesondere alternativen Ausführungsform eines Übergabebereichs, wobei ein Fahrzeug eine Adaptervorrichtung und optional einen an der Adaptervorrichtung angeordneten, nicht dargestellten Gegenstand an eine Stationsfördervorrichtung übergibt;
- Fig. 27: eine der Fig. 26 entsprechende Darstellung des Übergabebereichs aus Fig. 26, wobei die Adaptervorrichtung mittels der Stationsfördervorrichtung abgeführt wurde;
- Fig. 28: eine der Fig. 26 entsprechende Darstellung des Übergabebereichs aus Fig. 26, wobei das Fahrzeug sich in eine Querausrichtung gedreht hat, um den Übergabebereich in einer quer zu einer Einfahrrichtung ausgerichteten Ausfahrrichtung zu verlassen;
- Fig. 29: eine schematische Draufsicht von oben auf eine Kombination aus einem Fahrzeug und einem daran angeordneten Gegenstand zur Illustration der Funktionsweise der Sensorvorrichtungen, wobei zur einfacheren Erläuterung auch das eigentlich unter dem Gegenstand angeordnete Fahrzeug sichtbar ist;
- Fig. 30: eine schematische Seitenansicht der Kombination aus einem Fahrzeug und einem daran angeordneten Gegenstand gemäß Fig. 29;
- Fig. 31: eine schematische perspektivische Darstellung eines Trennbodens einer Fördervorrichtung, wobei der Trennboden einen Durchtrittsbereich aufweist, welcher mittels Schließelementen verschließbar ist;
- Fig. 32: einen schematischen vertikalen Querschnitt durch den Trennboden aus Fig. 31;
- Fig. 33: eine schematische perspektivische Darstellung des Trennbodens aus Fig. 31 mit Blick auf eine Unterseite des Trennbodens; und
- Fig. 34: eine vereinfachtes Schaltbild zur Illustration eines Ladevorgangs.

Gleiche oder funktional äquivalente Elemente sind in sämtlichen Figuren mit denselben Bezugszeichen versehen.

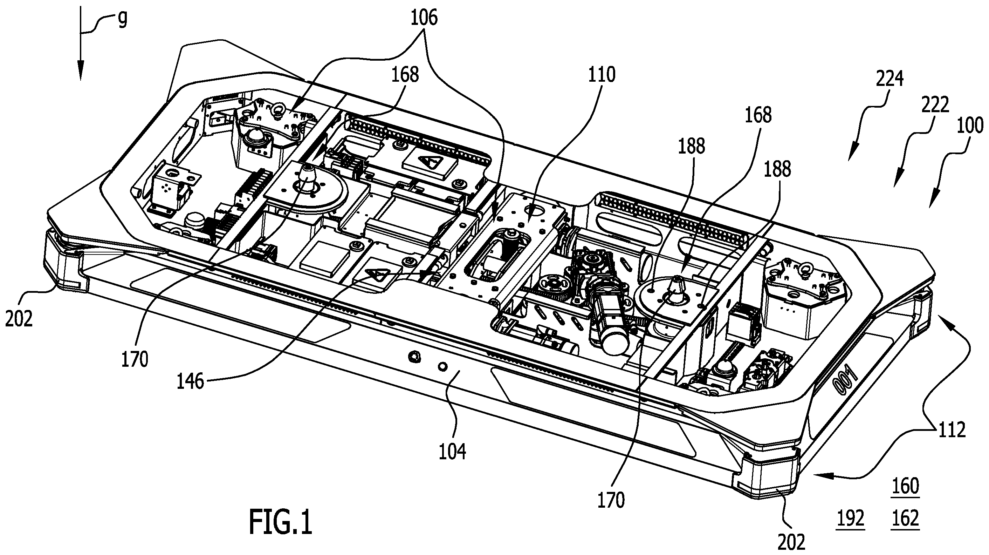

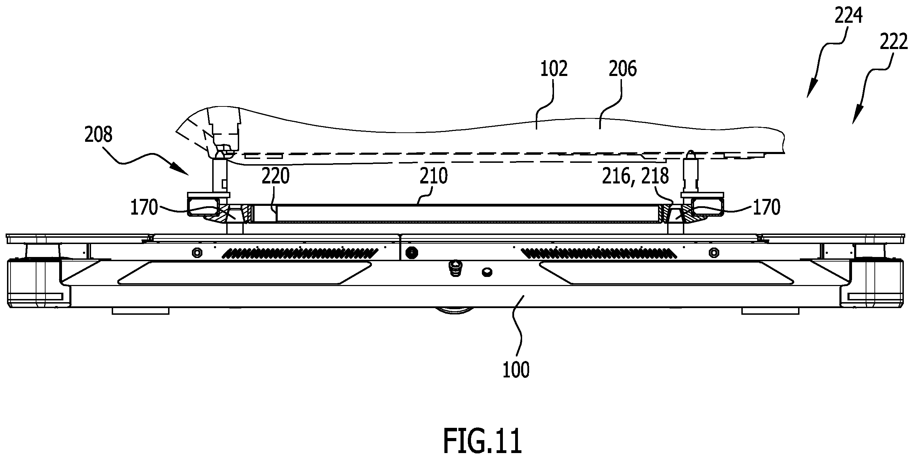

Eine in den Fig. 1 bis 8 dargestellte erste Ausführungsform eines als Ganzes mit 100 bezeichneten Fahrzeugs ist insbesondere ein fahrerloses Transportfahrzeug zum Transportieren von Gegenständen 102 (siehe diesbezüglich beispielsweise Fig. 11).

Wie insbesondere den Fig. 1 bis 8 zu entnehmen ist, umfasst das Fahrzeug 100 einen im Wesentlichen quaderförmigen Grundkörper 104, welcher eine tragende Struktur des Fahrzeugs 100 bildet.

Ferner umfasst das Fahrzeug 100 ein Fahrwerk 106, welches mehrere, beispielsweise vier, Stützrollen 108 und eine Antriebsvorrichtung 110 umfasst.

Die Stützrollen 108 sind insbesondere in vier Eckbereichen 112 des Fahrzeugs 100 an einer Unterseite 114 des Fahrzeugs 100 angeordnet.

Die Stützrollen 108 sind insbesondere teilweise in den Grundkörper 104 des Fahrzeugs 100 eingelassen, so dass das Fahrzeug 100 eine möglichst geringe Gesamthöhe aufweist.

Die Stützrollen 108 sind insbesondere um im Wesentlichen vertikale Drehachsen 116 um 360° frei drehbar gelagert.

Insbesondere sind die Stützrollen 108 nicht angetriebene Räder.

Die Antriebsvorrichtung 110 umfasst beispielsweise zwei Antriebselemente 118, welche beispielsweise als Antriebsräder 120 ausgebildet sind.

Jedem Antriebselement 118 ist vorzugsweise ein Antriebsmotor 122 der Antriebsvorrichtung 110 zugeordnet, so dass die Antriebselemente 118 unabhängig voneinander antreibbar sind.

Die Antriebsmotoren 122 und die Antriebselemente 118 sind vorzugsweise mittels eines Achsenelements 124 starr miteinander verbunden.

Die Antriebselemente 118 sind dabei insbesondere an einander gegenüberliegenden Enden des Achsenelements 124 drehbar gelagert.

Das Achsenelement 124 ist mittels eines Lagerelements 126 der Antriebsvorrichtung 110 drehbar oder schwenkbar an dem Grundkörper 104 des Fahrzeugs 100 gelagert. Das Lagerelement 126 ist hierzu beispielsweise im Wesentlichen C-förmig ausgebildet und/oder umfasst ein Mittelteil 128 und zwei in dieselbe Richtung von dem Mittelteil 128 wegragende Schenkel 130.

Ein dem Mittelteil 128 abgewandtes Ende eines Schenkels 130 bildet vorzugsweise eine Lagerstelle 132, an welcher das Lagerelement 126 drehbar oder schwenkbar an dem Grundkörper 104 des Fahrzeugs 100 gelagert ist.

Der weitere Schenkel 130 des Lagerelements 126 wechselwirkt vorzugsweise mit einem Federelement 134, so dass die Schwenkbewegung und/oder Drehbewegung des Lagerelements 126 relativ zur Lagerstelle 132, insbesondere um eine durch die Lagerstelle 132 vorgegebene Lagerachse 136, eine gefederte Bewegung ist.

Die Lagerachse 136 ist insbesondere im Wesentlichen parallel zu einer Hauptfahrtrichtung 138 des Fahrzeugs 100, welche vorzugsweise zugleich parallel zu einer horizontalen Längsmittelachse 140 des Fahrzeugs 100 ist. Im Mittelteil 128 des Lagerelements 126 ist insbesondere eine Schwenkverbindung 142 zur Verbindung des Lagerelements 126 mit dem Achsenelement 124 vorgesehen.

Insbesondere ist das Achsenelement 124 mittels der Schwenkverbindung 142 schwenkbar an dem Lagerelement 126 gelagert.

Eine Schwenkachse 144, um welche das Achsenelement 124 relativ zu dem Lagerelement 126 schwenkbar ist, ist vorzugsweise parallel zur Lagerachse 136 und/oder parallel zur Längsmittelachse 140 und/oder parallel zur Hauptfahrtrichtung 138.

Zudem ist die Schwenkachse 144 vorzugsweise im Wesentlichen mittig zwischen den beiden Antriebselementen 118 und/oder im Wesentlich mittig zwischen den beiden Antriebsmotoren 122 angeordnet.

Da die Schwenkachse 144 und die Lagerachse 136 parallel versetzt zueinander sind, kann durch Drehung des Lagerelements 126 um die Lagerachse 136 die Schwenkverbindung 142 und somit auch das Achsenelement 124 samt der daran angeordneten Antriebselemente 118 angehoben oder abgesenkt werden.

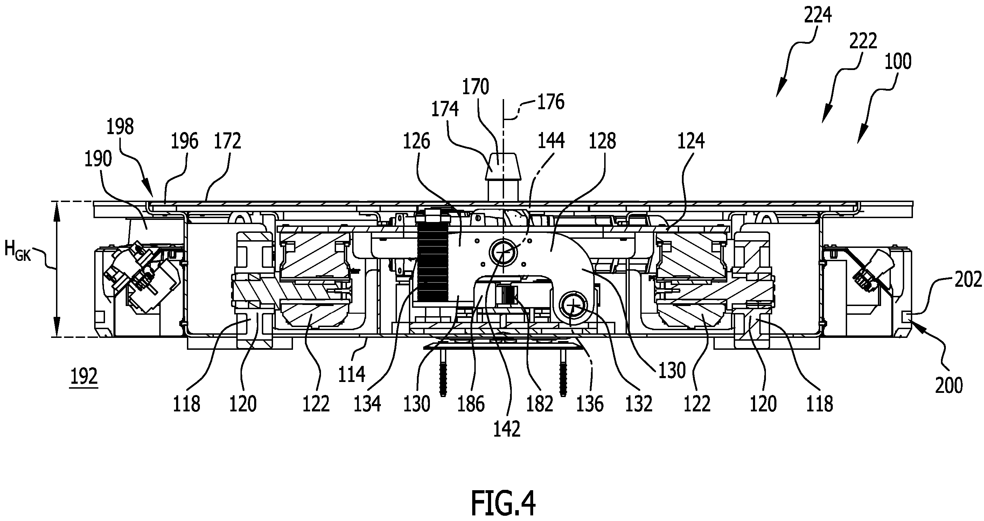

Wie insbesondere Fig. 4 zu entnehmen ist, können hierdurch insbesondere die Antriebsräder 118 unterschiedlich weit aus dem Grundkörper 104 herausragend positioniert werden.

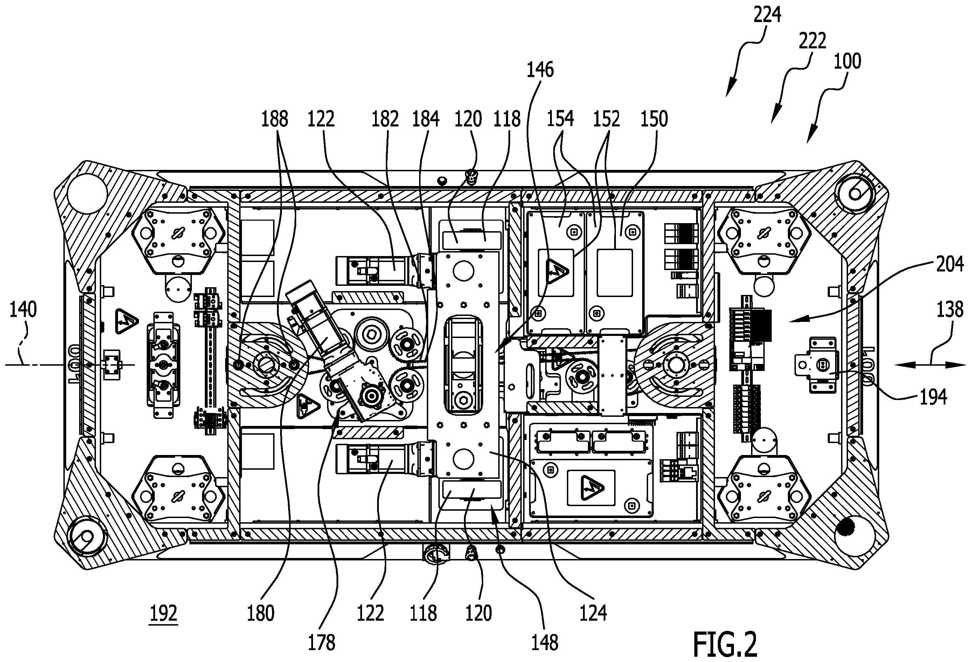

Eine beispielsweise in Fig. 2 ersichtliche Betätigungsvorrichtung 146 dient vorzugsweise dazu, eine Drehausrichtung des Lagerelements 126 um die Lagerachse 136 einzustellen. Insbesondere kann dies durch Verschieben des Federelements 134 oder durch Verschieben eines an dem Federelement 134 angreifenden Gegenstücks erfolgen.

Letztlich lässt sich mittels der Betätigungsvorrichtung 146 vorzugsweise einstellen, wie weit die Antriebselemente 118 aus dem Grundkörper 104 herausragen.

Da die Antriebsvorrichtung 110, insbesondere das Achsenelement 124 und die Antriebselemente 118, bezüglich der Längsmittelachse 140 des Fahrzeugs 100 im Wesentlichen mittig an dem Grundkörper 104 angeordnet sind, kann das Fahrzeug 100 besonders platzsparend manövriert werden. Insbesondere kann das Fahrzeug 100 auf der Stelle gewendet werden, indem die Antriebselemente 118 mittels des jeweiligen Antriebsmotors 122 in unterschiedliche Drehrichtungen angetrieben werden.

Wie insbesondere Fig. 4 zu entnehmen ist, sind die Antriebselemente 118 mittels des Achsenelements 124 starr miteinander verbunden, so dass eine hierdurch gebildete Antriebsachse 148 im Wesentlichen eine Starrachse ist.

Die Antriebsmotoren 122 des Fahrzeugs 100 werden vorzugsweise von einem Energiespeicher 150 des Fahrzeugs 100 mit elektrischer Energie versorgt.

Der Energiespeicher 150 umfasst insbesondere mehrere Energiespeichereinheiten 152, beispielsweise mehrere Superkondensatoren 154.

Der Energiespeicher 150 ist mittels einer Ladevorrichtung 156 aufladbar.

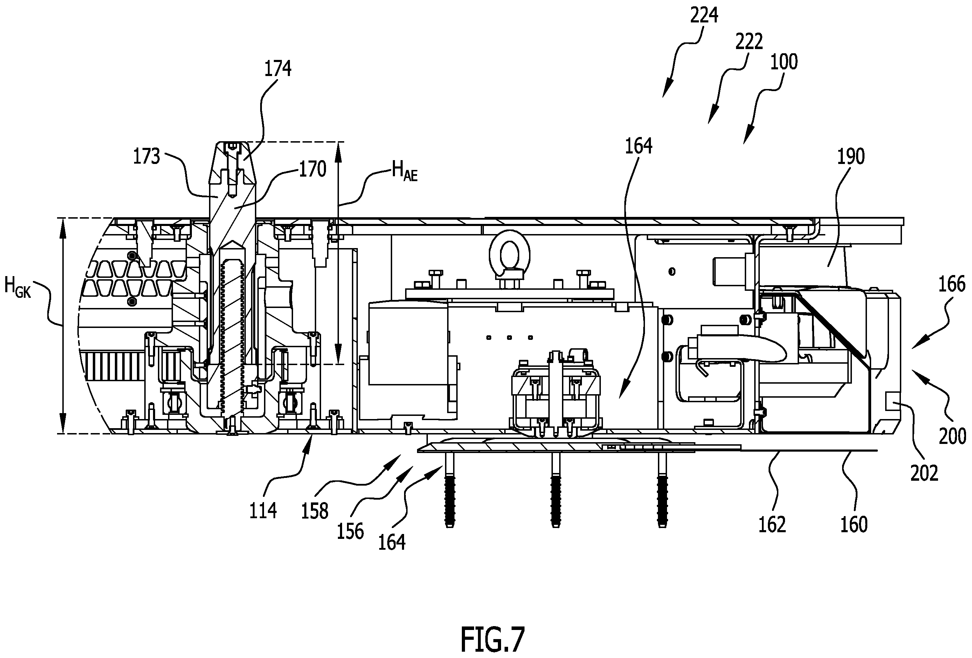

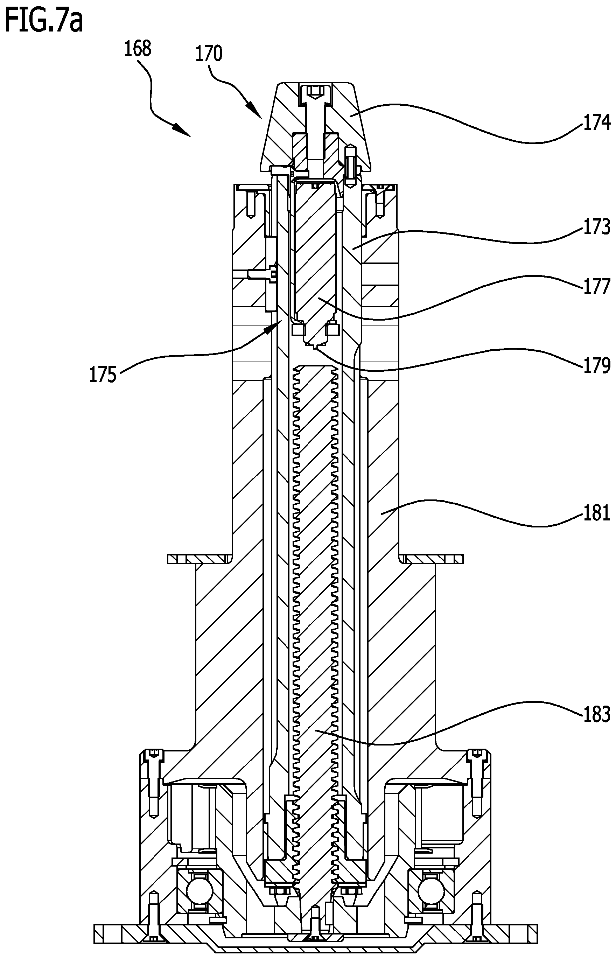

Die Ladevorrichtung 156 umfasst insbesondere einen Ladebereich 158, welcher beispielsweise auf einem befahrbaren Untergrund 160, insbesondere einem Hallenboden 162, angeordnet ist (siehe insbesondere Fig. 4 und 7). Der Ladebereich 158 umfasst insbesondere eine Ladeanschlussstelle 164, welche beispielsweise auf dem befahrbaren Untergrund 160 befestigt, beispielsweise festgeschraubt, ist.

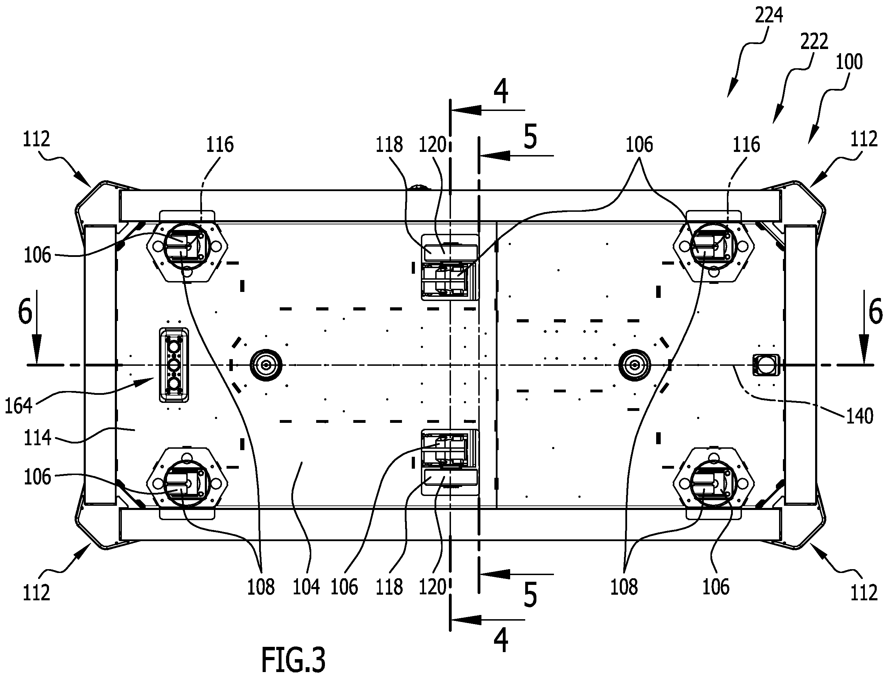

Eine mit der Ladeanschlussstelle 164 des Ladebereichs 158 koppelbare Ladeanschlussstelle 164 des Fahrzeugs 100 ist vorzugsweise an dem Fahrzeug angeordnet, insbesondere an der Unterseite 114 des Fahrzeugs 100 (siehe beispielsweise Fig. 3).

Die Ladeanschlussstellen 164 können beispielsweise eine Schleifkontaktierung aufweisen oder bilden. Auch andere mechanische oder nicht berührende Übertragungsvarianten sind denkbar. Beispielsweise kann auch eine induktive Energieübertragung vorgesehen sein.

In einer (nicht dargestellten) alternativen Ausführungsform des Fahrzeugs 100 können eine oder mehrere zusätzliche Ladeanschlussstellen 164 beispielsweise in einer Seitenwandung 166 des Fahrzeugs 100, insbesondere des Grundkörpers 104, angeordnet und/oder ausgebildet sein. Beispielsweise können herkömmliche Steckverbindungen zum Anschließen eines Ladekabels vorgesehen sein.

Ferner kann alternativ oder ergänzend an einem oder mehreren (noch zu beschreibenden) Aufnahmeelementen eine Ladeanschlussstelle 164 des Fahrzeugs 100 vorgesehen sein.

Wie insbesondere den Fig. 1, 2, 7 und 8 zu entnehmen ist, umfasst das Fahrzeug 100 eine Aufnahmevorrichtung 168, mittels welcher ein oder mehrere Gegenstände 102 aufnehmbar sind.

Insbesondere umfasst die Aufnahmevorrichtung 168 ein oder mehrere, beispielsweise zwei, Aufnahmeelemente 170, welche an einer Oberseite 172 des Grundkörpers 104 des Fahrzeugs 100 aus demselben herausragen.

Die Aufnahmeelemente 170 sind insbesondere stabförmig oder pinartig ausgebildet.

Vorzugsweise sind die Aufnahmeelemente 170 zumindest abschnittsweise und/oder zumindest näherungsweise zylinderförmig, beispielsweise kreiszylinderförmig, ausgebildet.

Die Aufnahmeelemente 170 weisen vorzugsweise eine Höhe H_{AE} auf, welche mindestens ungefähr einer Höhe H_{GK} des Grundkörpers 104 des Fahrzeugs 100 entspricht.

Jedes Aufnahmeelement 170 umfasst vorzugsweise einen Schaftabschnitt 173, an welchen sich ein Aufnahmeabschnitt 174 anschließt.

Der Aufnahmeabschnitt 174 verjüngt sich vorzugsweise entgegen einer Schwerkraftrichtung g, sofern das Fahrzeug 100 auf einer horizontalen Ebene steht und die Oberseite 172 des Grundkörpers 104 nach oben ausgerichtet ist.

Wie insbesondere Fig. 7a zu entnehmen ist, kann bei einer alternativen Ausführungsform eines Aufnahmeelements 170 eine beispielsweise integrierte Schmiervorrichtung 175 vorgesehen sein.

Die Schmiervorrichtung 175 ist vorzugsweise in das Aufnahmeelement 170, insbesondere in den Schaftabschnitt 173 und/oder den Aufnahmeabschnitt 174, integriert, beispielsweise vollständig innerhalb des Schaftabschnitts 173 und/oder des Aufnahmeabschnitts 174 angeordnet.

Die Schmiervorrichtung 175 umfasst vorzugsweise ein Reservoir 177 zur Aufnahme von Schmiermittel und ein Dosierelement 179 zur steuerbaren und/oder regelbaren Zuführung des Schmiermittels aus dem Reservoir 177 zu einem zu schmierenden Gegenstand.

Der zu schmierende Gegenstand ist insbesondere ein Teil einer Hubantriebsvorrichtung 178 zum Anheben und/oder Absenken des Aufnahmeelements 170 relativ zu einem Basiskörper 181, an oder in welchem das Aufnahmeelement 170 angeordnet, insbesondere verschiebbar gelagert, ist.

Beispielsweise kann vorgesehen sein, dass das Aufnahmeelement 170 mittels eines Spindelelements 183 verschiebbar an dem Basiskörper 181 angeordnet ist, insbesondere aus dem Basiskörper 181 herausfahrbar und/oder in den Basiskörper 181 hineinfahrbar ist.

Die Schmiervorrichtung 175 ist vorzugsweise derart ausgebildet, dass der zu schmierende Gegenstand, insbesondere das Spindelelement 183, mit Schmiermittel beaufschlagbar ist, insbesondere um eine zuverlässige Schmierung desselben und somit einen zuverlässigen Hubbetrieb des Aufnahmeelements 170 zu gewährleisten.

Das Dosierelement 179 ist hierzu insbesondere bedarfsgesteuert und/oder zeitgesteuert, beispielsweise mittels eines Zeitelements. Beispielsweise kann vorgesehen sein, dass das Dosierelement 179 automatisch nach einer vorgegebenen Anzahl an Hubzyklen des Aufnahmeelements 170 aktiviert wird, um eine regelmäßige Zudosierung des Schmiermittels zu dem zu schmierenden Gegenstand, insbesondere dem Spindelelement 183, zu gewährleisten.

Das Dosierelement 179 kann insbesondere ein an einer Unterseite des Reservoirs 177 angeordnetes und/oder auf den zu schmierenden Gegenstand gerichtetes Ventil sein, welches nach Bedarf geöffnet und geschlossen werden kann (siehe Fig. 7a).

Die Schmiervorrichtung 175, insbesondere das Reservoir 177 und/oder das Dosierelement 179, ist vorzugsweise durch den Aufnahmeabschnitt 174 hindurch und/oder durch Entfernen des Aufnahmeabschnitts 174 beispielsweise von oben zugänglich, insbesondere für einen Austausch und/oder ein Auffüllen mit weiterem Schmiermittel.

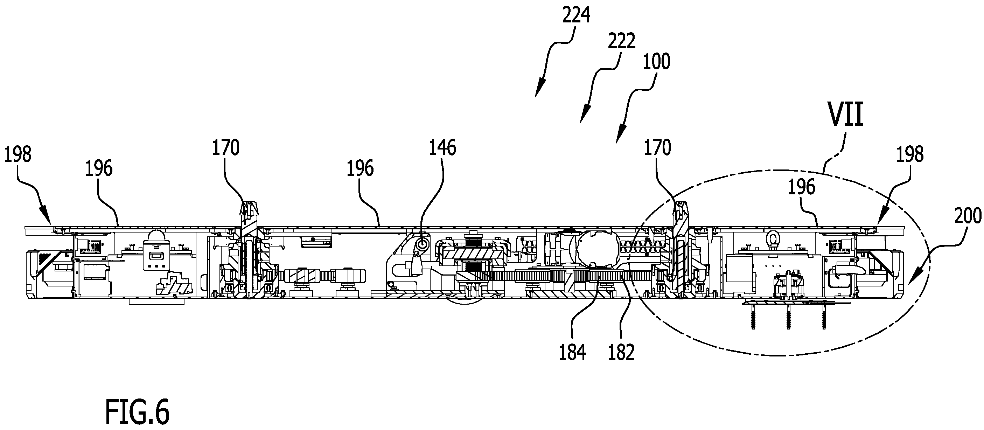

Wie insbesondere den Fig. 4 und 6 zu entnehmen ist, sind die Aufnahmeelemente 170 so angeordnet, dass deren Mittelachsen in einer vertikalen Längsmittelebene 176 des Fahrzeugs 100 liegen.

Die Aufnahmeelemente 170 sind insbesondere mittels einer Hubantriebsvorrichtung 178 bewegbar, insbesondere nach oben aus dem Grundkörper 104 ausfahrbar und zumindest teilweise wieder einfahrbar.

Die Hubantriebsvorrichtung 178 umfasst hierfür insbesondere einen Hubantriebsmotor 180, welcher beispielsweise ein Elektromotor ist und unter Verwendung von Energie aus dem Energiespeicher 150 antreibbar ist.

Ferner umfasst die Hubantriebsvorrichtung 178 ein Hubantriebselement 182, beispielsweise einen Hubantriebsriemen 184, mittels welchem die Aufnahmeelemente 170 miteinander und zudem mit dem Hubantriebsmotor 180 gekoppelt sind.

Die beiden Aufnahmeelemente 170 sind somit insbesondere gemeinsam mittels des Hubantriebsmotors 180 verfahrbar.

Da die Aufnahmeelemente 170 vorzugsweise längs der Längsmittelachse 140 des Fahrzeugs 100 auf einander gegenüberliegenden Seiten der Antriebsvorrichtung 110 angeordnet sind, ist es zur permanenten Kopplung der beiden Aufnahmeelemente 170 mittels des Hubantriebselements 182 vorteilhaft, wenn das Hubantriebselement 182 sich sowohl zu dem einen als auch zu dem anderen Aufnahmeelement 170 hin erstreckt.

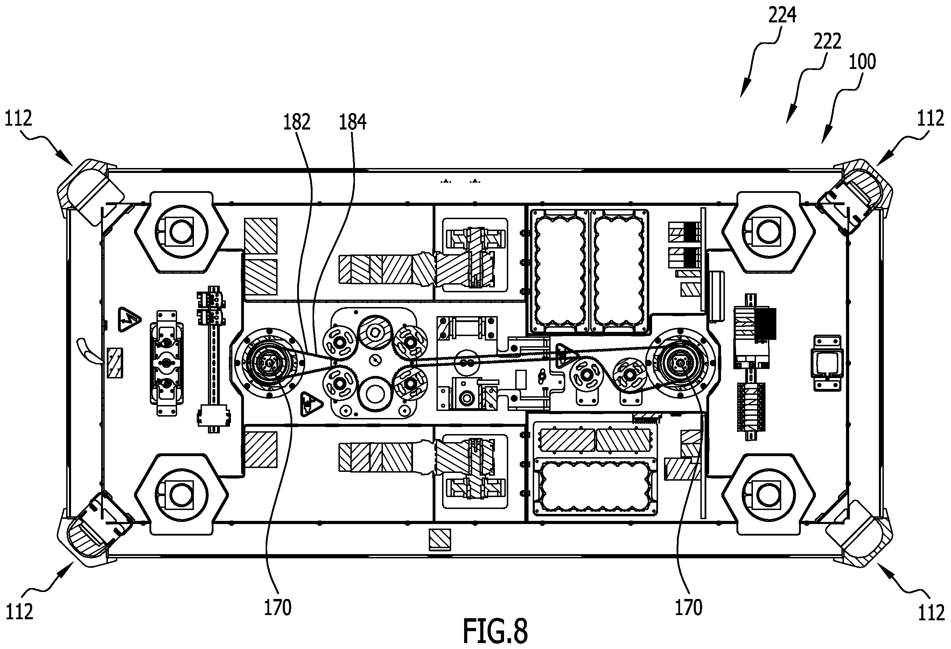

Wie insbesondere Fig. 8 zu entnehmen ist, ist das beispielsweise als Hubantriebsriemen 184 ausgebildete Hubantriebselement 182 hierfür durch die Antriebsvorrichtung 110 hindurchgeführt.

Das Hubantriebselement 182 erstreckt sich dabei insbesondere durch einen zwischen den zwei Schenkeln 130 des Lagerelements 126 gebildeten Zwischenraum 186 hindurch.

Mit Hinblick auf das Achsenelement 124 und/oder das Lagerelement 126 ist zudem aus Fig. 4 ersichtlich, dass sich das Hubantriebselement 182 vorzugsweise auch unter der Antriebsvorrichtung 110 hindurch erstreckt.

Die Aufnahmeelemente 170 sind somit besonders einfach mechanisch gekoppelt, wodurch eine zuverlässige Betätigung derselben zur Aufnahme eines oder mehrerer Gegenstände 102 möglich ist.

Das Fahrzeug 100 umfasst vorzugsweise einen oder mehrere Aufnahmesensoren 188, mittels welchen detektierbar ist, ob ein Gegenstand 102 und/oder eine noch zu beschreibende Adaptervorrichtung an dem Fahrzeug 100 angeordnet ist.

Die Aufnahmesensoren 188 sind insbesondere längs der Längsmittelachse 140 des Fahrzeugs 100 vor und hinter einem der Aufnahmeelemente 170 angeordnet (siehe insbesondere Fig. 1 und 2).

Auf das Detektionsverfahren wird weiter unten im Zusammenhang mit der Beschreibung der Adaptervorrichtung näher eingegangen.

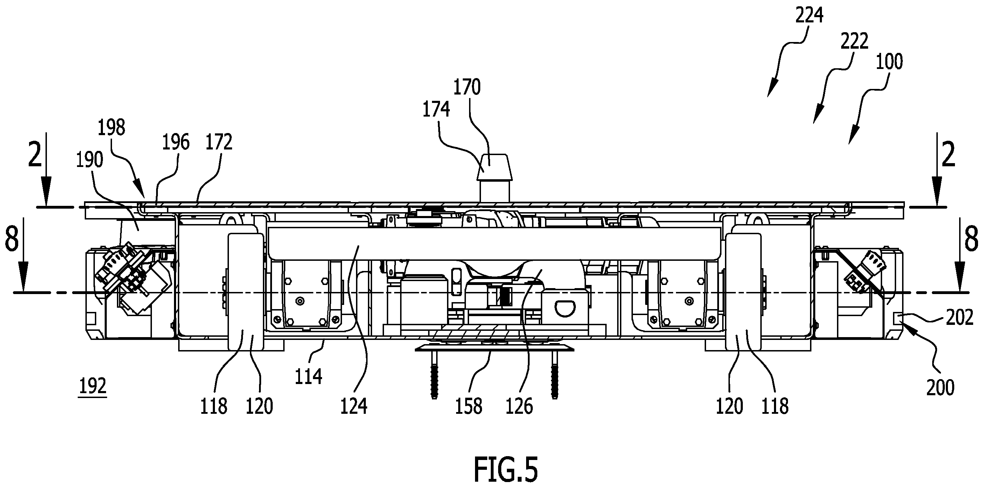

Wie insbesondere Fig. 5 zu entnehmen ist, umfasst das Fahrzeug 100 eine oder mehrere Sensorvorrichtungen 190, welche insbesondere in Eckbereichen 112 des Fahrzeugs 100, insbesondere des Grundkörpers 104, angeordnet sind.

Insbesondere sind an zwei diagonal einander gegenüberliegenden Eckbereichen 112 jeweils genau eine Sensorvorrichtung 190 vorgesehen.

Mittels der Sensorvorrichtungen 190 kann ein Umgebungsbereich 192 des Fahrzeugs 100 überwacht werden, insbesondere um einen autonomen Fahrbetrieb des Fahrzeugs 100 zu ermöglichen.

Zudem kann beispielsweise an einer Oberseite 172 des Grundkörpers 104 ein Barcode-Leser 194 vorgesehen sein, mittels welchem beispielsweise Informationen über einen an dem Fahrzeug 100 angeordneten oder anzuordnenden Gegenstand 102 erfassbar sind, insbesondere durch Scannen eines beispielsweise an dem Gegenstand 102 und/oder an der Adaptervorrichtung angeordneten Barcodes.

Der Grundkörper 104 ist an seiner Oberseite 172 vorzugsweise mit einer Abdeckung 196 versehen.

Die Abdeckung 196 ist insbesondere eine aufgelegte Platte, welche an einem ringförmig geschlossen umlaufenden Auflagebereich 198 aufliegt und im Wesentlichen bündig mit dem Auflagebereich 198 abschließt.

Die Abdeckung 196 ist hierdurch vorzugsweise auch ohne zusätzliche Befestigungselemente an dem Grundkörper 104 festgelegt, insbesondere ohne ein werkzeugloses Abheben der Abdeckung 196 für Unbefugte zu ermöglichen.

Die Abdeckung 196 ist vorzugsweise transparent, beispielsweise getönt transparent.

Innerhalb des Grundkörpers 104 angeordnete Komponenten des Fahrzeugs 100 sind somit vorzugsweise durch die Abdeckung 196 hindurch erkennbar.

Durch die transparente Ausgestaltung der Abdeckung 196 kann insbesondere eine abschreckende, hemmende Wirkung erzielt werden, um Personen von einem Betreten der Oberseite 172 des Grundkörpers 104 abzuhalten. Hierdurch kann beispielsweise die Sicherheit im Betrieb des Fahrzeugs 100 optimiert werden.

Das Fahrzeug 100 umfasst ferner vorzugsweise noch eine Warnvorrichtung 200, mittels welcher im Falle eines mittels der Sensorvorrichtung 190 erfassten störenden Gegenstands, beispielsweise einer in einem Fahrweg befindlichen Person, eine Warnung abgegeben werden kann.

Die Warnvorrichtung 200 ist beispielsweise eine akustische Warnvorrichtung und/oder eine optische Warnvorrichtung, mittels welcher entsprechend ein akustisches Warnsignal, beispielsweise ein Warnton oder eine Warnnachricht, und/oder ein optisches Warnsignal, beispielsweise ein blinkendes Licht, erzeugt und an die Umgebung abgegeben werden kann.

Beispielsweise kann zur akustischen Warnung mittels eines oder mehrerer Anzeigenelemente 202 des Fahrzeugs 100 ein blinkendes Warnsignal erzeugt werden.

Das Fahrzeug 100, insbesondere einzelne, mehrere oder sämtliche der vorstehend genannten Komponenten, sind vorzugsweise mittels einer Steuervorrichtung 204 des Fahrzeugs 100 steuerbar.

Die Steuervorrichtung 204 kann dabei insbesondere vollständig autonom agieren oder aber mit einer übergeordneten Steuerungsanlage kommunizieren.

Gegenstände 102 können beispielsweise unmittelbar auf dem Fahrzeug 100, beispielsweise an den Aufnahmeelementen 170, angeordnet werden.

Insbesondere zur Anordnung von großen und/oder schweren Gegenständen 102, beispielsweise Fahrzeugkarosserien 206, kann hingegen die Verwendung einer Adaptervorrichtung 208 vorteilhaft sein.

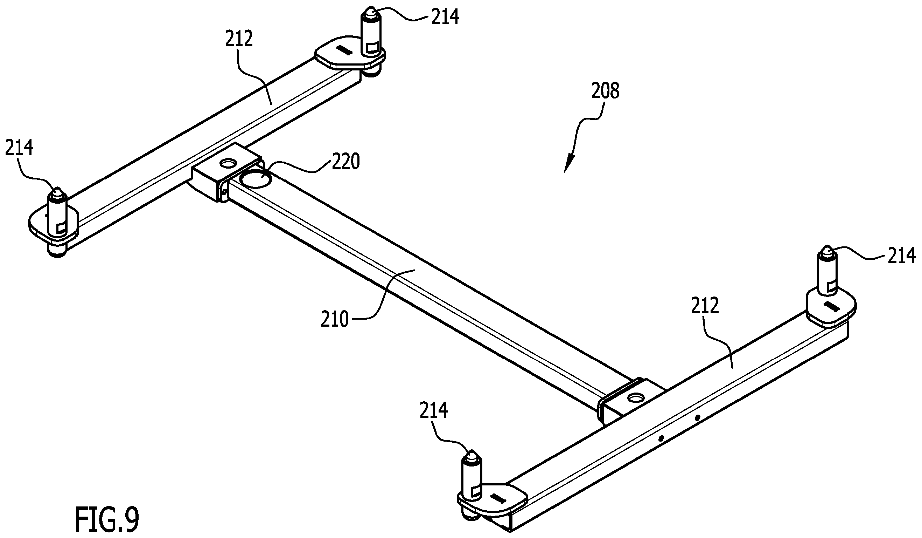

Eine Adaptervorrichtung 208 ist beispielhaft in den Fig. 9 bis 11 dargestellt.

Die Adaptervorrichtung 208 umfasst insbesondere ein Zentralelement 210, welches zwei oder mehr als zwei Adapterelemente 212 miteinander verbindet.

Die Adapterelemente 212 sind an den zu fördernden Gegenstand 102 angepasst. Beispielsweise weist jedes Adapterelement 212 jeweils einen, zwei oder mehr als zwei Aufnahmepins 214 auf, welche beispielsweise entgegen der Schwerkraftrichtung g nach oben ragen und zur Aufnahme eines beispielsweise als Fahrzeugkarosserie 206 ausgebildeten Gegenstands 102 an dessen Unterseite angreifen.

Die Adapterelemente 212 sind hinsichtlich Geometrie, Größe, Anzahl und/oder Ausgestaltung der Aufnahmepins 214 an die zu fördernden Gegenstände 102 angepasst.

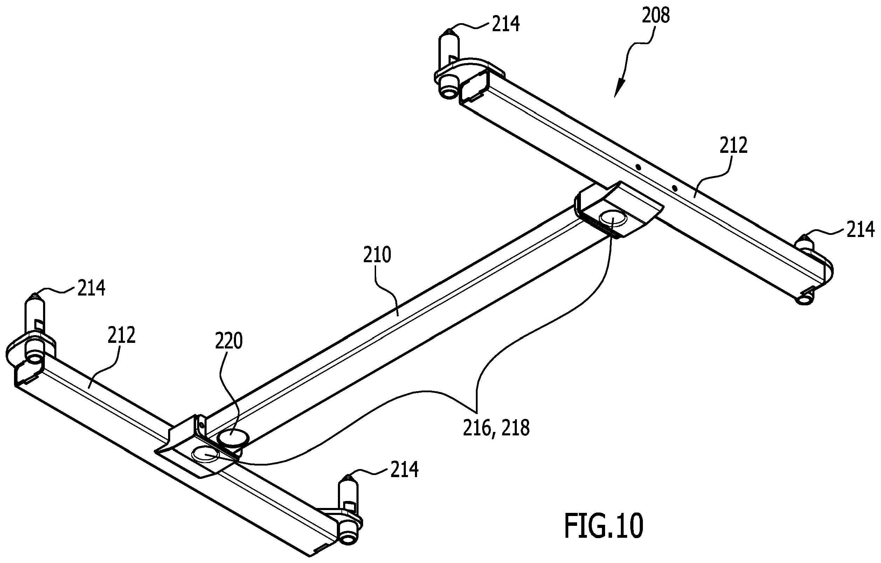

Wie insbesondere Fig. 10 zu entnehmen ist, ist die Adaptervorrichtung 208 mit zwei Angriffsbereichen 216, beispielsweise Einführöffnungen 218, versehen, an welchen die Aufnahmeelemente 170, insbesondere die Aufnahmeabschnitte 174 der Aufnahmeelemente 170, angreifen können.

Die Einführöffnungen 218 sind insbesondere konisch verjüngend ausgebildet, um eine stabile Verbindung zwischen der Adaptervorrichtung 208 und den Aufnahmeelementen 170 herzustellen.

Bei der in den Fig. 9 bis 11 dargestellten Ausführungsform der Adaptervorrichtung 208 sind die Angriffsbereiche 216, insbesondere die Einführöffnungen 218, an den Adapterelementen 212 angeordnet. Es kann jedoch auch vorgesehen sein, dass diese an dem Zentralelement 210 vorgesehen und/oder ausgebildet sind.

Wie den Fig. 9 und 10 ferner zu entnehmen ist, umfasst die Adaptervorrichtung 208 eine Detektionshilfe 220, welche beispielsweise als Durchtrittsöffnung ausgebildet ist. Die Detektionshilfe 220 ist insbesondere bezüglich einer Längsrichtung der Adaptervorrichtung 208 vor oder hinter einem Angriffsbereich 216, insbesondere einer Einführöffnung 218, angeordnet, insbesondere in demselben Abstand, wie ein oder beide Aufnahmesensoren 188 von einem Aufnahmeelement 170 des Fahrzeugs 100 entfernt sind.

Da die Detektionshilfe 220 lediglich einfach vorhanden ist, kann mittels der Aufnahmesensoren 188 überwacht werden, ob die Adaptervorrichtung 208 in einer korrekten Drehausrichtung an dem Fahrzeug 100 angeordnet ist, da entweder die Detektionshilfe 220, d.h. im Falle einer Durchtrittsöffnung kein direkt über dem Aufnahmesensor 188 angeordnetes Objekt, oder aber das Zentralelement 210 erfassbar ist, abhängig davon, ob die Adaptervorrichtung 208 in einer gewünschten Ausrichtung an dem Fahrzeug 100 angeordnet ist oder nicht.

Mittels des weiteren, nicht der Detektionshilfe 220 zugeordneten Aufnahmesensors 188 kann vorzugsweise ein Adapterelement 212 auf dessen Vorhandensein hin überwacht werden, wodurch ermittelbar ist, ob überhaupt eine Adaptervorrichtung 208 an dem Fahrzeug 100 angeordnet ist.

Selbstverständlich sind zahlreiche weitere Detektionsvarianten denkbar, beispielsweise die Verwendung von kontaktierenden Sensoren an dem Aufnahmeelement 170, insbesondere dem Aufnahmeabschnitt 174, um einen mechanischen oder elektrischen Kontakt zur Erfassung und/oder Überwachung der Adaptervorrichtung 208 herzustellen.

Das Fahrzeug 100 ist insbesondere Bestandteil einer Fördervorrichtung 222.

Die Fördervorrichtung 222 umfasst insbesondere mehrere im Wesentlichen identisch ausgebildete Fahrzeuge 100.

Die Fördervorrichtung 222 ist beispielsweise Bestandteil einer Bearbeitungsanlage 224, insbesondere einer Anlage zur Herstellung von Kraftfahrzeugen.

Insbesondere dann, wenn die Fördervorrichtung 222 zahlreiche Fahrzeuge 100 umfasst, welche allesamt im Wesentlichen bodengebunden sind, kann es vorteilhaft sein, die Fahrzeuge 100 zumindest temporär zu stapeln.

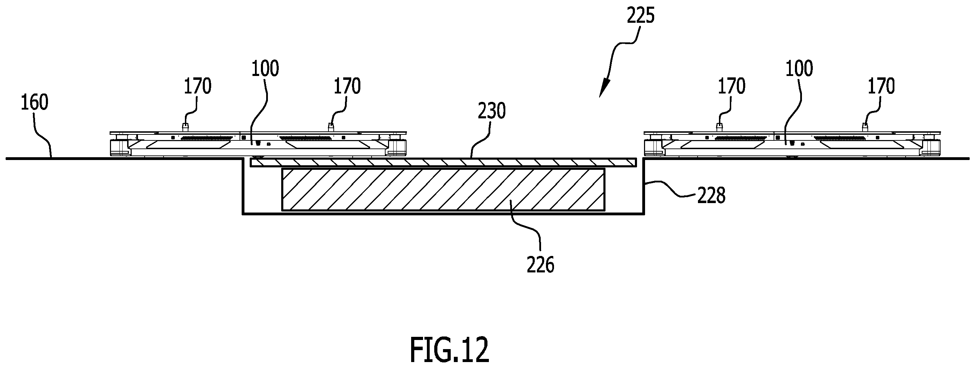

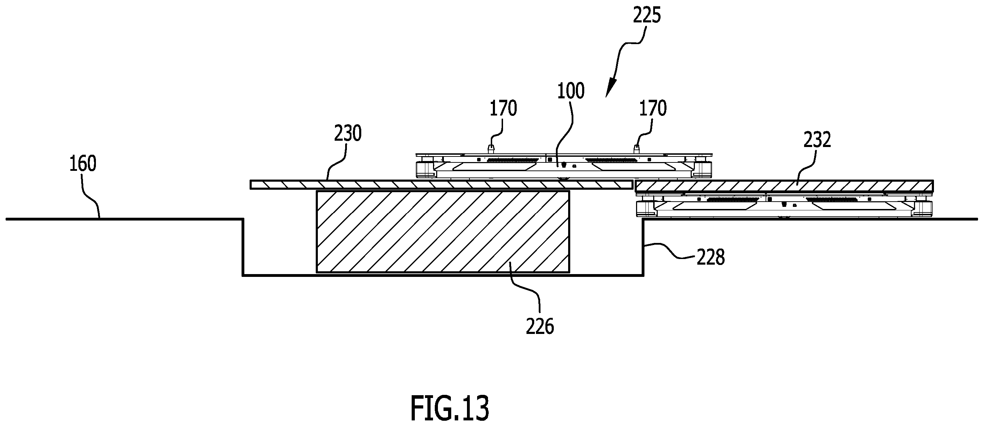

Die Fördervorrichtung 222 umfasst daher vorzugsweise eine Stapelvorrichtung 225, welche beispielhaft in den Fig. 12 und 13 dargestellt ist.

Die Stapelvorrichtung 225 umfasst insbesondere eine Hubeinheit 226, welche ein Anheben eines oder mehrerer Fahrzeuge 100 auf unterschiedliche Höhenniveaus ermöglicht.

Die Hubeinheit 226 ist hierzu beispielsweise in einer Vertiefung 228 angeordnet und umfasst beispielsweise einen Hubboden 230, welcher vorzugsweise im Wesentlichen bündig mit einem befahrbaren Untergrund 160 positionierbar ist.

Ein Fahrzeug 100 kann somit insbesondere von dem befahrbaren Untergrund 160 direkt auf den Hubboden 230 der Stapelvorrichtung 225 fahren.

Mittels der Hubeinheit 226 kann das Fahrzeug 100 dann insbesondere angehoben werden.

Ein weiteres Fahrzeug 100, welches insbesondere unmittelbar neben der Vertiefung 228 und/oder unmittelbar neben der Hubeinheit 226 angeordnet ist, bildet dann die Basis für einen Stapel aus mehreren Fahrzeugen 100.

Wie insbesondere Fig. 13 zu entnehmen ist, kann das auf den Hubboden 230 gefahrene Fahrzeug 100 nach dem Anheben desselben mittels der Hubeinheit 226 auf das daneben angeordnete Fahrzeug 100 gefahren werden und somit auf dem anderen Fahrzeug gestapelt werden.

Abhängig davon, wie weit ein oder mehrere Aufnahmeelemente 170 aus der Oberseite 172 des Grundkörpers 104 des jeweiligen Fahrzeugs 100 herausragen, können diese Aufnahmeelemente 170 einer Stapelung im Wege sein.

Es kann daher bei einer Ausgestaltung vorteilhaft sein, wenn ein oder mehrere Zwischenelemente 232 auf das die Basis des Stapels aus Fahrzeugen 100 bildende Fahrzeug 100 aufgebracht werden, um ein anschließendes Befahren mittels des weiteren Fahrzeugs 100 zu ermöglichen.

Mittels einer oder mehrerer (nicht dargestellter) Sicherungsvorrichtungen sind die aufeinandergestapelten Fahrzeuge 100 vorzugsweise miteinander verbindbar. Beispielsweise könnten die Aufnahmeelemente 170 des unteren Fahrzeugs 100 ausgefahren werden, um in hierzu korrespondierende Eingriffsbereiche an einer Unterseite 114 des oberen Fahrzeugs 100 einzugreifen und somit die Fahrzeuge 100 relativ zueinander zu fixieren.

Selbstverständlich sind mittels der Stapelvorrichtung 225 mehr als nur zwei Fahrzeuge 100 aufeinander stapelbar.

In umgekehrter Reihenfolge sind zudem mehrere aufeinandergestapelte Fahrzeuge 100 entstapelbar. Dies kann insbesondere für einen Transport der Fahrzeuge 100 von einem Herstellungsort derselben zu einem Einsatzort derselben vorteilhaft sein, um die für den Transport benötigte Transportfläche zu minimieren.

Die Fördervorrichtung 222 umfasst vorzugsweise eine oder mehrere Stationen 234, zu welchen die Gegenstände 102 mittels mehrerer Fahrzeuge 100 hin förderbar sind.

Die Stationen 234 sind insbesondere Bearbeitungsstationen 236, wenn die Fördervorrichtung 222 Bestandteil einer Bearbeitungsanlage 224 ist.

Beispielsweise sind in den Bearbeitungsstationen 236 ein oder mehrere Roboter 238 zum Behandeln einer Oberfläche der Gegenstände 102, insbesondere der Fahrzeugkarosserien 206, angeordnet.

Alternativ oder ergänzend zu Robotern 238 können die Bearbeitungsstationen 236 auch für manuelle Tätigkeiten vorgesehen sein.

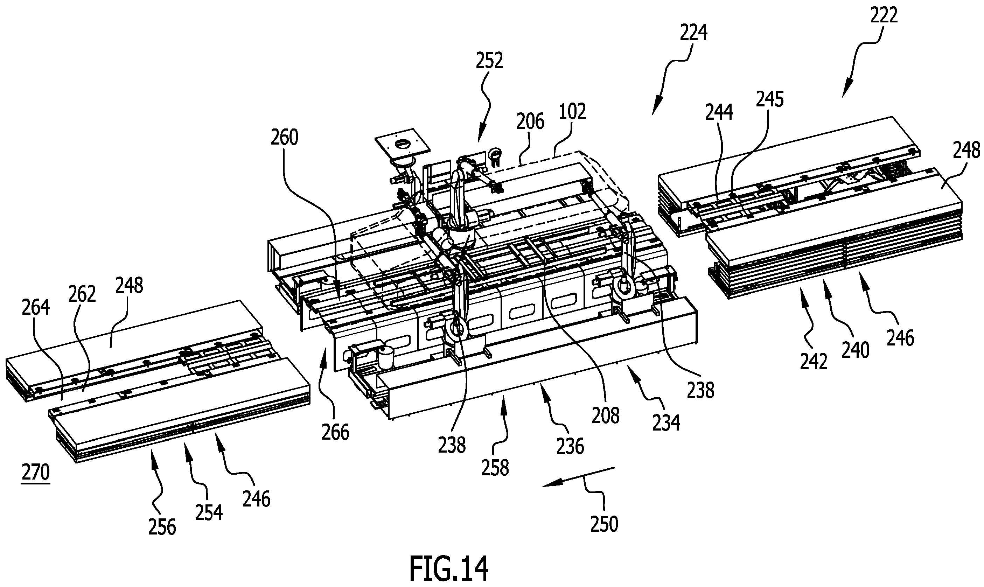

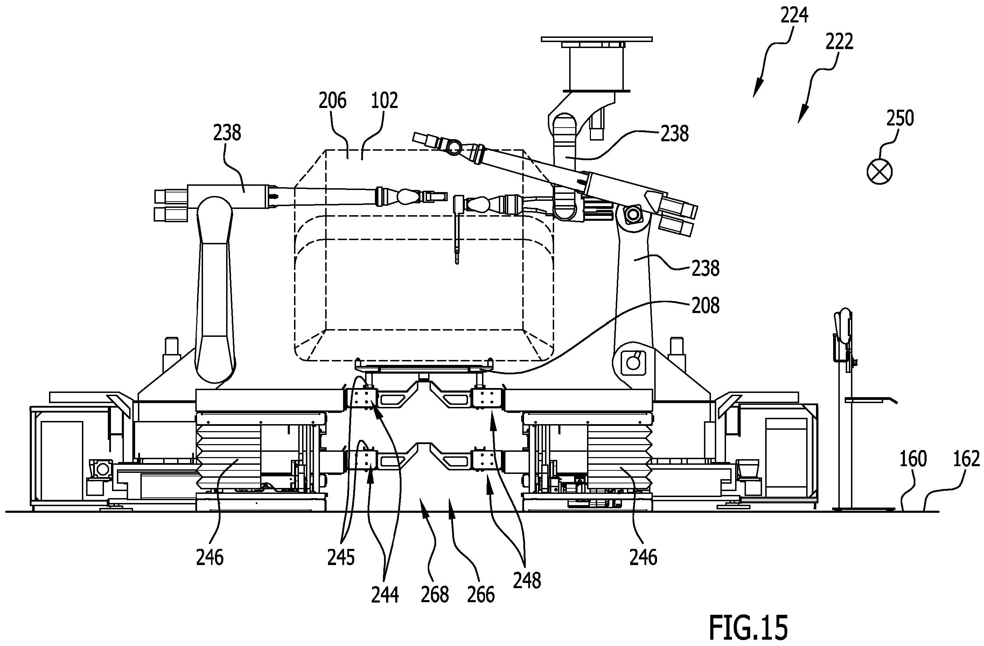

Wie insbesondere den Fig. 14 und 15 zu entnehmen ist, umfasst eine Station 234 vorzugsweise eine erste Position 240, welche insbesondere eine Abgabeposition 242 ist und der Übergabe eines Gegenstands 102 von einem Fahrzeug 100 an eine Stationsfördervorrichtung 244 dient.

Die Stationsfördervorrichtung 244 ist insbesondere eine Rollenbahn 245. Ergänzend oder alternativ hierzu können ein Kettenförderer und/oder ein Schienenförderer vorgesehen sein.

Die Station 234 umfasst an der ersten Position 240 insbesondere eine Hubvorrichtung 246, mittels welcher die Stationsfördervorrichtung 244 anhebbar und absenkbar ist, um den Gegenstand 102 von dem Fahrzeug 100 abzuheben.

Alternativ oder ergänzend hierzu kann vorgesehen sein, dass die Aufnahmeelemente 170 des Fahrzeugs 100 abgesenkt werden, wenn das Fahrzeug 100 an der ersten Position 240 angeordnet ist, um den Gegenstand 102 auf der Stationsfördervorrichtung 244 abzulegen und damit an die Stationsfördervorrichtung 244 zu übergeben.

Wie insbesondere Fig. 15 zu entnehmen ist, umfasst die Station 234 insbesondere einen oder mehrere Trennböden 248, welche oberhalb eines befahrbaren Untergrunds 160, insbesondere oberhalb eines Hallenbodens 162, angeordnet sind und unter welchen das Fahrzeug 100 hindurchfahren kann.

Der Gegenstand 102 hingegen ist oberhalb des Trennbodens 248 angeordnet.

Die Stationsfördervorrichtung 244 ist insbesondere in den Trennboden 248 integriert.

Mittels der Hubvorrichtung 246 kann somit in der ersten Position 240 insbesondere der Trennboden 248 angehoben oder abgesenkt werden, um den Gegenstand 102 von dem Fahrzeug 100 abzuheben.

Mittels der Stationsfördervorrichtung 244 ist der Gegenstand 102 insbesondere in der Förderrichtung 250 durch die Bearbeitungsstation 236 hindurchförderbar.

Insbesondere ist der Gegenstand 102 von der ersten Position 240 durch einen Bearbeitungsbereich 252 der Bearbeitungsstation 236 hindurch und bis zu einer zweiten Position 254 der Station 234 förderbar.

Die zweite Position 254 ist insbesondere eine Aufnahmeposition 256, an welcher der Gegenstand 102 von der Stationsfördervorrichtung 244 an ein Fahrzeug 100 übergebbar ist, d.h. an welcher der Gegenstand 102 von dem Fahrzeug 100 aufnehmbar ist.

Auch die zweite Position 254 ist insbesondere mit einer Hubvorrichtung 246 versehen, um den Trennboden 248, welcher auch an der zweiten Position 254 vorgesehen ist, anzuheben und abzusenken, um letztlich den Gegenstand 102 an das Fahrzeug 100 zu übergeben.

Die dreiteilige Darstellung der Station 234 in den Fig. 14 und 15 dient einer vereinfachten Darstellung der funktionell unterschiedlichen Positionen. In einer tatsächlichen Ausgestaltung der Fördervorrichtung 222 ist die Stationsfördervorrichtung 244 selbstverständlich ununterbrochen ausgebildet, um den Gegenstand 102 auch tatsächlich von der ersten Position 240 bis zur zweiten Position 254 zu fördern.

In der zwischen der ersten Position 240 und der zweiten Position 254 durch den Bearbeitungsbereich 252 gebildeten Zwischenposition 258 ist die Fahrzeugkarosserie 206 bearbeitbar, insbesondere behandelbar.

Insbesondere kann mittels einer oder mehrerer Roboter 238 und/oder mittels manueller Bearbeitung eine Oberflächenbehandlung, eine Nahtabdichtung und/oder eine Kontrolle an dem Gegenstand 102 durchgeführt werden.

Insbesondere dann, wenn in dem Bearbeitungsbereich 252 Verunreinigungen entstehen können, kann es vorteilhaft sein, wenn der Trennboden 248 zumindest im Bearbeitungsbereich 252 geschlossen ausgebildet ist. Der Trennboden 248 umfasst somit einen geschlossenen Abschnitt 260, welcher sich insbesondere über eine gesamte Länge des Bearbeitungsbereichs 252 längs der Förderrichtung 250 erstreckt.

An der ersten Position 240 und/oder an der zweiten Position 254 weist der Trennboden 248 vorzugsweise einen Durchtrittsbereich 262 auf, welcher insbesondere als Durchtrittsschlitz 264 ausgebildet ist und sich längs der Förderrichtung 250 erstreckt.

Durch diesen Durchtrittsbereich 262 können insbesondere ein oder mehrere Aufnahmeelemente 170 des Fahrzeugs 100 hindurchragen, um den Gegenstand 102 oberhalb des Trennbodens 248 zu positionieren, indem das Fahrzeug 100 unterhalb des Trennbodens 248 bewegt wird.

Insbesondere mit eingefahrenen Aufnahmeelementen 170 kann das Fahrzeug 100 auch unterhalb des geschlossenen Abschnitts 260 des Trennbodens 248 hindurchfahren, ohne eine Kollision mit dem Trennboden 248 zu riskieren.

Der Trennboden 248 weist hierfür insbesondere eine im Querschnitt beispielsweise dreiecksförmige Überhöhung auf, welche sich längs der Förderrichtung 250 erstreckt und somit einen Freiraum für die Aufnahmeelemente 170 unterhalb des Trennbodens 248 schafft.

Der Bereich unterhalb des Trennbodens 248 ist insbesondere ein Fahrraum 266, welcher nicht für Personen zugänglich ist.

Von den Fahrzeugen 100 geht somit in diesem Fahrraum 266 keine Gefahr aus, so dass die Fahrzeuge 100 beispielsweise mit erhöhter Geschwindigkeit verfahrbar sind.

Der Bereich unterhalb des Trennbodens 248 kann somit insbesondere ein Expressbereich 268 sein, in welchem die Fahrzeuge 100 in einem Expressmodus betreibbar sind.

Außerhalb der Station 234 und insbesondere dann, wenn sich Personen in der Umgebung eines Fahrzeugs 100 ohne räumliche Trennung von demselben aufhalten, ist dieses Fahrzeug 100 vorzugsweise in einem Sicherheitsmodus betreibbar. Der Bereich außerhalb des Expressbereichs 268 ist somit insbesondere ein Sicherheitsbereich 270.

Wie den Fig. 14 und 15 ferner zu entnehmen ist, kann die Adaptervorrichtung 208 auch als Skid ausgebildet sein, insbesondere um eine einfache Förderung des Gegenstands 102 auf einer als Rollenbahn 245 ausgebildeten Stationsfördervorrichtung 244 zu ermöglichen.

Eine oder mehrere Angriffsbereiche 216, insbesondere Einführöffnung 218, sind dann vorzugsweise an einer Querstrebe oder an einem an Querstreben angeordneten Zentralelement der als Skid ausgebildeten Adaptervorrichtung 208 angeordnet und/oder ausgebildet.

Im Sinne einer effizienten Nutzung der Fahrzeuge 100 in der Fördervorrichtung 222 kann es vorteilhaft sein, wenn das Fahrzeug 100 zur Förderung eines Gegenstands 102 nicht permanent demselben Gegenstand 102 zugeordnet ist.

Beispielsweise kann eine Optimierung der Fahrzeugnutzung dadurch erfolgen, dass ein zu fördernder Gegenstand 102 mittels eines Fahrzeugs 100 an der ersten Position 240 einer Station 234 an die Stationsfördervorrichtung 244 übergeben wird. Ein bereits zuvor an die Stationsfördervorrichtung 244 übergebener Gegenstand 102, welcher zwischenzeitlich in der Bearbeitungsstation 236 bearbeitet und mittels der Stationsfördervorrichtung 244 zur zweiten Position 254 gefördert wurde, kann dann mittels dieses Fahrzeugs 100 aufgenommen und weitertransportiert werden.

Das Fahrzeug 100 überspringt somit vorzugsweise mindestens einen Takt bei der Förderung der Gegenstände 102 durch die Station 234.

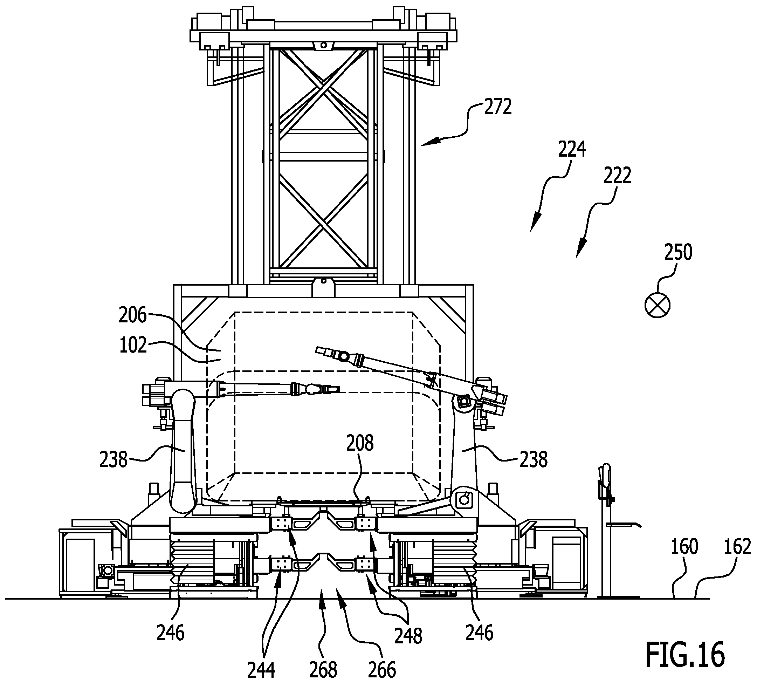

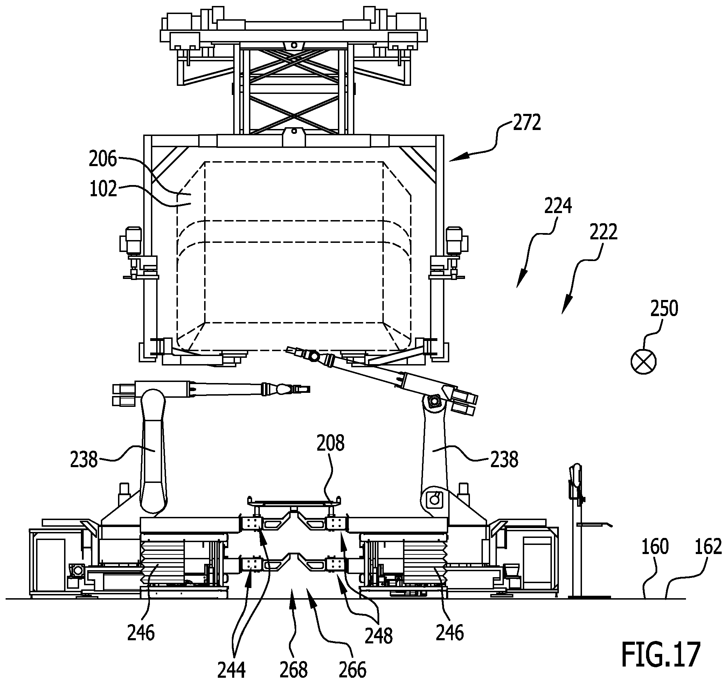

Eine in den Fig. 16 und 17 dargestellte alternative Ausführungsform einer Station 234 unterscheidet sich von der in den Fig. 14 und 15 dargestellten Ausführungsform im Wesentlichen dadurch, dass die Gegenstände 102 im Bearbeitungsbereich 252 nicht auf der als Rollenbahn 245 ausgebildeten Stationsfördervorrichtung 244 verbleiben. Vielmehr ist eine Hubanlage 272 zum Anheben der Gegenstände 102 von der Stationsfördervorrichtung 244 und/oder von der Adaptervorrichtung 208 vorgesehen.

Die Hubanlage 272 ist insbesondere ein Hängeförderer und/oder eine Elektrohängebahn oder ermöglicht zumindest ein in horizontaler Richtung stationäres Anheben des Gegenstands 102.

Mittels der Hubanlage 272 kann insbesondere eine Unterseite des Gegenstands 102 für Roboter 238 und/oder für eine manuelle Bearbeitung zugänglich gemacht werden, beispielsweise um einen Unterbodenschutz oder eine Nahtabdichtung an einer Unterseite des Gegenstands 102, insbesondere einer Fahrzeugkarosserie 206, zu applizieren.

Im Übrigen stimmt die in den Fig. 16 und 17 dargestellte Ausführungsform der Station 234 hinsichtlich Aufbau und Funktion mit der in den Fig. 14 und 15 dargestellten

Ausführungsform überein, so dass auf deren vorstehende Beschreibung insoweit Bezug genommen wird.

Bei der Fördervorrichtung 222 können eine oder mehrere Stationen 234 gemäß der in den Fig. 14 und 15 dargestellten Ausführungsform ebenso wie gemäß der in den Fig. 16 und 17 dargestellten Ausführungsform vorgesehen sein, insbesondere um unterschiedliche Bearbeitungsschritte an dem Gegenstand 102 durchzuführen.

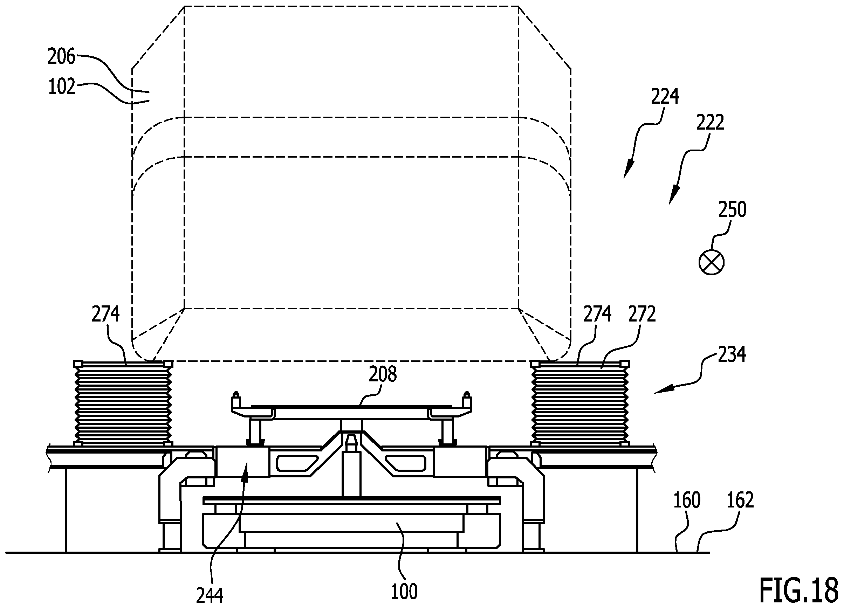

Eine in Fig. 18 dargestellte weitere alternative Ausführungsform einer Station 234 unterscheidet sich von der in den Fig. 16 und 17 dargestellten Ausführungsform im Wesentlichen dadurch, dass die Hubanlage 272 als zu beiden Seiten der Stationsfördervorrichtung 244 angeordnete Hubtische 274 ausgebildet ist.

Auch hierdurch können Gegenstände 102 auf unterschiedliche Höhenniveaus gebracht werden, um unterschiedliche Bearbeitungsschritte an dem Gegenstand 102 durchzuführen.

Im Übrigen stimmt die in Fig. 18 dargestellte alternative Ausführungsform der Station 234 hinsichtlich Aufbau und Funktion mit der in den Fig. 16 und 17 dargestellten Ausführungsform überein, so dass auf deren vorstehende Beschreibung insoweit Bezug genommen wird.

Auch die in Fig. 18 dargestellte Ausführungsform einer Station 234 kann einfach oder mehrfach bei einer Fördervorrichtung 222 vorgesehen sein, insbesondere alternativ oder ergänzend zu einer oder mehreren der Ausführungsformen gemäß den Fig. 14 und 15 und/oder alternativ oder ergänzend zu einer oder mehreren der Ausführungsformen gemäß den Fig. 16 und 17.

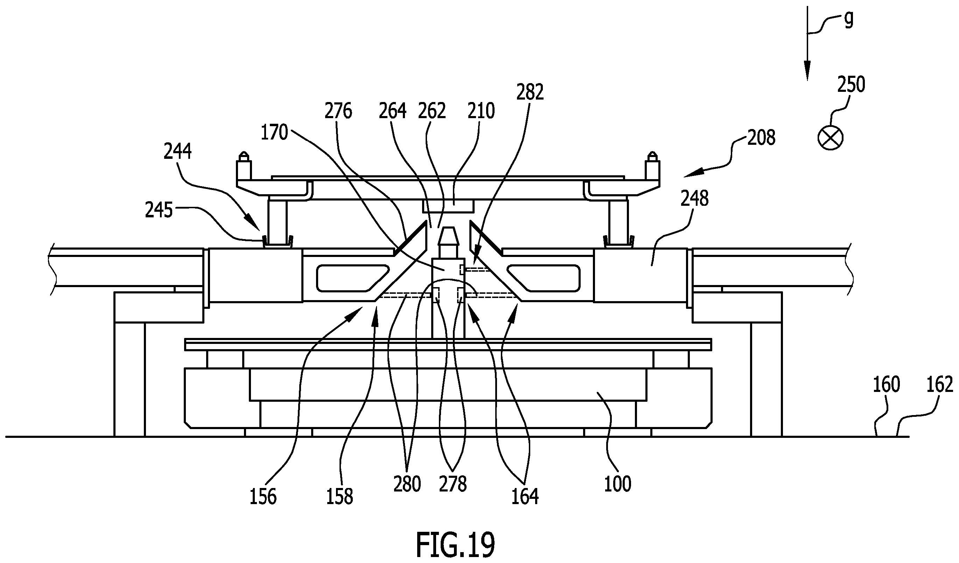

In den Fig. 19 bis 23 sind unterschiedliche Varianten des Trennbodens 248 und des Durchtrittsbereichs 262 vergrößert dargestellt, um dessen Funktion und Varianten hiervon zu verdeutlichen.

Jede der in den Fig. 19 bis 23 dargestellten Ausführungsformen des Trennbodens 248 und/oder des Durchtrittsbereichs 262 kann grundsätzlich bei jeder denkbaren Station 234, insbesondere jeder der vorstehend beschriebenen und/oder in den Fig. 14 bis 18 dargestellten Ausführungsformen, vorgesehen sein.

Eine in Fig. 19 dargestellte Ausgestaltung des Trennbodens 148 entspricht im Wesentlichen der in den Fig. 14 bis 18 dargestellten Ausführungsform, wobei der Durchtrittsbereich 262 vollständig geöffnet ist und insbesondere kein geschlossener Abschnitt 260 vorgesehen ist.

Zur Minimierung einer Verunreinigung des Fahrzeugs 100 unterhalb des Trennbodens 248 kann beispielsweise vorgesehen sein, dass das Zentralelement 210 der Adaptervorrichtung 208 eine quer zur Förderrichtung 250 genommene Breite aufweist, welche größer ist als eine Breite des Durchtrittsschlitzes 264.

Mittels des Zentralelements 210 kann der Durchtrittsschlitz 264 somit vorzugsweise zumindest teilweise abgedeckt werden.

Die beiden den Durchtrittsbereich 262 begrenzenden Bereiche des Trennbodens 248 sind nachfolgend als Durchtrittsrandbereiche 276 bezeichnet und bei der in Fig. 19 dargestellten Ausführungsform beispielsweise schräg zur Schwerkraftrichtung g ausgerichtet. Die Durchtrittsrandbereiche 276 erstrecken sich insbesondere ausgehend von dem Trennboden 248 schräg nach oben. Hierdurch kann insbesondere ein unerwünschtes Hineinfallen oder Hineinrollen von Gegenständen in den Durchtrittsschlitz 264 vermieden werden. Zudem kann durch die geeignete Ausgestaltung der Durchtrittsrandbereiche 276 eine von dem Durchtrittsschlitz 264 potentiell ausgehende Gefahr für Personen minimiert werden.

Insbesondere sind die Durchtrittsrandbereiche 276 Bestandteil der im Trennboden 248 ausgebildeten Überhöhung, um einen Bewegungsraum für die Aufnahmeelemente 170 bereitzustellen.

Wie Fig. 19 in gestrichelten Linien zu entnehmen ist, kann bei einer Ausgestaltung des Fahrzeugs 100 und/oder der Fördervorrichtung 222 eine Ladevorrichtung 156 zum Aufladen eines Energiespeichers 150 des Fahrzeugs 100 alternativ oder ergänzend zu den bereits beschriebenen und/oder dargestellten Ausführungsformen auch so ausgebildet sein, dass im Bereich eines oder mehrerer Aufnahmeelemente 170 eine Energieübertragung von einem Ladebereich 158 auf das Fahrzeug 100 erfolgt.

Ein Aufnahmeelement 170 ist hierzu beispielsweise mit einem oder mehreren Kontaktbereichen 278 versehen, welche eine Ladeanschlussstelle 164 des Fahrzeugs 100 bilden.

Eine hiermit in Eingriff zu bringende Ladeanschlussstelle 164 ist beispielsweise durch ein oder mehrere Kontaktelemente 280 gebildet, welche insbesondere an dem Trennboden 248 angeordnet sind und in Richtung des Aufnahmeelements 170, insbesondere zu den Kontaktbereichen 278 hin, ragen.

Die Kontaktelemente 280 bilden insbesondere Schleifkontakte, welche eine berührende Energieübertragung von dem Ladebereich 158 auf das Fahrzeug 100 ermöglichen.

Insbesondere zur optimierten Steuerung des Ladevorgangs kann ferner eine Steuerkontaktierung 282 vorgesehen sein. Alternativ oder ergänzend hierzu kann die zur Optimierung des Ladevorgangs erforderliche Informationsübertragung kabellos, beispielsweise über WLAN, erfolgen.

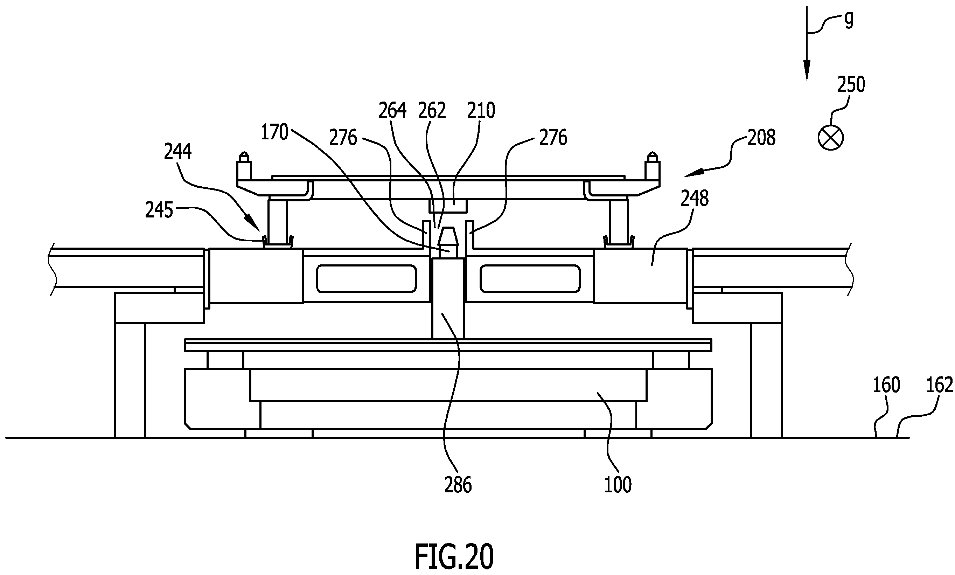

Eine in Fig. 20 dargestellte weitere Ausführungsform des Trennbodens 248 unterscheidet sich von der in Fig. 19 dargestellten Ausführungsform im Wesentlichen dadurch, dass die Durchtrittsrandbereiche 276 im Wesentlichen parallel zueinander und/oder im Wesentlichen senkrecht von dem Trennboden 248 nach oben ragen und somit beispielsweise im Wesentlichen L-förmig ausgebildet sind.

Im Übrigen stimmt die in Fig. 20 dargestellte Ausführungsform des Trennbodens 248 hinsichtlich Aufbau und Funktion mit der in Fig. 19 dargestellten Ausführungsform überein, so dass auf deren vorstehende Beschreibung insoweit Bezug genommen wird.

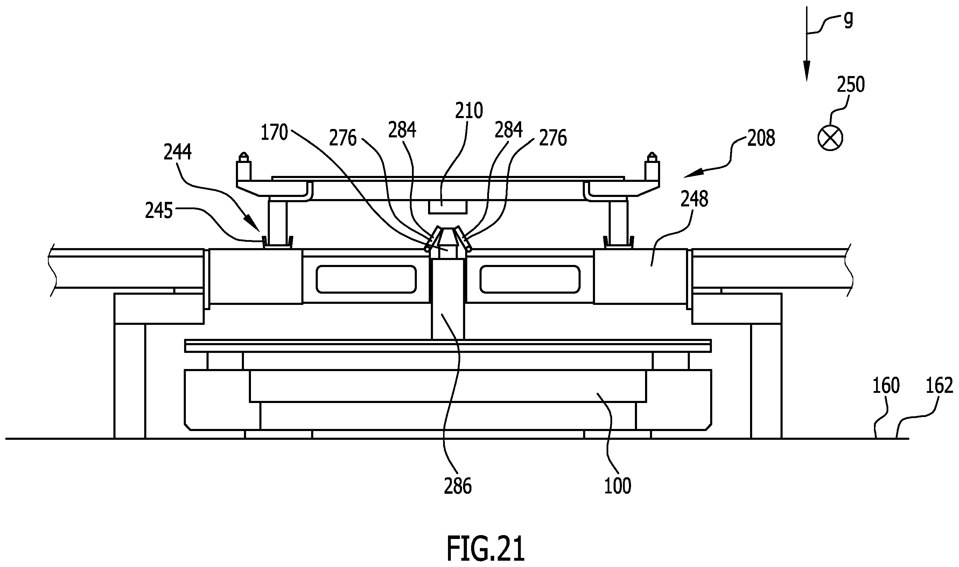

Eine in Fig. 21 dargestellte Ausführungsform eines Trennbodens 248 unterscheidet sich von der in Fig. 20 dargestellten Ausführungsform im Wesentlichen dadurch, dass die Durchtrittsrandbereiche 276 schwenkbar an dem Trennboden 248 angeordnet und/oder ausgebildet sind.

Der Durchtrittsrandbereich 276 umfasst somit insbesondere ein oder mehrere Schließelemente 284, welche vorzugsweise schwenkbar an dem Trennboden 248 angeordnet sind und ein Verschließen des Durchtrittsbereichs 262, insbesondere des Durchtrittsschlitzes 264, ermöglichen.

Die Schließelemente 284 sind vorzugsweise federbelastet und/oder so angeordnet und/oder ausgebildet, dass diese aufgrund der Schwerkraft ohne eine Betätigung derselben automatisch in eine beispielsweise im Wesentlichen horizontale Schließstellung gelangen.

Wenn nun ein Fahrzeug 100 unter dem Trennboden 248 hindurchgeführt wird, kann abhängig von einer Ausfahrposition der Aufnahmeelemente 170 eine Öffnung der Schließelemente 248 dadurch erfolgen, dass diese mittels der Aufnahmeelemente 170 aufgedrückt, insbesondere nach oben angehoben, werden. Sobald das Aufnahmeelement 170 oder die Aufnahmeelemente 170 an den einzelnen Schließelementen 248 vorbeibewegt wurden, gelangen diese vorzugsweise automatisch zurück in die Schließstellung.

Vorzugsweise sind längs der Förderrichtung 250 zahlreiche Schließelemente 248 hintereinander und unabhängig voneinander betätigbar angeordnet.

Es sind somit vorzugsweise stets lediglich diejenigen Schließelemente 248 in der Offenstellung, an welchen aktuell auch ein Aufnahmeelement 170 angreift und/oder angeordnet ist.

Im Übrigen stimmt die in Fig. 21 dargestellte Ausführungsform des Trennbodens 248 hinsichtlich Aufbau und Funktion mit der in Fig. 20 dargestellten Ausführungsform überein, so dass auf deren vorstehende Beschreibung insoweit Bezug genommen wird.

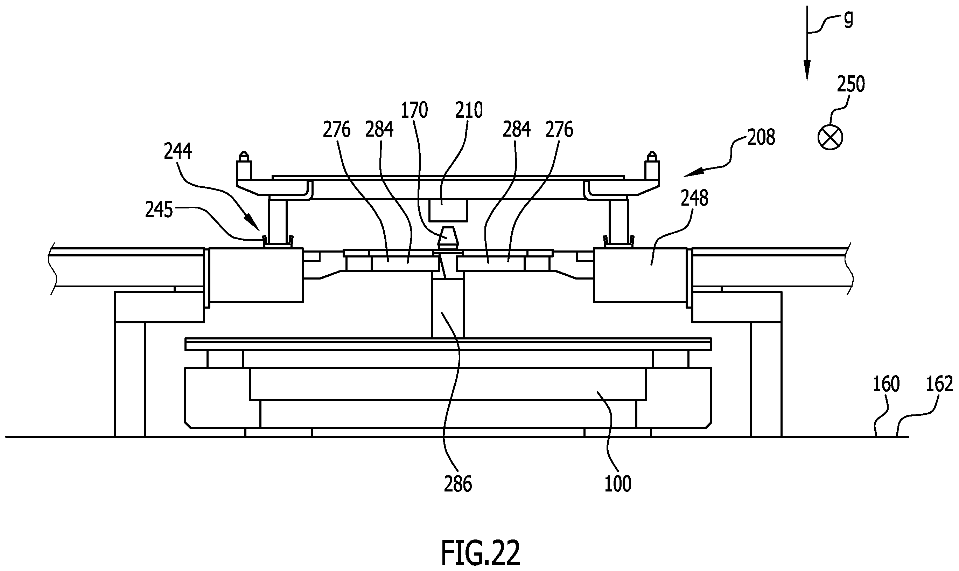

Eine in Fig. 22 dargestellte alternative Ausführungsform eines Trennbodens 248 unterscheidet sich von der in Fig. 21 dargestellten Ausführungsform im Wesentlichen dadurch, dass die Schließelemente 248 beispielsweise als Lamellen ausgebildet sind und insbesondere in einer horizontalen Richtung auslenkbar sind, um temporär den Durchtrittsbereich 262 zur Hindurchführung eines oder mehrerer Aufnahmeelemente 170 freizugeben.

Die Schließelemente 248 können dabei - ebenso wie grundsätzlich auch die Schließelemente 248 gemäß Fig. 21 - ein oder mehrere Kontaktelemente 280 bilden oder umfassen, so dass mittels der Schließelemente 248 Energie zum Laden des Energiespeichers 150 des Fahrzeugs 100 übertragbar ist.

Abhängig von der Positionierung des Aufnahmeelements 170 und/oder abhängig von einer Ausgestaltung des Aufnahmeelements 170 können sich unterschiedliche Bereiche zum Angreifen der Schließelemente 248 und/oder der Kontaktelemente 280 anbieten.

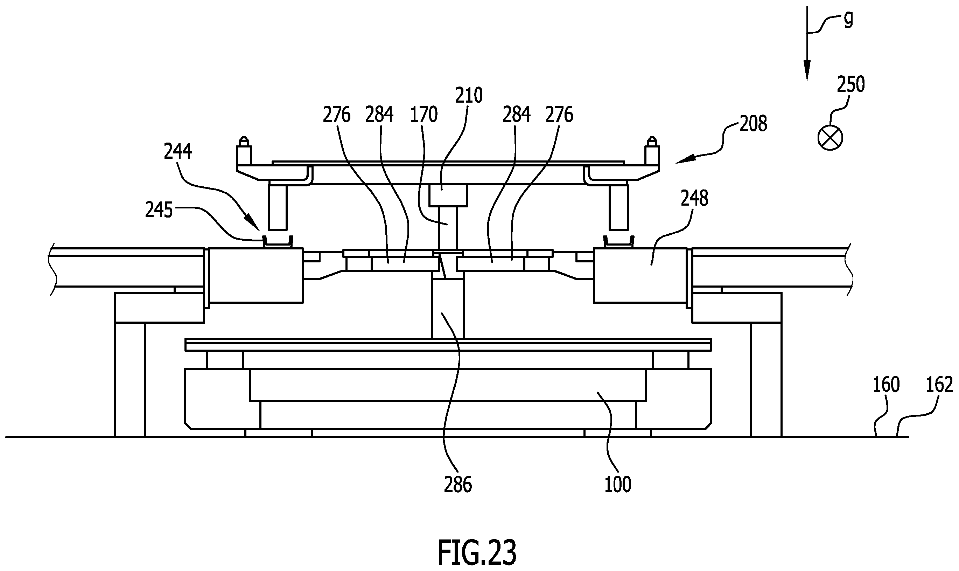

Wie insbesondere den Fig. 22 und 23 zu entnehmen ist, kann es vorgesehen sein, dass die Aufnahmeelemente 170 jeweils einen bereits über den Grundkörper 104 des Fahrzeugs 100 hervorragenden Aufnahmezylinder 286 umfassen und/oder darin angeordnet sind. Bewegliche Teile der Aufnahmeelemente 170 oder die gesamten Aufnahmeelemente 170 sind insbesondere relativ zu dem Grundkörper 104 und/oder dem jeweiligen Aufnahmezylinder 286 bewegbar, insbesondere aus demselben herausfahrbar und/oder in denselben hineinfahrbar.

Der Aufnahmezylinder 286 kann beispielsweise so ausgebildet sein, dass dieser stets durch den Durchtrittsbereich 262, insbesondere den Durchtrittsschlitz 264, hindurchragt. Durch unterschiedliche Positionierung der Aufnahmeelemente 170, insbesondere durch unterschiedlich weites Herausfahren von beweglichen Teilen aus dem Aufnahmezylinder 286 kann dann beispielsweise eine Adaptervorrichtung 208 samt eines gegebenenfalls daran angeordneten Gegenstands 102 abgesenkt (siehe Fig. 22) oder angehoben (siehe Fig. 23) werden.

Im Übrigen stimmt die in den Fig. 22 und 23 dargestellte Ausführungsform des Trennbodens 248 hinsichtlich Aufbau und Funktion mit der in Fig. 21 dargestellten Ausführungsform überein, so dass auf deren vorstehende Beschreibung insoweit Bezug genommen wird.

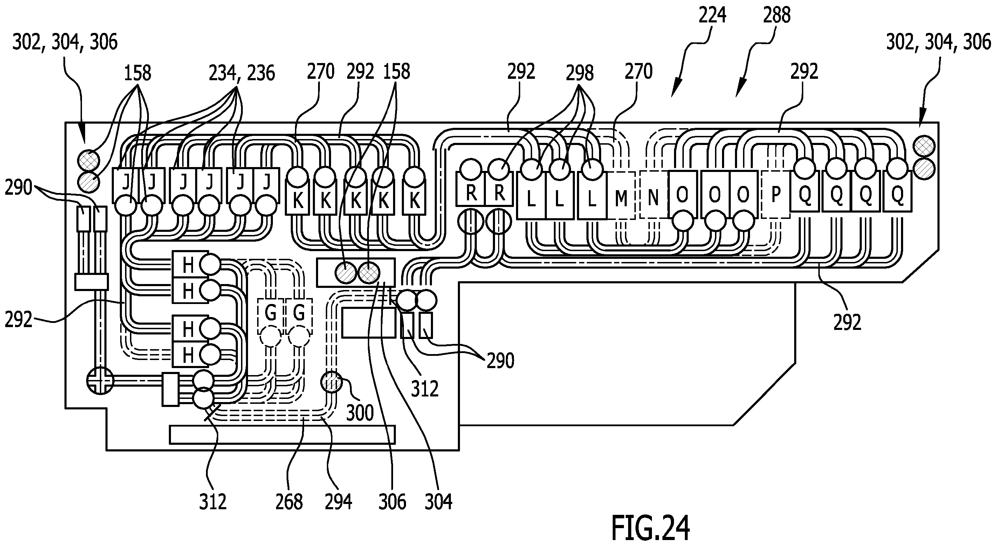

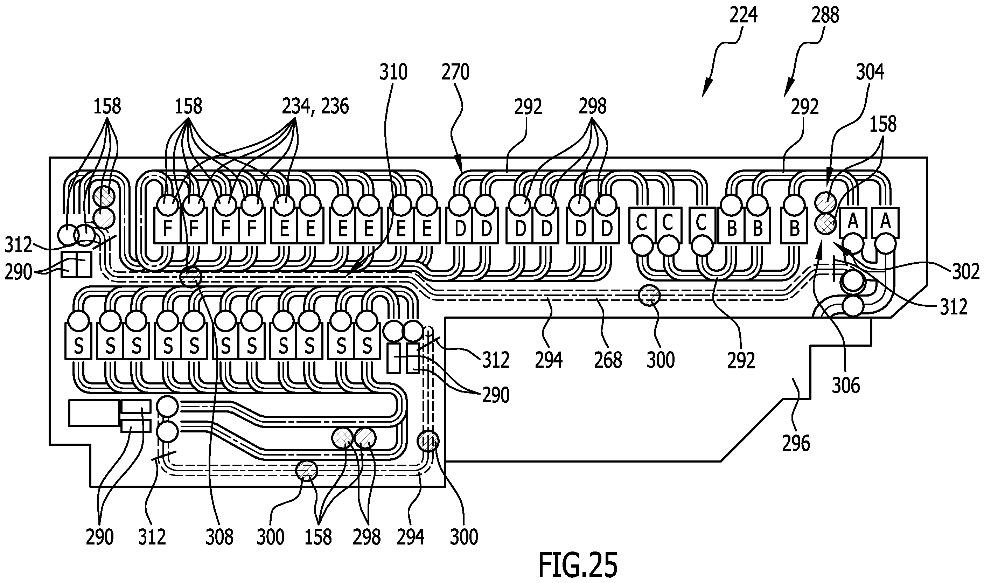

In den Fig. 24 und 25 ist ein Beispiel für ein Layout einer Bearbeitungsanlage 224 schematisch dargestellt.

Die Bearbeitungsanlage 224 umfasst dabei zahlreiche Stationen 234, welche insbesondere Bearbeitungsstationen 236 zum Bearbeiten und/oder Kontrollieren von Gegenständen 102, insbesondere Fahrzeugkarosserien 206, sind.

Die Fig. 24 und 25 zeigen dabei zwei unterschiedliche Ebenen 288 derselben Bearbeitungsanlage 224, so dass für die nachfolgende Beschreibung beide Fig. 24, 25 gemeinsam zu betrachten sind.

Die Bearbeitungsanlage 224 umfasst insbesondere eine oder mehrere Transfervorrichtungen 290, mittels welchen zu fördernde Gegenstände 102 auf die jeweilige Ebene 288 bringbar sind.

Die Transfervorrichtungen 290 sind insbesondere Aufzüge oder sonstige Hubvorrichtungen.

Die Bearbeitungsanlage 224 umfasst insbesondere eine Fördervorrichtung 222 gemäß einer der vorstehend beschriebenen Ausführungsformen und somit insbesondere mehrere Fahrzeuge 100 zum Fördern von Gegenständen 102.

Im Sinne einer besseren Übersichtlichkeit sind die Gegenstände 102 und die Fahrzeuge 100 in den Fig. 24 und 25 nicht dargestellt. Vielmehr sind in diesen Figuren Förderwege 292 sowie Rückförderwege 294 dargestellt, längs welcher die Fahrzeuge 100 verfahrbar sind.

Längs der Förderwege 292 sind Gegenstände 102 förderbar.

Längs der Rückförderwege 294 sind lediglich die Fahrzeuge 100 ohne daran angeordnete Gegenstände 102 verfahrbar, insbesondere um die Fahrzeuge 100 aus einer Endposition eines Bearbeitungsabschnitts der Bearbeitungsanlage 224 zurück in eine Anfangsposition zu bringen. Die Stationen 234 sind als Rechtecke dargestellt und mit Buchstaben versehen, welche eine beispielhafte Förderreihenfolge andeuten. Insbesondere sind die Gegenstände mittels der Fahrzeuge 100 nacheinander den folgenden Stationen 234 zuführbar:

Beispielsweise aus einem Sortierlager 296 werden die Gegenstände 102 mittels eines oder mehrerer Fahrzeuge 100 nacheinander obligatorisch den Stationen A, B, C und D zugeführt (siehe Fig. 25).

Die Stationen E und F sind optional und können wahlweise ausgelassen oder aber mehrfach, insbesondere in unterschiedlichen Reihenfolgen, durchfahren werden.

Im Anschluss werden die Gegenstände 102zu einer Transfervorrichtung 290 gefördert und mittels derer auf die in Fig. 24 dargestellte Ebene 288 transferiert.

Die Gegenstände 102 werden dann obligatorisch den Stationen H, J, K, L, O, Q und R zugeführt, bevor die Gegenstände 102 mittels einer weiteren Transfervorrichtung 290 zurück in die in Fig. 25 dargestellte Ebene 288 transferiert werden. Dort werden sie dann den Stationen S zugeführt und schließlich über eine weitere Transfervorrichtung 290 zur weiteren Bearbeitung in eine nicht dargestellte Ebene 288 transferiert.

Optional vor den Stationen H sind eine oder mehrere Stationen G durchfahrbar.

Unter Umgehung der Stationen L kann insbesondere eine Station M vorgesehen sein.

Ferner sind Stationen N und/oder P zur optionalen Umgehung der Stationen O vorgesehen.

Bei einer ersten Layout-Variante kann Folgendes vorgesehen sein:
Die Stationen 234 auf der in Fig. 24 dargestellten Ebene 288 sind insbesondere mehrheitlich oder ausschließlich manuelle Stationen oder Arbeitsplätze, in welchen die Gegenstände 102 von Personen bearbeitet werden. Personen müssen somit vorzugsweise permanent Zugang zu den Stationen 234 haben, weshalb die Fahrzeuge 100 auf der in Fig. 24 dargestellten Ebene 288 vorzugsweise größtenteils, insbesondere zu mindestens ungefähr 90%, beispielsweise mindestens ungefähr 95 %, ihrer Nutzungsdauer und/oder ihres Fahrwegs im Sicherheitsmodus sind.

Insbesondere sind oder umfassen somit die folgenden Stationen 234 manuelle Stationen oder Arbeitsplätze:
G, H, J, K, L, M, N, O, P, Q, R.

Einzelne oder mehrere dieser Stationen können jedoch auch als automatische Stationen oder Arbeitsplätze ausgebildet sein, in welchen die Gegenstände 102 mittels Robotern 238 oder sonstiger Maschinen bearbeitet werden.

Die Stationen 234 auf der in Fig. 25 dargestellten Ebene 288 sind insbesondere mehrheitlich oder ausschließlich automatische Stationen oder Arbeitsplätze, in welchen die Gegenstände 102 mittels Robotern 238 oder sonstiger Maschinen bearbeitet werden. Personen müssen somit vorzugsweise nur zu Wartungs- oder Kontrollzwecken temporär Zugang zu den Stationen 234 haben. Die Fahrzeuge 100 auf der in Fig. 25 dargestellten Ebene 288 können daher vorzugsweise größtenteils, insbesondere zu mindestens ungefähr 90%, beispielsweise mindestens ungefähr 95 %, ihrer Nutzungsdauer im unbeladenen Zustand und/oder im beladenen Zustand im Expressmodus sein.

Ferner können die Fahrzeuge 100 auf der in Fig. 25 dargestellten Ebene 288 vorzugsweise größtenteils, insbesondere zu mindestens ungefähr 90%, beispielsweise mindestens ungefähr 95 %, ihres Fahrwegs im unbeladenen Zustand und/oder im beladenen Zustand im Expressmodus sein.

Insbesondere sind oder umfassen somit die folgenden Stationen 234 automatische Stationen oder Arbeitsplätze:
A, B, C, D, E, F, S.

Einzelne oder mehrere dieser Stationen können jedoch auch als manuelle Stationen oder Arbeitsplätze ausgebildet sein, in welchen die Gegenstände 102 von Personen bearbeitet werden.

Bei einer zweiten Layout-Variante kann hingegen Folgendes vorgesehen sein:
Die Stationen 234 auf der in Fig. 25 dargestellten Ebene 288 sind insbesondere mehrheitlich oder ausschließlich manuelle Stationen oder Arbeitsplätze, in welchen die Gegenstände 102 von Personen bearbeitet werden. Personen müssen somit vorzugsweise permanent Zugang zu den Stationen 234 haben, weshalb die Fahrzeuge 100 auf der in Fig. 25 dargestellten Ebene 288 vorzugsweise größtenteils, insbesondere zu mindestens ungefähr 90%, beispielsweise mindestens ungefähr 95 %, ihrer Nutzungsdauer und/oder ihres Fahrwegs im Sicherheitsmodus sind.

Insbesondere sind oder umfassen somit die folgenden Stationen 234 automatische Stationen oder Arbeitsplätze:
A, B, C, D, E, F, S.

Einzelne oder mehrere dieser Stationen können jedoch auch als automatische Stationen oder Arbeitsplätze ausgebildet sein, in welchen die Gegenstände 102 mittels Robotern 238 oder sonstiger Maschinen bearbeitet werden.

Die Stationen 234 auf der in Fig. 24 dargestellten Ebene 288 sind insbesondere mehrheitlich oder ausschließlich automatische Stationen oder Arbeitsplätze, in welchen die Gegenstände 102 mittels Robotern 238 oder sonstiger Maschinen bearbeitet werden. Personen müssen somit vorzugsweise nur zu Wartungs- oder Kontrollzwecken temporär Zugang zu den Stationen 234 haben. Die Fahrzeuge 100 auf der in Fig. 24 dargestellten Ebene 288 können daher vorzugsweise größtenteils, insbesondere zu mindestens ungefähr 90%, beispielsweise mindestens ungefähr 95 %, ihrer Nutzungsdauer im unbeladenen Zustand und/oder im beladenen Zustand im Expressmodus sein.

Ferner können die Fahrzeuge 100 auf der in Fig. 24 dargestellten Ebene 288 vorzugsweise größtenteils, insbesondere zu mindestens ungefähr 90%, beispielsweise mindestens ungefähr 95 %, ihres Fahrwegs im unbeladenen Zustand und/oder im beladenen Zustand im Expressmodus sein.

Insbesondere sind oder umfassen somit die folgenden Stationen 234 manuelle Stationen oder Arbeitsplätze:
G, H, J, K, L, M, N, O, P, Q, R.

Einzelne oder mehrere dieser Stationen können jedoch auch als manuelle Stationen oder Arbeitsplätze ausgebildet sein, in welchen die Gegenstände 102 von Personen bearbeitet werden.

Die Gegenstände 102 sind zwischen den Ebenen 288 hin und her transferierbar, wobei die Fahrzeuge 100 vorzugsweise jeweils auf derselben Ebene 288 verbleiben. Es kann jedoch auch eine Förderung der Gegenstände 102 derart vorgesehen sein, dass die Fahrzeuge 100 zusammen mit den Fahrzeugen 102 zwischen den Ebenen 288 hin und her transferiert werden.

Für einen optimalen Betrieb der Fördervorrichtung 222 zur Förderung der Gegenstände 102 sind zahlreiche Ladebereiche 158 erforderlich.

Sämtliche Ladebereiche 158 sind in den Fig. 24 und 25 durch Kreise dargestellt. Insbesondere sind vorzugsweise sämtliche leere oder schraffierte Kreise in den Fig. 24 und 25 Ladebereiche 158.

Insbesondere dann, wenn die Energiespeichereinheiten 150 der Fahrzeuge 100 Superkondensatoren 154 anstelle von Lithium-Ionen-Akkumulatoren 155 umfassen, muss in vergleichsweise kurzen zeitlichen und/oder räumlichen Abständen eine Wiederaufladung des Energiespeichers 150 eines jeweiligen Fahrzeugs 100 möglich sein. Ladebereiche 158 sind daher insbesondere jeweils an einer Station 234, vorzugsweise an einer Abgabeposition 242 einer jeweiligen Station 234, angeordnet. Diese Ladebereiche 158 sind vorzugsweise stationäre Ladebereiche 298.

Die Fahrzeuge 100 sind dabei insbesondere während der Übergabe der Gegenstände 102 an die jeweilige Station 234 stationär, so dass der für die Übergabe ohnehin erforderliche Halt des Fahrzeugs 100 für einen Aufladevorgang genutzt werden kann.

Alternativ oder ergänzend hierzu kann auch bei einer Übernahme in einer Aufnahmeposition 256 einer jeweiligen Station 234 ein Ladebereich 158 vorgesehen sein.

Abhängig von einer Gesamtlänge des Förderwegs 292 und/oder des Rückförderwegs 294 können auch anstelle und/oder ergänzend zu den Stationen 234 zugeordneten Ladebereichen 158 in den Förderwegen 292 und/oder den Rückförderwegen 294 angeordnete Ladebereiche 158 vorgesehen sein.

Die Ladebereiche 158 können dabei insbesondere auf dem in den Fig. 24 und 25 als Förderweg 292 und Rückförderweg 294 abgebildeten optimalen und/oder kürzesten Weg angeordnet sein. Die Fahrzeuge 100 halten dann ohne Umweg an, um geladen zu werden.

Alternativ hierzu kann vorgesehen sein, dass die Fahrzeuge 100 während der Fahrt geladen werden. Die Ladebereiche 158 sind dann insbesondere Mobilladebereiche 300.

Ferner kann vorgesehen sein, dass die Fahrzeuge 100 zum Aufladen des jeweiligen Energiespeichers 150 temporär von einem optimalen und/oder kürzesten Förderweg 292 und/oder Rückförderweg 294 abweichen und beispielsweise in eine Ladebucht 302 gefahren werden. Nach erfolgtem Aufladen kehren die Fahrzeuge 100 dann vorzugsweise auf den optimalen und/oder kürzesten Förderweg 292 und/oder den optimalen und/oder kürzesten Rückförderweg 294 zurück.

Eine Ladebucht 302 kann insbesondere ein Wartebereich 304 sein, in welchem sich Fahrzeuge 100 nicht ausschließlich zum Aufladen des Energiespeichers 150, sondern auch dann aufhalten können, wenn keine 100%-ige Auslastung der Fahrzeuge 100 vorliegt und somit eine Wartezeit bis zu einem nächsten Förderauftrag überbrückt werden muss.

Die Ladebucht 302 und/oder der Wartebereich 304 kann ferner ein Wartungsbereich 306 sein, in welchem ein oder mehrere Fahrzeuge 100 manuell und/oder automatisch gewartet oder instandgehalten werden. Beispielsweise können in einem Wartungsbereich 306 Reparaturen oder sonstige Arbeiten an dem Fahrzeug 100 durchgeführt werden.

Die Ladebereiche 158 sind vorzugsweise so angeordnet, dass mit möglichst geringen Leitungslängen und möglichst wenig Ladebereichen 158 möglichst viele Förderwege 292 und/oder Rückförderwege 294 erfasst werden.

Ein oder mehrere Ladebereiche 158 sind hierfür beispielsweise an einem Ladeknotenpunkt 308 und/oder an einem mehrdirektionalen Förderbereich 310 angeordnet.

Ein Ladeknotenpunkt 308 ist insbesondere ein Bereich, in welchem mehrere Ladebereiche 158 zum gleichzeitigen Laden mehrerer Fahrzeuge 100 vorgesehen sind. Hierdurch können insbesondere die Leitungslängen zur Versorgung der Ladebereiche 158 mit elektrischer Energie reduziert werden.

Die Anordnung eines oder mehrerer Ladebereiche 158 in einem mehrdirektionalen Förderbereich 310 ermöglicht insbesondere eine optimale Ausnutzung des einen oder der mehreren Ladebereiche 158, da in mehrdirektionalen Förderbereichen 310 ein oder mehrere Fahrzeuge 100 nacheinander oder gleichzeitig in unterschiedlichen Fahrtrichtungen den einen oder die mehreren Ladebereiche 158 durchqueren und/oder überfahren können. Eine zeitaufwändige Ausrichtung der Fahrzeuge 100 kann hierdurch entbehrlich sein.

Der eine oder die mehreren in dem mehrdirektionalen Förderbereich 310 angeordneten Ladebereiche 158 sind somit höher frequentierbar und können zum Aufladen von mehr Fahrzeugen 100 in kürzerer Zeit genutzt werden.

Als mehrdirektionale Förderbereiche 310 können insbesondere einander überlappende und/oder sich kreuzende Förderwege 292 und/oder Rückförderwege 294 vorgesehen sein.

Im Sinne einer optimierten Fördergeschwindigkeit kann die Fördervorrichtung 222 vorzugsweise in unterschiedliche Bereiche eingeteilt werden.

Ein Sicherheitsbereich 270 ist dabei insbesondere derjenige Bereich, in welchem die Fahrzeuge 100 samt gegebenenfalls daran angeordneter Gegenstände 102 für Personen zugänglich sind, so dass die Personen besonders geschützt werden müssen.

Die Fahrzeuge 100 haben hierfür insbesondere eine vorgegebene Höchstgeschwindigkeit sowie zusätzliche Sicherheitsmaßnahmen, um den Personenschutz zu gewährleisten und zugleich die zu fördernden Gegenstände 102 vor Beschädigungen zu schützen.

Zusätzlich zu dem Sicherheitsbereich 270 kann ein Expressbereich 268 vorgesehen sein.

Der Expressbereich 268 ist insbesondere ein räumlich von dem Sicherheitsbereich 270 getrennter Bereich, welcher für Personen zumindest temporär nicht zugänglich ist.

Insbesondere ein oder mehrere Rückförderwege 294 sind vorzugsweise als Expressbereiche 268 ausgebildet, so dass die Fahrzeuge 100 mit einer im Vergleich zur Höchstgeschwindigkeit im Sicherheitsbereich 270 erhöhten Geschwindigkeit beispielsweise von einer Endposition eines Bearbeitungsabschnitts zurück zu einer Anfangsposition verfahrbar sind.

Hierdurch sind die Fahrzeuge 100 schneller für einen erneuten Fördervorgang verfügbar, wodurch die Effizienz der Fördervorrichtung 222 erhöht werden kann.

Die Fahrzeuge 100 sind insbesondere durch eine oder mehrere Durchfahrtsöffnungen 312 in einer oder mehreren Trennvorrichtungen, insbesondere Trennwänden, zur Trennung des Expressbereichs 268 von dem Sicherheitsbereich 270 hindurchfahrbar.

Die Durchfahrtsöffnungen 312 sind dabei insbesondere hinsichtlich ihrer Form an eine Außenkontur des Fahrzeugs 100 angepasst, wodurch vorzugsweise ohne einen Verschlussmechanismus zum Verschließen der Durchfahrtsöffnung 312 gewährleistet werden kann, dass keine Personen unerlaubt Zutritt zu dem Expressbereich 268 erhalten und sich hierdurch in Gefahr begeben.

Sollte trotz dieser Vorsichtsmaßnahmen dennoch eine Person Zugang zu dem Expressbereich 268 erhalten, kann vorzugsweise mittels (nicht dargestellter) Sensorvorrichtungen ein solches Eindringen in den Expressbereich 268 erkannt werden. Die Fahrzeuge 100, welche in dem Expressbereich 268 angeordnet sind oder in diesen einfahren, werden dann vorzugsweise nicht in einen Expressmodus versetzt, sondern verbleiben in dem Sicherheitsmodus, in welchem sie sind, wenn sie sich im Sicherheitsbereich 270 befinden.

Die in den Fig. 24 und 25 dargestellten Varianten des Layouts der Stationen 234 sowie der Anordnung und/oder Ausgestaltung der Ladebereiche 158 sind lediglich beispielhaft und können in beliebigen Kombinationen mit den übrigen beschriebenen und/oder dargestellten Ausführungsformen anderer Stationen 234 und/oder anderer Ladebereiche 158 Verwendung finden.

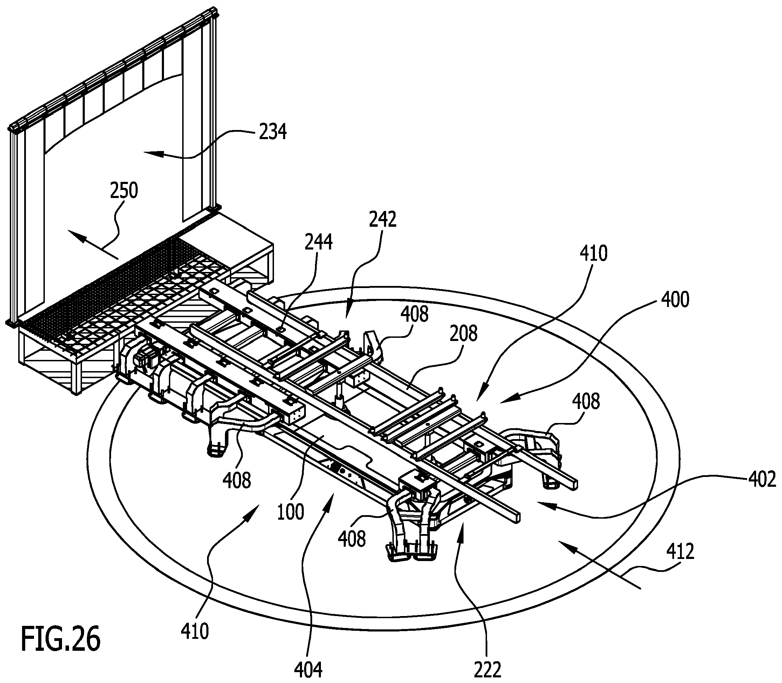

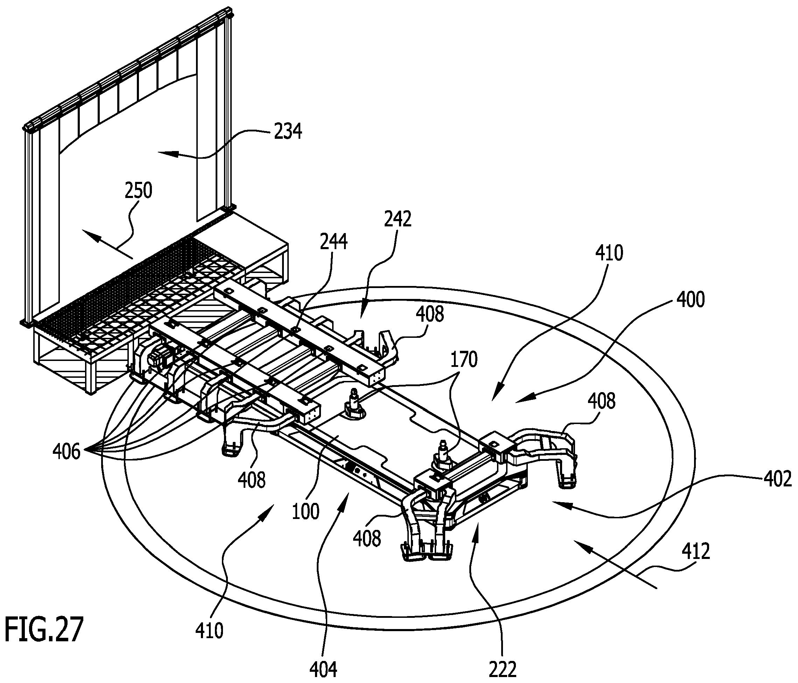

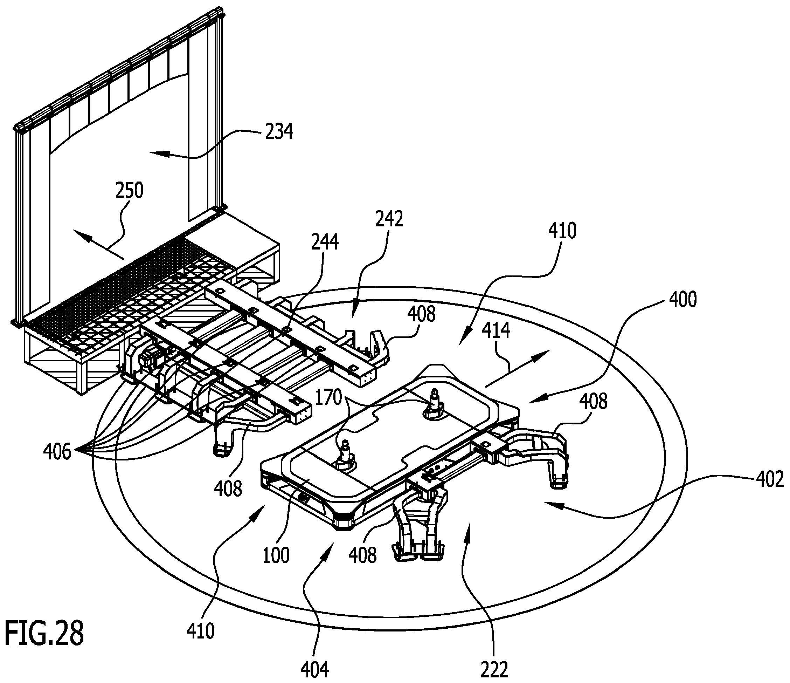

In den Fig. 26 bis 28 ist eine Ausführungsform eines Übergabebereichs 400 dargestellt, welcher beispielsweise der Übergabe von (in diesen Figuren nicht dargestellten, jedoch auf der Adaptervorrichtung 208 anordenbaren) Gegenständen 102 von einem Fahrzeug 100 an eine Stationsfördervorrichtung 244 dient. Ferner kann ein solcher Übergabebereich 400 der Übergabe von Gegenständen 102 von einer Stationsfördervorrichtung 244 an ein Fahrzeug 100 dienen. Die nachfolgend beschriebenen Bewegungsrichtungen und/oder Verfahrensabläufe sind dann entsprechend angepasst und/oder umgekehrt.

Der Übergabebereich 400 kann insbesondere eine Aufnahmeposition 256 und/oder eine Abgabeposition 242 bilden oder Bestandteil hiervon sein. Daher wird hinsichtlich der grundsätzlichen Funktionsweise und Nutzungsmöglichkeiten auf die diesbezüglichen vorstehenden Ausführungen Bezug genommen, insbesondere mit Hinblick auf die Beschreibung zu den Fig. 14 und 15.

Wie Fig. 26 zu entnehmen ist, wird eine Adaptervorrichtung 208, an welcher optional ein Gegenstand 102 angeordnet ist, mittels eines Fahrzeugs 100 zu dem Übergabebereich 400 transportiert. Das Fahrzeug 100 fährt dabei insbesondere durch einen Einfahrbereich 402 bis in eine Übergabeposition 404.

In der Übergabeposition 404 wird das Fahrzeug 100 zum Stillstand gebracht und ist dann so positioniert, dass die Adaptervorrichtung 208 und/oder der Gegenstand 102 beispielsweise durch Einfahren der Aufnahmeelemente 170 absenkbar und auf einer Stationsfördervorrichtung 244 absetzbar sind.

Die Adaptervorrichtung 208 und/oder der Gegenstand 102 werden hierdurch von dem Fahrzeug 100 getrennt.

Mittels der Stationsfördervorrichtung 244 können die Adaptervorrichtung 208 und/oder der Gegenstand 102 aus dem Übergabebereich 400 wegbewegt und insbesondere der Station 234 zugeführt werden.

Hierzu ist die Stationsfördervorrichtung 244 beispielsweise als Rollenbahn ausgebildet, so dass insbesondere eine als Skid ausgebildete oder eine einen Skid umfassende Adaptervorrichtung 208 einfach zu der Station 234 zuführbar ist.

Eine oder mehrere Förderelemente 406, insbesondere mehrere Rollen, sind vorzugsweise an Tragelementen 408 der Stationsfördervorrichtung 244 angeordnet. Die Tragelemente 408 sind insbesondere an einem Boden, auf welchem vorzugsweise die Fahrzeuge 100 bewegt werden, angeordnet, beispielsweise festgeschraubt.

Die Tragelemente 408 sind insbesondere Stützen oder Pfeiler, welche ausgehend von dem Boden nach oben ragen, so dass die Adaptervorrichtung 208 samt eines daran angeordneten Gegenstands 102 beispielsweise in einer Ebene oberhalb eines Bewegungswegs der Fahrzeuge 100 aufnehmbar und förderbar ist.

Vorzugsweise sind mehrere Tragelemente 408 an mehreren Seiten der Übergabeposition 404 angeordnet.

Günstig kann es sein, wenn mehrere Tragelemente 408 beabstandet voneinander angeordnet sind, so dass insbesondere der Einfahrbereich 402 zwischen zwei Tragelementen 408 gebildet ist.

Ferner ist vorzugsweise mindestens ein Ausfahrbereich 410 zwischen zwei , insbesondere zwei weiteren, voneinander beabstandeten Tragelementen 408 gebildet.

Günstig kann es sein, wenn zwei Ausfahrbereiche 410 auf einander gegenüberliegenden Seiten der Übergabeposition 404 angeordnet und/oder gebildet sind.

An einer dem Einfahrbereich 402 gegenüberliegenden Seite der Übergabeposition 404 ist vorzugsweise eine Station 234 oder zumindest ein zur Station 234 führender Abschnitt der Stationsfördervorrichtung 244 angeordnet.

Wie den Fig. 26 bis 28 zu entnehmen ist, ist das Fahrzeug 100 vorzugsweise längs einer Einfahrrichtung 412 durch den Einfahrbereich 402 hindurch in die Übergabeposition 404 fahrbar.

Die Einfahrrichtung 412 ist vorzugsweise zumindest näherungsweise parallel zu einer Förderrichtung 250 der Stationsfördervorrichtung 244 ausgerichtet.

Wenn nun mehrere Fahrzeuge 100 in kurzer zeitlicher Abfolge nacheinander mehrere Gegenstände 102 zur Station 234 zuführen sollen, so kann es vorteilhaft sein, wenn die Fahrzeuge 100 nicht entgegen der Einfahrrichtung 412 durch den Einfahrbereich 402 hindurch von der Übergabeposition 404 weggefahren werden, da ja dann die weiteren Fahrzeuge 100 in einem größeren Abstand von dem Übergabebereich 400 gehalten werden müssten.

Vielmehr wird das Fahrzeug 100 dann beispielsweise in der Übergabeposition 400 gedreht, insbesondere um seine eigene vertikale Mittelachse, beispielsweise durch gegenläufiges Drehen der Antriebsräder 120 (siehe Fig. 4).

Die Drehung erfolgt beispielsweise um ungefähr 90°, so dass das Fahrzeug 100 dann die Übergabeposition 404 in einer zumindest näherungsweise senkrecht zur Einfahrrichtung 412 ausgerichteten Ausfahrrichtung 414 verlassen kann.

Ein weiteres Fahrzeug 100 kann dann ohne nennenswerte Wartezeit unmittelbar im Anschluss durch den Einfahrbereich 402 hindurch in die Übergabeposition 404 gefahren werden, insbesondere um letztlich einen weiteren Gegenstand 102 zu der Station 234 zuführen zu können.

Abhängig von der Ausgestaltung der Fahrzeuge 100, insbesondere abhängig von der maximalen Hubhöhe der Aufnahmeelemente 170, und/oder abhängig von der Art und Ausgestaltung der Stationsfördervorrichtung 244 kann es vorgesehen sein, dass mehrere Tragelemente 408 miteinander verbunden sind. Es kann jedoch auch vorgesehen sein, dass mindestens zwei Tragelemente 408, insbesondere die den Einfahrbereich 402 begrenzenden Tragelemente 408, beabstandet von den übrigen Tragelementen 408 sind und/oder insbesondere durch einen oder mehrere Ausfahrbereiche 410 von den übrigen Tragelementen 408 separiert sind.

Ein Abstand zwischen den Tragelementen 408 ist vorzugsweise so gewählt, dass ein Gegenstand 102 und/oder eine Adaptervorrichtung 208, welche auf Förderelementen 406 an den Tragelementen 408 gelagert sind, in sämtlichen denkbaren Positionen längs eines Bewegungswegs an der Stationsfördervorrichtung 234 nach unten abgestützt und somit zuverlässig gegen ein unerwünschtes Verkippen oder Herunterfallen gesichert sind.

Dadurch, dass der Übergabebereich 400 vorzugsweise einen räumlich von einem Einfahrbereich 402 getrennten Ausfahrbereich 410 aufweist, kann die Übergabe einer größeren Anzahl der Gegenstände 102 vorzugsweise effizienter und in kürzerer Zeit erfolgen.

Im Übrigen stimmt die in den Fig. 26 bis 28 dargestellte Ausführungsform des Übergabebereiches 400 hinsichtlich Aufbau und Funktion mit der Aufnahmeposition 256 und/oder der Abgabeposition 242 gemäß den Fig. 14 und 15 überein, so dass auf die diesbezügliche vorstehende Beschreibung insoweit Bezug genommen wird.

Bei sämtlichen Ausführungsformen von Fahrzeugen 100 sind vorzugsweise jeweils eine oder mehrere Sensorvorrichtungen 190 des Fahrzeugs 100 vorgesehen, mittels welcher ein jeweiliger Umgebungsbereich 192 des Fahrzeugs 100 erfassbar ist.

Mittels der einen oder der mehreren Sensorvorrichtungen 190 ist insbesondere eine dreidimensionale Umgebung, d.h. ein dreidimensionaler Umgebungsbereich 192, erfassbar, wobei die Erfassung selbst vorzugsweise zweidimensional oder ebenfalls dreidimensional erfolgt, d.h. dass innerhalb des erfassten Umgebungsbereichs 192 erfasste Objekte vorzugsweise hinsichtlich ihrer Ausmaße und Positionierung relativ zu dem Fahrzeug 100 erfasst werden. Insbesondere werden die Ausmaße und die Positionierung der erfassten Objekte mittels der Steuervorrichtung des Fahrzeugs 100 aus Sensordaten der einen oder der mehreren Sensorvorrichtungen 190 errechnet.

Der Umgebungsbereich 192 setzt sich vorzugsweise aus mehreren Zonen zusammen oder umfasst mehrere Zonen. Die Zonen können einander überlappend ausgebildet sein oder vollständig voneinander verschiedene Raumbereiche abdecken.

Mittels der einen oder der mehreren Sensorvorrichtungen 190 sind vorzugsweise voneinander verschiedene Zonen des Umgebungsbereichs 192 erfassbar.

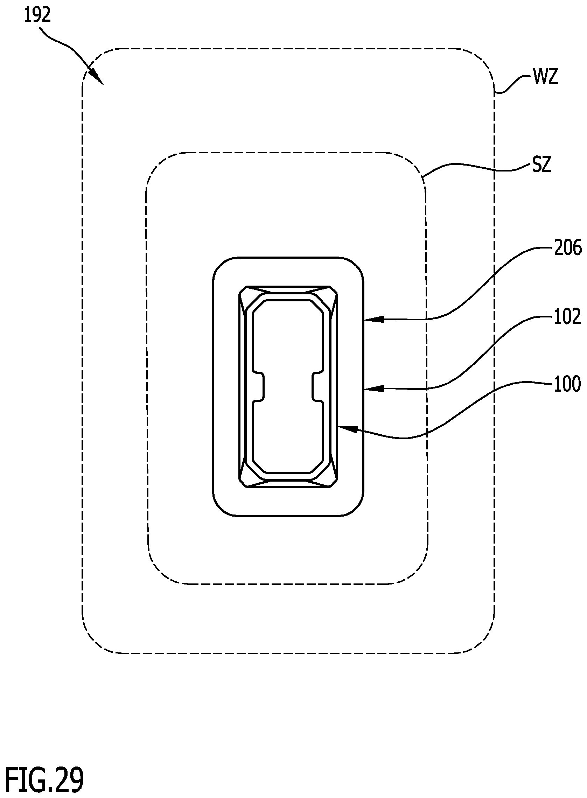

Eine Zoneneinteilung ergibt sich beispielsweise durch die Auswahl von Grenzlinien in unterschiedlichen Abstände von dem Fahrzeug. Wie insbesondere Fig. 29 zu entnehmen ist, kann der Umgebungsbereich 192 in horizontaler Richtung beispielsweise in drei Zonen eingeteilt werden, insbesondere abhängig von einer Entfernung von dem Fahrzeug 100.

Eine innerste Zone mit geringstem Abstand zum Fahrzeug 100, insbesondere eine unmittelbar an das Fahrzeug 100 angrenzende Zone, ist beispielsweise die Schutzzone SZ.

Diese Schutzzone SZ ist vorzugsweise ein Bereich, in welchem insbesondere für einen störungsfreien Betrieb kein Objekt außer dem Fahrzeug 100 selbst (und gegebenenfalls dem Gegenstand 102) angeordnet sein darf. Vorzugsweise wird im Falle der Detektion eines Objekts in dieser Schutzzone SZ umgehend und/oder automatisch das Fahrzeug 100 in den Stoppbetrieb versetzt.

Die Schutzzone SZ ist insbesondere im horizontalen Schnitt ringförmig ausgebildet.

Eine sich an die Schutzzone SZ anschließende weitere Zone ist beispielsweise eine Warnzone WZ. Die Warnzone WZ umgibt die Schutzzone SZ vorzugsweise ringförmig, insbesondere bezogen auf einen horizontalen Schnitt durch das Fahrzeug 100, die Schutzzone SZ und die Warnzone WZ.

Die Warnzone WZ ist insbesondere ein Bereich, in welchem kein Objekt außer dem Fahrzeug 100 selbst angeordnet sein sollte, wobei eine Erfassung eines Objekts noch nicht zwingend zur Auslösung des Stoppbetriebs führt. Vielmehr wird das Fahrzeug 100 im Falle der Detektion eines Objekts in dieser Warnzone WZ vorzugsweise umgehend und/oder automatisch in den Warnbetrieb versetzt.

Außerhalb der Warnzone WZ liegt insbesondere eine Freizone, welche bei Bedarf von der einen oder den mehreren Sensorvorrichtungen erfassbar ist, jedoch nicht auf die Präsenz von Objekten, etc. überwacht wird.

Die Objekte, welche als von der mindestens einen Sensorvorrichtung 190 erfasste Objekte bezeichnet werden, sind insbesondere solche Objekte, welche in einem erwarteten Normalbetrieb des Fahrzeugs 100 und/oder einer Behandlungsanlage nicht an der erfassten Position sein sollten. Allerdings werden von der einen oder den mehreren Sensorvorrichtungen 190 auch solche Objekte erfasst, welche Bestandteile der Fördervorrichtung und/oder der Behandlungsanlage sind und deren Präsenz erforderlich ist.

Mittels der Steuervorrichtung 204 des Fahrzeugs 100 und/oder mittels einer übergeordneten Steuerungsanlage wird vorzugsweise überprüft, insbesondere berechnet, ob ein erfasstes Objekt ein unerwartetes und/oder unbekanntes und/oder störendes Objekt ist oder ob es sich um ein Objekt handelt, dessen Präsenz akzeptabel ist.

Vorzugsweise wird diese Überprüfung durchgeführt, bevor das Fahrzeug 100 in den Warnbetrieb oder den Stoppbetrieb versetzt wird.

Abhängig von einem aktuellen Zustand des Fahrzeugs 100, insbesondere abhängig davon, ob das Fahrzeug 100 mit einem Gegenstand 102 beladen oder aber unbeladen ist, und/oder abhängig davon, mit welcher momentanen Geschwindigkeit und in welche Richtung das Fahrzeug 100 sich bewegt, werden vorzugsweise die Grenzlinien zwischen den Zonen variiert. Beispielsweise werden bei relativ hoher Geschwindigkeit des Fahrzeugs 100 vorzugsweise die Grenzlinien im Bereich vor dem Fahrzeug 100 (bezüglich der Fahrtrichtung) von dem Fahrzeug 100 weg verschoben, so dass sich vor dem Fahrzeug 100 eine Vergrößerung der Zonen, insbesondere der Warnzone und/oder der Schutzzone, ergibt.

Im Falle einer Kurvenfahrt kann beispielsweise eine Krümmung und/oder eine zumindest partielle, seitliche Verschiebung der Zonen derart vorgesehen sein, dass diese insbesondere im Bereich vor dem Fahrzeug 100 einen möglichst großen Raumbereich längs der tatsächlichen Fahrtstrecke (Bewegungsweg) abdecken.

Der Bereich hinter dem Fahrzeug 100 (bezüglich der Fahrtrichtung) muss üblicherweise weniger sorgfältig überwacht werden, so dass die hinter dem Fahrzeug 100 befindlichen Teile der Zonen, insbesondere der Warnzone und/oder der Schutzzone, verkleinert werden können.

Mittels der Steuervorrichtung 204 des Fahrzeugs 100 und/oder mittels einer übergeordneten Steuerungsanlage werden die Grenzlinienverläufe und/oder die Ausmaße und/oder die Form der Zonen, insbesondere der Warnzone und/oder der Schutzzone, vorzugsweise regelmäßig, beispielsweise mehrmals pro Minute oder Sekunde, an den jeweils aktuellen Zustand angepasst.

Alternativ oder ergänzend hierzu kann eine Anpassung insbesondere stets dann vorgenommen werden, wenn das Fahrzeug 100 eine Zustandsänderung erfährt, beispielsweise eine Richtungsänderung, eine Beladung, eine Entladung, eine Beschleunigung, etc.

Als Zustandsmerkmal, welches insbesondere Einfluss auf die Grenzlinienverläufe der Zonen hat, kann ferner vorzugsweise die momentane Position des Fahrzeugs 100 innerhalb der Fördervorrichtung und/oder Behandlungsanlage herangezogen werden.

Insbesondere können die Zonen hinsichtlich ihrer Ausmaße und/oder Formen abhängig von der momentanen Position des Fahrzeugs 100 innerhalb der Fördervorrichtung und/oder Behandlungsanlage variiert werden.

Beispielsweise dann, wenn das Fahrzeug 100 sich einer Station 234 nähert und erwartbar ist, dass Teile der Station 234 in die Warnzone WZ und/oder in die Schutzzone SZ gelangen werden (beziehungsweise sich die Warnzone WZ und/oder die Schutzzone SZ bis in die Teile der Station 234 hineinerstrecken wird/werden), kann eine Verkleinerung der Zonen, insbesondere der Warnzone WZ und/oder der Schutzzone SZ, derart vorgesehen sein, dass die Teile der Station 234 außerhalb der Warnzone WZ und/oder der Schutzzone SZ liegen.

Insbesondere kann für eine in der Station 234 erwartete Geradeausfahrt eine seitliche Umgebungserfassung reduziert oder vollständig deaktiviert werden.

Alternativ oder ergänzend hierzu kann vorgesehen sein, dass bei einer Annäherung eines Fahrzeugs 100 an eine Station 234 ein Stationsmodus aktiviert wird, bei welchem eine maximale Geschwindigkeit des Fahrzeugs 100 reduziert ist, um das sich aus einer Reduktion der Umgebungsüberwachung ergebende, erhöhte Gefahrenpotential zu kompensieren. Eine Annäherung an eine Station 234 kann beispielsweise durch Scannen einer Positionierhilfe und/oder durch Positions- und/oder Abstandssensoren ermittelt werden.

Mit Hinblick auf die Fig. 29 wurde insbesondere eine Zoneneinteilung in horizontaler Richtung erläutert. Vorteilhaft kann es ferner sein, wenn alternativ oder ergänzend zu einer Zoneneinteilung in horizontaler Richtung eine Zoneneinteilung in vertikaler Richtung vorgesehen ist.

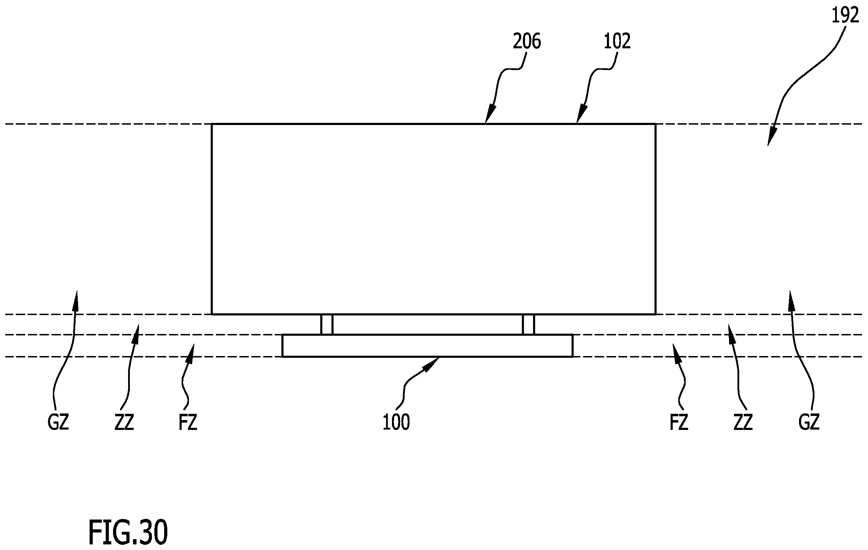

Wie Fig. 30 zu entnehmen ist, kann insbesondere vorgesehen sein, dass in vertikaler Richtung eine Zone definiert wird, innerhalb derer das Fahrzeug 100 angeordnet ist. Diese Zone ist insbesondere eine Fahrzeugzone FZ.

Die Fahrzeugzone FZ erstreckt sich in vertikaler Richtung insbesondere ausgehend von dem Boden, auf welchem das Fahrzeug 100 verfahrbar ist, bis zu einer Oberseite 172 des Grundkörpers 104 des Fahrzeugs 100 oder einem oberen Ende eines oder mehrerer Aufnahmeelemente 170.

Durch Erfassung des Raumbereichs des Umgebungsbereichs 192, welcher die Fahrzeugzone FZ bildet oder umfasst, kann somit insbesondere ermittelt werden, ob sich das Fahrzeug 100 weiteren Fahrzeugen 100 nähert.

Eine weitere Zone in vertikaler Richtung ergibt sich aus der Dimensionierung des an dem Fahrzeug 100 angeordneten Gegenstands 102. Diese den Gegenstand 102 abdeckende Zone erstreckt sich in vertikaler Richtung insbesondere von einer Unterseite des Gegenstands 102 (gegebenenfalls einschließlich eines Adapters oder Skids oder ähnlichem) und/oder bis zu einer Oberseite des Gegenstands 102, vorzugsweise von einem tiefsten Punkt des Gegenstands 102 (gegebenenfalls einschließlich eines Adapters oder Skids oder ähnlichem) und/oder bis zu einem höchsten Punkt des Gegenstands 102. Diese Zone wird vorliegend als Gegenstandszone GZ bezeichnet.

Es kann vorgesehen sein, dass die Gegenstandszone GZ unmittelbar an die Fahrzeugzone FZ angrenzt.

Alternativ hierzu kann vorgesehen sein, dass zwischen der Gegenstandszone GZ und der Fahrzeugzone FZ eine Zwischenzone ZZ angeordnet ist, welche sich insbesondere von der Oberseite 172 des Grundkörpers 104 des Fahrzeugs 100 und/oder bis zu einer Unterseite des Gegenstands 102 (gegebenenfalls einschließlich eines Adapters oder Skids oder ähnlichem) erstreckt, vorzugsweise bis zu einem tiefsten Punkt des Gegenstands 102 (gegebenenfalls einschließlich eines Adapters oder Skids oder ähnlichem).

Ferner kann vorgesehen sein, dass die Zwischenzone ZZ sich in vertikaler Richtung zumindest näherungsweise so weit erstreckt, wie das eine oder die mehreren Aufnahmeelemente 170 aus dem Grundkörper 104 des Fahrzeugs 100 herausragen.

Günstig kann es sein, wenn die in vertikaler Richtung eingeteilten Zonen mit den in horizontaler Richtung eingeteilten Zonen überlagert werden, insbesondere um für die Kombination aus Fahrzeug 100 und Gegenstand 102 eine optimale Umgebungserfassung und Gefahrenvermeidung zu ermöglichen.

Vorzugsweise ist der Fahrzeugzone FZ eine Warnzone WZ und/oder eine Schutzzone SZ zugeordnet, so dass insbesondere überwachbar ist, ob das Fahrzeug 100 weiteren Fahrzeugen 100 oder sonstigen Objekten zu nahekommt.

Unter der Zuordnung einer sich aus einer horizontalen Einteilung (Warnzone WZ, Schutzzone SZ) ergebenden Zone zu einer sich aus einer vertikalen Einteilung ergebenden Zone (Fahrzeugzone FZ, Zwischenzone ZZ, Gegenstandszone GZ) ist insbesondere zu verstehen, dass ein Raumbereich, welcher eine nur in vertikaler Richtung definierte und somit in horizontaler Richtung unbegrenzte Zone (FZ, ZZ, GZ) bildet, in horizontaler Richtung in mehrere Zonen (WZ, SZ) eingeteilt wird.

Ferner kann vorgesehen sein, dass der Gegenstandszone GZ eine Warnzone WZ und/oder eine Schutzzone SZ zugeordnet ist, so dass insbesondere überwachbar ist, ob das Fahrzeug 100 weiteren Fahrzeugen 100 oder sonstigen Objekten zu nahekommt.

Zudem kann vorgesehen sein, dass der Zwischenzone ZZ eine Warnzone WZ und/oder eine Schutzzone SZ zugeordnet ist, so dass insbesondere überwachbar ist, ob das Fahrzeug 100 im Bereich des einen oder der mehreren Aufnahmeelemente 170 einem Objekt zu nahekommt.

Die räumliche Ausdehnung, insbesondere in horizontaler Richtung, und/oder die Form der der Fahrzeugzone FZ zugeordneten Warnzone WZ und/oder der der Fahrzeugzone FZ zugeordneten Schutzzone SZ hängen insbesondere davon ab, ob das Fahrzeug 100 beladen ist und/oder wo sich das Fahrzeug 100 in der Fördervorrichtung und/oder Behandlungsanlage befindet.

Die räumliche Ausdehnung, insbesondere in horizontaler Richtung, und/oder die Form der der Gegenstandszone GZ zugeordneten Warnzone WZ und/oder der der Gegenstandszone GZ zugeordneten Schutzzone SZ hängen insbesondere davon ab, ob ein Gegenstand 102 an dem Fahrzeug 100 angeordnet ist, welche Ausmaße dieser Gegenstand 102 selbst hat und/oder wo sich das Fahrzeug 100 samt des daran angeordneten Gegenstands 102 in der Fördervorrichtung und/oder Behandlungsanlage befindet. Insbesondere kann bei nicht beladenem Fahrzeug 100, d.h. bei nicht vorhandenem Gegenstand 102, vorgesehen sein, dass eine Umgebungsüberwachung im Bereich der Gegenstandszone GZ vollständig deaktiviert wird.

Die räumliche Ausdehnung, insbesondere in horizontaler Richtung, und/oder die Form der der Zwischenzone ZZ zugeordneten Warnzone WZ und/oder der der Zwischenzone ZZ zugeordneten Schutzzone SZ hängen insbesondere davon ab, ob ein Gegenstand 102 an dem Fahrzeug 100 angeordnet ist, wie weit das eine oder die mehreren Aufnahmeelemente 170 aus dem Grundkörper 104 herausragen und/oder wo sich das Fahrzeug 100 samt des gegebenenfalls daran angeordneten Gegenstands 102 in der Fördervorrichtung und/oder Behandlungsanlage befindet. Insbesondere kann vorgesehen sein, dass eine Umgebungsüberwachung im Bereich der Zwischenzone ZZ deaktiviert wird, wenn das Fahrzeug 100 in eine Station 234 einfährt und/oder eine Station 234 durchfährt und dabei das eine oder die mehreren Aufnahmeelemente 170 in einen Trennboden 248 hineinragen oder durch einen Trennboden 248 hindurchragen.

Bei einer Ausgestaltung kann vorgesehen sein, dass jedes Fahrzeug 100 selbstständig und unabhängig von den anderen Fahrzeugen 100 beispielsweise basierend auf der Umgebungsüberwachung seine sich aus einem Auftrag ergebende Route oder seinen sich aus dem Auftrag ergebenden Bewegungsweg überprüft und/oder überwacht, insbesondere um Kollisionen zu vermeiden.

Ergänzend hierzu kann ferner vorgesehen sein, dass die Fahrzeuge 100 sich gegenseitig (direkt oder indirekt über die übergeordnete Steuerungsanlage) über den jeweiligen Fahrzeugzustand und/oder die jeweiligen Ausdehnungen und/oder Formen der Zonen, insbesondere der Warnzonen WZ, Schutzzonen SZ, Fahrzeugzonen FZ, Gegenstandszonen GZ und/oder Zwischenzonen ZZ, informieren. Hierdurch können insbesondere planmäßige Überlappungen in den Zonen, welche sich beispielsweise bei einer engen gegenläufigen Vorbeifahrt zweier Fahrzeuge 100 ergeben können, bewusst toleriert werden, ohne einen unnötigen Warnbetrieb auszulösen.

Günstig kann es sein, wenn einem oder mehreren oder sämtlichen Gegenständen 102, insbesondere Fahrzeugkarosserien 206, auch dann eine Gegenstandszone GZ und/oder eine Warnzone WZ und/oder eine Schutzzone SZ zugeordnet ist, wenn der jeweilige Gegenstand 102 nicht an einem Fahrzeug 100 angeordnet ist. Insbesondere kann auch in Lagerstellen und/oder Parkpositionen eine solche Zoneneinteilung vorgesehen sein.

Eine solche Zonenzuordnung ermöglicht insbesondere eine übergeordnete Koordination sämtlicher Gegenstände 102 unabhängig von der jeweiligen Anordnung an einem Fahrzeug 100, wodurch vorzugsweise auch potentielle Kollisionsrisiken von fahrenden Gegenständen 102 (an einem Fahrzeug 100 angeordneten Gegenständen 102) mit parkenden Gegenständen 102 (nicht an einem Fahrzeug angeordneten Gegenständen 102) minimiert werden können.

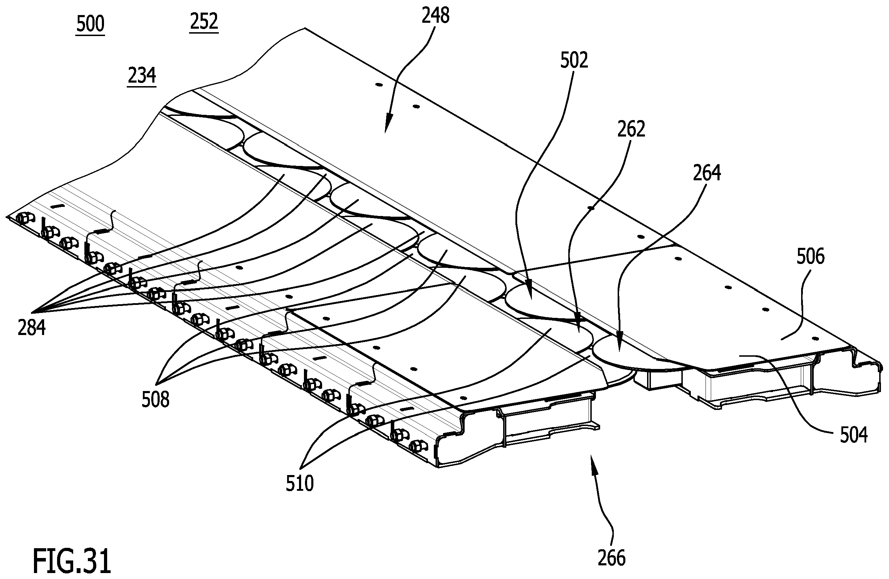

Eine in den Fig. 31 bis 33 dargestellte Ausführungsform eines als Ganzes mit 248 bezeichneten Trennbodens kann grundsätzlich in sämtlichen Varianten einer Fördervorrichtung zum Einsatz kommen.

Der Trennboden 248 dient insbesondere dazu, einen Bearbeitungsbereich 252 einer Station 234, insbesondere einen Behandlungsraum 500, von einem Fahrraum 266 abzutrennen.

Der Fahrraum 266 ist insbesondere unter dem Trennboden 248, während der Bearbeitungsbereich 252, insbesondere der Behandlungsraum 500, über dem Trennboden 248 angeordnet ist.

Wie bereits hinsichtlich anderer Ausführungsformen beschrieben, umfasst der Trennboden 248 vorzugsweise einen Durchtrittsbereich 262, insbesondere einen Durchtrittsschlitz 264.

Vorzugsweise sind ferner mehrere Schließelemente 248 vorgesehen, mittels welchen der Durchtrittsbereich 262 verschließbar ist.

Die Schließelemente 248 bilden insbesondere einen Verschlussbereich 502 des Trennbodens 248.

Zusammen mit mehreren Tragplatten 504 des Trennbodens 248 bildet der Verschlussbereich 502 vorzugsweise eine zumindest näherungsweise vollständig begehbare Oberfläche 506 des Trennbodens 248.

Die Schließelemente 248 sind beispielsweise als Lamellen 508 und/oder Verschlussscheiben 210 ausgebildet.

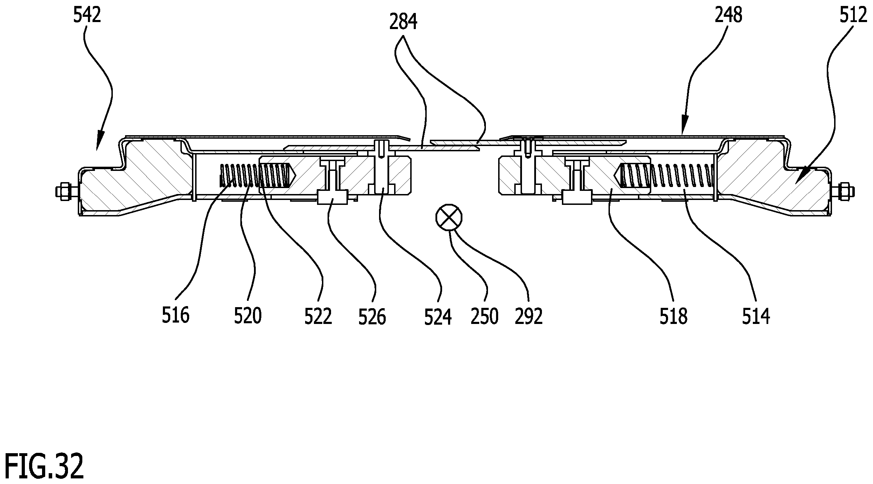

Der Trennboden 248 umfasst vorzugsweise eine Tragstruktur 512 (siehe insbesondere Fig. 32), welche einerseits der Aufnahme der Tragplatten 504 und andererseits der Festlegung der Schließelemente 248 dient.

An der Tragstruktur 512 sind insbesondere mehrere Rückstellelementaufnahmen 514 einer oder mehrerer Rückstellvorrichtungen 516 angeordnet.

Mehrere Rückstellelemente 518 der Rückstellvorrichtung 516 sind vorzugsweise relativ zu den Rückstellelementaufnahmen 514 beweglich an denselben angeordnet.

Beispielsweise kann eine mechanische und/oder elektrische Relativbewegung der Rückstellelemente 518 relativ zu den Rückstellelementaufnahmen 514 vorgesehen sein.

Beispielsweise umfasst die Rückstellvorrichtung 516 hierzu eine oder mehrere Federvorrichtungen 520, insbesondere eine oder mehrere Druckfedern 522, welche somit insbesondere eine federnde Festlegung der Rückstellelemente 518 an den Rückstellelementaufnahmen 514 ermöglichen.

Die Rückstellelemente 518 sind insbesondere in einer senkrecht zur Förderrichtung 250 und/oder senkrecht zu einem Förderweg 292 verlaufenden Richtung verschiebbar an den Rückstellelementaufnahmen 514 gelagert.

Die Rückstellelemente 518 sind vorzugsweise mit jeweils einer oder mehreren Schließelementaufnahmen 524 versehen.

Eine oder mehrere Schließelementaufnahmen 524 sind insbesondere als Bolzen ausgebildet und dienen der Aufnahme von jeweils einem Schließelement 284.

Insbesondere sind die Schließelemente 284 frei drehbar an den Schließelementaufnahmen 524 angeordnet.

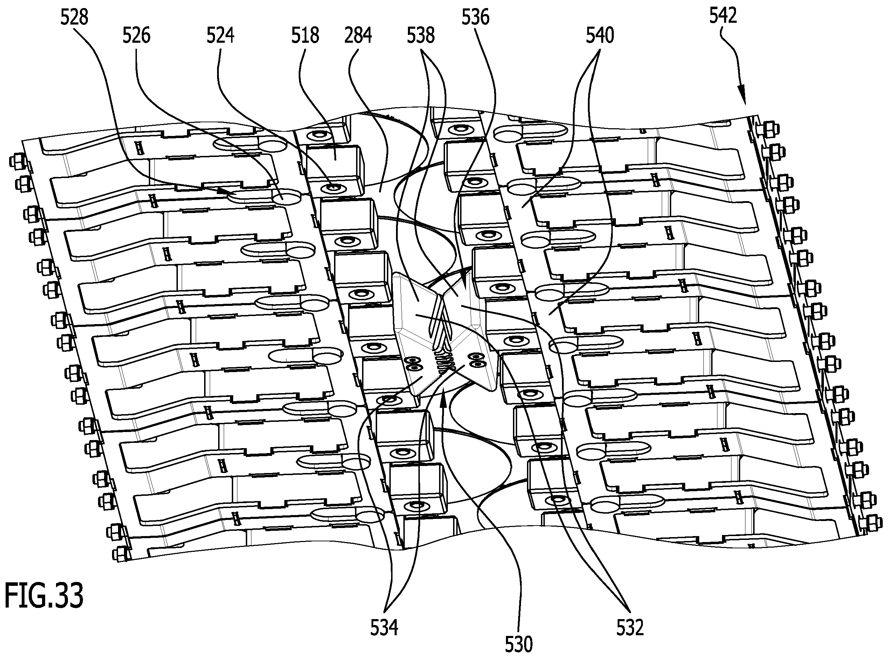

Wie insbesondere Fig. 33 zu entnehmen ist, umfasst eine jede Rückstellvorrichtung 516 vorzugsweise ein Anschlagelement 526 und eine Führungsöffnung 528.

Das Anschlagelement 526 ist insbesondere in der Führungsöffnung 528 verschiebbar, wobei eine maximale Erstreckung der Führungsöffnung 528 längs einer Bewegungsrichtung des Rückstellelements 518 einen maximalen Bewegungsweg des Rückstellelements 518 durch Anschlagen des Anschlagelements 526 an den Enden der Führungsöffnung 528 vorgibt.

Wie insbesondere den Fig. 31 und 32 zu entnehmen ist, sind die Schließelemente 284 des Trennbodens 248 insbesondere einander überlappend angeordnet, so dass ein in der Schließstellung der Schließelemente 284 geschlossener, insbesondere zumindest näherungsweise vollständig geschlossener, Verschlussbereich 502 herstellbar ist.

Die Schließelemente 284 sind insbesondere rund, beispielsweise kreisrund, ausgebildet.

Durch ein Hineinbewegen eines Aufnahmeelements 170 in den Durchtrittsbereich 262 längs der Förderrichtung 250 und/oder des Förderwegs 292 sind die Schließelemente 284 vorzugsweise nacheinander und/oder jeweils paarweise senkrecht zur Förderrichtung 250 und/oder senkrecht zum Förderweg 262 seitlich wegbewegbar, so dass das jeweilige Aufnahmeelement 170 durch den Durchtrittsbereich 262 hindurchragend längs der Förderrichtung 250 und/oder längs des Förderwegs 292 bewegbar ist.

Mittels einer Zentriervorrichtung 530, welche insbesondere mehrere, beispielsweise zwei mit einer Einlaufschräge 532 versehene Zentrierelemente 534 umfasst, kann vorzugsweise eine Zentrierung des Aufnahmeelements 170 innerhalb des Durchtrittsbereichs 262 ermöglicht werden.

Ferner kann beispielsweise mittels einer Öffnungsvorrichtung 536, welche insbesondere ein oder mehrere, beispielsweise zwei, Öffnungselemente 538 umfasst, eine Öffnung des Verschlussbereichs 502, insbesondere eine Betätigung eines oder mehrerer Schließelemente 284, dadurch ermöglicht werden, dass ein Aufnahmeelement 170 längs der vertikalen Richtung von unten nach oben in den Durchtrittsbereich 262 eingebracht wird und/oder unterhalb der Schließelemente 284 bewegt und mit den Öffnungselementen 538 in Eingriff gebracht wird.

Die Zentriervorrichtung 530 und die Öffnungsvorrichtung 536 können beispielsweise als ein und dieselbe Vorrichtung ausgebildet sein, wobei sich die jeweilige Funktion insbesondere abhängig von einer Bewegung der Aufnahmeelemente 170 relativ zu der Vorrichtung ergeben kann.

Wie Fig. 33 ferner zu entnehmen ist, kann der Trennboden 248 insbesondere mehrere Bodenmodule 540 umfassen, wobei jedes Bodenmodul 540 jeweils ein oder mehrere Rückstellvorrichtungen 516 und/oder Rückstellelementaufnahmen 514 und/oder Schließelementaufnahmen 524 und/oder Schließelemente 284 umfasst und/oder trägt und/oder aufnimmt.

Die Bedienmodule 540 sind insbesondere jeweils an einem Montagebereich 542 mit weiteren Bestandteilen der Tragstruktur 512 verbunden, wobei die Montagebereiche 542 an den dem Durchtrittsbereich 262 abgewandten Enden der Bodenmodule 540 angeordnet und/oder ausgebildet sind.

Die Bodenmodule 540 ragen insbesondere freitragend von den Montagebereichen 542 weg.

Vorzugsweise dienen die Bodenmodule 540 ferner der Aufnahme einer oder mehrerer Tragplatten 504 oder bilden dieselben.

Im Übrigen stimmt der Trennboden 248 gemäß der in den Fig. 31 bis 33 dargestellten Ausführungsform hinsichtlich Aufbau und Funktion nach Belieben mit einzelnen oder mehreren der vorstehend beschriebenen Ausführungsformen überein, so dass auf deren vorstehende Beschreibung insoweit Bezug genommen wird und hiermit ausdrücklich auch auf die denkbaren Kombinationsmöglichkeiten zur Bereitstellung weiterer (nicht dargestellter) Ausführungsformen hingewiesen wird.

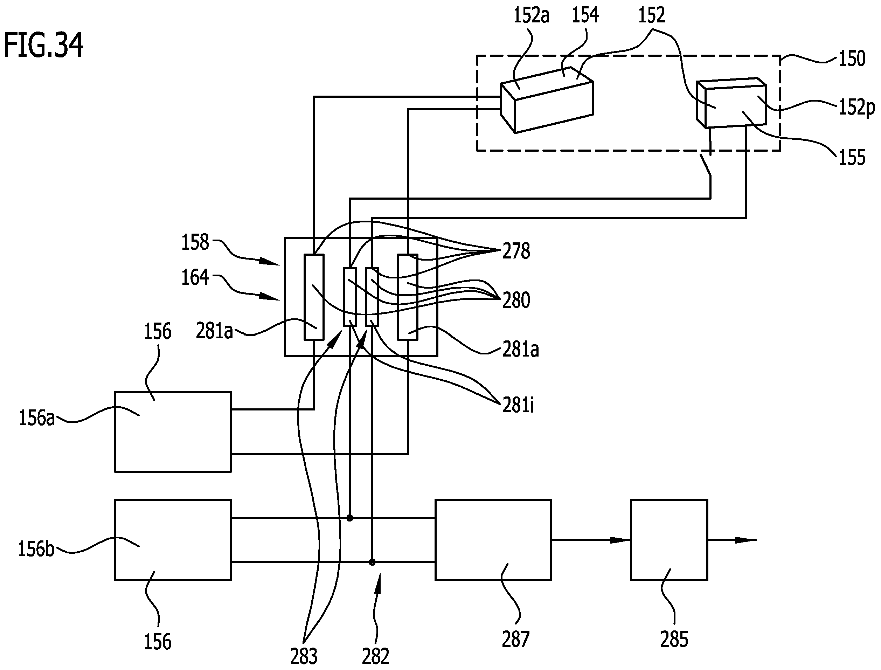

In Fig. 34 ist ein Beispiel für einen Schaltplan dargestellt, gemäß welchem der Energiespeicher 150 des Fahrzeugs 100 aufladbar ist. Einzelne oder mehrere Ladebereiche 158 und/oder Ladeanschlussstellen 164 können beispielsweise gemäß diesem Schaltplan angeordnet und/oder ausgebildet sein. Ferner können gemäß alternativen Ausführungsformen bei einem oder mehreren Ladebereichen 158 isoliert einzelne oder mehrere der nachfolgend beschriebenen Merkmale, insbesondere lediglich eine einzige Ladevorrichtung 156 für nur eine Art von Energiespeichereinheiten, vorgesehen sein.

Der Energiespeicher 150 dient insbesondere zur Speicherung und Bereitstellung von elektrischer Energie zum Antreiben des Fahrzeugs 100 und umfasst vorzugsweise eine oder mehrere Energiespeichereinheiten 152.

Günstig kann es sein, wenn der Energiespeicher 150 eine oder mehrere Antriebsenergiespeichereinheiten 152a zum Speichern von Energie zum Antreiben des Fahrzeugs 100 als Ganzes und/oder zum Antreiben einer Hubantriebsvorrichtung 178 umfasst.

Eine oder mehrere oder sämtliche Antriebsenergiespeichereinheiten 152a können beispielsweise als Superkondensatoren 154 ausgebildet sein.

Alternativ oder ergänzend hierzu kann vorgesehen sein, dass der Energiespeicher 150 eine oder mehrere Pufferenergiespeichereinheiten 152p umfasst, mittels welcher Energie beispielsweise zum Betrieb der Steuervorrichtung 204 und/oder einer oder mehrere Sensorvorrichtungen 190 und/oder einer oder mehrere Kommunikationsvorrichtungen bereitstellbar ist.

Eine oder mehrere oder sämtliche Pufferenergiespeichereinheiten 152p können beispielsweise als Lithium-Ionen-Akkumulatoren 155 ausgebildet sein.

Optional kann vorgesehen sein, dass eine oder mehrere oder sämtliche Pufferenergiespeichereinheiten 152p mit einer Antriebsvorrichtung 110 und/oder einer Hubantriebsvorrichtung 178 des Fahrzeugs 100 gekoppelt oder koppelbar sind, insbesondere zur Bereitstellung von Energie zum Betrieb der Antriebsvorrichtung 110 und/oder der Hubantriebsvorrichtung 178, falls die Antriebsenergiespeichereinheiten 152a hierfür nicht mehr ausreichend Energie bereitstellen können.

Es kann vorgesehen sein, dass die eine oder die mehreren Antriebsenergiespeichereinheiten 152a einerseits und die eine oder die mehreren Pufferenergiespeichereinheiten152p andererseits voneinander verschiedene Normbetriebsspannungen und/oder Ladespannungen aufweisen.

Beispielsweise kann vorgesehen sein, dass die eine oder die mehreren Antriebsenergiespeichereinheiten 152a mit einer Spannung, insbesondere Gleichspannung, von zumindest näherungsweise 48 V betreibbar sind.

Ferner kann vorgesehen sein, dass die eine oder die mehreren Pufferenergiespeichereinheiten 152p mit einer Spannung, insbesondere Gleichspannung, von zumindest näherungsweise 24 V betreibbar sind.

Zum Laden des Energiespeichers 150 an einem Ladebereich 158 umfasst der Ladebereich 158 vorzugsweise eine oder mehrere Ladeanschlussstellen 164, welche jeweils mehrere Kontaktbereiche 278 und/oder Kontaktelemente 280 zur Bereitstellung von elektrischer Energie aufweisen. Insbesondere sind mehrere Kontaktbereiche 278 und/oder Kontaktelemente 280 zur Bereitstellung von Spannungen mit unterschiedlich hohen Spannungswerten vorgesehen, um die unterschiedlichen Energiespeichereinheiten 152 gleichzeitig mit der jeweils erforderlichen Spannung laden zu können.

Beispielsweise sind an einer oder mehreren Ladeanschlussstellen 164 jeweils zwei oder mehr als zwei Paare von Kontaktbereichen 278 und/oder Kontaktelementen 280 vorgesehen, welche zur Bereitstellung von unterschiedlichen Ladespannungen dienen.

Fahrzeugseitige Kontaktbereiche 278 und/oder Kontaktelemente 280 einer oder mehrerer Ladeanschlussstellen 164 des Fahrzeugs 100 sind vorzugsweise zumindest hinsichtlich ihrer räumlichen Ausbildung und/oder Anordnung zumindest abschnittsweise komplementär zu den Kontaktbereichen 278 und/oder Kontaktelementen 280 der einen oder der mehreren energiequellenseitigen Ladeanschlussstellen 164 ausgebildet und/oder angeordnet.

Die Kontaktbereiche 278 und/oder Kontaktelemente 280 sind insbesondere derart ausgebildet und/oder angeordnet, dass eine Querkontaktierung zwischen Kontaktbereichen 278 und/oder Kontaktelementen 280 von nicht zueinander gehörenden Paaren von Kontaktbereichen 278 bzw. Kontaktelementen 280 ausgeschlossen ist.

Günstig kann es sein, wenn eine oder mehrere oder sämtliche Ladeanschlussstellen 164 jeweils mindestens ein außenliegendes Paar 281a von Kontaktbereichen 278 und/oder Kontaktelementen 280 aufweisen, welches insbesondere zum Laden der mindestens einen Antriebsenergiespeichereinheit 152a dient.

Ferner kann vorgesehen sein, dass eine oder mehrere oder sämtliche Ladeanschlussstellen 164 jeweils mindestens ein innenliegendes Paar 281i von Kontaktbereichen 278 und/oder Kontaktelementen 280 aufweisen, welches insbesondere zum Laden der mindestens einen Pufferenergiespeichereinheit 152p dient.

Das mindestens eine innenliegende Paar 281i von Kontaktbereichen 278 und/oder Kontaktelementen 280 ist insbesondere zwischen den beiden Kontaktbereichen 278 und/oder Kontaktelementen 280 des mindestens einen außenliegenden Paars 281a von Kontaktbereichen 278 und/oder Kontaktelementen 280 angeordnet.

Alternativ hierzu kann auch eine umgekehrte Nutzung der Kontaktbereiche 278 und/oder Kontaktelemente 280 vorgesehen sein, so dass das mindestens eine innenliegende Paar 281i von Kontaktbereichen 278 und/oder Kontaktelementen 280 beispielsweise zum Laden der mindestens einen Antriebsenergiespeichereinheit 152a dient, während das mindestens eine außenliegende Paar 281a von Kontaktbereichen 278 und/oder Kontaktelementen 280 beispielsweise zum Laden der mindestens einen Pufferenergiespeichereinheit 152p dient.

Ferner kann vorgesehen sein, dass eine oder mehrere oder sämtliche Ladeanschlussstellen 164 jeweils einen oder mehrere Positionskontakte 283 aufweisen, mittels welchen eine Positionserkennung und/oder Positionsüberwachung der Fahrzeuge 100 durchführbar ist.

Beispielsweise können ein oder mehrere Paare von Positionskontakten 283 vorgesehen sein, welche insbesondere innenliegend zwischen Kontaktbereichen 278 und/oder Kontaktelementen 280 der jeweiligen Ladeanschlussstelle 164 und/oder außenliegend angeordnet sind, so dass die Kontaktbereiche 278 und/oder Kontaktelemente 280 der jeweiligen Ladeanschlussstelle 164 zwischen den Positionskontakten 283 angeordnet sind.

Vorteilhaft kann es sein, wenn mittels einer oder mehrerer Sensorvorrichtungen 190, insbesondere Positionssensoren, und/oder mittels eines oder mehrerer Positionskontakte 283 ermittelt wird, ob ein Fahrzeug 100 eine zum Laden des Energiespeichers 150 erforderliche Position relativ zu einer Ladeanschlussstelle 164 eingenommen hat und dass bejahendenfalls eine oder mehrere Ladespannungen an der Ladeanschlussstelle 164 zum Laden des Energiespeichers 150 freigegeben werden.

Günstig kann es sein, wenn ein oder mehrere Kontaktbereiche 278 und/oder Kontaktelemente 280 zum Laden des Energiespeichers 150, insbesondere einer oder mehrerer Antriebsenergiespeichereinheiten 152a und/oder einer oder mehrerer Pufferenergiespeichereinheiten 152p, zugleich als ein oder mehrere Positionskontakte 283 dienen.

Es kann vorgesehen sein, dass ein oder mehrere Kontaktbereiche 278 und/oder Kontaktelemente 280 und/oder ein oder mehrere Positionskontakte 283 des Fahrzeugs 100 jeweils eine Sicherheitseinrichtung 285, beispielsweise ein Relais und/oder ein Schütz, aufweisen, mittels welchem eine temporäre Spannungsabschaltung durchführbar ist, beispielsweise zur Vermeidung von Kurzschlüssen am Energiespeicher 150 bei der Nutzung der Kontaktbereiche 278 und/oder Kontaktelemente 280 und/oder Positionskontakte 283 zur Positionserkennung und/oder Positionsüberwachung.

Alternativ oder ergänzend hierzu kann vorgesehen sein, dass ein oder mehrere Kontaktbereiche 278 und/oder Kontaktelemente 280 und/oder ein oder mehrere Positionskontakte 283 einer oder mehrere oder sämtlicher energiequellenseitiger Ladeanschlussstellen 164 jeweils eine Sicherheitseinrichtung 285, beispielsweise ein Relais und/oder ein Schütz, aufweisen, mittels welchem eine temporäre Spannungsabschaltung durchführbar ist, beispielsweise zur Vermeidung von Kurzschlüssen an der Energiequelle bei der Nutzung der Kontaktbereiche 278 und/oder Kontaktelemente 280 und/oder Positionskontakte 283 zur Positionserkennung und/oder Positionsüberwachung.

Zur Umschaltung zwischen einem Positionserkennungsmodus und einem Lademodus, insbesondere zur entsprechenden Ansteuerung der Sicherheitseinrichtung 285, ist vorzugsweise ein Handshake zwischen dem Fahrzeug 100 und der Ladeanschlussstelle 164 und/oder der übergeordneten Steuerungsanlage vorgesehen.

Insbesondere kann energiequellenseitig durch eine Spannungsmessung mittels einer Messvorrichtung 287 an den Kontaktbereichen 278 und/oder Kontaktelementen 280 ermittelt werden, ob ein Fahrzeug 100 an der jeweiligen Ladeanschlussstelle 164 korrekt positioniert ist. Beispielsweise kann auf ein korrekt positioniertes Fahrzeug 100 geschlossen werden, wenn die gemessene Spannung größer als 0,2 V, insbesondere größer als 0,5 V, beträgt. Bei korrekter Positionierung wird dann insbesondere ein Lademodus aktiviert.

Nach Abschluss des Ladevorgangs wird die Ladeanschlussstelle 164 vorzugsweise erneut in einen Positionserkennungsmodus versetzt, insbesondere durch Aktivieren der Sicherheitseinrichtung 285.

Besondere Ausführungsformen sind die folgenden:
1. Fahrzeug (100), insbesondere zum Fördern von Gegenständen (102), beispielsweise Fahrzeugkarosserien (206), wobei das Fahrzeug (100) Folgendes umfasst:
   - einen Grundkörper (104);
   - ein Fahrwerk (106), mittels welchem der Grundkörper (104) auf einem befahrbaren Untergrund (160) aufliegt und/oder bewegbar ist;
   - eine Antriebsvorrichtung (110) zum Antreiben des Fahrzeugs (100);
   - eine Aufnahmevorrichtung (168), welche ein Aufnahmeelement (170), zwei Aufnahmeelemente (170) oder mehr als zwei Aufnahmeelemente (170) zum Aufnehmen mindestens eines Gegenstands (102) umfasst.
2. Fahrzeug (100) nach Ausführungsform 1, dadurch gekennzeichnet, dass die Aufnahmevorrichtung (168) exakt zwei Aufnahmeelemente (170) umfasst.
3. Fahrzeug (100) nach einer der Ausführungsformen 1 oder 2, dadurch gekennzeichnet, dass mehrere Aufnahmeelemente (170), insbesondere sämtliche Aufnahmeelemente (170), sich in einer Ebene erstrecken, welche vertikal und parallel zu einer Längsmittelachse (140) des Fahrzeugs (100) verläuft.
4. Fahrzeug (100) nach einer der Ausführungsformen 1 bis 3, dadurch gekennzeichnet, dass das eine Aufnahmeelement (170), die zwei Aufnahmeelemente (170) oder die mehr als zwei Aufnahmeelemente (170) bewegbar an dem Grundkörper (104) angeordnet sind.
5. Fahrzeug (100) nach Ausführungsform 4, dadurch gekennzeichnet, dass das Fahrzeug (100) eine Hubantriebsvorrichtung (178) umfasst, mittels welcher das eine Aufnahmeelement (170), die zwei Aufnahmeelemente (170) oder die mehr als zwei Aufnahmeelemente (170) relativ zum Grundkörper (104) anhebbar und/oder absenkbar sind.
6. Fahrzeug (100) nach einer der Ausführungsformen 1 bis 5, dadurch gekennzeichnet, dass mehrere Aufnahmeelemente (170), insbesondere sämtliche Aufnahmeelemente (170), miteinander gekoppelt und ausschließlich gemeinsam relativ zu dem Grundkörper (104) bewegbar sind.
7. Fahrzeug (100) nach Ausführungsform 6, dadurch gekennzeichnet, dass eine Hubantriebsvorrichtung (178) des Fahrzeugs (100) ein Hubantriebselement (182), insbesondere einen Hubantriebsriemen (184) oder eine Hubantriebskette, umfasst, wobei das Hubantriebselement (182) einen Hubantriebsmotor (180) und zwei oder mehr als zwei Aufnahmeelemente (170) miteinander verbindet, so dass die zwei oder mehr als zwei Aufnahmeelemente (170) gemeinsam mittels des Hubantriebsmotors (180) bewegbar, insbesondere relativ zum Grundkörper (104) anhebbar und/oder absenkbar, sind.
8. Fahrzeug (100) nach Ausführungsform 7, dadurch gekennzeichnet, dass
   a) das Hubantriebselement (182) sich durch eine Antriebsachse (148) der Antriebsvorrichtung (110) zum Antreiben des Fahrzeugs (100) hindurch erstreckt und/oder
   b) das Hubantriebselement (182) sich unter einer Antriebsachse (148) der Antriebsvorrichtung (110) zum Antreiben des Fahrzeugs (100) hindurch erstreckt.
9. Fahrzeug (100) nach einer der Ausführungsformen 1 bis 8, dadurch gekennzeichnet, dass die Antriebsvorrichtung (110) eine Antriebsachse (148) aufweist, welche zwei Antriebselemente (118), insbesondere Antriebsräder (120), der Antriebsvorrichtung (110) miteinander verbindet, wobei die Antriebsachse (148) im Wesentlichen quer, insbesondere zumindest näherungsweise senkrecht, zu einer Längsmittelachse (140) und/oder Hauptfahrtrichtung (138) des Fahrzeugs (100) ausgerichtet ist.
10. Fahrzeug (100) nach einer der Ausführungsformen 1 bis 9, dadurch gekennzeichnet, dass die Antriebsvorrichtung (110) eine Antriebsachse (148) aufweist, welche zwei Antriebselemente (118), insbesondere Antriebsräder (120), der Antriebsvorrichtung (110) miteinander verbindet, wobei die Antriebsachse (148) bezüglich einer Längsmittelachse (140) und/oder Hauptfahrtrichtung (138) des Fahrzeugs (100) zumindest näherungsweise mittig an dem Grundkörper (104) des Fahrzeugs (100) angeordnet ist.
11. Fahrzeug (100) nach einer der Ausführungsformen 1 bis 10, dadurch gekennzeichnet, dass die Antriebsvorrichtung (110) eine Antriebsachse (148) aufweist, welche zwei Antriebselemente (118), insbesondere Antriebsräder (120), der Antriebsvorrichtung (110) miteinander verbindet, wobei die Antriebselemente (118) gemeinsam mittels der Antriebsachse (148) an dem Grundkörper (104) gelagert sind.
12. Fahrzeug (100) nach einer der Ausführungsformen 1 bis 11, dadurch gekennzeichnet, dass mehrere Antriebselemente (118), insbesondere Antriebsräder (120), der Antriebsvorrichtung (110) unabhängig voneinander antreibbar sind.
13. Fahrzeug (100) nach einer der Ausführungsformen 1 bis 12, dadurch gekennzeichnet, dass die Antriebsvorrichtung (110) eine Antriebsachse (148) und/oder ein oder mehrere Antriebselemente (118) umfasst, welche mittels einer Betätigungsvorrichtung (146) auf einen Boden absenkbar und/oder anpressbar und/oder von dem Boden abhebbar sind,
   wobei die Antriebsachse (148) und/oder ein oder mehrere Antriebselemente (118) vorzugsweise in den Grundkörper (104) des Fahrzeugs (100) integriert und/oder von dem Grundkörper (104) fünfseitig umgeben sind und/oder wobei die Betätigungsvorrichtung (146) vorzugsweise an einer Außenseite des Fahrzeugs (100) zur Betätigung derselben zugänglich ist.
14. Fahrzeug (100) nach einer der Ausführungsformen 1 bis 13, dadurch gekennzeichnet, dass das eine Aufnahmeelement (170), die zwei Aufnahmeelemente (170) oder die mehr als zwei Aufnahmeelemente (170) jeweils einen Aufnahmeabschnitt (174) aufweisen, welcher sich zu einem bezüglich einer Schwerkraftrichtung (g) oberen Ende hin verjüngt.
15. Fahrzeug (100) nach Ausführungsform 14, dadurch gekennzeichnet, dass ein oder mehrere Aufnahmeabschnitte (174), insbesondere sämtliche Aufnahmeabschnitte (174), im Wesentlichen konusförmig, konusabschnittsförmig, kegelstumpfförmig oder kegelstumpfabschnittsförmig ausgebildet sind.
16. Fahrzeug (100) nach einer der Ausführungsformen 1 bis 15, dadurch gekennzeichnet, dass das eine Aufnahmeelement (170), die zwei Aufnahmeelemente (170) oder die mehr als zwei Aufnahmeelemente (170) in unterschiedlichen Positionen relativ zu dem Grundkörper (104) anordenbar sind, wobei das eine Aufnahmeelement (170), die zwei Aufnahmeelemente (170) oder die mehr als zwei Aufnahmeelemente (170) vorzugsweise in einer bezüglich einer Schwerkraftrichtung (g) untersten Position über eine Oberseite (172) des Grundkörpers (104) hervorragen.
17. Fahrzeug (100) nach einer der Ausführungsformen 1 bis 16, dadurch gekennzeichnet, dass das eine Aufnahmeelement (170), die zwei Aufnahmeelemente (170) oder die mehr als zwei Aufnahmeelemente (170) eine parallel zu einer Schwerkraftrichtung (g) genommene Höhe aufweisen, welche größer ist als eine parallel zur Schwerkraftrichtung (g) genommene Höhe des Grundkörpers (104) des Fahrzeugs (100).
18. Fahrzeug (100) nach einer der Ausführungsformen 1 bis 17, dadurch gekennzeichnet, dass das Fahrzeug (100) einen oder mehrere Aufnahmesensoren (188) umfasst, mittels welcher
   a) ein an mindestens einem Aufnahmeelement (170) angeordneter Gegenstand (102) erfassbar und/oder auf dessen korrekte Festlegung hin überwachbar ist; und/oder
   b) eine Ausrichtung und/oder Position eines beabstandet von dem mindestens einen Aufnahmeelement (170) angeordneten Gegenstands (102) erfassbar sind.
19. Fahrzeug (100) nach Ausführungsform 18, dadurch gekennzeichnet, dass mindestens ein Aufnahmesensor (188) an dem Grundkörper (104) und/oder an dem Aufnahmeelement (170) angeordnet ist.
20. Fahrzeug (100) nach einer der Ausführungsformen 18 oder 19, dadurch gekennzeichnet, dass mindestens ein Aufnahmesensor (188) mit einer Detektionshilfe (220) an einem aufzunehmenden oder aufgenommenen Gegenstand (102) wechselwirkt.
21. Fahrzeug (100) nach einer der Ausführungsformen 1 bis 20, dadurch gekennzeichnet, dass das Aufnahmeelement (170) eine Schmiervorrichtung (175) umfasst, welche insbesondere in das Aufnahmeelement (170) integriert ist.
22. Fahrzeug (100) nach Ausführungsform 21, dadurch gekennzeichnet, dass die Schmiervorrichtung (175) in einen Schaftabschnitt (173) und/oder einen Aufnahmeabschnitt (174) des Aufnahmeelements (170) integriert ist, beispielsweise vollständig innerhalb des Schaftabschnitts (173) und/oder des Aufnahmeabschnitts (174) angeordnet ist.
23. Fahrzeug (100) nach einer der Ausführungsformen 21 oder 22, dadurch gekennzeichnet, dass die Schmiervorrichtung (175) ein Reservoir (177) zur Aufnahme von Schmiermittel und ein Dosierelement (179) zur steuerbaren und/oder regelbaren Zuführung des Schmiermittels aus dem Reservoir (177) zu einem zu schmierenden Gegenstand, insbesondere einem Teil einer Hubantriebsvorrichtung (178), umfasst.
24. Fahrzeug (100) nach einer der Ausführungsformen 1 bis 23, dadurch gekennzeichnet, dass an einer Oberseite (172) des Grundkörpers (104) eine Abdeckung (196) zum Abdecken eines Innenraums des Grundkörpers (104) angeordnet ist, wobei die Abdeckung (196) auf den Grundkörper (104) aufgelegt ist und/oder zumindest näherungsweise vollständig umlaufend bündig mit einem Auflagebereich (198) des Grundkörpers (104) abschließt.
25. Fahrzeug (100) nach einer der Ausführungsformen 1 bis 24, dadurch gekennzeichnet, dass an einer Oberseite (172) des Grundkörpers (104) eine Abdeckung (196) zum Abdecken eines Innenraums des Grundkörpers (104) angeordnet ist, wobei die Abdeckung (196) zumindest teilweise transparent ausgebildet ist.
26. Fahrzeug (100) nach einer der Ausführungsformen 1 bis 25, dadurch gekennzeichnet, dass der Grundkörper (104) im Wesentlichen quaderförmig ausgebildet ist,
   wobei vier Eckbereiche (112) des Grundkörpers (104) vorzugsweise jeweils mit einer um 360° drehbaren und/oder nicht angetriebenen Stützrolle (108) versehen sind.
27. Fahrzeug (100) nach einer der Ausführungsformen 1 bis 26, dadurch gekennzeichnet, dass der Grundkörper (104) im Wesentlichen quaderförmig ausgebildet ist,
   wobei zwei oder vier Eckbereiche (112) des Grundkörpers (104) jeweils mit einer nach außen hervorragenden Sensorvorrichtung (190) des Fahrzeugs (100) versehen sind.
28. Fahrzeug (100) nach einer der Ausführungsformen 1 bis 27, dadurch gekennzeichnet, dass das Fahrzeug (100) eine oder mehrere Sensorvorrichtungen (190) umfasst, welche jeweils ein oder mehrere Sensorelemente zur Erfassung einer Umgebung des Fahrzeugs (100) aufweisen, wobei das eine oder die mehreren Sensorelemente jeweils für sich genommen oder gemeinsam in einer im Wesentlichen horizontalen Ebene einen Erfassungsbereich von mindestens ungefähr 250°, insbesondere ungefähr 270°, aufweisen.
29. Fahrzeug (100) nach einer der Ausführungsformen 1 bis 28, dadurch gekennzeichnet, dass das Fahrzeug (100) eine oder mehrere Sensorvorrichtungen (190) umfasst, welche mit einer Steuervorrichtung (204) des Fahrzeugs (100) gekoppelt sind, wobei die Steuervorrichtung (204) so ausgebildet und eingerichtet ist, dass das Fahrzeug (100) abhängig von Sensorwerten, welche mittels der einen oder der mehreren Sensorvorrichtungen (190) erfasst und/oder bestimmt werden, in unterschiedlichen Betriebsmodi betreibbar ist, insbesondere in mindestens drei unterschiedlichen Betriebsmodi.
30. Fahrzeug (100) nach Ausführungsform 29, dadurch gekennzeichnet,
   a) dass einer der Betriebsmodi ein Normalbetrieb ist, in welchem keine unerwarteten und/oder unbekannten und/oder störenden Objekte in einem Fahrweg oder einem sonstigen vorgegebenen Umgebungsbereich (192) des Fahrzeugs (100) angeordnet sind;
      und/oder
   b) dass einer der Betriebsmodi ein Warnbetrieb ist, in welchem ein oder mehrere unerwartete und/oder unbekannte und/oder störende Objekte in einem vordefinierten Warnabschnitt eines Fahrwegs oder eines sonstigen vorgegebenen Umgebungsbereichs (192) des Fahrzeugs (100) angeordnet sind;
      und/oder
   c) dass einer der Betriebsmodi ein Stoppbetrieb ist, in welchem ein oder mehrere unerwartete und/oder unbekannte und/oder störende Objekte in einem vordefinierten Stoppabschnitt eines Fahrwegs oder eines sonstigen vorgegebenen Umgebungsbereichs (192) des Fahrzeugs (100) angeordnet sind.
31. Fahrzeug (100) nach Ausführungsform 30, dadurch gekennzeichnet,
   i) dass im Warnbetrieb eine Fahrgeschwindigkeit des Fahrzeugs (100) reduziert wird und/oder dass im Warnbetrieb mittels einer Warnvorrichtung (200) des Fahrzeugs (100) ein akustisches Warnsignal und/oder ein optisches Warnsignal abgegeben wird;
      und/oder
   ii) dass im Stoppbetrieb das Fahrzeug (100) bis zum Stillstand abbremst und/oder dass im Stoppbetrieb mittels einer Warnvorrichtung (200) des Fahrzeugs (100) ein akustisches Notsignal und/oder ein optisches Notsignal abgegeben wird und/oder dass im Stoppbetrieb mittels der Steuervorrichtung (204) ein Notsignal an eine übergeordnete Steuerungsanlage zur Steuerung und/oder Überwachung mehrerer Fahrzeuge (100) übertragen wird.
32. Fahrzeug (100) nach Ausführungsform 31, dadurch gekennzeichnet, dass ein Warnsignal und/oder ein Notsignal eine Aufforderung zur Räumung des Fahrwegs und/oder der Umgebung des Fahrzeugs (100) umfasst.
33. Fahrzeug (100) nach einer der Ausführungsformen 1 bis 32, dadurch gekennzeichnet, dass ein oder mehrere Notausschalter an einem Fahrzeug (100) oder an einer oder mehreren anderen Komponenten einer Fördervorrichtung und/oder einer Behandlungsanlage und/oder einer Logistikanlage angeordnet sind, wobei vorzugsweise jedem Notausschalter eine Kommunikationsvorrichtung zugeordnet ist, mittels welcher ein Notaussignal an ein oder mehrere oder sämtliche Fahrzeuge (100) übermittelbar ist, um das eine oder die mehreren oder sämtliche Fahrzeuge (100) in einen Notausbetrieb zu versetzen.
34. Fahrzeug (100) nach Ausführungsform 33, dadurch gekennzeichnet, dass ein oder mehrere, insbesondere sämtliche, Fahrzeuge (100) jeweils eine Steuervorrichtung (204) umfassen, mittels welcher ein Notaussignal verarbeitbar ist, insbesondere bevor das Fahrzeug (100) in einen Notausbetrieb versetzt wird.
35. Fahrzeug (100) nach Ausführungsform 34, dadurch gekennzeichnet, dass mittels der Steuervorrichtung (204) überprüfbar ist, ob das jeweilige Fahrzeug (100) zwingend in den Notausbetrieb versetzt werden muss oder nicht, wobei bei dieser Überprüfung Folgendes berücksichtigt wird:
   die Position des Fahrzeugs (100) relativ zu einem oder mehreren anderen Fahrzeugen (100); und/oder
   ein Abstand des Fahrzeugs (100) von einem oder mehreren anderen Fahrzeugen (100); und/oder
   die Position des Fahrzeugs (100) relativ zu dem Notausschalter, an welchem das Notaussignal ausgelöst wurde; und/oder
   ein Abstand des Fahrzeugs (100) von dem Notausschalter, an welchem das Notaussignal ausgelöst wurde; und/oder
   die momentane Geschwindigkeit des Fahrzeugs (100) zum Zeitpunkt der Übermittlung und/oder Auslösung des Notaussignals; und/oder
   ein vorgegebener und/oder berechneter Bewegungsweg des Fahrzeugs (100), insbesondere relativ zu einem oder mehreren anderen Fahrzeugen (100) und/oder relativ zu dem Notausschalter, an welchem das Notaussignal ausgelöst wurde.
36. Fahrzeug (100) nach einer der Ausführungsformen 1 bis 35, dadurch gekennzeichnet, dass mittels eines oder mehrerer Notausschalter unterschiedliche Arten von Notausbetriebsszenarien auslösbar sind, wobei sich diese unterschiedlichen Arten von Notausbetriebsszenarien beispielsweise
   a) durch eine Ausdehnung oder Größe oder Dimensionierung der Umgebung, in welcher die Fahrzeuge (100) in den Notausbetrieb versetzt werden, und/oder
   b) durch die Kriterien zur Überprüfung durch die Steuervorrichtung (204) des jeweiligen Fahrzeugs (100) und/oder
   c) durch die gezielte Ansteuerung unterschiedlicher Gruppen von Fahrzeugen (100)
   voneinander unterscheiden.
37. Fahrzeug (100) nach einer der Ausführungsformen 1 bis 36, dadurch gekennzeichnet, dass das Fahrzeug (100) mittels eines Notaussignals in einen Notausbetrieb versetzbar ist und dass mittels des Fahrzeugs (100) in diesem Notausbetrieb ein Signal an ein oder mehrere zumindest in einer Umgebung des Fahrzeugs (100) befindliche weitere Fahrzeuge (100) abgebbar ist, wobei das eine oder die mehreren Fahrzeuge (100) mittels des Signals insbesondere in einen Aufmerksamkeitszustand versetzbar sind, um beispielsweise eine Kollision mit dem Fahrzeug (100), welches in den Notausbetrieb versetzt wurde, zu vermeiden.
38. Fahrzeug (100) nach einer der Ausführungsformen 1 bis 37, dadurch gekennzeichnet, dass das Fahrzeug (100) multidirektional, insbesondere bidirektional, verfahrbar ist und dass mittels eines oder mehrerer Anzeigenelemente (202) an jedem Endbereich des Fahrzeugs (100) abhängig von einer aktuellen Fahrtrichtung anzeigbar ist, ob der jeweilige Endbereich aktuell ein Frontbereich oder ein Heckbereich des Fahrzeugs (100) ist.
39. Fahrzeug (100) nach einer der Ausführungsformen 1 bis 38, dadurch gekennzeichnet, dass das Fahrzeug (100) eine oder mehrere Ladeanschlussstellen (164) zum Aufladen eines Energiespeichers (150) des Fahrzeugs (100) umfasst.
40. Fahrzeug (100) nach Ausführungsform 39, dadurch gekennzeichnet, dass eine Ladeanschlussstelle (164) an einer Unterseite (114) des Grundkörpers (104) angeordnet ist und dass das Fahrzeug (100) zum Aufladen des Energiespeichers (150) über einer hierzu korrespondierenden Ladeanschlussstelle (164) eines Ladebereichs (158) positionierbar ist.
41. Fahrzeug (100) nach Ausführungsform 40, dadurch gekennzeichnet, dass diese Ladeanschlussstelle (164) berührend, beispielsweise mittels eines Schleifkontakts, und/oder berührungslos, beispielsweise induktiv, mit einer hierzu korrespondierenden Ladeanschlussstelle (164) eines Ladebereichs (158) koppelbar ist.
42. Fahrzeug (100) nach einer der Ausführungsformen 39 bis 41, dadurch gekennzeichnet, dass eine weitere Ladeanschlussstelle (164) an einer Seitenwandung (166) des Grundkörpers (104) angeordnet ist, wobei diese weitere Ladeanschlussstelle (164) insbesondere mittels einer Steckverbindung mit einer hierzu korrespondierenden Ladeanschlussstelle (164) eines Ladebereichs (158) koppelbar ist.
43. Fahrzeug (100) nach einer der Ausführungsformen 39 bis 42, dadurch gekennzeichnet, dass mindestens eine Ladeanschlussstelle (164) an mindestens einem Aufnahmeelement (170) angeordnet und/oder ausgebildet ist.
44. Fahrzeug (100) nach einer der Ausführungsformen 1 bis 43, dadurch gekennzeichnet, dass das Fahrzeug (100) einen Energiespeicher (150) zur Speicherung und Bereitstellung von elektrischer Energie zum Antreiben des Fahrzeugs (100) umfasst, wobei der Energiespeicher (150) eine oder mehrere Energiespeichereinheiten (152) umfasst, welche als Kondensator, insbesondere Superkondensator (154) oder Ultrakondensator, ausgebildet sind.
45. Fahrzeug (100) nach einer der Ausführungsformen 1 bis 44, dadurch gekennzeichnet, dass das Fahrzeug (100) einen Energiespeicher (150) umfasst, mittels welchem elektrische Energie zum Antreiben einer Hubantriebsvorrichtung (178) des Fahrzeugs (100) speicherbar und bereitstellbar ist.
46. Fahrzeug (100) nach Ausführungsform 45, dadurch gekennzeichnet, dass mittels desselben Energiespeichers (150), insbesondere mittels derselben Energiespeichereinheit (152) oder mittels der derselben Energiespeichereinheiten (152) des Energiespeichers (150), Energie sowohl zum Antreiben der Hubantriebsvorrichtung (178) als auch zum Antreiben des Fahrzeugs (100) speicherbar und bereitstellbar ist.
47. Fahrzeug (100) nach einer der Ausführungsformen 1 bis 46, dadurch gekennzeichnet, dass das Fahrzeug (100) einen Energiespeicher (150) umfasst, welcher
   a) eine oder mehrere Antriebsenergiespeichereinheiten (152a) zum Speichern von Energie zum Antreiben des Fahrzeugs als Ganzes und/oder zum Antreiben einer Hubantriebsvorrichtung; und
   b) eine oder mehrere Pufferenergiespeichereinheiten (152p) umfasst, mittels welcher Energie beispielsweise zum Betrieb einer Steuervorrichtung (204)
   und/oder einer oder mehrere Sensorvorrichtungen (190) und/oder einer oder mehrere Kommunikationsvorrichtungen bereitstellbar ist.
48. Fahrzeug (100) nach Ausführungsform 47, dadurch gekennzeichnet, dass die eine oder die mehreren Antriebsenergiespeichereinheiten (152a) einerseits und die eine oder die mehreren Pufferenergiespeichereinheiten (152p) andererseits voneinander verschiedene Normbetriebsspannungen und/oder Ladespannungen aufweisen.
49. Fahrzeug (100) nach einer der Ausführungsformen 1 bis 48, dadurch gekennzeichnet, dass das Fahrzeug (100) eine Steuervorrichtung (204) umfasst, welche so ausgebildet und eingerichtet ist, dass das Fahrzeug (100) wahlweise in einem Sicherheitsmodus oder in einem Expressmodus betreibbar ist,
   wobei das Fahrzeug (100) in den Sicherheitsmodus versetzt wird, wenn Personen in der Umgebung des Fahrzeugs (100) detektiert werden und/oder ein Bereich befahren wird, welcher für Personen zugänglich ist, und
   wobei das Fahrzeug (100) in den Expressmodus versetzt wird, wenn in der Umgebung des Fahrzeugs (100) keine Personen detektiert werden und/oder ein Bereich befahren wird, welcher für Personen unzugänglich ist.
50. Fahrzeug (100) nach Ausführungsform 49, dadurch gekennzeichnet, dass das Fahrzeug (100) mittels einer nicht am Fahrzeug (100) befindlichen Vorrichtung, insbesondere Sensorvorrichtung (190), beispielsweise unter Verwendung von externen Sicherheitskontakten, etc., in den Sicherheitsmodus oder in den Expressmodus versetzbar ist.
51. Fahrzeug (100) nach einer der Ausführungsformen 1 bis 50, dadurch gekennzeichnet, dass das Fahrzeug (100) eine oder mehrere Sensorvorrichtungen (190) umfasst, mittels welcher ein Umgebungsbereich (192) des Fahrzeugs (100) erfassbar ist.
52. Fahrzeug (100) nach Ausführungsform 51, dadurch gekennzeichnet, dass mittels der einen oder der mehreren Sensorvorrichtungen (190) ein dreidimensionaler Umgebungsbereich (192) dreidimensional erfassbar ist, wobei innerhalb des erfassten Umgebungsbereichs (192) erfasste Objekte vorzugsweise hinsichtlich ihrer Ausmaße und Positionierung relativ zu dem Fahrzeug (100) erfassbar sind.
53. Fahrzeug (100) nach Ausführungsform 52, dadurch gekennzeichnet, dass die Ausmaße und die Positionierung der erfassten Objekte mittels einer Steuervorrichtung (204) des Fahrzeugs (100) aus Sensordaten der einen oder der mehreren Sensorvorrichtungen (190) errechnet werden.
54. Fahrzeug (100) nach einer der Ausführungsformen 51 bis 53, dadurch gekennzeichnet, dass sich der Umgebungsbereich (192) aus mehreren Zonen zusammensetzt oder mehrere Zonen umfasst, wobei die Zonen einander überlappend ausgebildet sind oder vollständig voneinander verschiedene Raumbereiche abdecken.
55. Fahrzeug (100) nach einer der Ausführungsformen 51 bis 54, dadurch gekennzeichnet, dass mittels der einen oder der mehreren Sensorvorrichtungen (190) voneinander verschiedene Zonen des Umgebungsbereichs (192) erfassbar sind.
56. Fahrzeug (100) nach einer der Ausführungsformen 51 bis 55, dadurch gekennzeichnet, dass der Umgebungsbereich (192) in horizontaler Richtung in mehrere Zonen, insbesondere in drei Zonen, eingeteilt ist.
57. Fahrzeug (100) nach Ausführungsform 56, dadurch gekennzeichnet, dass eine der Zonen eine Schutzzone (SZ) ist, in welcher insbesondere für einen störungsfreien Betrieb kein Objekt außer dem Fahrzeug (100) selbst und gegebenenfalls einem an dem Fahrzeug (100) angeordnetem Gegenstand (102) angeordnet sein darf.
58. Fahrzeug (100) nach einer der Ausführungsformen 56 oder 57, dadurch gekennzeichnet, dass eine der Zonen eine Warnzone (WZ) ist, welche insbesondere die Schutzzone (SZ) umgibt und/oder in welcher kein Objekt außer dem Fahrzeug (100) selbst und gegebenenfalls ein an dem Fahrzeug (100) angeordneter Gegenstand (102) angeordnet sein sollte, wobei eine Erfassung eines Objekts noch nicht zwingend zur Auslösung eines Stoppbetriebs des Fahrzeugs (100) führt.
59. Fahrzeug (100) nach einer der Ausführungsformen 51 bis 58, dadurch gekennzeichnet, dass der Umgebungsbereich (192) in vertikaler Richtung in mehrere Zonen, insbesondere in drei Zonen, eingeteilt ist.
60. Fahrzeug (100) nach Ausführungsform 59, dadurch gekennzeichnet, dass eine der Zonen eine Fahrzeugzone (FZ) ist, innerhalb derer das Fahrzeug (100) angeordnet ist.
61. Fahrzeug (100) nach einer der Ausführungsformen 59 oder 60, dadurch gekennzeichnet, dass eine der Zonen eine Gegenstandszone (GZ) ist, innerhalb derer ein Gegenstand (102) angeordnet ist, wenn dieser mittels des Fahrzeugs (100) aufgenommen ist.
62. Fahrzeug (100) nach einer der Ausführungsformen 59 bis 61, dadurch gekennzeichnet, dass zwischen einer als Fahrzeugzone (FZ) ausgebildeten Zone und einer als Gegenstandszone (GZ) ausgebildeten Zone eine Zwischenzone (ZZ) angeordnet ist, welche sich in vertikaler Richtung zumindest näherungsweise so weit erstreckt, wie das eine oder die mehreren Aufnahmeelemente (170) aus dem Grundkörper (104) des Fahrzeugs (100) herausragen.
63. Fahrzeug (100) nach einer der Ausführungsformen 51 bis 62, dadurch gekennzeichnet, dass mittels einer Steuervorrichtung (204) des Fahrzeugs (100) und/oder mittels einer übergeordneten Steuerungsanlage überprüfbar ist, insbesondere berechenbar ist, ob ein mittels der einen oder der mehreren Sensorvorrichtungen (190) erfasstes Objekt ein unerwartetes und/oder unbekanntes und/oder störendes Objekt ist oder ob es sich um ein Objekt handelt, dessen Präsenz akzeptabel ist.
64. Fahrzeug (100) nach einer der Ausführungsformen 51 bis 63, dadurch gekennzeichnet, dass mittels einer Steuervorrichtung (204) des Fahrzeugs (100) Grenzlinien zwischen verschiedenen Zonen des Umgebungsbereichs (192) abhängig von einem aktuellen Zustand des Fahrzeugs (100) variiert werden.
65. Fahrzeug (100) nach Ausführungsform 64, dadurch gekennzeichnet, dass für den aktuellen Zustand des Fahrzeugs (100) einzelne oder mehrere der folgenden Zustandsmerkmale berücksichtigt werden:
   a) ob das Fahrzeug (100) mit einem Gegenstand (102) beladen oder unbeladen ist; und/oder
   b) mit welcher Geschwindigkeit und in welche Richtung das Fahrzeug (100) sich bewegt; und/oder
   c) an welcher Position das Fahrzeug (100) in einer Fördervorrichtung (222) und/oder Behandlungsanlage (224) angeordnet ist.
66. Fahrzeug (100) nach einer der Ausführungsformen 64 oder 65, dadurch gekennzeichnet, dass Verläufe der Grenzlinien und/oder ein Ausmaß und/oder eine Form der Zonen, insbesondere der Warnzone (WZ) und/oder der Schutzzone (SZ), mittels der Steuervorrichtung (204) und/oder mittels einer übergeordneten Steuerungsanlage regelmäßig, beispielsweise mehrmals pro Minute oder Sekunde, an den jeweils aktuellen Zustand des Fahrzeugs (100) anpassbar sind.
67. Fahrzeug (100) nach einer der Ausführungsformen 51 bis 66, dadurch gekennzeichnet, dass der Umgebungsbereich (192) in vertikaler Richtung in mehrere Zonen und in horizontaler Richtung in mehrere Zonen eingeteilt ist, wobei
   a) einer Fahrzeugzone (FZ) eine Warnzone (WZ) und/oder eine Schutzzone (SZ) zugeordnet ist; und/oder
   b) einer der Gegenstandszone (GZ) eine Warnzone (WZ) und/oder eine Schutzzone (SZ) zugeordnet ist; und/oder
   c) einer Zwischenzone (ZZ) eine Warnzone (WZ) und/oder eine Schutzzone (SZ) zugeordnet ist.
68. Adaptervorrichtung (208) zur Aufnahme eines Gegenstands (102), insbesondere einer Fahrzeugkarosserie (206), wobei die Adaptervorrichtung (208) Folgendes umfasst:
   - ein Zentralelement (210);
   - ein oder mehrere Adapterelemente (212), welche an dem Zentralelement (210) festgelegt und zur Aufnahme des Gegenstands (102) geometrisch an den Gegenstand (102) angepasst sind,
   wobei ein oder mehrere Angriffsbereiche (216), insbesondere Einführöffnungen (218), an welchen ein oder mehrere Aufnahmeelemente (170) zur Aufnahme der Adaptervorrichtung (208) angreifen, an dem Zentralelement (210) und/oder an dem einen oder den mehreren Adapterelementen (212) angeordnet und/oder ausgebildet sind.
69. Kombination aus mindestens einem Fahrzeug (100) nach einer der Ausführungsformen 1 bis 67 und mindestens einer Adaptervorrichtung (208) nach Ausführungsform 68.
70. Kombination nach Ausführungsform 69, dadurch gekennzeichnet, dass mehrere Adapterelemente (212) unterschiedlicher Geometrie und/oder Größe zur Aufnahme von Gegenständen (102) unterschiedlicher Geometrie und/oder Größe vorgesehen sind.
71. Fördervorrichtung (222) zum Fördern von Gegenständen (102), insbesondere Werkstücken, beispielsweise Fahrzeugkarosserien (206), wobei die Fördervorrichtung (222) ein oder mehrere Fahrzeuge (100) nach einer der Ausführungsformen 1 bis 67 umfasst.
72. Fördervorrichtung (222) nach Ausführungsform 71, dadurch gekennzeichnet, dass die Fördervorrichtung (222) eine oder mehrere Stationen (234) umfasst, zu welchen die Gegenstände (102) mittels der Fahrzeuge (100) hin transportierbar sind und/oder an welchen die Gegenstände (102) abgebbar und/oder aufnehmbar sind.
73. Fördervorrichtung (222) nach Ausführungsform 72, dadurch gekennzeichnet, dass in mindestens einer der Stationen (234) zwei oder mehr als zwei Positionen (240, 254) für zwei oder mehr als zwei Gegenstände (102) vorgesehen sind, wobei ein Gegenstand (102) mittels eines Fahrzeugs (100) in einer ersten Position (240) an die Station (234) abgebbar ist und wobei ein Gegenstand (102) in einer zweiten Position (254) mittels eines Fahrzeugs (100) aufnehmbar und anschließend aus der Station (234) abtransportierbar ist.
74. Fördervorrichtung (222) nach Ausführungsform 73, dadurch gekennzeichnet, dass die Gegenstände (102) mittels einer von den Fahrzeugen (100) verschiedenen Stationsfördervorrichtung (244) der Fördervorrichtung (222) förderbar sind, insbesondere von der ersten Position (240) zu der zweiten Position (254).
75. Fördervorrichtung (222) nach Ausführungsform 74, dadurch gekennzeichnet, dass die Gegenstände (102) während der Förderung von der ersten Position (240) zu der zweiten Position (254) oder in einer dazwischen angeordneten Zwischenposition (258) bearbeitbar sind.
76. Fördervorrichtung (222) nach einer der Ausführungsformen 73 bis 75, dadurch gekennzeichnet, dass mindestens ein Fahrzeug (100) so ausgebildet und eingerichtet ist, dass ein Gegenstand (102) in einer ersten Position (240) an einer Station (234) abgebbar ist und dass dann ein zuvor an dieser ersten Position (240) abgegebener Gegenstand (102), welcher zwischenzeitlich zu einer zweiten Position (254) dieser Station (234) gefördert wurde, an der zweiten Position (254) aufnehmbar ist.
77. Fördervorrichtung (222) nach einer der Ausführungsformen 72 bis 76, dadurch gekennzeichnet, dass eine oder mehrere Stationen (234) einen Trennboden (248) umfassen, unter welchem das mindestens eine Fahrzeug (100) bewegbar ist, insbesondere während ein oder mehrere Gegenstände (102) oberhalb des Trennbodens (248) bewegbar sind und/oder um ein oder mehrere Gegenstände (102) oberhalb des Trennbodens (248) zu bewegen.
78. Fördervorrichtung (222) nach Ausführungsform 77, dadurch gekennzeichnet, dass der Trennboden (248) für Personen begehbar ist.
79. Fördervorrichtung (222) nach einer der Ausführungsformen 77 oder 78, dadurch gekennzeichnet, dass der Trennboden (248) im Wesentlichen parallel zu einem befahrbaren Untergrund (160), auf welchem die Fördervorrichtung (222) montiert ist, ausgerichtet ist, wobei ein Abstand einer vorzugsweise begehbaren Oberfläche des Trennbodens (248) von einer Oberfläche des befahrbaren Untergrunds (160) vorzugsweise höchstens ungefähr das Fünffache, insbesondere höchstens ungefähr das Vierfache, vorzugsweise höchstens ungefähr das Doppelte, einer Höhe des Fahrzeugs (100) und/oder einer Höhe des Grundkörpers (104) des Fahrzeugs (100) beträgt.
80. Fördervorrichtung (222) nach einer der Ausführungsformen 77 bis 79, dadurch gekennzeichnet, dass zumindest ein Abschnitt (260) des Trennbodens (248) über einem Förderweg (292) eines Fahrzeugs (100) vollständig geschlossen ausgebildet ist und hierdurch zu fördernde Gegenstände (102) vollständig räumlich von dem Fahrzeug (100) getrennt sind.
81. Fördervorrichtung (222) nach Ausführungsform 80, dadurch gekennzeichnet, dass der vollständig geschlossene Abschnitt (260) des Trennbodens (248) sich zumindest näherungsweise über eine gesamte Längserstreckung eines Bearbeitungsbereichs (252) zur Bearbeitung der Gegenstände (102) erstreckt.
82. Fördervorrichtung (222) nach einer der Ausführungsformen 77 bis 81, dadurch gekennzeichnet, dass der Trennboden (248) einen Durchtrittsbereich (262), insbesondere einen Durchtrittsschlitz (264), aufweist, durch welchen ein oder mehrere Aufnahmeelemente (170) des mindestens einen Fahrzeugs (100) sich hindurch erstrecken und/oder hindurchführbar sind.
83. Fördervorrichtung (222) nach Ausführungsform 82, dadurch gekennzeichnet, dass der Durchtrittsbereich (262), insbesondere der Durchtrittsschlitz (264), sich längs eines Förderwegs (292) der Fördervorrichtung (222) erstreckt oder einen Förderweg (292) der Fördervorrichtung (222) vorgibt.
84. Fördervorrichtung (222) nach Ausführungsform 83, dadurch gekennzeichnet, dass zu einer oder beiden Seiten des Durchtrittsbereichs (262), insbesondere des Durchtrittsschlitzes (264), ein Durchtrittsrandbereich (276) gebildet ist, welcher insbesondere im Vergleich zum übrigen Trennboden (248) erhöht ausgebildet ist.
85. Fördervorrichtung (222) nach Ausführungsform 84, dadurch gekennzeichnet, dass ein durchschnittlicher freier oder freigebbarer Abstand zwischen zwei einander bezüglich des Durchtrittsbereichs (262) gegenüberliegenden Durchtrittsrandbereichen (276) höchstens ungefähr das Vierfache, vorzugsweise höchstens ungefähr das Dreifache, insbesondere höchstens ungefähr das Doppelte, einer durchschnittlichen horizontal und senkrecht zum Förderweg (292) genommenen Dicke mindestens eines Aufnahmeelements (170) des mindestens einen Fahrzeugs (100) beträgt.
86. Fördervorrichtung (222) nach einer der Ausführungsformen 84 oder 85, dadurch gekennzeichnet, dass ein durchschnittlicher freier oder freigebbarer Abstand zwischen zwei einander bezüglich des Durchtrittsbereichs (262) gegenüberliegenden Durchtrittsrandbereichen (276) höchstens ungefähr 150 %, vorzugsweise höchstens ungefähr 100 %, insbesondere höchstens ungefähr 80 %, einer durchschnittlichen horizontal und senkrecht zum Förderweg (292) genommenen Erstreckung eines Zentralelementes (210) einer Adaptervorrichtung (208) zur Aufnahme mindestens eines Gegenstands (102) beträgt.
87. Fördervorrichtung (222) nach einer der Ausführungsformen 84 bis 86, dadurch gekennzeichnet, dass der Durchtrittsrandbereich (276) in einem senkrecht zum Förderweg (292) genommenen Querschnitt im Wesentlichen L-förmig ausgebildet ist.
88. Fördervorrichtung (222) nach einer der Ausführungsformen 84 bis 87, dadurch gekennzeichnet, dass der Durchtrittsrandbereich (276) sich schräg zu einer Schwerkraftrichtung (g) und/oder schräg zu einer horizontalen Richtung erstreckt.
89. Fördervorrichtung (222) nach einer der Ausführungsformen 82 bis 88, dadurch gekennzeichnet, dass die Fördervorrichtung (222), insbesondere der Trennboden (248), beispielsweise der Durchtrittsrandbereich (276), ein oder mehrere Schließelemente (284) umfasst, mittels welchen der Durchtrittsbereich (262), insbesondere der Durchtrittsschlitz (264), verschließbar ist, insbesondere automatisch und/oder insbesondere dann, wenn kein Aufnahmeelement (170) durch den Durchtrittsbereich (262) hindurchragt, und/oder insbesondere in denjenigen Abschnitten des Durchtrittsbereichs (262), insbesondere des Durchtrittsschlitzes (264), wo gerade kein Aufnahmeelement (170) durch den Durchtrittsbereich (262) hindurchragt.
90. Fördervorrichtung (222) nach Ausführungsform 89, dadurch gekennzeichnet, dass ein oder mehrere Schließelemente (284) mittels des Aufnahmeelements (170) betätigbar, insbesondere in eine Offenstellung und/oder eine Schließstellung bringbar, sind.
91. Fördervorrichtung (222) nach einer der Ausführungsformen 77 bis 90, dadurch gekennzeichnet, dass die Fördervorrichtung (222) eine Stationsfördervorrichtung (244) umfasst, mittels welcher die Gegenstände (102) unabhängig von den Fahrzeugen (100) förderbar sind, wobei die Stationsfördervorrichtung (244) vorzugsweise in einen Trennboden (248) der Station (234) integriert ist.
92. Fördervorrichtung (222) nach Ausführungsform 91, dadurch gekennzeichnet, dass die Stationsfördervorrichtung (244) eine Rollenbahn (245) oder ein Kettenförderer ist oder eine Rollenbahn (245) und/oder einen Kettenförderer umfasst.
93. Fördervorrichtung (222) nach einer der Ausführungsformen 71 bis 92, dadurch gekennzeichnet, dass die Fördervorrichtung (222) eine Stapelvorrichtung (225) zur Stapelung und/oder Entstapelung mehrere Fahrzeuge (100) umfasst.
94. Fördervorrichtung (222) nach einer der Ausführungsformen 71 bis 93, dadurch gekennzeichnet, dass die Fördervorrichtung (222) einen oder mehrere Ladebereiche (158) zum Aufladen eines Energiespeichers (150) des mindestens einen Fahrzeugs (100) umfasst.
95. Fördervorrichtung (222) nach Ausführungsform 94, dadurch gekennzeichnet, dass ein oder mehrere Ladebereiche (158) an einer oder mehreren Stationen (234) der Fördervorrichtung (222) angeordnet sind, zu welchen die Gegenstände (102) mittels des mindestens einen Fahrzeugs (100) hin transportierbar sind und/oder an welchen die Gegenstände (102) abgebbar und/oder aufnehmbar sind.
96. Fördervorrichtung (222) nach einer der Ausführungsformen 94 oder 95, dadurch gekennzeichnet, dass ein oder mehrere Ladebereiche (158) bezüglich eines Förderwegs (292) mindestens eines Fahrzeugs (100) zwischen zwei Stationen (234) der Fördervorrichtung (222) angeordnet sind, zu welchen die Gegenstände (102) mittels des mindestens einen Fahrzeugs (100) hin transportierbar sind und/oder an welchen die Gegenstände (102) abgebbar und/oder aufnehmbar sind.
97. Fördervorrichtung (222) nach einer der Ausführungsformen 94 bis 96, dadurch gekennzeichnet, dass ein oder mehrere Ladebereiche (158) in oder an einem Rückförderweg (294) mindestens eines Fahrzeugs (100) angeordnet sind.
98. Fördervorrichtung (222) nach einer der Ausführungsformen 94 bis 97, dadurch gekennzeichnet, dass ein oder mehrere Ladebereiche (158) in oder an einem Wegabschnitt angeordnet sind, welcher dauerhaft oder temporär, insbesondere alternierend, einen Abschnitt eines Förderwegs (292) eines oder mehrerer Fahrzeuge (100) und einen Abschnitt eines Rückförderwegs (294) desselben oder derselben Fahrzeuge (100) oder eines oder mehrerer anderer Fahrzeuge (100) bildet.
99. Fördervorrichtung (222) nach einer der Ausführungsformen 94 bis 98, dadurch gekennzeichnet, dass ein oder mehrere Ladebereiche (158) in oder an einem Kreuzungsbereich angeordnet sind, in welchem sich ein oder mehrere Förderwege (292) und/oder ein oder mehrere Rückförderwege (294) eines oder mehrerer Fahrzeuge (100) kreuzen.
100. Fördervorrichtung (222) nach einer der Ausführungsformen 94 bis 99, dadurch gekennzeichnet, dass ein oder mehrere Ladebereiche (158) stationäre Ladebereiche (298) sind, an welchen das mindestens eine Fahrzeug (100) zum Laden des Energiespeichers (150) und/oder während des Ladens des Energiespeichers (150) stationär ist.
101. Fördervorrichtung (222) nach einer der Ausführungsformen 94 bis 100, dadurch gekennzeichnet, dass ein oder mehrere Ladebereiche (158) Mobilladebereiche (300) sind, an welchen das mindestens eine Fahrzeug (100) während des Ladens des Energiespeichers (150) vorbeibewegbar ist und/oder durch welche das mindestens eine Fahrzeug (100) während des Ladens des Energiespeichers (150) hindurchbewegbar ist.
102. Fördervorrichtung (222) nach einer der Ausführungsformen 94 bis 101, dadurch gekennzeichnet, dass ein oder mehrere Ladebereiche (158) an oder in einem Durchtrittsbereich (262) eines Trennbodens (248) der Fördervorrichtung (222) angeordnet und/oder ausgebildet sind.
103. Fördervorrichtung (222) nach einer der Ausführungsformen 94 bis 102, dadurch gekennzeichnet, dass ein oder mehrere Ladebereiche (158) an einer Unterseite eines Trennbodens (248) einer Station (234) der Fördervorrichtung (222) angeordnet und/oder ausgebildet sind.
104. Fördervorrichtung (222) nach einer der Ausführungsformen 94 bis 103, dadurch gekennzeichnet, dass ein oder mehrere Ladebereiche (158) an einem befahrbaren Untergrund (160) angeordnet sind, auf welchem das mindestens eine Fahrzeug (100) verfahrbar ist, wobei der eine oder die mehreren Ladebereiche (158) insbesondere direkt unter einem Trennboden (248) einer Station (234) der Fördervorrichtung (222) angeordnet und/oder ausgebildet sind.
105. Fördervorrichtung (222) nach einer der Ausführungsformen 94 bis 104, dadurch gekennzeichnet, dass ein oder mehrere Ladebereiche (158) als Ladebucht (302) ausgebildet sind, in welche ein oder mehrere Fahrzeuge (100) zum Aufladen des jeweiligen Energiespeichers (150) einbringbar sind, insbesondere unter Abweichung von einem Förderweg (292) und/oder Rückförderweg (294) des Fahrzeugs (100).
106. Fördervorrichtung (222) nach Ausführungsform 105, dadurch gekennzeichnet, dass eine oder mehrere Ladebuchten (302) Wartebereiche (304) zur temporären Aufbewahrung eines oder mehrerer Fahrzeuge (100) und/oder Wartungsbereiche (306) zur Durchführung von Wartungsarbeiten an einem oder mehreren Fahrzeugen (100) sind.
107. Fördervorrichtung (222) nach einer der Ausführungsformen 94 bis 106, dadurch gekennzeichnet, dass ein oder mehrere Ladebereiche (158) derart an einer Abgabeposition (242) einer Station (234) und/oder an einer Aufnahmeposition (256) einer Station (234) angeordnet sind, dass insbesondere während eines Positioniervorgangs zur Positionierung eines Fahrzeugs (100) relativ zu der Station (234) ein Energiespeicher (150) des Fahrzeugs (100) aufladbar ist.
108. Fördervorrichtung (222) nach einer der Ausführungsformen 94 bis 107, dadurch gekennzeichnet, dass die Fördervorrichtung (222) sich auf mehreren Ebenen (288) erstreckt und einen oder mehrere Ladebereiche (158) umfasst, welche in einer Transfervorrichtung (290) zum Transferieren eines oder mehrerer Fahrzeuge (100) von einer Ebene (288) zu einer weiteren Ebene (288) angeordnet sind.
109. Fördervorrichtung (222) nach einer der Ausführungsformen 94 bis 108, dadurch gekennzeichnet, dass die Fördervorrichtung (222) einen oder mehrere Ladeknotenpunkte (308) umfasst, welche jeweils mehrere Ladebereiche (158) zum gleichzeitigen Laden mehrerer Fahrzeuge (100) umfassen.
110. Fördervorrichtung (222) nach Ausführungsform 109, dadurch gekennzeichnet, dass ein oder mehrere Ladeknotenpunkte (308) an Stellen angeordnet sind, an welchen sich mehrere Förderwege (292) und/oder Rückförderwege (294) kreuzen und/oder überlappen.
111. Fördervorrichtung (222) nach einer der Ausführungsformen 71 bis 110, dadurch gekennzeichnet, dass zum Laden des Energiespeichers (150) mindestens ein Ladebereich (158) eine oder mehrere Ladeanschlussstellen (164) umfasst, welche jeweils mehrere Kontaktbereiche (278) und/oder Kontaktelemente (280) zur Bereitstellung von Spannungen mit unterschiedlich hohen Spannungswerten aufweisen.
112. Fördervorrichtung (222) nach Ausführungsform 111, dadurch gekennzeichnet, dass an einer oder mehreren Ladeanschlussstellen (164) jeweils zwei oder mehr als zwei Paare von Kontaktbereichen (278) und/oder Kontaktelementen (280) vorgesehen sind, welche zur insbesondere gleichzeitigen Bereitstellung von unterschiedlichen Ladespannungen dienen.
113. Fördervorrichtung (222) nach einer der Ausführungsformen 71 bis 112, dadurch gekennzeichnet, dass eine oder mehrere Ladeanschlussstellen (164), insbesondere sämtliche Ladeanschlussstellen (164), jeweils eine oder mehrere Sensorvorrichtungen (190) umfassen, mittels welcher insbesondere eine Präsenz eines Fahrzeugs (100) an, insbesondere über, der jeweiligen Ladeanschlussstelle (164) ermittelbar ist.
114. Fördervorrichtung (222) nach Ausführungsform 113, dadurch gekennzeichnet, dass die Ladeanschlussstelle (164) derart steuerbar und/oder ansteuerbar ist, dass nur bei einem mittels der einen oder der mehreren Sensorvorrichtungen (190) erkannten Fahrzeug (100) ein Strom und/oder eine Spannung zum Laden eines Energiespeichers (150) des Fahrzeugs (100) an der jeweiligen Ladeanschlussstelle (164) angelegt wird, insbesondere freigeschaltet wird.
115. Fördervorrichtung (222) nach einer der Ausführungsformen 71 bis 114, dadurch gekennzeichnet, dass die Fördervorrichtung (222) einen oder mehrere Sicherheitsbereiche (270) und einen oder mehrere Expressbereiche (268) umfasst,
   wobei das eine oder die mehreren Fahrzeuge (100) in dem einen oder den mehreren Sicherheitsbereichen (270) mittels einer Steuervorrichtung (204) in den Sicherheitsmodus versetzbar sind und
   wobei das eine oder die mehreren Fahrzeuge (100) in dem einen oder den mehreren Expressbereichen (268) mittels der Steuervorrichtung (204) in den Expressmodus versetzbar sind.
116. Fördervorrichtung (222) nach Ausführungsform 115, dadurch gekennzeichnet, dass ein oder mehrere Expressbereiche (268) einen oder mehrere Rückförderwege (294) oder Rückförderwegabschnitte umfassen, in welchen das eine oder die mehreren Fahrzeuge (100) insbesondere unbeladen sind.
117. Fördervorrichtung (222) nach einer der Ausführungsformen 115 oder 116, dadurch gekennzeichnet, dass ein oder mehrere Expressbereiche (268) und/oder ein oder mehrere Sicherheitsbereiche (270) mittels einer oder mehrerer Durchfahrtsöffnungen (312) miteinander verbunden sind, wobei die eine oder die mehreren Durchfahrtsöffnungen (312) vorzugsweise zumindest abschnittsweise eine Form aufweisen, welche zumindest näherungsweise und zumindest abschnittsweise komplementär zu einer Form eines oder mehrerer Fahrzeuge (100) ausgebildet ist.
118. Fördervorrichtung (222) nach Ausführungsform 117, dadurch gekennzeichnet,
   a) dass eine oder mehrere Durchfahrtsöffnungen (312) in oder an einer oder mehreren Stationen (234) der Fördervorrichtung (222) angeordnet sind und/oder
   b) dass eine oder mehrere Durchfahrtsöffnungen (312) durch eine oder mehrere Stationen (234) der Fördervorrichtung (222) gebildet sind.
119. Fördervorrichtung (222) nach einer der Ausführungsformen 115 bis 118, dadurch gekennzeichnet, dass ein oder mehrere Expressbereiche (268) mittels eines begehbaren und/oder befahrbaren doppelten Bodens gebildet sind.
120. Fördervorrichtung (222) nach einer der Ausführungsformen 71 bis 119, dadurch gekennzeichnet, dass die Fördervorrichtung (222) mehrere Arten von Stationen (234) umfasst, wobei von mindestens zwei Arten von Stationen (234) jeweils mehrere Stationen (234) vorgesehen sind.
121. Fördervorrichtung (222) nach Ausführungsform 120, dadurch gekennzeichnet, dass die zu fördernden Gegenstände (102) mittels eines oder mehrerer Fahrzeuge (100) in einer vorgegebenen Reihenfolge zu und/oder durch jeweils eine der Stationen (234) unterschiedlicher Art förderbar sind, wobei mittels einer Steuervorrichtung (204) eine einzelne Station (234) einer jeweiligen Art von Stationen (234) auswählbar ist, insbesondere
   a) abhängig von einer aktuellen Belegung der einzelnen Stationen (234) einer jeweiligen Art von Stationen (234) und/oder
   b) abhängig von einer Ausstattung der einzelnen Stationen (234) einer jeweiligen Art von Stationen (234) und/oder
   c) abhängig von einer Ausgestaltung der einzelnen Stationen (234) einer jeweiligen Art von Stationen (234) und/oder
   d) abhängig von einem aktuellen Wartungsstand oder Verunreinigungsgrad der einzelnen Stationen (234) einer jeweiligen Art von Stationen (234).
122. Fördervorrichtung (222) nach einer der Ausführungsformen 71 bis 121, dadurch gekennzeichnet, dass die Fördervorrichtung (222) einen Übergabebereich (400) umfasst, an welchem ein oder mehrere Gegenstände (102) von einem Fahrzeug (100) an eine Stationsfördervorrichtung (244) oder eine sonstige Aufnahmevorrichtung übergebbar sind, wobei mindestens ein Einfahrbereich (402), durch welchen eine Übergabeposition (404) der Übergabevorrichtung (400) für das Fahrzeug (100) zugänglich ist, räumlich von mindestens einem Ausfahrbereich (410) getrennt ist, durch welchen das Fahrzeug (100) von der Übergabeposition (404) wegfahrbar ist.
123. Fördervorrichtung (222) nach einer der Ausführungsformen 71 bis 122, dadurch gekennzeichnet, dass die Fördervorrichtung (222) einen Übergabebereich (400) umfasst, an welchem ein oder mehrere Gegenstände (102) von einem Fahrzeug (100) an eine Stationsfördervorrichtung (244) oder eine sonstige Aufnahmevorrichtung übergebbar sind, wobei eine Einfahrrichtung (412), längs welcher das Fahrzeug (100) in den Übergabereich (400) einfahrbar ist, quer, insbesondere zumindest näherungsweise senkrecht, zu einer Ausfahrrichtung (414) ist, längs welcher das Fahrzeug (100) aus dem Übergabereich (400) ausfahrbar ist.
124. Fördervorrichtung (222) zum Fördern von Gegenständen (102), insbesondere Werkstücken, beispielsweise Fahrzeugkarosserien (206), wobei die Fördervorrichtung (222) insbesondere nach einer der Ausführungsformen 71 bis 123 ausgebildet ist und/oder einen Trennboden (248) umfasst, welcher einen Durchtrittsbereich (262), insbesondere einen Durchtrittsschlitz (264), aufweist, durch welchen ein oder mehrere Aufnahmeelemente (170) zur Aufnahme mindestens eines Gegenstands (102) sich hindurch erstrecken und/oder hindurchführbar sind.
125. Fördervorrichtung (222) nach Ausführungsform 124, dadurch gekennzeichnet, dass der Trennboden (248) ein oder mehrere Schließelemente (284) umfasst, mittels welcher der Durchtrittsbereich (262), insbesondere der Durchtrittsschlitz (264), verschließbar ist.
126. Fördervorrichtung (222) nach Ausführungsform 125, dadurch gekennzeichnet, dass der Durchtrittsbereich (262), insbesondere der Durchtrittsschlitz (264), mittels des einen oder der mehreren Schließelemente (284) automatisch und/oder temporär und/oder lokal und/oder insbesondere dann, wenn kein Aufnahmeelement (170) durch den Durchtrittsbereich (262) hindurchragt, und/oder insbesondere in denjenigen Abschnitten des Durchtrittsbereichs (262), insbesondere des Durchtrittsschlitzes (264), wo gerade kein Aufnahmeelement (170) durch den Durchtrittsbereich (262) hindurchragt, verschließbar ist.
127. Fördervorrichtung (222) nach einer der Ausführungsformen 124 bis 126, dadurch gekennzeichnet, dass ein oder mehrere Schließelemente (284) mittels des Aufnahmeelements (170) betätigbar, insbesondere in eine Offenstellung und/oder eine Schließstellung bringbar, sind.
128. Fördervorrichtung (222) nach einer der Ausführungsformen 124 bis 127, dadurch gekennzeichnet, dass ein oder mehrere Schließelemente (284) federnd und/oder unter Einwirkung der Schwerkraft automatisch von einer Offenstellung in eine Schließstellung bringbar sind.
129. Fördervorrichtung (222) nach einer der Ausführungsformen 124 bis 128, dadurch gekennzeichnet, dass ein oder mehrere Schließelemente (284) als Lamellen (508) und/oder Klappen und/oder Verschlussscheiben (510) ausgebildet sind.
130. Fördervorrichtung (222) nach einer der Ausführungsformen 124 bis 129, dadurch gekennzeichnet, dass ein oder mehrere Schließelemente (248) insbesondere in einer horizontalen Richtung auslenkbar sind, um temporär den Durchtrittsbereich (262) zur Hindurchführung eines oder mehrerer Aufnahmeelemente (170) freizugeben.
131. Fördervorrichtung (222) nach einer der Ausführungsformen 124 bis 130, dadurch gekennzeichnet, dass der Trennboden (248) mehrere Schließelemente (284) umfasst, welche in einer Schließstellung und/oder in einer Offenstellung derselben einander überlappend angeordnet sind.
132. Fördervorrichtung (222) nach einer der Ausführungsformen 124 bis 131, dadurch gekennzeichnet, dass der Trennboden (248) mehrere Schließelemente (284) umfasst, welche in voneinander verschiedenen, insbesondere zueinander parallelen Ebenen, vorzugsweise horizontalen Ebenen, angeordnet und/oder bewegbar sind.
133. Fördervorrichtung (222) nach einer der Ausführungsformen 124 bis 132, dadurch gekennzeichnet, dass ein oder mehrere Schließelemente (284) begehbar sind.
134. Fördervorrichtung (222) nach einer der Ausführungsformen 124 bis 133, dadurch gekennzeichnet, dass ein oder mehrere Schließelemente (284) aneinander und/oder an einer oder mehreren Tragplatten (504) des Trennbodens (248) abgestützt sind, insbesondere in einer Schließstellung und/oder in einer Offenstellung derselben.
135. Fördervorrichtung (222) nach einer der Ausführungsformen 124 bis 134, dadurch gekennzeichnet, dass ein oder mehrere Schließelemente (284) in einer schräg, insbesondere senkrecht, zu einer Förderrichtung (250) verlaufenden Richtung bewegbar, insbesondere linear verschiebbar, sind.
136. Fördervorrichtung (222) nach einer der Ausführungsformen 124 bis 135, dadurch gekennzeichnet, dass ein oder mehrere Schließelemente (284) drehbar, insbesondere frei drehbar und/oder um 360° drehbar, an einer Schließelementaufnahme (524) des Trennbodens (248) angeordnet sind.
137. Fördervorrichtung (222) nach einer der Ausführungsformen 124 bis 136, dadurch gekennzeichnet, dass der Durchtrittsbereich (262), insbesondere der Durchtrittsschlitz (264), sich längs eines Förderwegs (292) der Fördervorrichtung (222) erstreckt oder einen Förderweg (292) der Fördervorrichtung (222) vorgibt.
138. Fördervorrichtung (222) nach einer der Ausführungsformen 124 bis 137, dadurch gekennzeichnet, dass der Trennboden (248) für Personen begehbar ist.
139. Fördervorrichtung (222) nach einer der Ausführungsformen 124 bis 138, dadurch gekennzeichnet, dass die Fördervorrichtung (222) ein oder mehrere Fahrzeuge (100) umfasst, wobei jedes Fahrzeug (100) Folgendes umfasst:
   - einen Grundkörper (104);
   - ein Fahrwerk (106), mittels welchem der Grundkörper (104) auf einem befahrbaren Untergrund (160) aufliegt und/oder bewegbar ist;
   - eine Antriebsvorrichtung (110) zum Antreiben des Fahrzeugs (100);
   - eine Aufnahmevorrichtung (168), welche ein Aufnahmeelement (170), zwei Aufnahmeelemente (170) oder mehr als zwei Aufnahmeelemente (170) zum Aufnehmen mindestens eines Gegenstands (102) umfasst,
   wobei die Fördervorrichtung (222) eine oder mehrere Stationen (234) umfasst, zu welchen die Gegenstände (102) mittels der Fahrzeuge (100) hin transportierbar sind und/oder an welchen die Gegenstände (102) abgebbar und/oder aufnehmbar sind.
140. Bearbeitungsanlage (224) zur Bearbeitung von Gegenständen (102), insbesondere Fahrzeugkarosserien (206), wobei die Bearbeitungsanlage (224) eine oder mehrere Fördervorrichtungen (222) nach einer der Ausführungsformen 71 bis 139 umfasst.
141. Bearbeitungsanlage (224) nach Ausführungsform 140, dadurch gekennzeichnet, dass eine oder mehrere Stationen (234) der Fördervorrichtung (222), welche zur Förderung von Gegenständen (102) mittels Fahrzeugen (100) der Fördervorrichtung (222) miteinander verbunden sind, Bearbeitungsstationen (236) der Bearbeitungsanlage (224) sind.
142. Verfahren zum Fördern von Gegenständen (102), wobei die Gegenstände (102) mittels eines oder mehrerer Fahrzeuge (100) nach einer der Ausführungsformen 1 bis 67 und/oder mittels einer Fördervorrichtung (222) nach einer der Ausführungsformen 71 bis 139 gefördert werden.
143. Verfahren zum Bearbeiten von Gegenständen (102), wobei die Gegenstände (102) in und/oder mittels einer Bearbeitungsanlage (224) nach einer der Ausführungsformen 140 oder 141 bearbeitet werden.

## Patentansprüche

1. Fahrzeug (100), insbesondere zum Fördern von Gegenständen (102), beispielsweise Fahrzeugkarosserien (206), wobei das Fahrzeug (100) Folgendes umfasst:
- einen Grundkörper (104);
- ein Fahrwerk (106), mittels welchem der Grundkörper (104) auf einem befahrbaren Untergrund (160) aufliegt und/oder bewegbar ist;
- eine Antriebsvorrichtung (110) zum Antreiben des Fahrzeugs (100);
- eine Aufnahmevorrichtung (168), welche ein Aufnahmeelement (170), zwei Aufnahmeelemente (170) oder mehr als zwei Aufnahmeelemente (170) zum Aufnehmen mindestens eines Gegenstands (102) umfasst;
- einen Energiespeicher (150);
- eine oder mehrere Ladeanschlussstellen (164) zum Aufladen des Energiespeichers (150).

2. Fahrzeug (100) nach Anspruch 1, **dadurch gekennzeichnet, dass** eine Ladeanschlussstelle (164) des Fahrzeugs (100) berührungslos, beispielsweise induktiv, mit einer hierzu korrespondierenden Ladeanschlussstelle (164) eines Ladebereichs (158) koppelbar ist.

3. Fahrzeug (100) nach einem der Ansprüche 1 oder 2, **dadurch gekennzeichnet, dass** der Energiespeicher (150) eine oder mehrere Antriebsenergiespeichereinheiten (152a) zum Speichern von Energie zum Antreiben des Fahrzeugs (100) als Ganzes und/oder zum Antreiben einer Hubantriebsvorrichtung (178) umfasst; und/oder
der Energiespeicher (150) eine oder mehrere Pufferenergiespeichereinheiten (152p) umfasst, mittels welcher Energie beispielsweise zum Betrieb einer Steuervorrichtung (204) und/oder einer oder mehrere Sensorvorrichtungen (190) und/oder einer oder mehrere Kommunikationsvorrichtungen bereitstellbar ist, wobei vorzugsweise vorgesehen ist, dass eine oder mehrere oder sämtliche Pufferenergiespeichereinheiten (152p) als Lithium-Ionen-Akkumulatoren ausgebildet sind.

4. Fahrzeug (100) nach einem der Ansprüche 1 bis 3, **dadurch gekennzeichnet, dass** das Fahrzeug (100) einen Energiespeicher (150) umfasst, mittels welchem elektrische Energie zum Antreiben einer Hubantriebsvorrichtung (178) des Fahrzeugs (100) speicherbar und bereitstellbar ist, wobei mittels desselben Energiespeichers (150), insbesondere mittels derselben Energiespeichereinheit (152) oder mittels der derselben Energiespeichereinheiten (152) des Energiespeichers (150), Energie sowohl zum Antreiben der Hubantriebsvorrichtung (178) als auch zum Antreiben des Fahrzeugs (100) speicherbar und bereitstellbar ist.

5. Fahrzeug (100) nach einem der Ansprüche 1 bis 4, **dadurch gekennzeichnet, dass**:
i) das Fahrzeug (100) multidirektional verfahrbar ist; und/oder
ii) mehrere Antriebselemente (118), insbesondere Antriebsräder (120), der Antriebsvorrichtung (110) vorzugsweise unabhängig voneinander antreibbar sind,
wobei vorzugsweise vorgesehen ist, dass das Fahrzeug (100) mehrere Antriebsmotoren (122) umfasst, wobei beispielsweise vorgesehen ist, dass jedem Antriebselement (118), insbesondere Antriebsrad (120), jeweils ein Antriebsmotor (122) zugeordnet ist.

6. Fahrzeug (100) nach einem der Ansprüche 1 bis 5, **dadurch gekennzeichnet, dass** das eine oder die mehreren Aufnahmeelemente (170) des Fahrzeugs (100) beispielsweise unmittelbar an einem zu fördernden Gegenstand (102) festlegbar sind; und/oder
ein zu fördernder Gegenstand (102) mittels einer Adaptervorrichtung (208) an dem einen oder den mehreren Aufnahmeelementen (170) des Fahrzeugs (100) festgelegt oder festlegbar ist.

7. Fahrzeug (100) nach einem der Ansprüche 1 bis 6, **dadurch gekennzeichnet, dass** das Fahrzeug (100) eine Hubantriebsvorrichtung (178) umfasst, mittels welcher das eine Aufnahmeelement (170), die zwei Aufnahmeelemente (170) oder die mehr als zwei Aufnahmeelemente (170) relativ zum Grundkörper (104) anhebbar und/oder absenkbar sind.

8. Fahrzeug (100) nach einem der Ansprüche 1 bis 7, **dadurch gekennzeichnet, dass** mehrere Aufnahmeelemente (170), insbesondere sämtliche Aufnahmeelemente (170), miteinander gekoppelt und ausschließlich gemeinsam relativ zu dem Grundkörper (104) bewegbar sind,
wobei vorzugsweise vorgesehen ist, dass eine Hubantriebsvorrichtung (178) des Fahrzeugs (100) ein Hubantriebselement (182), insbesondere einen Hubantriebsriemen (184) oder eine Hubantriebskette, umfasst, wobei das Hubantriebselement (182) einen Hubantriebsmotor (180) und zwei oder mehr als zwei Aufnahmeelemente (170) miteinander verbindet, so dass die zwei oder mehr als zwei Aufnahmeelemente (170) gemeinsam mittels des Hubantriebsmotors (180) bewegbar, insbesondere relativ zum Grundkörper (104) anhebbar und/oder absenkbar, sind.

9. Fahrzeug (100) nach einem der Ansprüche 1 bis 8, **dadurch gekennzeichnet, dass**:
i) der Grundkörper (104) im Wesentlichen quaderförmig ausgebildet ist, wobei zwei oder vier Eckbereiche (112) des Grundkörpers (104) jeweils mit einer nach außen hervorragenden Sensorvorrichtung (190) des Fahrzeugs (100) versehen sind; und/oder
ii) das Fahrzeug (100) eine oder mehrere Sensorvorrichtungen (190) umfasst, welche jeweils ein oder mehrere Sensorelemente zur Erfassung einer Umgebung des Fahrzeugs (100) aufweisen, wobei das eine oder die mehreren Sensorelemente jeweils für sich genommen oder gemeinsam in einer im Wesentlichen horizontalen Ebene einen Erfassungsbereich von mindestens ungefähr 250°, insbesondere ungefähr 270°, aufweisen; und/oder
iii) das Fahrzeug (100) eine oder mehrere Sensorvorrichtungen (190) umfasst, welche mit einer Steuervorrichtung (204) des Fahrzeugs (100) gekoppelt sind, wobei die Steuervorrichtung (204) so ausgebildet und eingerichtet ist, dass das Fahrzeug (100) abhängig von Sensorwerten, welche mittels der einen oder der mehreren Sensorvorrichtungen (190) erfasst und/oder bestimmt werden, in unterschiedlichen Betriebsmodi betreibbar ist, insbesondere in mindestens drei unterschiedlichen Betriebsmodi.

10. Fahrzeug (100) nach einem der Ansprüche 1 bis 9, **dadurch gekennzeichnet, dass**:
i) das Fahrzeug (100) eine oder mehrere Sensorvorrichtungen (190) umfasst, mittels welcher ein Umgebungsbereich (192) des Fahrzeugs (100) erfassbar ist; und/oder
ii) das Fahrzeug (100) eine oder mehrere Sensorvorrichtungen (190) umfasst, mittels welchen ein dreidimensionaler Umgebungsbereich (192) dreidimensional erfassbar ist, wobei innerhalb des erfassten Umgebungsbereichs (192) erfasste Objekte vorzugsweise hinsichtlich ihrer Ausmaße und Positionierung relativ zu dem Fahrzeug (100) erfassbar sind, wobei vorzugsweise vorgesehen ist, dass die Ausmaße und die Positionierung der erfassten Objekte mittels einer Steuervorrichtung (204) des Fahrzeugs (100) aus Sensordaten der einen oder der mehreren Sensorvorrichtungen (190) errechnet werden.

11. Fahrzeug (100) nach Anspruch 10, **dadurch gekennzeichnet, dass** mittels einer Steuervorrichtung (204) des Fahrzeugs (100) Grenzlinien zwischen verschiedenen Zonen des Umgebungsbereichs (192) abhängig von einem aktuellen Zustand des Fahrzeugs (100) variiert werden, wobei vorzugsweise vorgesehen ist, dass für den aktuellen Zustand des Fahrzeugs (100) einzelne oder mehrere der folgenden Zustandsmerkmale berücksichtigt werden:
a) ob das Fahrzeug (100) mit einem Gegenstand (102) beladen oder unbeladen ist; und/oder
b) mit welcher Geschwindigkeit und in welche Richtung das Fahrzeug (100) sich bewegt; und/oder
c) an welcher Position das Fahrzeug (100) in einer Fördervorrichtung (222) und/oder Behandlungsanlage (224) angeordnet ist.

12. Fördervorrichtung (222) zum Fördern von Gegenständen (102), insbesondere Werkstücken, beispielsweise Fahrzeugkarosserien (206), wobei die Fördervorrichtung (222) ein oder mehrere Fahrzeuge (100) nach einem der Ansprüche 1 bis 11 und vorzugsweise ein oder mehrere Ladebereiche (158) umfasst.

13. Fördervorrichtung (222) nach Anspruch 12, **dadurch gekennzeichnet, dass** eine oder mehrere Ladeanschlussstellen (164), insbesondere sämtliche Ladeanschlussstellen (164), jeweils eine oder mehrere Sensorvorrichtungen (190) umfassen, mittels welcher insbesondere eine Präsenz eines Fahrzeugs (100) an, insbesondere über, der jeweiligen Ladeanschlussstelle (164) ermittelbar ist, wobei vorzugsweise vorgesehen ist, dass die Ladeanschlussstelle (164) derart steuerbar und/oder ansteuerbar ist, dass nur bei einem mittels der einen oder der mehreren Sensorvorrichtungen (190) erkannten Fahrzeug (100) ein Strom und/oder eine Spannung zum Laden eines Energiespeichers (150) des Fahrzeugs (100) an der jeweiligen Ladeanschlussstelle (164) angelegt wird, insbesondere freigeschaltet wird.

14. Bearbeitungsanlage (224), beispielsweise Lackieranlage, zur Bearbeitung von Gegenständen (102), insbesondere Werkstücken, beispielsweise Fahrzeugkarosserien (206), wobei die Bearbeitungsanlage (224) eine oder mehrere Fördervorrichtungen (222) nach einem der Ansprüche 12 oder 13 umfasst.

15. Verfahren zum Fördern und/oder Bearbeiten von Gegenständen (102), wobei die Gegenstände (102) mittels eines oder mehrerer Fahrzeuge (100) nach einem der Ansprüche 1 bis 11 und/oder mittels einer Fördervorrichtung (222) nach einem der Ansprüche 12 oder 13 gefördert werden und/oder wobei die Gegenstände (102) in und/oder mittels einer Bearbeitungsanlage (224) nach Anspruch 14 bearbeitet werden.
